# EUROPEAN PATENT APPLICATION

(11) **EP 1 126 396 A2**
(43) Date of publication of application: **22.08.2001**
(21) Application number: 01301259.6
(22) Date of filing: 14.02.2001
(51) Int. Cl.: G06F 17/60

(54) **Information providing system for providing information about suppliers**

(30) Priority: 15.02.2000 JP 2000041350; 15.02.2000 JP 2000041355; 15.02.2000 JP 2000041360
(71) Applicant: CANON KABUSHIKI KAISHA, Tokyo (JP)
(72) Inventor: Kimoto, Mitsuo, Canon K.K, Ohta-ku, Tokyo (JP); Ito, Sadao, Canon K.K, Ohta-ku, Tokyo (JP); Nanbu, Yoshihide, Canon K.K, Ohta-ku, Tokyo (JP); Yokoi, Takanori, Canon K.K, Ohta-ku, Tokyo (JP); Ito, Naka, Canon K.K, Ohta-ku, Tokyo (JP); Fuchi, Ikuo, Canon K.K, Ohta-ku, Tokyo (JP); Tandai, Kazuyuki, Canon K.K, Ohta-ku, Tokyo (JP); Tomita, Hitoshi, Canon K.K, Ohta-ku, Tokyo (JP); Takasawa, Atsushi, Canon K.K, Ohta-ku, Tokyo (JP); Suita, Mitsuo, Canon K.K, Ohta-ku, Tokyo (JP); Sato, Hirofumi, Canon K.K, Ohta-ku, Tokyo (JP); Mihara, Shogo, Canon K.K, Ohta-ku, Tokyo (JP); Matsunawa, Atsushi, Canon K.K, Ohta-ku, Tokyo (JP); Matsui, Nobu, Canon K.K, Ohta-ku, Tokyo (JP); Kobayashi, Tsugunao, Canon K.K, Ohta-ku, Tokyo (JP)
(74) Representative: Beresford, Keith Denis Lewis

(57) **Abstract**

To provide an information providing system which can easily and quickly provide information about suppliers.

The system includes a map database storing supplier information and map information about suppliers after linking them, a record database storing the sales record about suppliers, and a database storing the sales information about suppliers. By inputting a condition, information satisfying the condition can be retrieved from each database and provided.

## Description

### BACKGROUND OF THE INVENTION

### Field of the Invention

The present invention relates to an information providing technology, and more specifically to the information providing technology for providing information about suppliers such as map information, sales record information, sales information, etc. based on a database.

### Related Background Art

A relatively large company has a plurality of factories. Each factory has its own ordering systems for parts or materials, and does not understand the situation of the ordering system of other factories. Each factory can purchase parts or materials from different suppliers or the same supplier at different unit prices. In addition, in the above mentioned ordering system, transactions can be made using order sheets and slips of paper in many cases.

A development division of a company has the following problems.
(1) The division is not informed of the parts or materials of other factories.
(2) The division has a small selection of parts and materials.
(3) The division has little information about substitute parts or materials.
(4) The division cannot quickly obtain new product information.

A procurement division of a company has the following problems.
(1) The division is not informed of the unit price and the supplier of the same parts or material of each factory.
(2) The division has little information about substitute parts or materials.
(3) The division is not informed of the capacity (for example, production type, production, etc.) of a supplier.
(4) The division is not informed of the purchase situation of the entire company group.

### SUMMARY OF THE INVENTION

An object of the present invention is to provide an apparatus and a method capable of easily and quickly providing information about suppliers.

To attain this, the information providing system according to the present invention includes a database for linking and storing targets and map information, and display control means for displaying the targets and the map information stored in the database on display means.

In addition, an information providing method according to the present invention includes a storing step for linking and storing targets and map information, and a displaying step for displaying the targets and the map information stored in the database on display means.

Furthermore, the information providing system according to the present invention includes a database storing sales record information, search means for searching the sales record information, and display control means for displaying the sales record information searched by the search means.

The information providing method according to the present invention includes a storing step for storing the sales record information in the database, a searching step for searching the sales record information, and a displaying step for displaying the sales record information searched by the search means on display means.

Furthermore, the information providing system according to the present invention includes a database storing sales information about a supplier provided through a network, and display control means for displaying the sales information about the supplier stored in the database on display means.

Additionally, the information providing method according to the present invention includes a storing step for storing sales information about a supplier provided through a network in a database, and a displaying step for displaying the sales information about the supplier stored in the database on display means.

### BRIEF DESCRIPTION OF THE DRAWINGS

FIG. 1 is a block diagram of the configuration of the procurement system according to an embodiment of the present invention;
FIG. 2 is a flowchart of the process-of the procurement system according to an embodiment of the present invention;
FIG. 3 is a block diagram of the configuration of the electronic parts system according to an embodiment of the present invention;
FIG. 4 shows the outline of the contents of the database of the electronic parts system;
FIG. 5 is a flowchart of the process of the electronic parts system;
FIG. 6 is a detailed flowchart of the searching process by parts number shown in FIG. 5;
FIG. 7 is a detailed flowchart of the linking process shown in FIG. 6;
FIG. 8 is a detailed flowchart the external database information searching process shown in FIG. 5;
FIG. 9 is a detailed flowchart of the exchange rate information process shown in FIG. 5;
FIG. 10 shows a login screen;
FIG. 11 shows a menu screen;
FIG. 12 shows a condition input screen used when a searching process is performed by parts number;
FIG. 13 shows a list screen of a search result by parts number;
FIG. 14 shows a list screen (continued) of a search result by parts number;
FIG. 15 shows a detailed screen of a search result by parts number;
FIG. 16 shows a detailed screen (continued) of a search result by parts number;
FIG. 17 shows a list screen of a search result of substitute parts by parts number;
FIG. 18 shows a product/article information screen;
FIG. 19 shows a list screen of order schedule information by parts number;
FIG. 20 shows a verification unit price history information screen;
FIG. 21 shows a condition input screen when searching by type name;
FIG. 22 shows a major classification selection screen when searching external database information;
FIG. 23 shows an intermediate classification selection screen when searching external database information;
FIG. 24 shows a condition input screen when searching external database information;
FIG. 25 shows a list screen of a search result of external database information;
FIG. 26 shows a parts information screen of a search result of external database information;
FIG. 27 shows a semiconductor and liquid crystal market price screen;
FIG. 28 shows an exchange rate currency list screen;
FIG. 29 shows an exchange rate transition screen;
FIG. 30 is a block diagram of the configuration of the material system according to an embodiment of the present invention;
FIG. 31 shows the outline of the contents of the database of a material system;
FIG. 32 is a flowchart of the process of the material system;
FIG. 33 is a detailed flowchart of the material unit price information process shown in FIG. 32;
FIG. 34 is a detailed flowchart of the material use information process shown in FIG. 32;
FIG. 35 is a detailed flowchart of the management unit price information process shown in FIG. 33;
FIG. 36 is a detailed flowchart of the overseas unit price information process shown in FIG. 33;
FIG. 37 is a detailed flowchart of the use information process by parts number shown in FIG. 34;
FIG. 38 is a detailed flowchart of the material cost detailed information process by parts number shown in FIG. 34;
FIG. 39 is a detailed flowchart of the summary information process by material shown in FIG. 32;
FIG. 40 is a detailed flowchart of the specification information process shown in FIG. 32;
FIG. 41 is a detailed flowchart of the color approval information process shown in FIG. 32;
FIG. 42 shows a login screen;
FIG. 43 is a menu screen;
FIG. 44 shows a search screen of the management unit price information process;
FIG. 45 shows a list screen of a search result of the management unit price information process;
FIG. 46 shows a screen of a detailed search result of the management unit price information process;
FIG. 47 shows a search screen of an overseas factory actual unit price information process;
FIG. 48 shows a list screen of a search result of an overseas factory actual unit price information process;
FIG. 49 shows an exchange rate screen of an overseas factory actual unit price information process;
FIG. 50 shows a search screen of a use information process by parts number;
FIG. 51 shows a search result screen of a use information process by parts number;
FIG. 52 shows a products information screen of a use information process by parts number;
FIG. 53 shows a search screen of a detailed material cost information process by parts number;
FIG. 54 shows a search result screen of a detailed material cost information process by parts number;
FIG. 55 shows a products information screen of a detailed material cost information process by parts number;
FIG. 56 shows a search screen of a summary information process by material;
FIG. 57 shows a price information screen of summary information process by material;
FIG. 58 shows a weight information screen of a summary information process by material;
FIG. 59 shows a search screen of a specification information process;
FIG. 60 shows a list screen of a search result of a specification information process;
FIG. 61 shows a detailed screen of a search result of a specification information process;
FIG. 62 shows a search screen of a color approval information process;
FIG. 63 shows a search result screen of a color approval information process;
FIG. 64 shows a comment screen of a color approval information process;
FIG. 65 is a block diagram of the configuration of a cost cutting supporting system according to the present invention;
FIG. 66 shows the outline of the contents of a database of a cost cutting supporting system according to the present embodiment;
FIG. 67 is a flowchart of the process of the cost cutting supporting system;
FIG. 68 shows a login screen;
FIG. 69 shows a verification data list screen;
FIG. 70 shows a verification data screen;
FIG. 71 shows a verification data screen;
FIG. 72 shows a verification data screen;
FIG. 73 is a block diagram of the configuration of the procurement record system according to the present embodiment;
FIG. 74 shows the outline of the contents of the database of the procurement record system;
FIG. 75 is a flowchart of the process of the procurement record system;
FIG. 76 is a flowchart of the procurement record searching process;
FIG. 77 shows a login screen;
FIG. 78 shows a menu screen;
FIG. 79 shows a procurement record search screen;
FIG. 80 shows a collection method selection area;
FIG. 81 shows a condition input area and a condition input auxiliary screen area;
FIG. 82 shows a procurement record search result screen;
FIG. 83 shows a search condition display area;
FIG. 84 shows a collection result area;
FIG. 85 is a flowchart of the process of the procurement record data management system;
FIG. 86 shows a menu screen;
FIG. 87 shows a term processing screen;
FIG. 88 is a block diagram of the configuration of the supplier card information system according to the present embodiment;
FIG. 89 shows the outline of the contents of the database of the supplier card information system;
FIG. 90 is a flowchart of the process of the supplier card information system;
FIG. 91 is a flowchart of the supplier card information searching process;
FIG. 92 shows a login screen;
FIG. 93 shows a menu screen;
FIG. 94 shows a supplier card information search screen;
FIG. 95 shows a supplier card information search result screen;
FIG. 96 shows the correspondence between a year, a corporation, and a supplier:
FIG. 97 is a block diagram of the configuration of the supplier map system according to the present embodiment;
FIG. 98 shows the outline of the contents of the database of the supplier map system;
FIG. 99 is a flowchart of the process of the supplier map system;
FIG. 100 shows a login screen;
FIG. 101 shows a registration status display screen;
FIG. 102 shows a factory (machining ordered) search screen;
FIG. 103 shows a search condition/result display screen;
FIG. 104 shows a help screen;
FIG. 105 shows a map display screen;
FIG. 106 shows a factory information screen;
FIG. 107 shows a secondary machining screen;
FIG. 108 shows a path search (selection) screen;
FIG. 109 shows a path search (input) screen;
FIG. 110 shows a path display screen;
FIG. 111 is a block diagram of the configuration of the supplier sales system according to the present embodiment;
FIG. 112 shows the outline of the contents of the database of the supplier sales system;
FIG. 113 is a flowchart of the supplier sales information registration process;
FIG. 114 shows a menu screen
FIG. 115 shows a parts information registration screen;
FIG. 116 shows a parts number information registration screen;
FIG. 117 shows a replacement (substitution) information registration screen;
FIG. 118 shows a welcome news information registration screen;
FIG. 119 shows a clerk information registration screen;
FIG. 120 is a flowchart of the process of the supplier sales system;
FIG. 121 is a flowchart of the process of the supplier sales system;
FIG. 122 is a login screen;
FIG. 123 shows a menu screen;
FIG. 124 shows a sales information search screen;
FIG. 125 shows a sales information detailed screen;
FIG. 126 shows a substitute parts information search screen;
FIG. 127 shows a code help screen;
FIG. 128 shows a substitute parts information list screen;
FIG. 129 shows a welcome news information list screen;
FIG. 130 shows a welcome news information search screen;
FIG. 131 shows a welcome news information detailed screen;
FIG. 132 shows a clerk information search screen;
FIG. 133 shows a clerk information list screen;
FIG. 134 shows a clerk information detailed screen;
FIG. 135 is a block diagram of the configuration of the bulletin board e-mail system according to the present embodiment;
FIG. 136 is a flowchart of the process of the bulletin board information providing system;
FIG. 137 is a detailed flowchart of the computer conference process;
FIG. 138 is a detailed flowchart of a process by category;
FIG. 139 shows a login screen;
FIG. 140 shows a menu screen of the bulletin board information providing system;
FIG. 141 shows a menu screen of the computer conference;
FIG. 142 shows a screen by category;
FIG. 143 shows a opinion contents screen;
FIG. 144 shows a response screen;
FIG. 145 shows a new opinion screen;
FIG. 146 shows a registration screen;
FIG. 147 shows a member list screen;
FIG. 148 shows a conference information screen;
FIG. 149 shows a detailed screen of conference information;
FIG. 150 is a flowchart of the process of a supplier evaluation system;
FIG. 151 shows an evaluation input screen of a supplier;
FIG. 152 is a flowchart of the process of a supplier evaluation system;
FIG. 153 shows a supplier evaluation result screen;
FIG. 154 is a block diagram of the configuration of an entire parts number system according to the present embodiment;
FIG. 155 shows the outline of the contents of the database of the entire parts number system.
FIG. 156 is a flowchart of the process of the entire parts number system;
FIG. 157 shows a login screen;
FIG. 158 shows a menu screen;
FIG. 159 shows a purchase (verification) record latest information search screen;
FIG. 160 shows a purchase (verification) record latest information list screen;
FIG. 161 shows a purchase (verification) record history information screen;
FIG. 162 shows a unit price history latest information search screen;
FIG. 163 shows a unit price history latest information list screen;
FIG. 164 shows a unit price history information screen;
FIG. 165 shows an order schedule information search screen;
FIG. 166 shows an order schedule information list screen;
FIG. 167 shows an exchange rate latest information list screen;
FIG. 168 shows an exchange rate history information screen; and
FIG. 169 shows a code help screen.

### DETAILED DESCRIPTION OF THE PREFERRED EMBODIMENT

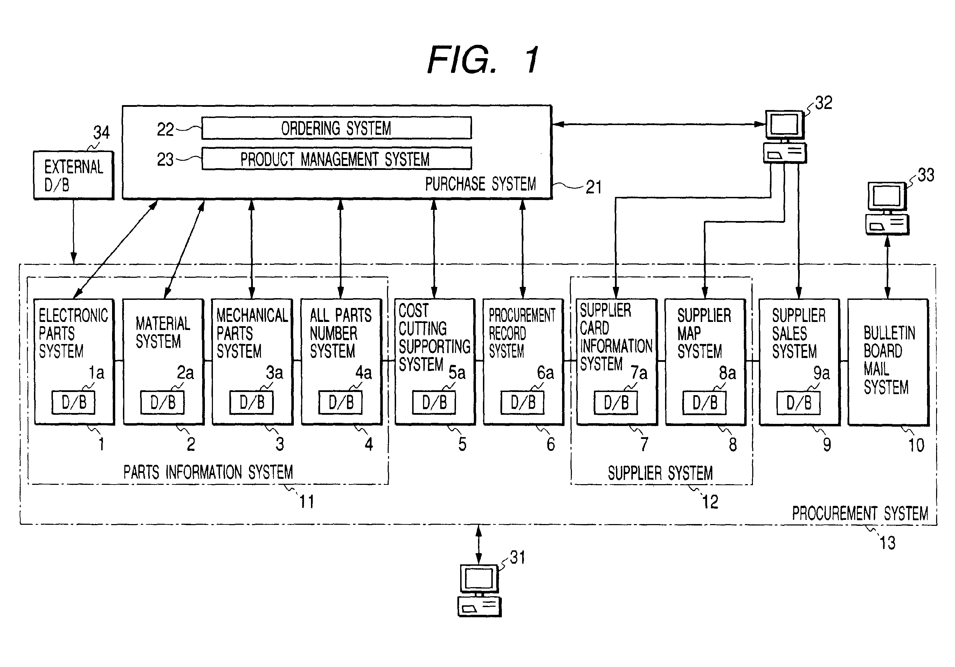

Hereafter, embodiments of the present invention will be described based on drawings. FIG. 1 is a block diagram showing configuration of procurement system (the Procurement Information Providing System) 13 and purchase system 21 according to the embodiments of the present invention. Purchase system 21 has ordering system 22 and product management system 23. Procurement system 13 has parts information system (the Parts Information Providing System) 11, cost cutting support system 5, procurement record system 6, supplier system 12, supplier sales system 9 and bulletin board mail system 10. Parts information system 11 has electronic parts system 1, material system 2, mechanical parts system 3 and all part number system 4. Supplier system 12 has supplier card information system 7 and supplier map system 8.

Electronic parts system 1 has data base (hereinafter recited as D/B) 1a, material system 2 has D/B 2a, mechanical parts system 3 has D/B 3a, all part number system 4 has D/B 4a, cost cutting support system 5 has D/B 5a, procurement record system 6 has D/B 6a, supplier card information system 7 has D/B 7a, supplier map system 8 has D/B 8a, and supplier sales system 9 has D/B 9a. It is not absolutely necessary to prepare these databases la to 9a for each individual system, but they may be shared as a single database by the systems. Preparing databases individually allows search in a database at high speed, and sharing a database allows waste of having overlapping data to be eliminated.

Electronic parts system 1 is a system providing a user with electronic parts (including semiconductors) procurement information (including spec and quality information). Material system 2 is a system providing a user with procurement information on materials for molds and press parts. Mechanical parts system 3 is a system providing a user with procurement information on mechanical parts. All part number system 4 is a system providing a user with procurement information on all part numbers (all parts). Cost cutting support system 5 is a system providing a user with price difference information on the same parts or material among businesses. Procurement record system 6 is a system providing a user with aggregation information on procurement records of the user's own group. Supplier card information system 7 is a system providing a user with card information on a supplier (supplier information). Supplier map system 8 is a system providing a user with map information (location information) on a supplier, facilities held by a supplier (processing facilities) and its business relationships with other companies (secondary subcontractor). Supplier sales system 9 is a system providing a user with sales information registered by suppliers and manufacturers. Bulletin board mail system 10 is a system providing a user with a variety of information by a bulletin board and mail.

User computer 31 is a personal computer for instance, which can only be used by a registered user. A user is an employee of a particular department of the company for instance, and is allowed to exploit procurement system 13 by using computer 31. However, information to be provided is limited according to a department that the user belongs to. The user may exploit procurement system 13 by Web browser software (Netscape or Internet Explorer) in computer 31 for instance.

Procurement system 13 is an information support system for promptly and efficiently selecting and procuring parts and materials worldwide. A user can search for procurement information on WWW (world wide web) from computer 31.

A large company often has a plurality of offices, and orders for parts or materials are received and placed by each individual office on its own. The respective offices may purchase parts or materials at different prices from different suppliers or the same supplier. Ordering system 22 acquires trade information on the offices and allows parts or materials to be purchased at prices as low as possible based on such trade information. Ordering system 22 also allows large quantities of parts or materials to be purchased at low prices by collectively receiving and placing orders of the offices. To be more specific, ordering system 22 accesses parts information system 11, cost cutting support system 5 and procurement record system 6 and receives and places orders from and to computer 32 of the supplier.

Procurement system 13 can meet the following requirements in a development department of a company. (1) To know parts and materials used by other offices. (2) To select most suitable parts and materials from wide-ranging information. (3) To acquire information on substitutive parts. (4) To acquire new product information early.

Also, procurement system 13 can meet the following requirements in a procurement department of a company. (1) To know purchase unit prices and suppliers of the offices as to the same parts and materials. (2) To know information on substitutive parts promptly. (3) To know ability (produced types and quantity, for instance) and situation of a supplier. (4) To know purchase situation of the entire group of the company.

Procurement system 13 can input data from external D/B 34 and register it on databases la to 9a. External D/B 34 may be, for instance, the SEMICONDUCTOR INDUSTRY NEWS issued by Sangyo Times, Inc., an external database (electronic device information service), products or parts catalog information or a database of the offices.

Supplier computer 32 is operated by a person in charge of a supplier and provides card information, map information and sales information to supplier card information system 7, supplier map system 8 and supplier sales system 9 respectively.

Computer 33 is operated by an information provider and provides a variety of information to bulletin board mail system 10.

User computer 31, information provider computer 33, supplier computer 32 and external D/B 34 are connected to procurement system 13 via a network such as LAN or WAN.

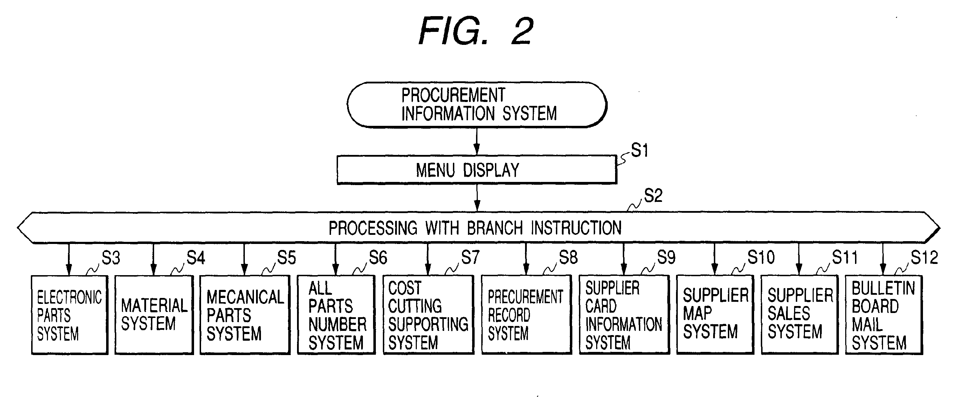

FIG. 2 is a flowchart showing processing of procurement system 13. A user can start procurement system 13 by logging in from computer 31. Step S1 displays a menu of a procurement system on user computer 31. The user can select as a menu item any of the electronic parts system, material system, mechanical parts system, all part number system, cost cutting support system, procurement record system, supplier card information system, supplier map system, supplier sales system and bulletin board mail system, and step S2 determines which system is selected, and according to that selection, it proceeds to steps S3, S4, S5, S6, S7, S8, S9, S10, S11 and S12 respectively and performs a process of each individual system.

Hereafter, the systems in procurement system 13 will be described.

### [1. Electronic parts system]

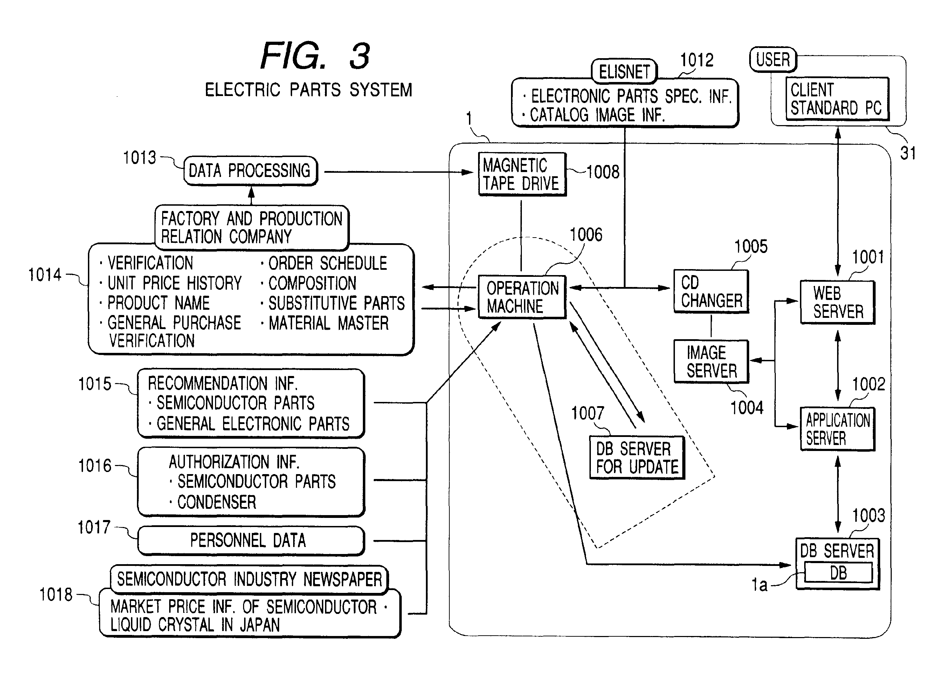

FIG. 3 is a block diagram showing configuration of electronic parts system 1 illustrated in FIG. 1. Electronic parts system 1 has Web server 1001, application server 1002, Web DB server 1003, image server 1004, CD changer 1005, operation machine 1006, DB server for update 1007 and magnetic tape device 1008. DB server 1003 has D/B 1a (FIG. 1).

User computer 31 is a standard personal computer as a client for instance, and is capable of accessing electronic parts system 1. External D/B 1012 has electronic parts specification information and catalog image information. Catalog image information is image information that is a catalog printed on paper read by an image scanner. Such information is provided to electronic parts system 1 via a CD-ROM or a network. Electronic parts specification information is provided to operation machine 1006. Catalog image information is provided to CD changer 1005.

Information source 1015 has recommendation information on electronic parts such as semiconductor parts and general electronic parts, and that information is supplied to operation machine 1006 via a floppy disk or a network. Information source 1016 has quality authorization information on electronic parts such as semiconductor parts and condensers, and that information is supplied to operation machine 1006 via a floppy disk or a network. Information source 1017 (Personnel Department) has personnel data, and that data is supplied to operation machine 1006 via a floppy disk or a network. Personnel data includes information on personnel change, and electronic parts system 1 can automatically change a department to which a registered user belongs. It can also erase registration of the changed user as required. Semiconductor industry newspaper 1018 has market price information of semiconductor/liquid crystal in Japan, and that information is supplied to operation machine 1006 via an operator's maintenance or a network. In addition, information on substitutive parts for semiconductors on sale is supplied to operation machine 1006 via a magnetic tape or a network. Operation machine 1006 registers such information on D/B 1a in DB server 1003. Moreover, personnel data provided by information source 1017 is not only provided to electronic parts system 1 but also provided likewise to other systems such as material system 2.

Factory and production relation company 1014 has verification information, order schedule information, unit price history information, composition information, product name information, substitutive parts information, general purchase verification information, material master information and so on. Such information is data-processed by data processing department 1013, and is supplied to magnetic tape device 1008 by a magnetic tape cartridge. Moreover, it may also be performed by a method of transferring data via a network. Operation machine 1006 registers information in the cartridge read by magnetic tape device 1008 on D/B 1a in DB server 1003.

Moreover, the above information should desirably be provided online to operation machine 1006 via a network.

Also, operation machine 1006 requests factory and production relation company 1014 to examine a part number or a type number, receives the examination results from factory and production relation company 1014 and registers them on D/B 1a in DB server 1003.

Operation machine 1006 requests DB server for update 1007 to update D/B 1a. DB server for update 1007 creates a data file accordingly and supplies it to operation machine 1006. Operation machine 1006 updates D/B 1a in DB server 1003.

Image server 1004 supplies catalog image information read from a CD-ROM by CD changer 1005 to Web server 1001 and application server 1002. Catalog image information can be registered on D/B 1a in DB server 1003.

User computer 31 makes various requests to Web server 1001 and receives its responses. Web server 1001 makes various requests to application server 1002 and receives its responses. Application server 1002 makes various requests to DB server 1003 and receives its responses. Web server 1001 stores a computer program and displays a unified menu for a user to select according to the computer program. Application server 1002 stores a computer program and operates electronic parts system 1 according to the computer program. DB server 1003 has D/B 1a and manages registration, deletion, update and search of that D/B 1a.

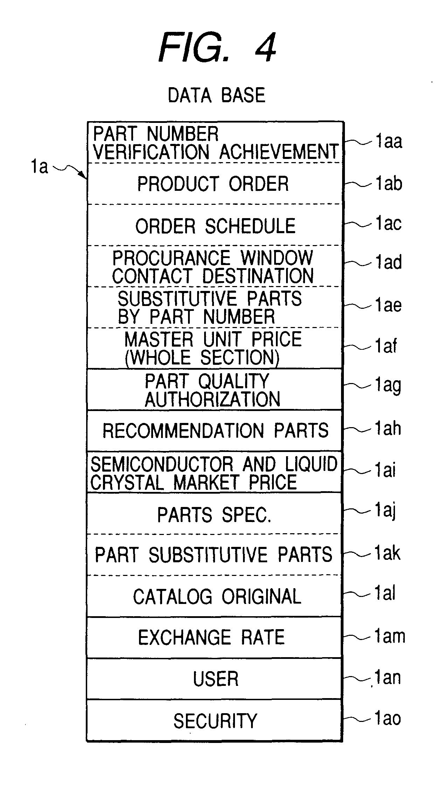

FIG. 4 is a schematic diagram showing configuration of D/B 1a in DB server 1003. D/B 1a has part number verification achievement information 1aa, product order information 1ab, order schedule information 1ac, procurance window contact destination information 1ad, substitutive parts by part number information 1ae, entire departments' master unit price information 1af, part quality authorization information 1ag, recommendation parts information 1ah, semiconductor/liquid crystal market price information 1ai, parts specification information 1aj, part substitutive parts information 1ak, catalog original information (catalog image information) 1al, exchange rate information 1am, user (user ID, password, user's belonging department, etc.) information 1an and security information 1ao.

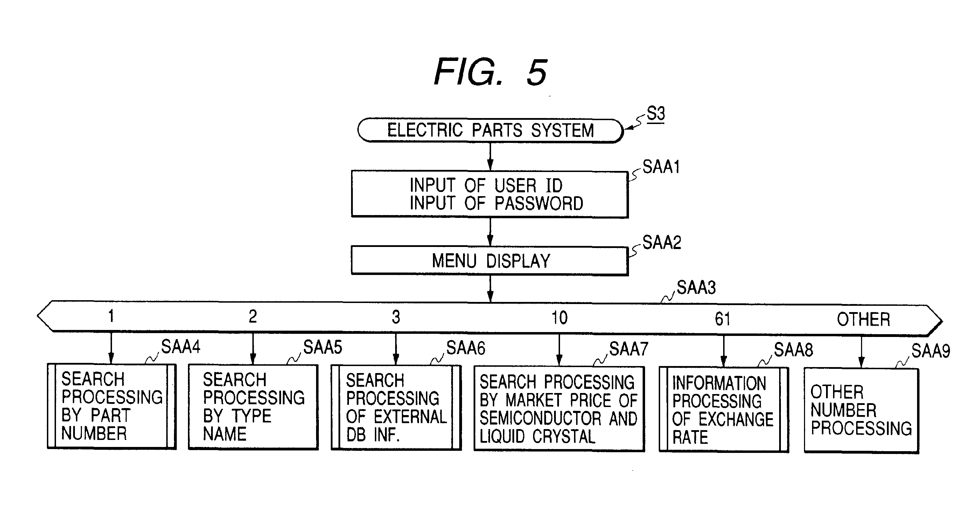

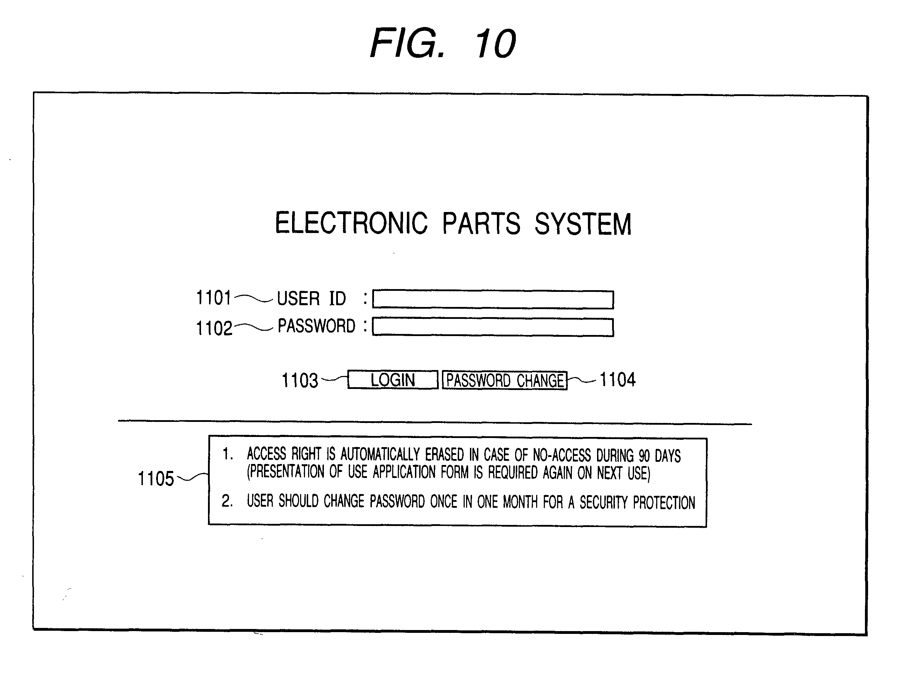

FIG. 5 is a flowchart showing processing of electronic parts system 1, and corresponds to step S3 in FIG. 2. Step SAA1 displays a screen shown in FIG. 10 on user computer 31 waiting for input of a user ID and input of a password. A user can enter a user ID in area 1101 in FIG. 10 and a password in area 1102. Security can be enhanced and a log-in by an illicit person can be prevented by having user ID 1101 and password 1102 entered.

The following two measures are taken in order to enhance security as displayed in display area 1105. (1) In the case where there is no access (log-in) for 90 calendar days, the right to access (the right to log in) is automatically erased. In that case, an application for utilization must be submitted again on utilization. (2) A user must change a password once a month for security protection. A password can be changed by clicking on password change button 1104 with a mouse.

Moreover, these two processes for enhanced security are also performed in other systems such as the material system in addition to the electronic parts system.

If a user clicks on log-in button 1103 with a mouse, and if the entered user ID and password are correct, the user is logged in and proceeds to step SAA2.

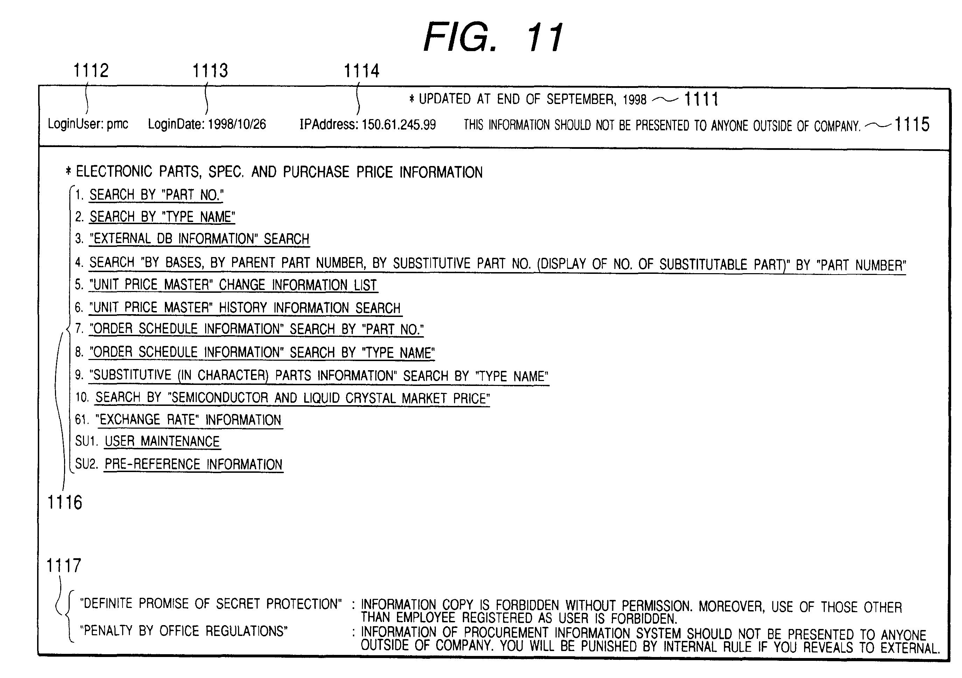

Step SAA2 displays a menu screen shown in FIG. 11. Display area 1111 indicates a date of information. Display area 1112 indicates a log-in user ID (user ID). Display area 1113 indicates a date of log-in. Display area 1114 indicates an IP address of log-in. Based on this IP address, the department to which the user belongs can be identified. As the source can be identified by the displays of display areas 1112 to 1114 when a hard copy of the screen is made, it is possible to prevent leakage of information to outside. To be more specific, there is an effect of keeping a user from making a hard copy since information on users who made a hard copy is displayed. In addition, display of "This information should not be presented to anyone outside the company" in display area 1115 can prevent leakage of information to outside.

Menu items 1116 displays "1. Search by part No.", "2. Search by type name", "3. External DB information search", "4. Search by part No. of substitutive part No. (display of No. of a substitutive part) by base and by parent part number", "5. Unit price master change information list", "6. Unit price master history information search", "7. Order schedule information search by part No.", "8. Order schedule information search by type name", "9. Substitutive (in character) part information search by type name", "10. Search by semiconductor and liquid crystal market price", "61. Exchange rate information", "SU1. User maintenance" and "SU2. Pre-reference information".

A user maintenance process refers to user information and log information registered on a database, and registers user information and security management. A pre-reference information process sets up information required for system operation.

Display area 1117 indicates the following two items for enhanced security. (1) "Commitment to confidentiality: Duplication of information without permission is prohibited. Also, use by any person other than the employee registered as a user is prohibited". (2) "Punishment according to the office regulations: Information on the procurement system should not be presented to anyone outside the company. If you leak it to outside, you will be punished according to the in-house regulations".

A user can select a desirable item out of the above menu items 1116. If the user selects an item, step SAA3 in FIG. 5 checks which number the user has selected. If No. 1 is selected, step SAA4 performs a search process by a part number. If No. 2 is selected, step SAA5 performs a search process by a type name. If No. 3 is selected, step SAA6 performs a search process of external database information. If No. 10 is selected, step SAA7 performs a search process by market prices of semiconductor and liquid crystal. If No. 61 is selected, step SAA8 processes exchange rate information. If any other number is selected, step SAA9 performs a process of that number. Details of the processes of steps SAA4 to SAA8 will be explained hereafter.

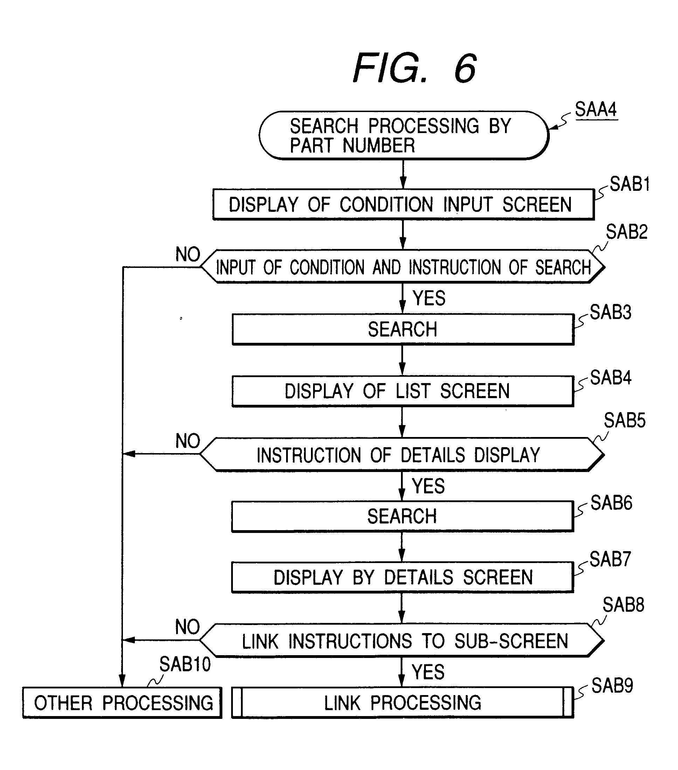

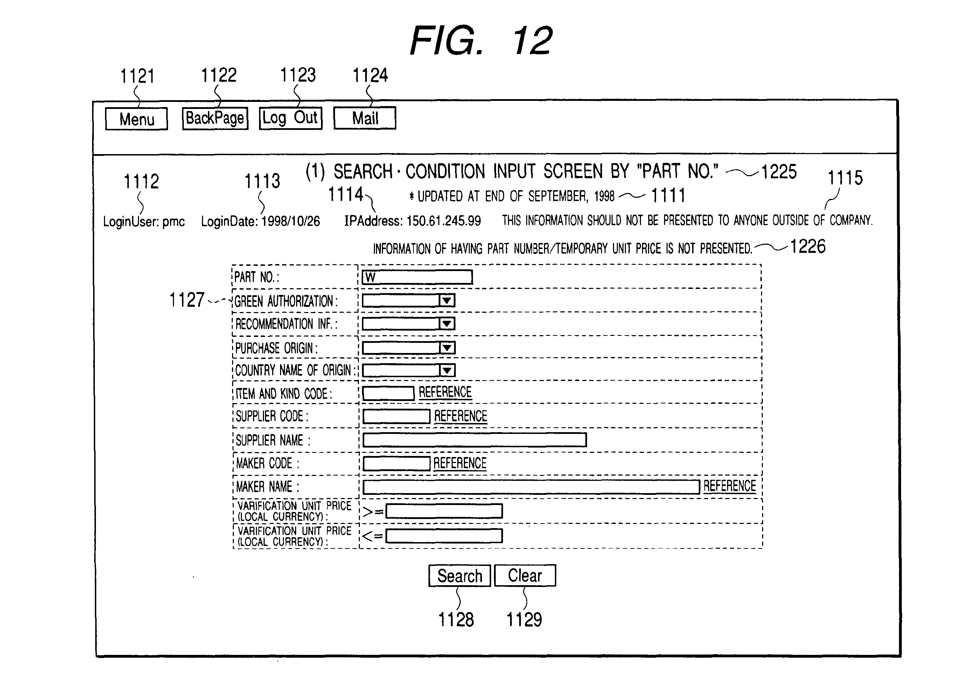

FIG. 6 is a flowchart showing details of a search process by a part number of step SAA4 shown in FIG. 5. This process can search for electronic parts by using a part number as a keyword. Step SAB1 displays on computer 31 a condition input screen shown in FIG. 12. Title area 1125 of FIG. 12 indicates "(1) Search, condition input screen by part No.". Display areas 1111 to 1115 have the same indication as above.
Display area 1126 displays "Information of having part number/temporary unit price is not presented", thus masking the information according to the department to which the user belongs and providing only predetermined information. For instance, as for users belonging to the development department, it is possible, by providing no information on having part number/temporary unit price, to prohibit them from designing and making trial calculations based on such information.

Condition input area 1127 can have a user enter a part No., green authorization considering environmental problems (for instance, whether or not there is a hazardous substance, and whether or not there is recycling), recommendation information (inventory situation in the prototype department), purchase origin, country name of origin, item and kind code (for instance, a code indicating a semiconductor), supplier code (for instance, a code of a dealer), supplier name, maker code, maker name, and what minimum or maximum amount an actual verification unit price is. In addition to a part number, all or part of the above conditions can be entered. The above conditions can be cleared by clicking on clear button 1129 with a mouse. If search button 1128 is clicked on with a mouse, it proceeds to step SAB3 via step SAB2, and searches for an electronic part meeting the above entered conditions based on D/B 1a. It then proceeds to step SAB4. Moreover, if search button 1128 is not clicked on but any of buttons 1121 to 1124 is clicked on, it proceeds to step SAB10.

Step SAB10 is a process in the case where any of buttons 1121 to 1124 is clicked on. If menu button 1121 is clicked on, it returns to step SAA2 in FIG. 5 to display a menu screen shown in FIG. 11. If back page button 1122 is clicked on, it returns to a preceding screen display. If log-out button 1123 is clicked on, the procurement system comes to an end. If mail button 1124 is clicked on, mail transmission or a check of received mail can be performed.

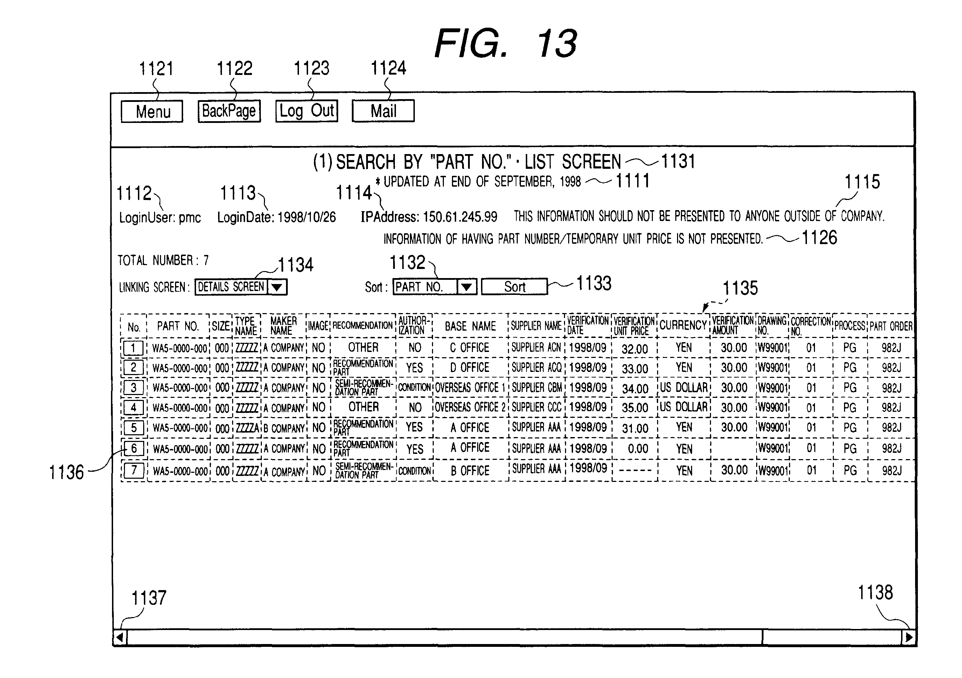

After the above search, step SAB4 displays a screen listing the search results shown in FIG. 13. If any of buttons 1121 to 1124 in FIG. 13 is clicked on, it proceeds to step SAB10 via step SAB5 and performs the same process as above. Display areas 1111 to 1115 and 1126 have the same display as above. List display area 1135 displays information on seven electronic parts, for instance, as a result of the search. To be more specific, list display area 1135 displays part No. decided by the company, size, type name decided by the maker, maker name, whether or not there is catalog image information, recommendation (prototype inventory situation), quality authorization, base name (office name), supplier name (dealer name), verification date, verification price, currency, verification amount, drawing No., correction No., process and part order. Moreover, as for quality authorization, "YES" is a pass, "CONDITION" is a conditional pass and "NO" is a failure. When catalog image information is "YES", if the "YES" part is clicked on with a mouse, it shows catalog image information based on D/B 1a (FIG. 4). Catalog image information is image information printed on paper that is read by an image scanner.

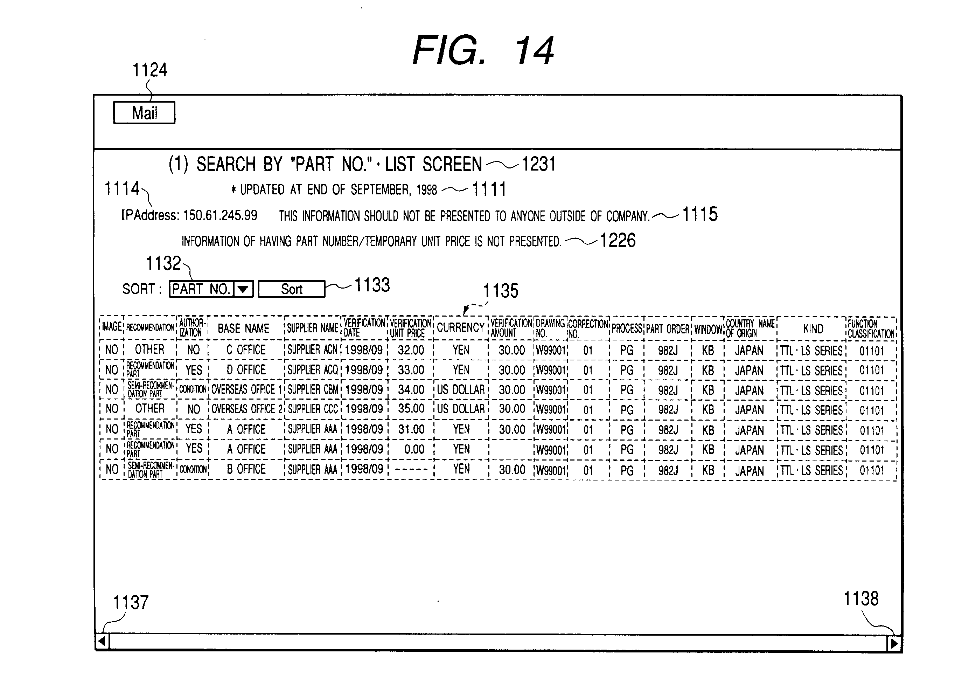

The screen continues to the right. If scroll bar switch 1137 is clicked on with a mouse, the screen scrolls to the left. If scroll bar switch 1138 is clicked on with a mouse, the screen scrolls to the right and displays the continued screen shown in FIG. 14. List display area 1135 displays window, country of origin, kind, function classification No. in addition to the above.

The seven electronic parts in list display area 1135 can be sorted. First, "Part No." is selected for instance as sort item 1132. Next, if sort button 1133 is clicked on with a mouse, it sorts part No. in order in list display area 1135. It is also possible to select and sort an item other than part No. as a sort item.

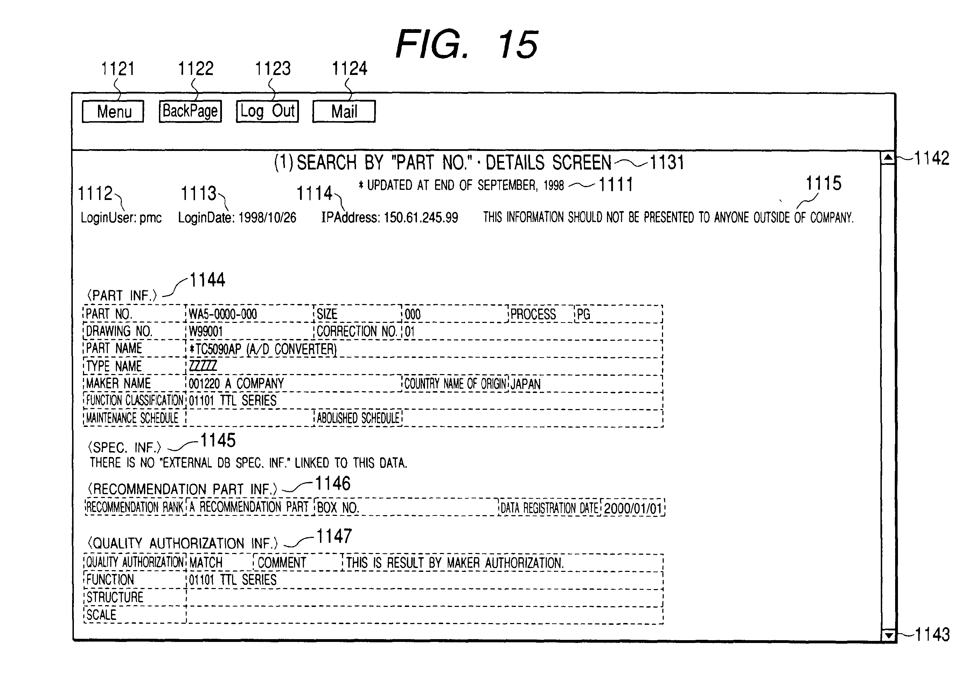

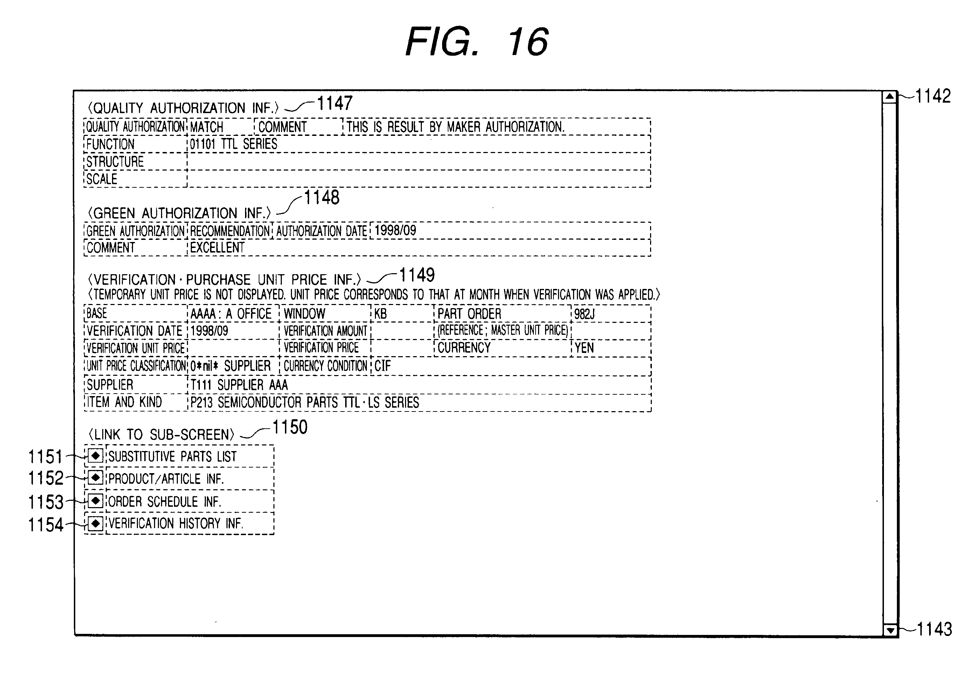

If "Details screen" is selected as linking screen 1134 shown in FIG. 13 and button 1136 of electronic part No. 6 is clicked on with a mouse, it proceeds to step SAB6 via step SAB5 and searches for detailed information on electronic part No. 6 based on D/B 1a. Next, it proceeds to step SAB7 and displays the screen of detailed information on electronic part No. 6 as shown in FIG. 15. Moreover, it is possible to specify not only the above "Details Screen" but also the same item for linking to screens 1151 to 1154 linked to FIG. 16.

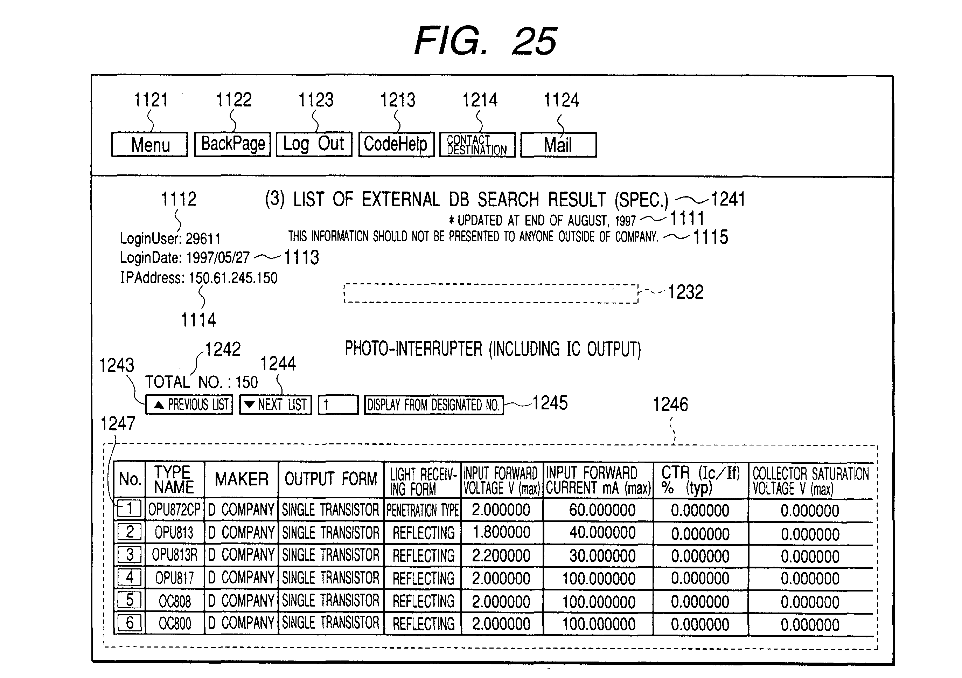

Title area 1141 in FIG. 15 indicates "(1) Search by part No./details screen". Display areas 1111 to 1115 have the same indication as above. Part information area 1144 displays part information including part No., size, process, drawing No., correction No., part name, type name, maker name, country name of origin, function classification, maintenance schedule and removal schedule. Specification information area 1145 displays specification information of an external database. In the case there is no specification information, it indicates that there is no specification information as shown in FIG. 15. In the case there is specification information, it displays specification information as shown in FIG. 25 for instance. The specification information shown in FIG. 25 will be described later. Recommendation part information area 1146 displays recommendation rank (rank of prototype inventory situation), box No. and data registration date.
Quality authorization information area 1147 displays quality authorization, comment, function, structure and scale. This screen continues downward.

If scroll bar switch 1142 is clicked on with a mouse, the screen scrolls upward. If scroll bar switch 1143 is clicked on with a mouse, the screen scrolls downward and the continued screen shown in FIG. 16 is displayed. The display screen displays the following in addition to the above. Green authorization information area 1148 displays green authorization information, comment and authorization date. Green authorization information is determined by whether or not friendly to the environment according to presence of a hazardous substance and recycling.
Verification/purchase unit price information area 1149 displays base (office), window, part order, verification date, verification amount, master unit price showing an estimated price for reference, verification unit price, verification price, currency, unit price classification, unit price condition, supplier and item and kind. Moreover, in the case where the user belongs to the development department, no temporary unit price is displayed for the above-mentioned reason.

As mentioned above, it is possible to improve search speed by displaying the screen listing search results first and then displaying the details screen of individual electronic part. To be more specific, it is possible to perform necessary display as much as possible on the list screen and then display the details screen of individual electronic part one to one.

Link to sub-screen area 1150 has the four buttons 1151 to 1154. If any of buttons 1151 to 1154 is clicked on with a mouse, it proceeds to step SAB9 via step SAB8 and performs a link process. Moreover, if any of buttons 1121 to 1124 is clicked on, it proceeds to step SAB10 via step SAB8 and performs the same process as above.

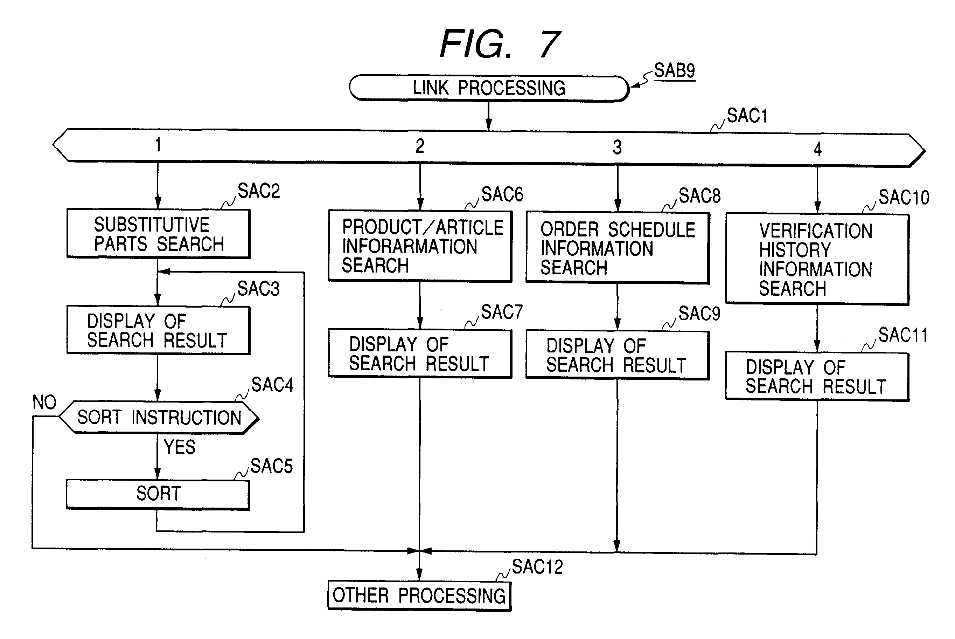

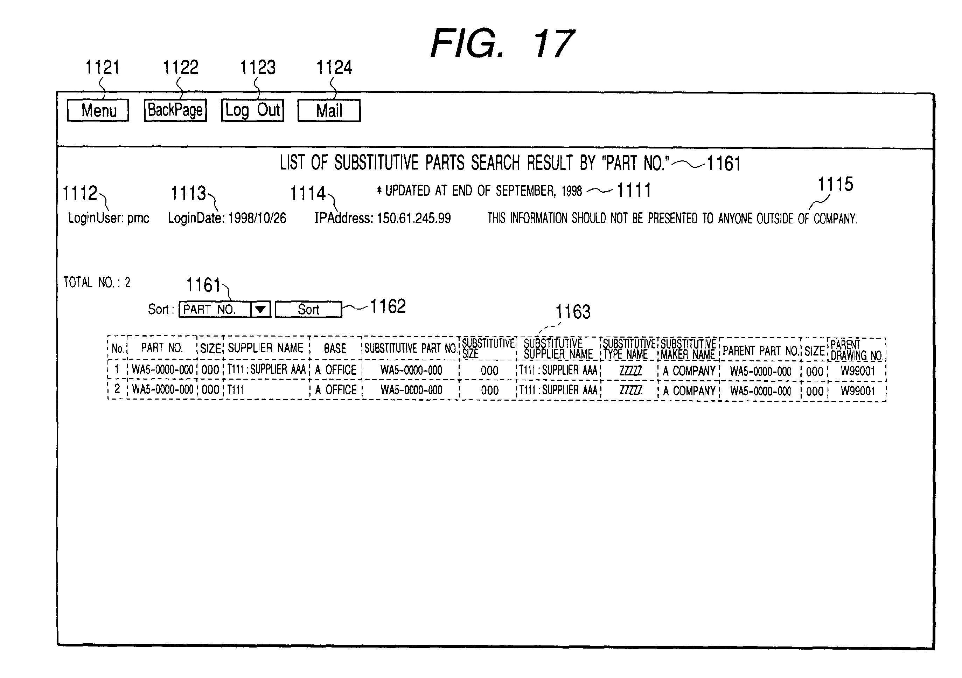

FIG. 7 is a flowchart showing details of a link process of step SAB9 shown in FIG. 6. If the first button 1151 in FIG. 16 is clicked on with a mouse, it proceeds to step SAC2 via a branch process of step SAC1 and searches for substitutive parts information based on D/B 1a. Next, step SAC3 displays the substitutive parts list screen shown in FIG. 17.

FIG. 17 shows the substitutive parts list screen. Title area 1161 indicates "List of substitutive parts search results by part No." Display areas 1111 to 1115 have the same indication as above. List display area 1163 displays two pieces of substitutive parts information on electronic parts for instance. Substitutive parts information in list display area 1163 displays part No., size, supplier name, base name, substitutive part No., substitutive size, substitutive supplier name, substitutive type name, substitutive maker name, parent part No., size and parent drawing No. It is possible-, by displaying substitutive parts information, to know which is a substitute electronic part for an electronic part in the case where, for instance, the electronic part becomes unavailable. Also, it is possible, by displaying parent part No. and parent drawing No. information, to know which is a product using that electronic part.

The two electronic parts in list display area 1163 can be sorted. First, "Part No." is selected for instance as sort item 1161. Next, if sort button 1162 is clicked on with a mouse, it proceeds to step SACs via step SAC4 and sorts the electronic parts in order of Part No. Next, it returns to step SAC3 and displays a list of the electronic parts after sorting in list display area 1163. It is also possible to select and sort an item other than part No. as a sort item. Moreover, if any of buttons 1121 to 1124 in FIG. 17 is clicked on, it proceeds to step SAC12 via step SAC4 and performs the same process as step SAB10 in FIG. 6.

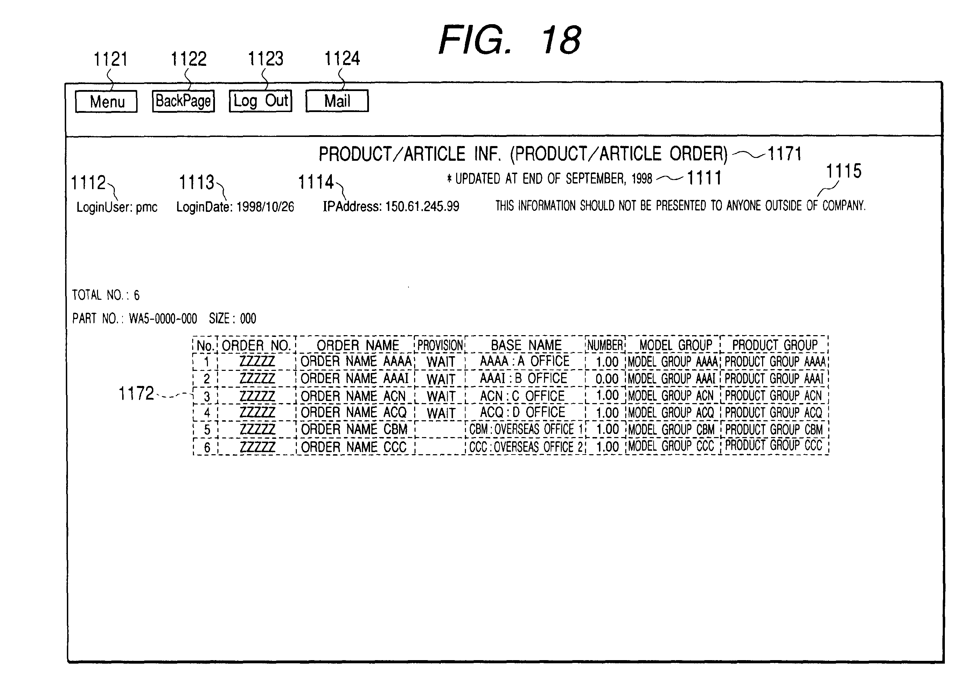

If the second buttons 1152 in FIG. 16 is clicked on with a mouse, it proceeds to step SAC6 via a branch process of step SAC1 in FIG. 7 and searches for product/article information based on D/B 1a. Next, step SAC7 displays the product/article information screen shown in FIG. 18.

FIG. 18 shows the product/article information screen. Title area 1171 indicates "Product/article information (product/article order)". Display areas 1111 to 1115 have the same indication as above. Product/article information display area 1172 displays six pieces of product/article information as to a desired part No. (WA5-0000-000 for instance) for instance. To be more specific, product/article information display area 1172 displays order No., order name, provision, base name, number (number of a subject part), model group and product group. It is possible, by displaying product/article information, to know which is a product or an article using that electronic part. It proceeds to the above step SAC12 thereafter, and performs the processes of buttons 1121 to 1124 in FIG. 18.

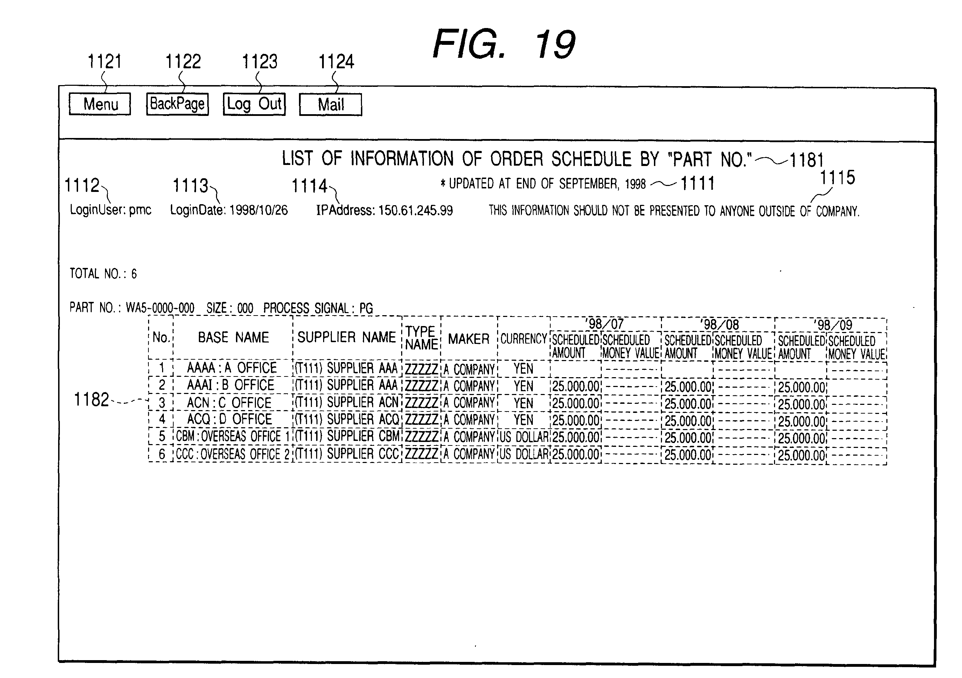

If the third button 1153 in FIG. 16 is clicked on with a mouse, it proceeds to step SAC8 via a branch process of step SAC1 in FIG. 7 and searches for order schedule information based on D/B 1a. Next, step SAC9 displays the order schedule information screen shown in FIG. 19.

FIG. 19 shows the order schedule information screen. Title area 1181 indicates "List of information of order schedule by part No." Display areas 1111 to 1115 have the same indication as above. Order schedule information display area 1182 displays six pieces of order schedule information as to a desired part No. (WA5-0000-000 for instance) for instance. To be more specific, order schedule information display area 1182 displays base name, supplier name, type name, maker name, currency, scheduled amount and scheduled money value for each month of the year. It is possible, by displaying order schedule information, to know order amount and order money value of the electronic part for each month in future. It proceeds to the above step SAC12 thereafter, and performs the processes of buttons 1121 to 1124 in FIG. 19.

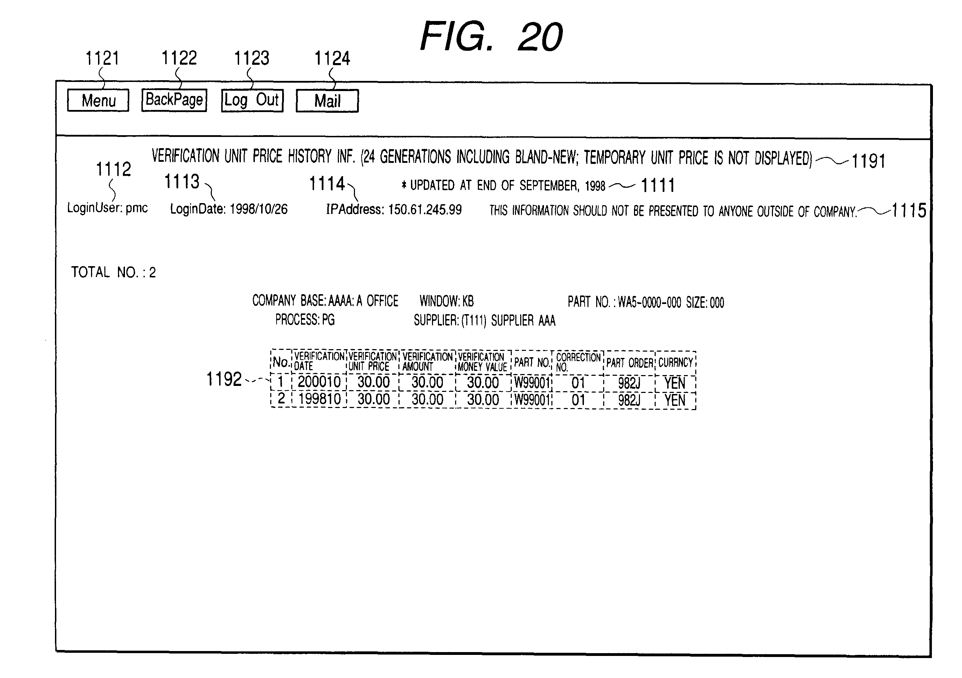

If the fourth button 1154 in FIG. 16 is clicked on with a mouse, it proceeds to step SAC10 via a branch process of step SAC1 in FIG. 7 and searches for verification history information based on D/B 1a.
Next, step SAC11 displays the verification history information screen shown in FIG. 20.

FIG. 20 shows the verification history information screen. Title area 1191 indicates "Verification unit price history information (24 generations including the current one with no temporary unit price indication)" Display areas 1111 to 1115 have the same indication as above. Verification unit price history information display area 1192 displays two pieces of verification unit price history information as to a desired company base (office A for instance) and a desired part No. (WA5-0000-000 for instance) and a desired supplier (AAA for instance) for instance. To be more specific, verification unit price history information area 1192 displays verification date, verification unit price, verification amount, verification money value, drawing No., correction No., part order and currency. It is possible, by displaying verification unit price information, to know transition in past verification unit prices. It proceeds to step SAC12 thereafter, and performs the processes of buttons 1121 to 1124 in FIG. 20.

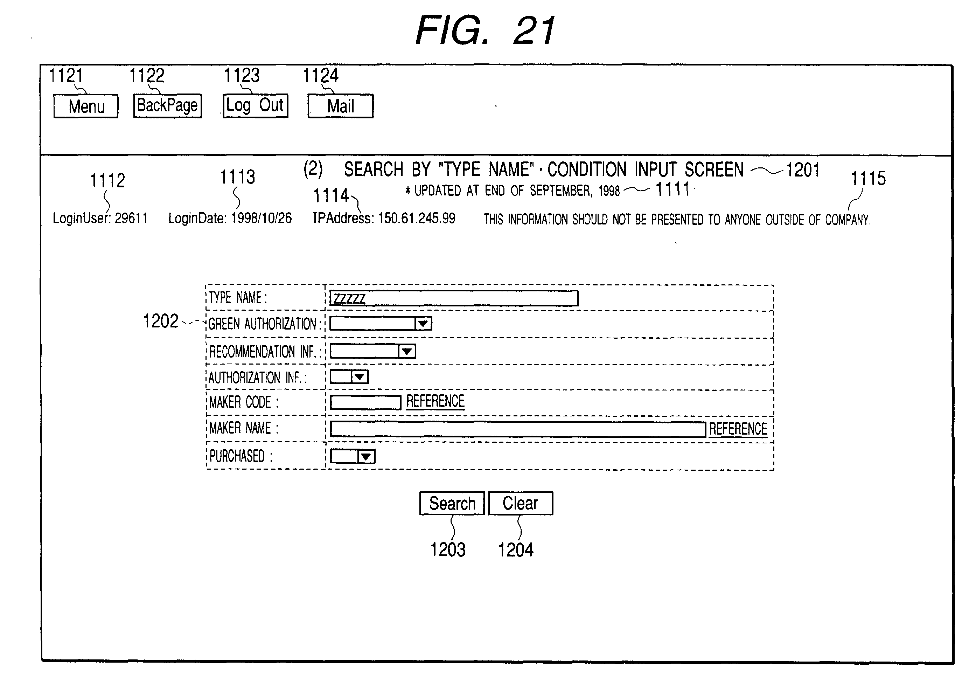

If "2. Search by type name" is selected on the menu screen shown in FIG. 11, it proceeds to a search process by type name of step SAA5 shown in FIG. 5, and displays a condition input screen shown in FIG. 21. Title area 1201 of FIG. 21 indicates "Search by type name/condition input screen". Display areas 1111 to 1115 have the same indication as above. Type name, green authorization information, recommendation information, quality authorization information, maker code, maker name and purchased information can be entered in condition input area 1202. In addition to a type name, all or part of the above conditions can be entered. The above conditions can be cleared by clicking on clear button 1204 with a mouse. If search button 1203 is clicked on with a mouse, it searches for an electronic part meeting the above entered conditions based on D/B 1a and displays the search results. Processing thereafter is the same as step SAA4 of a search process by the above part No.

Moreover, there may be a subtle difference in a type name between one created by external D/B 34 (FIG. 1) and one made by an in-house database. This is because external D/B 34 uses a type name used in a catalog. In this case, electronic information system 1 has the above two kinds of type name information in D/B 1a, and it displays type names of which part of first digits is identical, regarding them as having a high possibility of being the same type name. A user just has to select matching one out of these candidate type names, and so burden of search is reduced. On that occasion, those not matching with the in-house type name are only displayed.

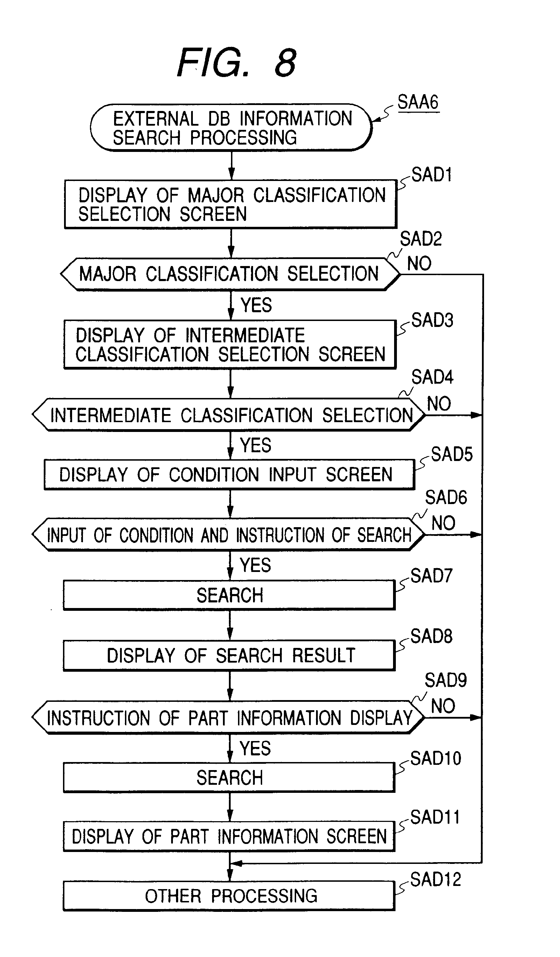

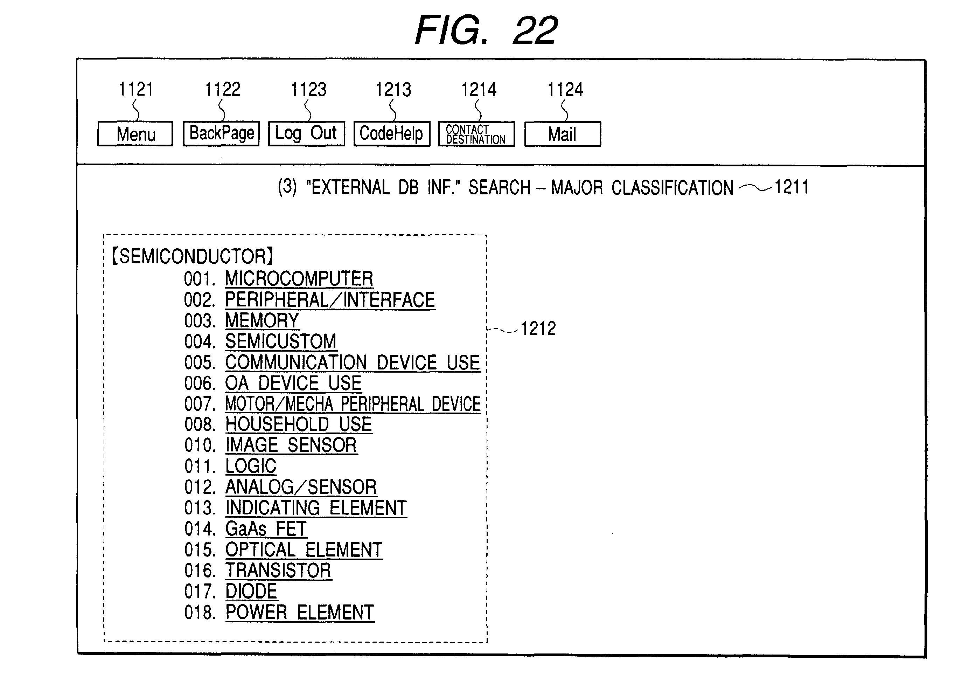

If "3. External D/B information search" is selected on the menu screen shown in FIG. 11, it proceeds to search processing of external D/B information of SAA6 shown in FIG. 5. FIG. 8 is a flowchart showing details of search processing of external D/B information of step SAA6 shown in FIG. 5. Step SAD1 displays the major classification selection screen shown in FIG. 22. Title area 1211 of FIG. 22 indicates "(3) External D/B information search - major classification". Major classification selection menu 1212 displays "001. Microcomputer", "002 Peripheral/interface", ..., "015 Optical element" and so on. A user can select one out of major classification selection menu 1212. If any of buttons 1121 to 1124 or buttons 1213, 1214 is clicked on with a mouse, it proceeds to step SAD12 via step SAD2. In step SAD12, the same process as above is performed as to menu button 1121, back page button 1122, log-out button 1123 and mail button 1124. When help button 1213 is clicked on with a mouse, it displays help in order to help the user operation. If contact destination button 1214 is clicked, it displays a contact for the electronic part system and contacts of the procurement departments of the factory/production relation company.

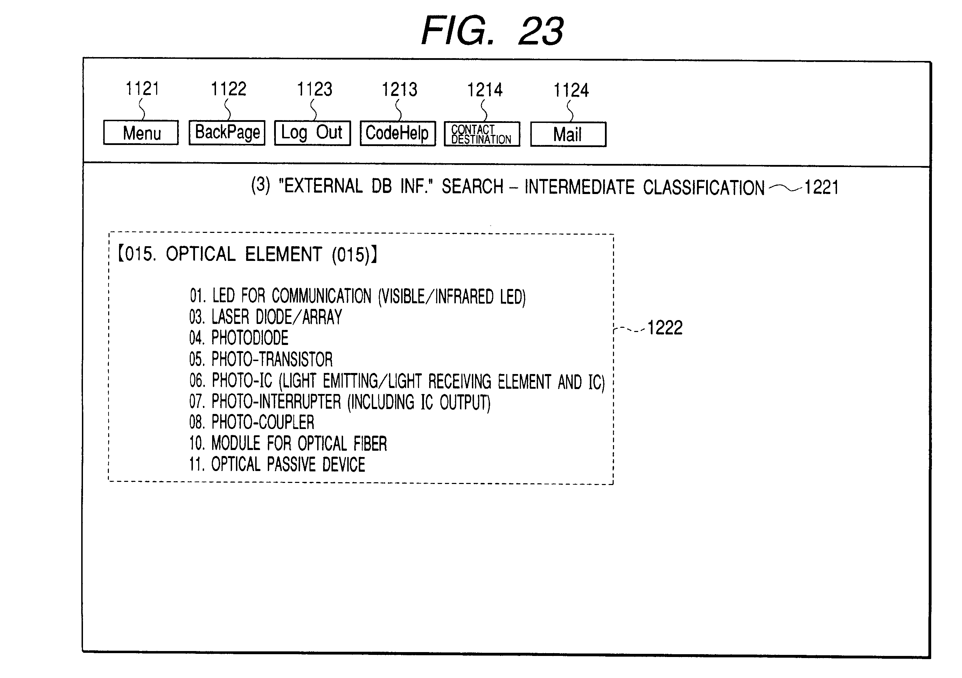

If a user selects "015 Optical element" out of major classification selection menu 1212, it proceeds to step SAD3 via step SAD2 and displays the intermediate classification (parts) selection screen of "Optical element" shown in FIG. 23. Selecting intermediate classification following major classification allows the user to select a desired electronic part easily and promptly. Title area 1221 in FIG. 23 indicates "(3) External D/B information search - intermediate classification". Intermediate classification selection menu 1222 displays "01. LED for communication", "03 Laser diode/array", ..., "07 Photo-interrupter" and so on. The user can select one out of intermediate classification selection menu 1222. If any of buttons 1121 to 1124 or buttons 1213, 1214 is clicked on with a mouse, it proceeds to step SAD12 via step SAD4 and performs the same process as above.

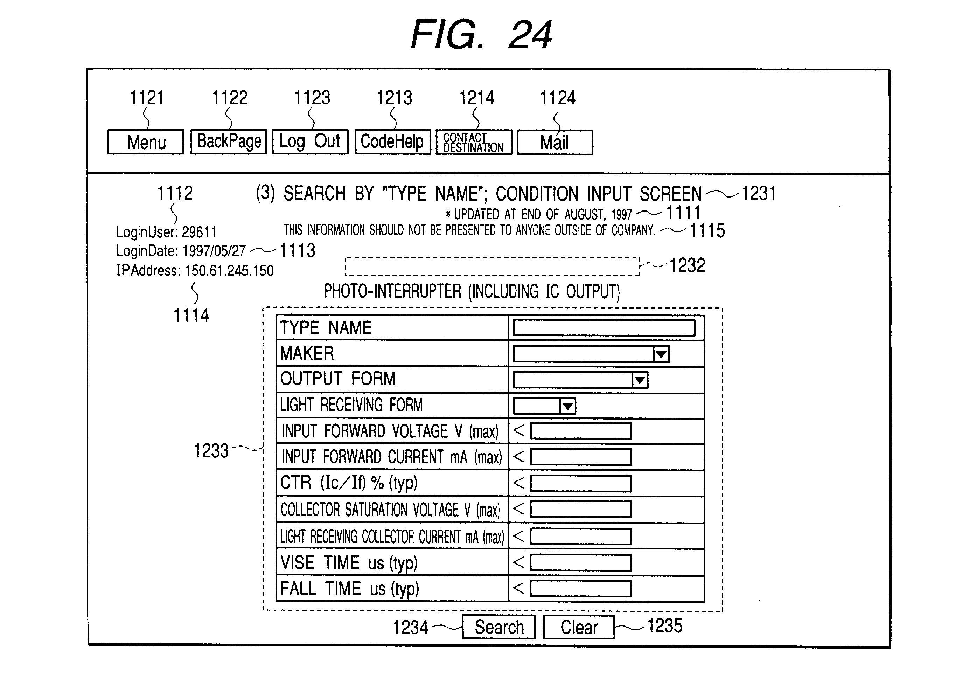

If a user selects "07 Photo-interrupter" for instance out of intermediate classification selection menu 1222, it proceeds to step SAD5 via step SAD4 and displays the condition input screen of "Photo-interrupter" shown in FIG. 24. Title area 1231 in FIG. 24 indicates "(3) Search by type name/condition input screen". Display areas 1111 to 1115 have the same indication as above. Type name, maker, output form, light receiving form, input forward voltage, input forward current and so on can be entered in condition input area 1233. The electronic part system has specification information search items of electronic parts supplied from an external database and creates a condition input screen of which conditions are the specification information items. The user can provide an instruction to search only for the electronic parts meeting the conditions by entering the specification information conditions.

The above conditions can be cleared by clicking on clear button 1235 with a mouse. If search button 1234 is clicked on with a mouse, it proceeds to step SAD7 via step SAD6, and searches for an electronic part meeting the above entered conditions based on D/B 1a. It then proceeds to step SAD8. Moreover, if any of buttons 1121 to 1124, 1213 and 1214 in FIG. 24 is clicked on, it proceeds to step SAD12 via step SAD6 and performs the same process as above.

Step SAD8 displays the list of search results screen shown in FIG. 25. Title area 1241 in FIG. 25 indicates "(3) List of external D/B search results (spec)". Display areas 1111 to 1115 have the same indication as above. Error display area 1232 displays error contents in case an error occurs to the search results. For instance, if an electronic part meeting the condition cannot be found, it indicates "No applicable data" in error display area 1232. Total No. display area 1242 displays the number (150 for instance) of electronic parts meeting the condition (photo-interrupter for instance). List display area 1246 displays first six photo-interrupters out of 150. To be more specific, list display area 1246 displays specification information such as type name, maker, output form, light receiving form, input forward voltage and input forward current. If previous list button 1243 is clicked on with a mouse, it displays a list preceding the currently displayed data. If next list button 1244 is clicked on with a mouse, it displays a list next to the currently displayed data. If a start number is entered in the column on the left of start number button 1245 and button 1245 is clicked on with a mouse, it displays a list from that number. If button 1247 of electronic part 1 in list display area 1246 is clicked on, it proceeds to step SAD10 via step SAD9, and searches for part information on electronic part 1 based on D/B 1a. It proceeds to SAD11 thereafter. Moreover, if any of buttons 1121 to 1124 or buttons 1213, 1214 in FIG. 25 is clicked on, it proceeds to step SAD12 via step SAD9 and performs the same process as above.

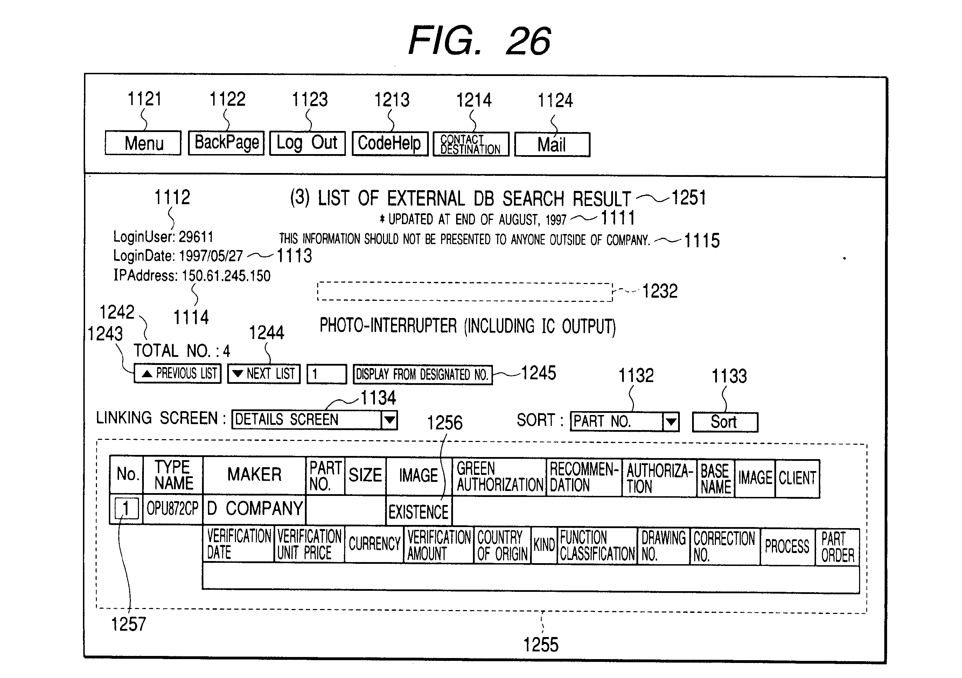

Step SAD11 displays the part information screen indicating search results as shown in FIG. 26. Title area 1251 of FIG. 26 indicates "(3) List of external D/B search results". Display areas 1111 to 1115 have the same indication as above. Error display area 1232, total No. display area 1242, previous list button 1243, next list button 1244 and start number button 1245 are the same as above. Linking screen area 1134, sort area 1132 and sort button 1133 are the same as those shown in FIG. 13. List display area 1255 displays the same part information as in list display area 1135 shown in FIG. 13. If "Existence" area 1256 in list display area 1255 is clicked on with a mouse, it displays that catalog image information. If button 1257 of electronic part No. 1 is clicked on, it displays part details information of electronic part No. 1 as shown in FIG. 15 and FIG. 16. It proceeds to step SAD12 thereafter and performs the same process as above.

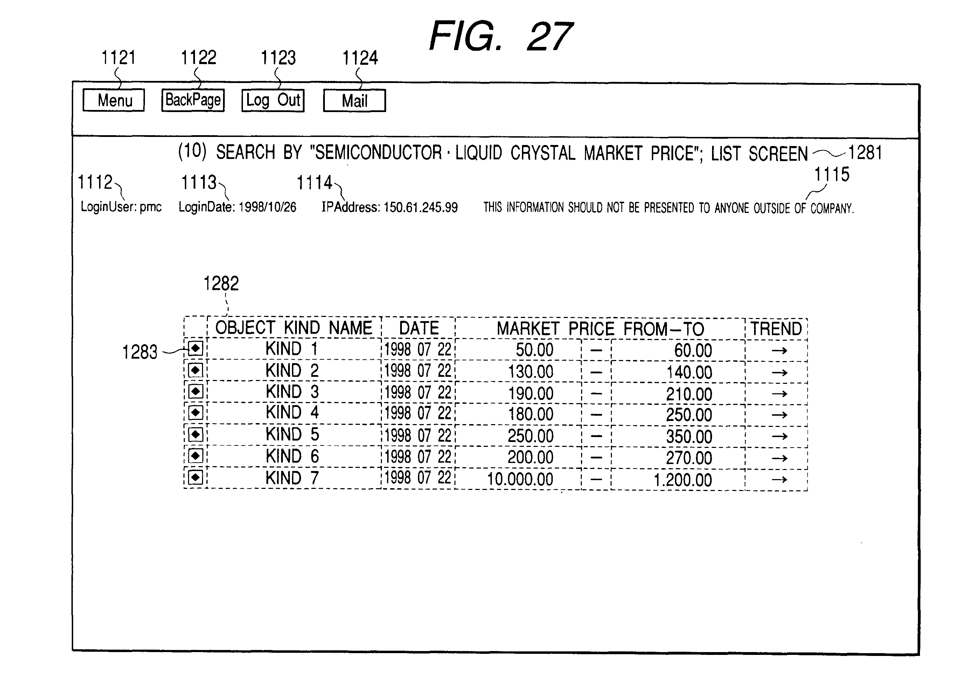

If "10. Search by semiconductor and liquid crystal market price" is selected on the menu screen shown in FIG. 11, it proceeds to a search process by market prices of semiconductor and liquid crystal of step SAA7 shown in FIG. 5. If a user specifies an item as to semiconductor and liquid crystal, the semiconductor/liquid crystal market price screen shown in FIG. 27 is displayed. Title area 1281 in FIG. 27 indicates "Search by semiconductor/liquid crystal market price/kind list screen". Display areas 1111 to 1115 have the same indication as above. Price display area 1282 displays market prices of seven kinds of a desired item (item A for instance) for instance. To be more specific, it displays kind name, date, lowest market price, highest market price and price trend as to each individual kind. Price trend indicates upward or downward. If button 1283 of each individual kind is clicked on, it displays past price history of that kind. Moreover, if any of buttons 1121 to 1124 in FIG. 27 is clicked on, it performs the same process as above.

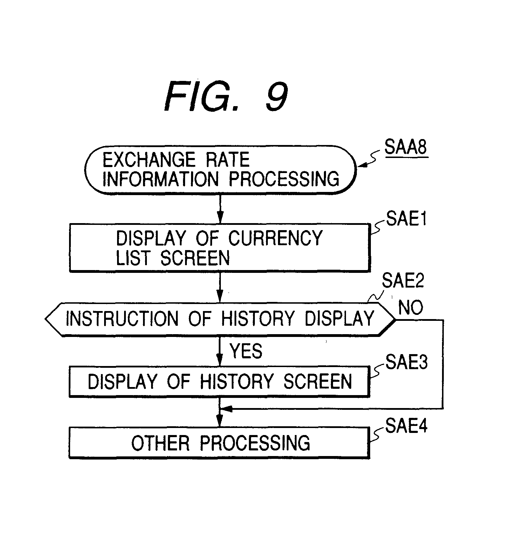

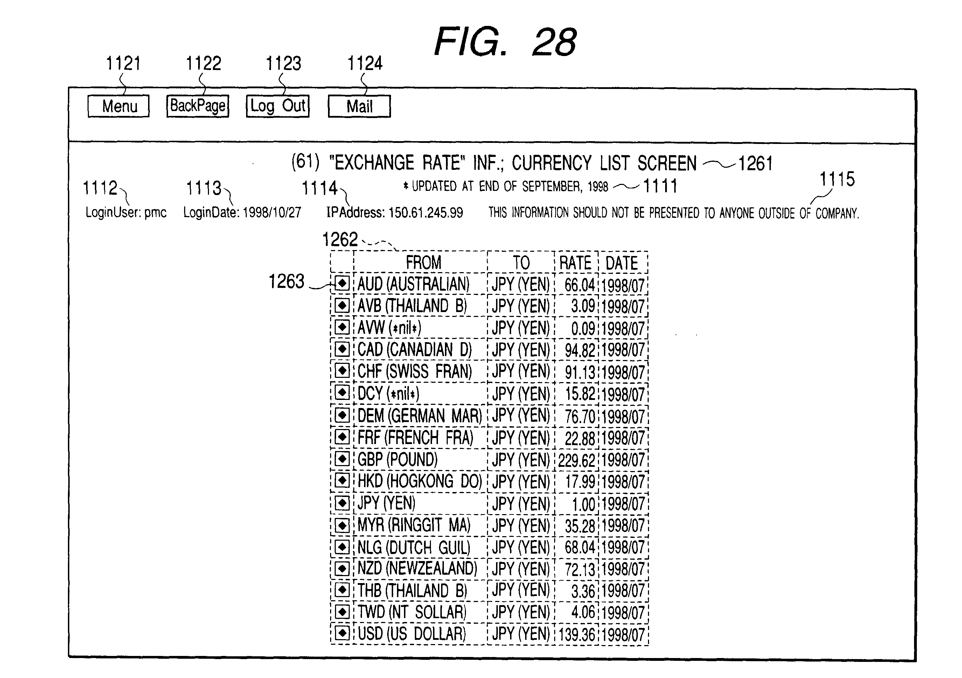

If "61. Exchange rate information" is selected on the menu screen shown in FIG. 11, it proceeds to information processing of exchange rate of step SAA8 shown in FIG. 5. FIG. 9 is a flowchart showing details of information processing of exchange rate of step SAA8. Step SAE1 displays currency list screen shown in FIG. 28. Title area 1261 in FIG. 28 indicates "(61) Exchange rate information/currency list screen". Display areas 1111 to 1115 have the same indication as above. Currency list display area 1262 displays source currency, target currency, rate and date based on D/B 1a. For instance, 1 Australian dollar (AUD) is 86.04 yen (JPY). For instance, if Australian dollar button 1263 is clicked on, it proceeds to step SAE3 via step SAE2. Moreover, if any of buttons 1121 to 1124 in FIG. 28 is clicked on, it proceeds to step SAE4 via step SAE2 and performs the same process as step SAB10 in FIG. 6.

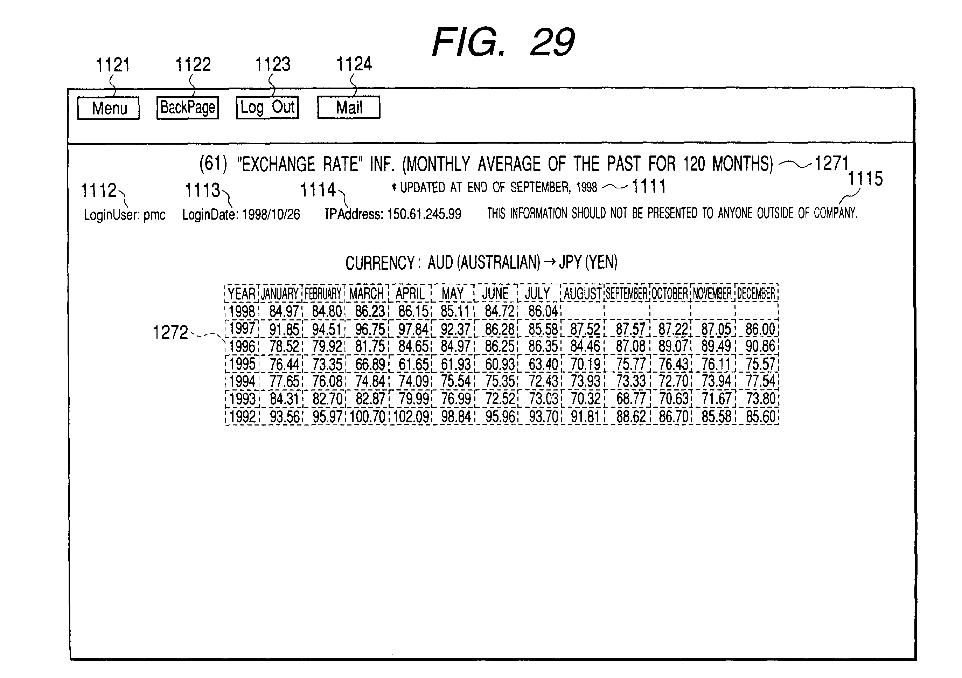

Step SAE3 displays the exchange rate history screen shown in FIG. 29. Title area 1271 indicates "(61) Exchange rate information (monthly average of the past 120 months)". Display areas 1111 to 1115 have the same indication as above. History display area 1272 displays history of exchange rate from Australian dollar to Japanese yen for the past 120 months based on D/B 1a. It proceeds to step SAE4 thereafter and performs the same process as above.

It is possible, by displays the exchange rate, to know prices in the case of locally purchasing electronic parts, allowing a comparison between purchasing them locally and purchasing them in Japan to be made. In addition, it allows both a price in a local currency and a price in Japanese yen to be indicated when indicating a unit price of any of the above electronic parts.

As above, electronic parts system 1 can select the most suitable electronic parts in development design and so on. A user in the development department and procurement department can search for a desired electronic part promptly and easily. Cost cutting of electronic parts can be conducted by providing unit price information on electronic parts.

### [2. Material system]

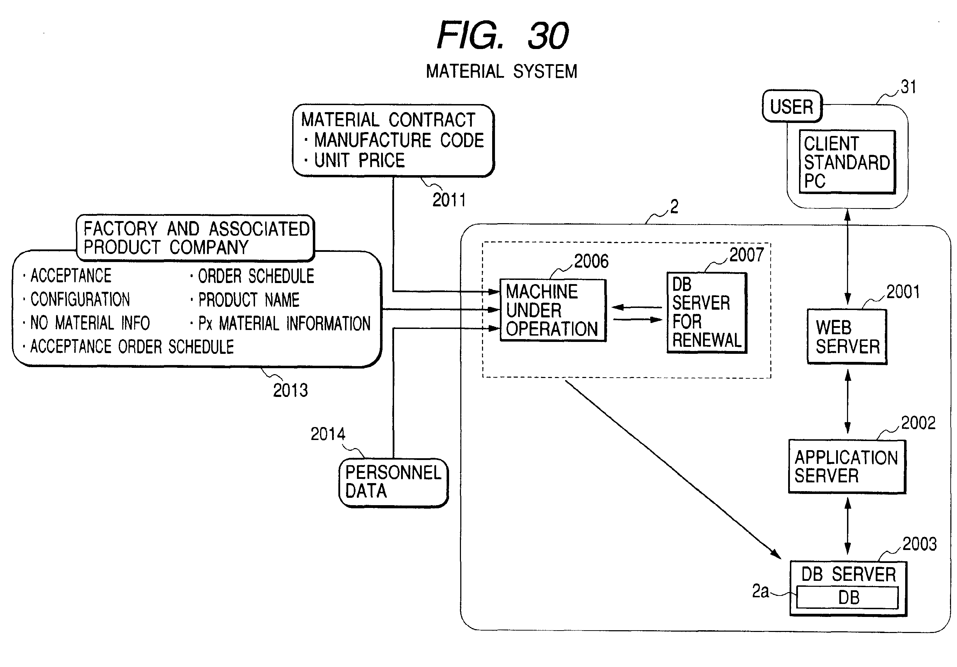

FIG. 30 is a block diagram showing configuration of material system (the Material Information Providing System) 2 shown in FIG. 1. Material system 2 has Web server 2001, application server 2002, Web DB server 2003, operation machine 2006 and DB server for update 2007. DB server 2003 has D/B 2a (FIG. 1). User computer 31 is a standard personal computer as a client for instance, and is capable of accessing material system 2.

Information source 2011 has material contract information such as maker codes and unit prices, and that information is supplied to operation machine 2006. Information source (Personnel Department) 2014 has personnel data, and that data is supplied to operation machine 2006. Personnel data includes information on personnel change, and material system 2 can automatically change a department to which a registered user belongs. It can also erase registration of the changed user as required.

Factory and production relation company 2013 has verification information, order schedule information, product-comprising material information, product name information, resin (MO) material information, metal (PX) material information, verification order schedule information, color approval information, specification information and so on. Such information is supplied to operation machine 2006.

Operation machine 2006 registers such information on D/B 2a in DB server 2003. Moreover, the above information should desirably be provided online to operation machine 2006 via a network.

Operation machine 2006 requests DB server for update 2007 to update D/B 2a. DB server for update 2007 creates a data file accordingly and supplies it to operation machine 2006. Operation machine 2006 updates D/B 2a in DB server 2003.

User computer 31 makes various requests to Web server 2001 and receives its responses. Web server 2001 makes various requests to application server 2002 and receives its responses. Application server 2002 makes various requests to DB server 2003 and receives its responses. Web server 2001 stores a computer program and displays a unified menu for a user to select according to the computer program. Application server 2002 stores a computer program and operates electronic parts system 2 according to the computer program. DB server 2003 has D/B 2a and manages registration, deletion, update and search of that D/B 2a.

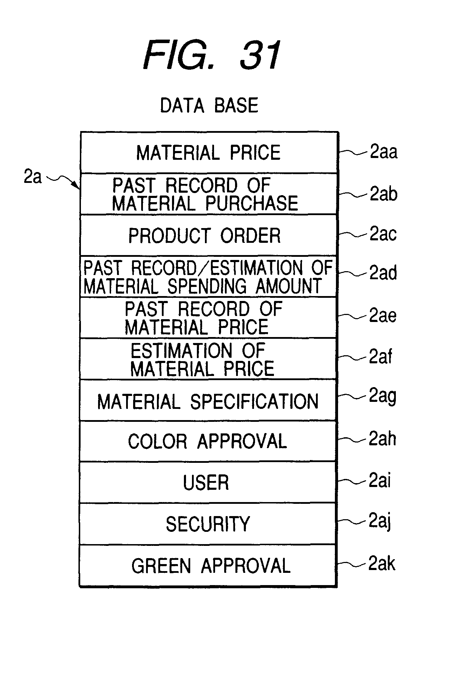

FIG. 31 is a schematic diagram showing configuration of D/B 2a in DB server 2003. D/B 2a has material price information 2aa, past record of material purchase information 2ab, product order information 2ac, past record/estimation of material spending amount (weight) information 2ad, past record of material price information 2ae, estimation of material price information 2af, material specification information 2ag, color approval information 2ah, user information (user ID, password, user's belonging department, etc.) 2ai, security information 2aj and green approval information considering environmental problems 2ak.

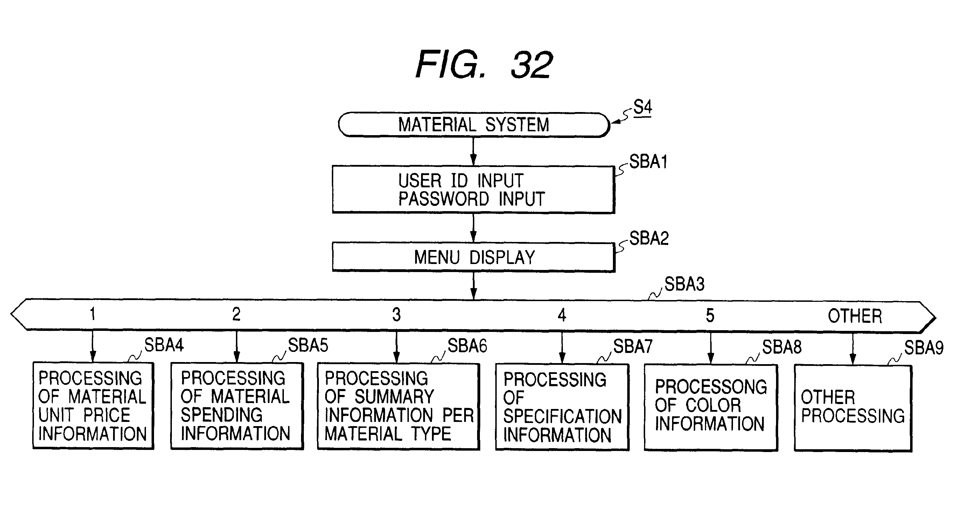

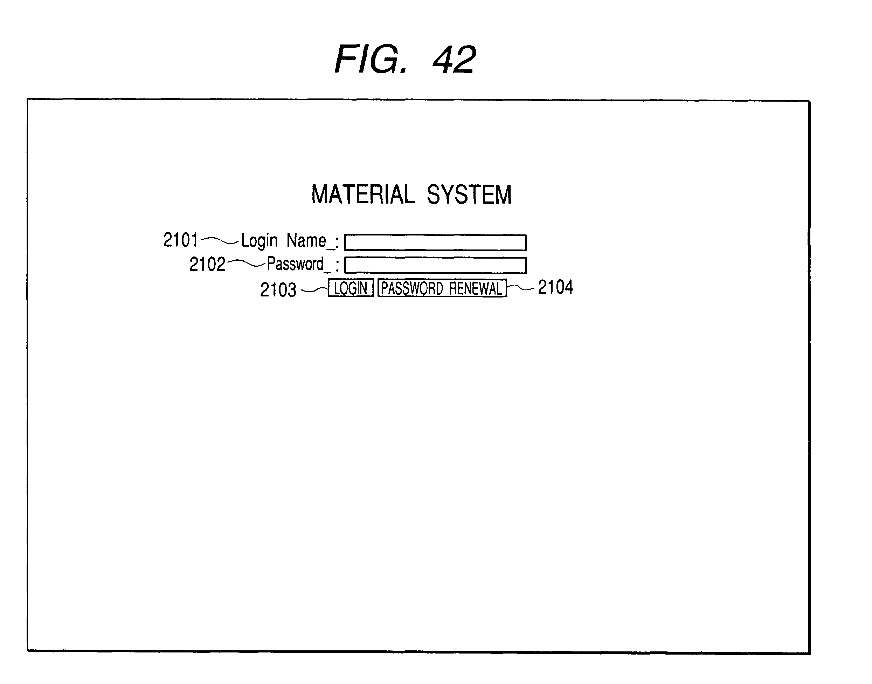

FIG. 32 is a flowchart showing processing of material system 2, and corresponds to step S4 in FIG. 2. Step SBA1 displays a log-in screen shown in FIG. 42 on user computer 31 waiting for input of a log-in name (user ID) and input of a password. A user can enter a user ID in area 2101 in FIG. 42 and a password in area 2102. Security can be enhanced and a log-in by an illicit person can be prevented by having user ID 2101 and password 2102 entered.

A user must change a password once a month for security protection. A password can be changed by clicking on password change button 2104 with a mouse.

If a user clicks on log-in button 2103 with a mouse, and if the entered user ID and password are correct, the user is logged in and proceeds to step SBA2.

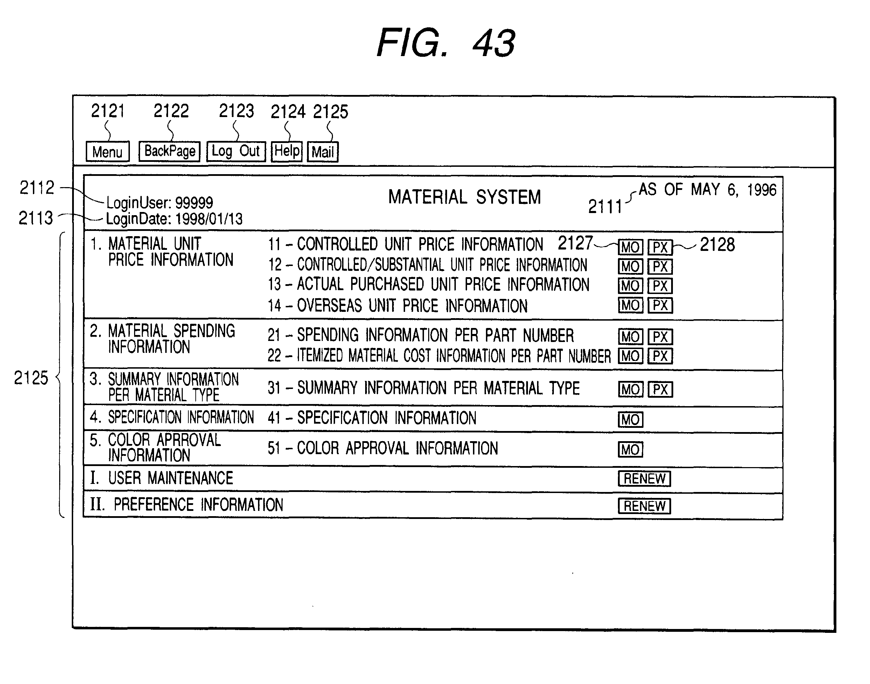

Step SBA2 displays a menu screen shown in FIG. 43. Display area 2111 indicates a date of information. Display area 2112 indicates a log-in user ID (user ID). Display area 2113 indicates a date of log-in. As the source can be identified by the displays of display areas 2112 and 2113 when a hard copy of the screen is made, it is possible to prevent leakage of information to outside. Moreover, as with the case of electronic parts system, an IP address may also be shown in addition to a user ID and a log-in date.

Menu items 2126 displays "1. Material unit information", "2. Material spending information", "3. Summary information per material type", "4. Specification information", "5. Color approval information", "I. User maintenance" and "II. Preference information". Furthermore, "1. Material unit price information" can be divided into "11. Controlled unit price information", "12. Controlled/substantial unit price information", "13. Actual purchased unit price information" and "14. Overseas unit price information", and "2. Material spending information" can be divided into "21. Spending information per part No." and "22. Itemized material cost information per part No."

Processing of user maintenance refers to user information and log information registered on a database, and registers user information and security management. Processing of preference information sets up information required for system operation.

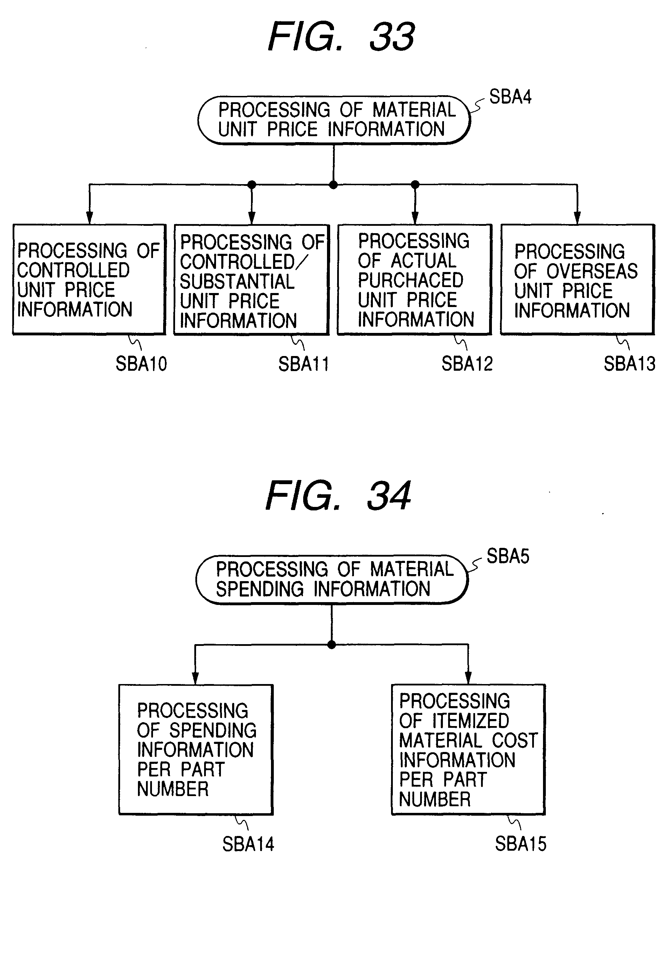

A user can select a desirable item out of the above menu items 2126. In that case, the user can select it by clicking on MO button 2127 or PX button 2128 and so on with a mouse. MO button 2127 means resin (MO) material. PX button 2128 means metal (PX) material. If the user selects an item, step SBA3 in FIG. 32 checks which number the user has selected. If No. 1 is selected, step SBA4 performs processing of material unit price information. As for its subdivision, as shown in FIG. 33, if No. 11 is selected, step SBA10 performs processing of controlled unit price information, and if No. 12 is selected, step SBA11 performs processing of controlled/substantial unit price information, and if No. 13 is selected, step SBA12 performs processing of actual purchased unit price information, and if No. 14 is selected, step SBA13 performs processing of oversea unit price information.

In FIG. 32, if No. 2 is selected, step SBAS performs processing of material spending information. As for its subdivision, as shown in FIG. 34, if No. 21 is selected, step SBA14 performs processing of spending information per part No., and if No. 22 is selected, step SBA15 performs processing of itemized material cost information per part No.

In FIG. 32, if No. 3 is selected, step SBA6 performs processing of summary information per material type. If No. 4 is selected, step SBA7 performs processing of specification information. If No. 5 is selected, step SBA8 performs processing of color approval information. If any other number is selected, step SBA9 performs a process of that number. Details of the processes of steps SBA4 to SBA8 will be explained hereafter. Moreover, while a case of selecting resin (MO) material will be explained as an example, it will also apply to a case of metal (PX) material.

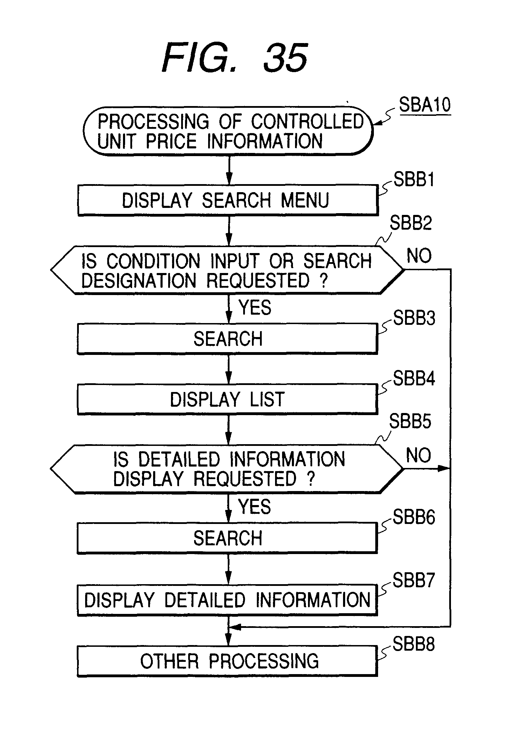

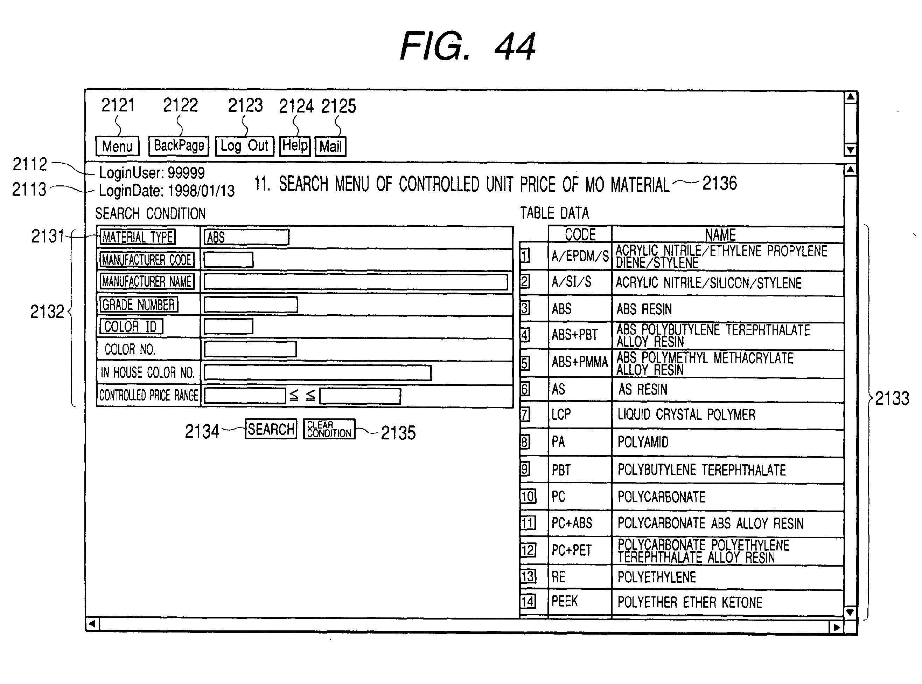

FIG. 35 is a flowchart showing details of processing of controlled unit price information of step SBA10 shown in FIG. 33. This processing can have controlled unit price information entered, and search for material. Step SBB1 displays the search screen shown in FIG. 44 on computer 31. Title area 2136 in FIG. 44 indicates "11. MO material Controlled unit price information Search screen". Display areas 2112 and 2113 are the same as above.

Search condition input area 2132 can have a user enter material type, maker code, maker name, grade No. (material type number), color ID, color No., in-house color No. and controlled price range. In addition to controlled unit price information, all or part of the above conditions can be entered. If material type button 2131 is clicked on, it displays table data 2133 on the right. Table data 2133 displays a list of material types. The user can select No. 3 "ABS" for instance out of table data 2133. If a button of any other item is clicked on, it displays table data of that item of which a selection can be made.

The above conditions can be cleared by clicking on condition clear button 2135 with a mouse. If search button 2134 is clicked on with a mouse, it proceeds to step SBB3 via step SBB2, and searches for material meeting the above entered conditions based on D/B 2a. It then proceeds to step SBB4. Moreover, if search button 2134 is not clicked on but any of buttons 2121 to 2125 is clicked on, it proceeds to step SBB8 via step SBB2.

Step SBB8 is a process in the case where any of buttons 2121 to 2125 is clicked on. As with the case of the above electronic parts system, if menu button 2121 is clicked on, it returns to step SBA2 in FIG. 32 to display a menu screen shown in FIG. 43. If back page button 2122 is clicked on, it returns to a preceding display screen. If log-out button 2123 is clicked on, the procurement system comes to an end. If help button 2124 is clicked on, it displays the help screen. If mail button 2125 is clicked on, mail transmission or a check- of received mail can be performed.

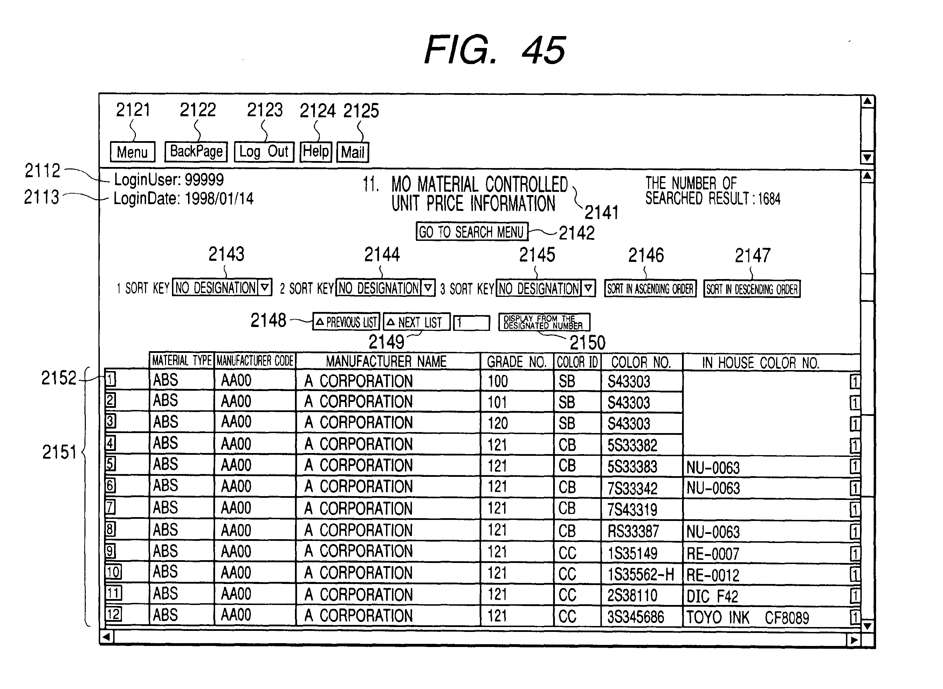

After the above search, step SBB4 displays a screen listing the search results shown in FIG. 45. Title area 2141 indicates "11. MO material Controlled unit price information". Display areas 2112 and 2113 have the same indication as above. List display area 2151 displays information of material meeting the search conditions. To be more specific, list display area 2151 displays material type, maker code, maker name, grade No., color ID, color No., in-house color No. and controlled price range.

Information in list display area 2151 can be sorted. Items are entered in first sort key 2143, second sort key 2144 and third sort key 2145. Thereafter, if sort in ascending order button 2146 is clicked on, information is sorted in ascending order, and if sort in descending order button 2147 is clicked on, information is sorted in descending order. For instance, it is possible to have it sorted in order of material type, maker code and grade No.

It is also possible to display information continued from inside list display area 2151. If previous list button 2148 is clicked on, it can display material information of a preceding number. If next list button 2149 is clicked on, it can display material information of a next number. If a number is entered in the area on the left of button 2150 and button 2150 is clicked on, it can display material information from that number. If any of buttons 2121 to 2125 is clicked on, it proceeds to step SBB8 via step SBB5 and performs the same process as above.

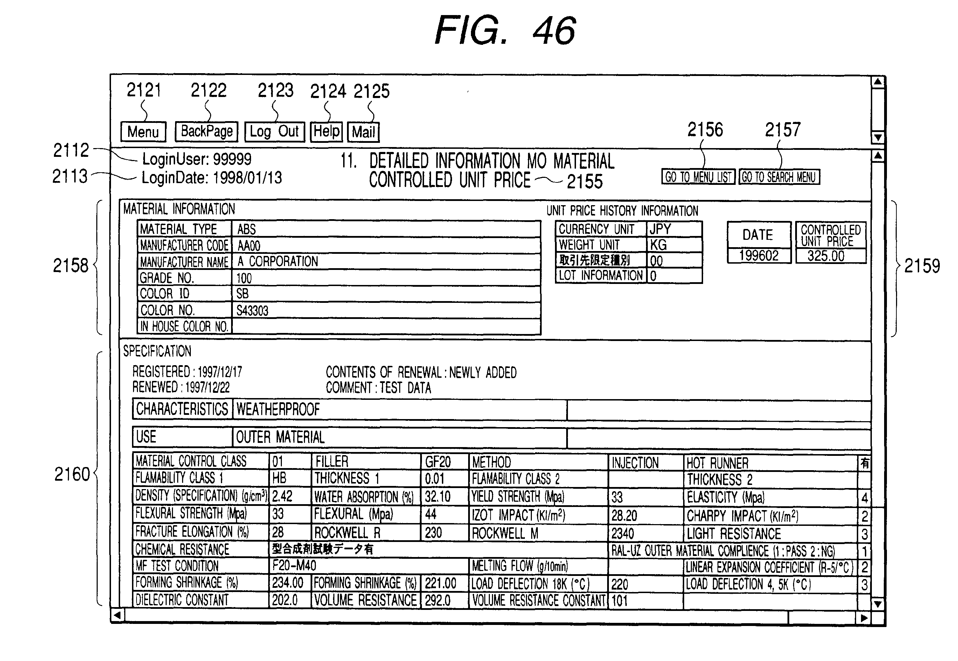

If, for instance, button 2152 of material No. 1 is clicked on, it proceeds to step SBB6 via step SBB5 and searches for details information of material No. 1 based on D/B 2a. Next, it proceeds to step SBB7 and displays the details information screen of material No. 1 as shown in FIG. 46.

Title area 2155 in FIG. 46 indicates "11. MO material Controlled unit price details information". Display areas 2112 and 2113 have the same indication as above. Material information area 2158 displays material type, maker code, maker name, grade No., color ID, color No. and in-house color No. Unit price history information area 2159 displays currency unit, weight unit, limited supplier type, lot type and date and controlled unit price. Specification information area 2160 displays characteristics, use, filler, method (injection), flammability class, thickness, density, water absorption, yield strength, elasticity, flexural strength and so on.

As mentioned above, it is possible to improve search speed by displaying the screen listing search results first and then displaying the details screen of individual material. To be more specific, it is possible to perform necessary display as much as possible on the list screen and then display the details screen of individual material one to one.

Next, if go to menu list button 2156 is clicked on, it returns to step SBB4 to display a list screen shown in FIG. 45. And if go to search menu button 2157 is clicked on, it returns to step SBB1 and displays the search screen shown in FIG. 44. Also, if any of buttons 2121 to 2125 is clicked on in step SBB8, it performs the same process as above.

In FIG. 33, the processing of controlled/substantial unit price information in step SBA11 can perform a search with controlled unit price information or substantial unit price information as a search condition. That search processing is the same as processing of controlled unit price information in the above step SBA10. Processing of actual purchased unit price information in step SBA12 can perform a search with actual purchased unit price information as a search condition. That search processing is the same as processing of controlled unit price information in the above step SBA10.

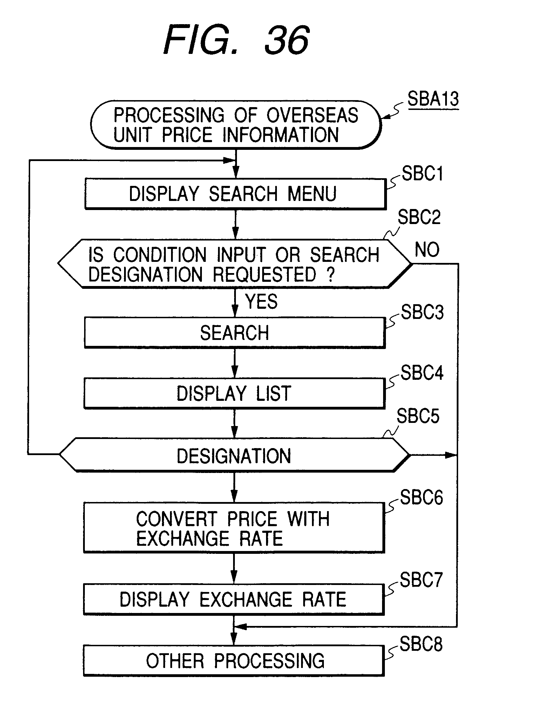

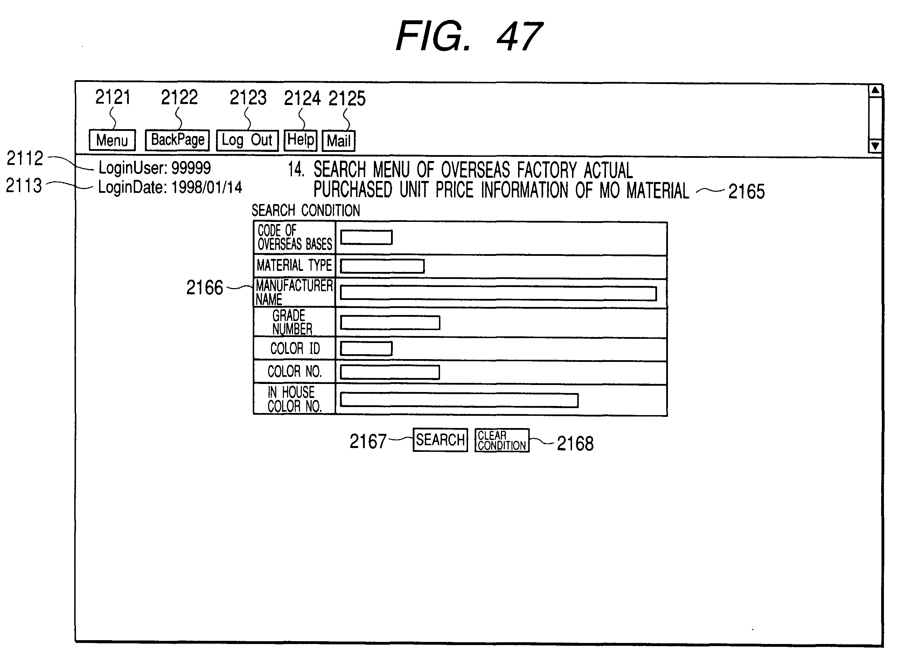

If "14. Overseas unit price information" is selected in the menu screen shown in FIG. 43, it proceeds to processing of overseas unit price information of step SBA13 shown in FIG. 33. FIG. 36 is a flowchart showing details of processing of overseas unit price information of step SBA13 shown in FIG. 33. Step SBC1 displays the search screen shown in FIG. 47. Title area 2165 indicates "14. MO material Search of overseas factory actual purchased unit price information". Display areas 2112 and 2113 are the same as above.

In search condition input area 2166, a user can enter code of overseas bases, material type, maker name, grade No., color ID, color No. and in-house color No. In addition to controlled unit price information, all or part of the above conditions can be entered.

The above conditions can be cleared by clicking on condition clear button 2168 with a mouse. If search button 2167 is clicked on with a mouse, it proceeds to step SBC3 via step SBC2, and searches for overseas factory material information meeting the above entered conditions based on D/B 2a. It then proceeds to step SBC4. Moreover, if search button 2167 is not clicked on but any of buttons 2121 to 2125 is clicked on, it proceeds to step SBC8 via step SBC2. Step SBC8 is the same process as when one of buttons 2121 to 2125 is clicked on as above.

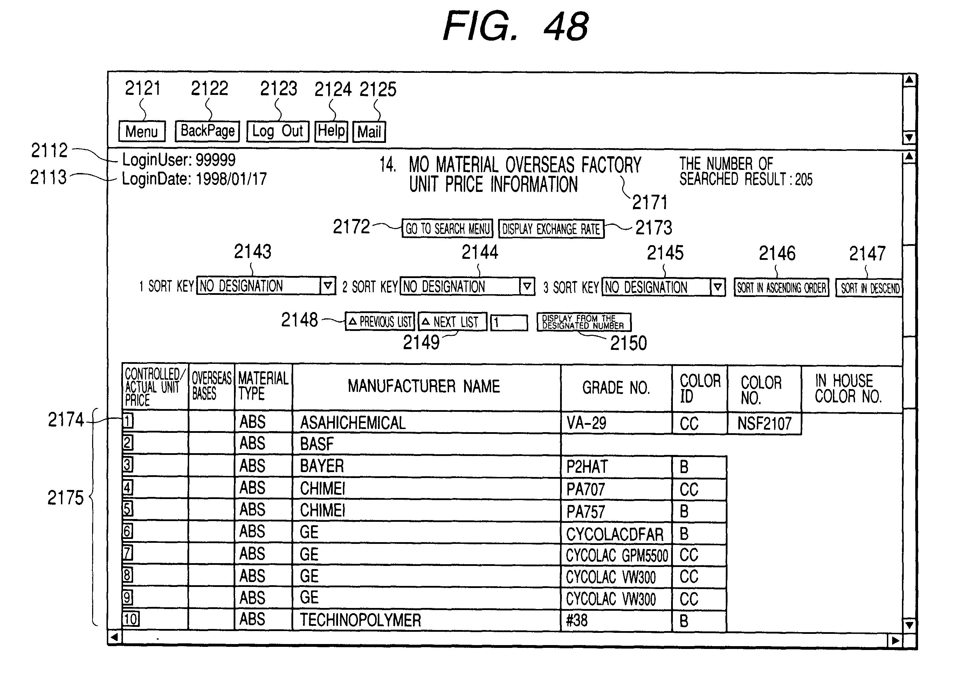

After the above search, step SBC4 displays a screen listing the search results shown in FIG. 48. Title area 2171 indicates "14. MO material Overseas factory unit price information". Display areas 2112 and 2113 are the same as above. List display area 2175 displays overseas factory material information meeting the search conditions. To be more specific, list display area 2175 displays controlled/actual purchased unit price, overseas bases, material type, maker name, grade No., color ID, color No. and in-house color No.

Information in list display area 2175 can be sorted. Items are entered in first sort key 2143, second sort key 2144 and third sort key 2145, and if sort in ascending order button 2146 or sort in descending order button 2147 is clicked on, information is sorted. Also, previous list button 2148, next list button 2149 and start number button 2150 are the same as above. If, for instance, button 2174 of material No. 1 is clicked on, it searches for details information thereon and displays the same details information screen as one shown in FIG. 46. It is possible to improve search speed by displaying the screen listing search results first and then displaying the details screen of individual material.

If any of buttons 2121 to 2125 in FIG. 48 is clicked on, it proceeds to step SBC8 via step SBC5 and performs the same process as above. If go to search menu button 2172 is clicked on, it returns to step SBC1 via step SBC5 and displays the search screen in FIG. 47. If display exchange rate button 2173 is clicked on, it proceeds to step SBC6 via step SBC5 and searches for exchange rate information based on D/B 2a.

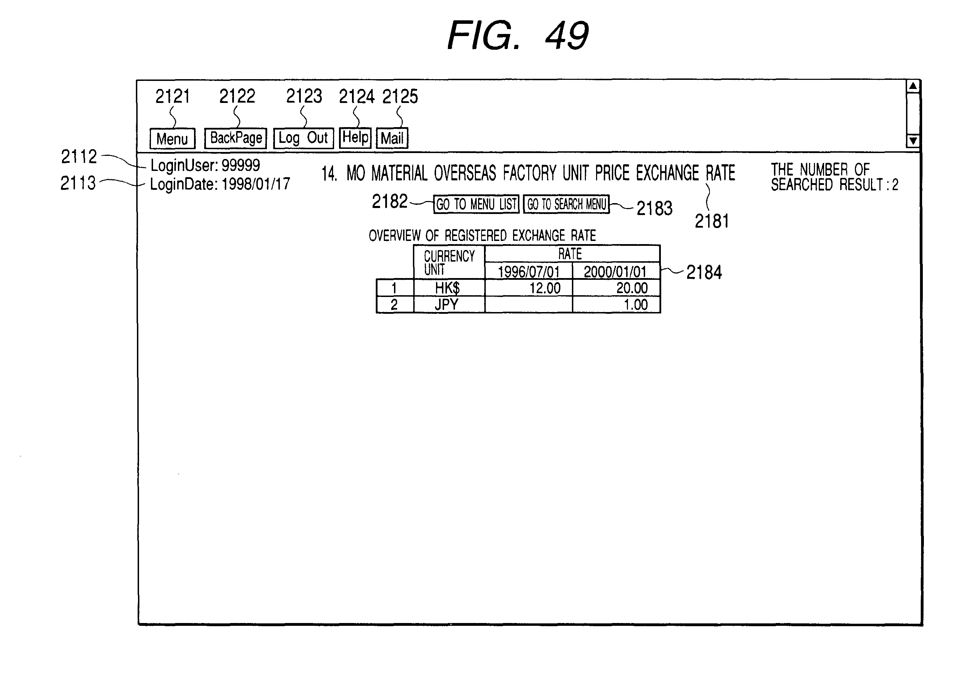

Next, step SBC7 displays the exchange rate screen shown in FIG. 49. Title area 2181 indicates "14. MO material Overseas factory unit price Exchange rate". Display areas 2112 and 2113 have the same indication as above. Exchange rate area 2184 displays a currency unit and its exchange rate. For instance, it can display exchange rates of two periods at the time of entering a material unit price. Also an exchange rate of each currency unit can be registered on D/B 2a by entering a currency unit and its exchange rate.

Next, if go to menu list button 2182 is clicked on, it returns to step SBC4 to display the list screen shown in FIG. 48. And if go to search menu button 2183 is clicked on, it returns to step SBC1 and displays the search screen shown in FIG. 47. Also, if any of buttons 2121 to 2125 is clicked on, it performs the same process as above in step SBC8.

If "21 - Spending information per part No." is selected in the menu screen shown in FIG. 43, it proceeds to processing of spending information per part No. of step SBA14 shown in FIG. 34.

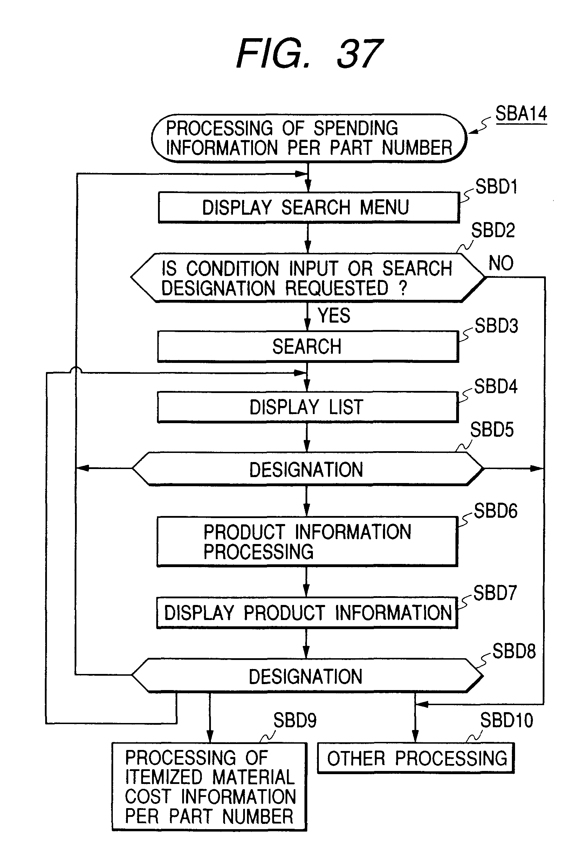

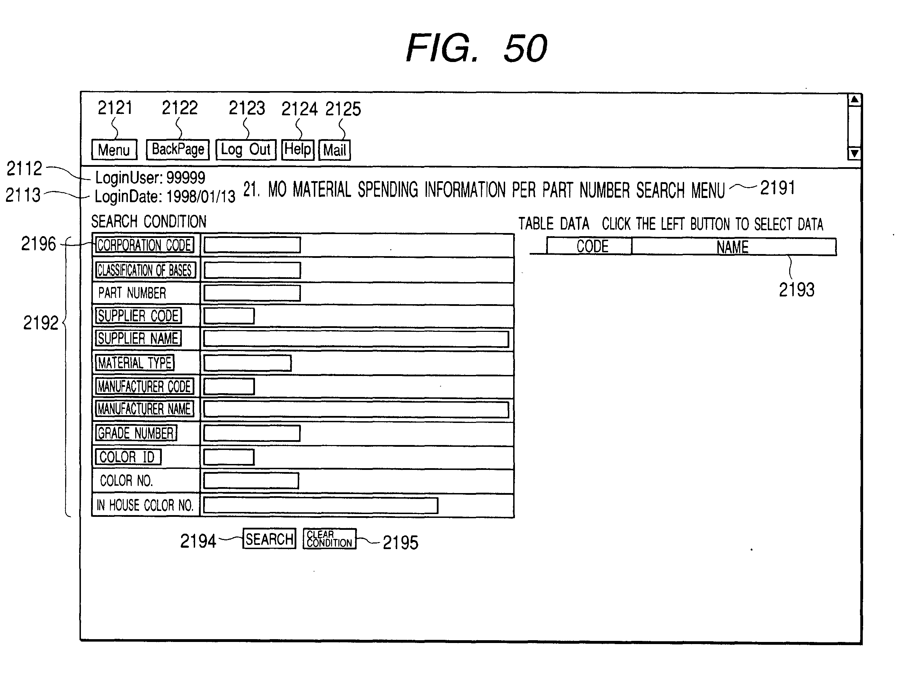

FIG. 37 is a flowchart showing details of processing of spending information per part No. of step SBA14 shown in FIG. 34. Step SBD1 displays the search screen shown in FIG. 50. Title area 2191 indicates "21 - MO material spending information per part No. search screen". Display areas 2112 and 2113 are the same as above.

In search condition input area 2192, a user can enter corporation code, classification of bases, part No., supplier code, supplier name, material type, maker code, maker name, grade No., color ID, color No. and in-house color No. In addition to part No., all or part of the above conditions can be entered.

If corporation code button 2196 is clicked on, it displays table data 2193 on the right. Table data 2193 displays a list of corporation codes. A user can select a desired corporation code out of table data 2193. If a button of any other item is clicked on, it displays table data of that item of which a selection can be made.

The above conditions can be cleared by clicking on condition clear button 2195 with a mouse. If search button 2194 is clicked on with a mouse, it proceeds to step SBD3 via step SBD2, and searches for material spending information meeting the above entered conditions based on D/B 2a. It then proceeds to step SBD4. Moreover, if search button 2194 is not clicked on but any of buttons 2121 to 2125 is clicked on, it proceeds to step SBD10 via step SBD2 and performs the same process as step SBC8 in FIG. 36.

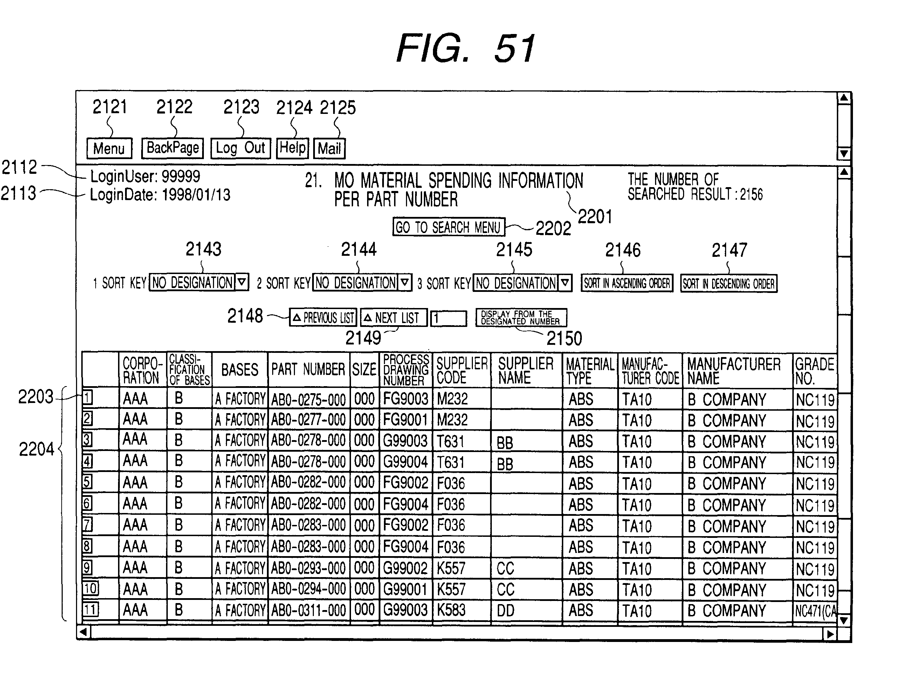

After the above search, step SBD4 displays a screen listing the search results shown in FIG. 51. Title area 2201 indicates "21 - MO material spending information per part No." Display areas 2112 and 2113 are the same as above. List display area 2204 displays material spending information meeting the search conditions. To be more specific, list display area 2204 displays corporation, classification of bases, base, part No., size, process drawing No., supplier code, supplier name, material type, maker code, maker name and grade No. Furthermore, if the screen is scrolled to the right, display area 2204 displays color ID, color No., in-house color No., actual weight, planned weight, actual money value and schedule money value.

Material spending information in list display area 2204 can be sorted. Items are entered in first sort key 2143, second sort key 2144 and third sort key 2145, and if sort in ascending order button 2146 or sort in descending order button 2147 is clicked on thereafter, material spending information is sorted. Also, previous list button 2148, next list button 2149 and start number button 2150 are the same as above. If any of buttons 2121 to 2125 is clicked on, it proceeds to step SBD10 via step SBD5 and performs the same process as above. For instance, if button 2203 of material No. 1 is clicked on, it proceeds to step SBD6 via step SBD5.

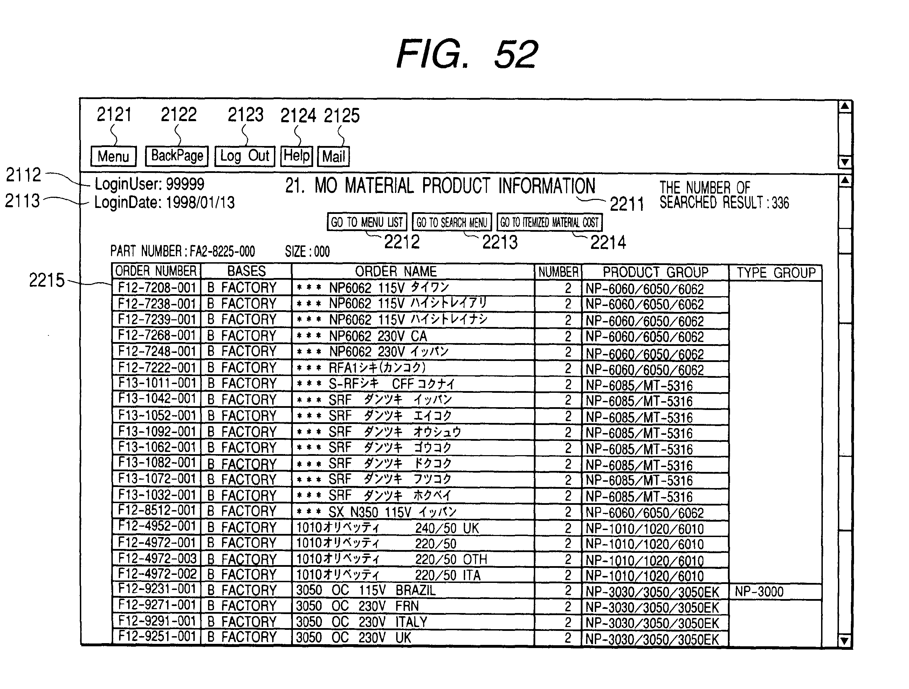

Step SBD6 searches for product information on material of material No. 1 for instance based on D/B 2a. Next, step SBD7 displays the product information screen shown in FIG. 52. It is possible to know the products using the material by displaying the screen listing search results first and then displaying product information of individual material.

Title area 2211 in FIG. 52 indicates "21. MO material Product information screen". Display areas 2112 and 2113 have the same indication as above. Product information area 2215 displays information of any product using the above indicated part No (FA2-8225-000 for instance). To be more specific, product information area 2215 displays order No. (product No.), base, order name, number, product group and model group.

Next, if any of buttons 2121 to 2125 is clicked on, it proceeds to step SBD10 via step SBD8 and performs the same process as above. If go to menu list button 2212 is clicked on, it returns to step SBD4 via step SBD8 and displays the list screen shown in FIG. 51. If go to search menu button 2213 is clicked on, it returns to step SBD1 via step SBD8 and displays the search screen shown in FIG. 50. If go to itemized material cost button 2214 is clicked on, it proceeds to step SBD9 via step SBD8 and performs processing of itemized material cost information by part No. This processing of itemized material cost by part No. is the same as the processing of step SBA15 shown in FIG. 34.

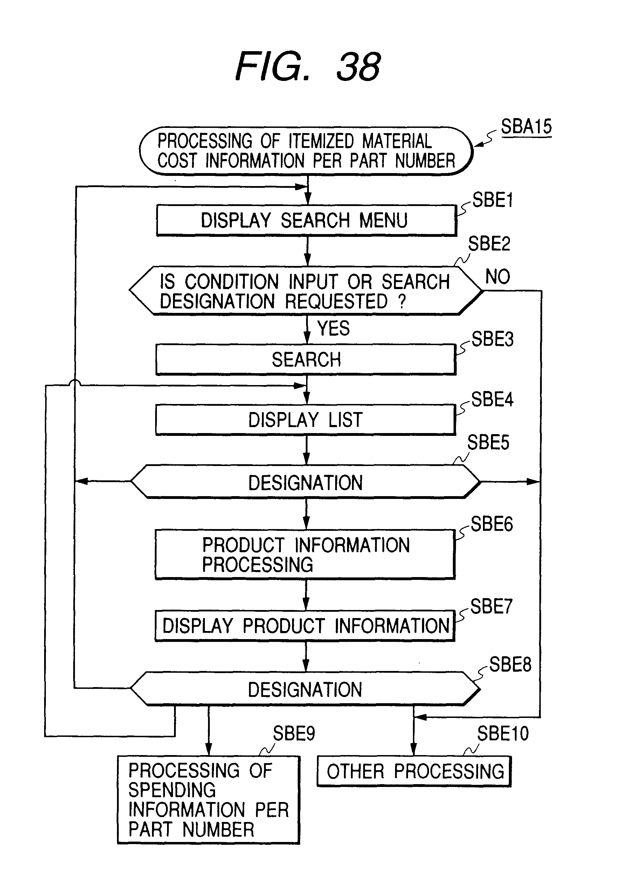

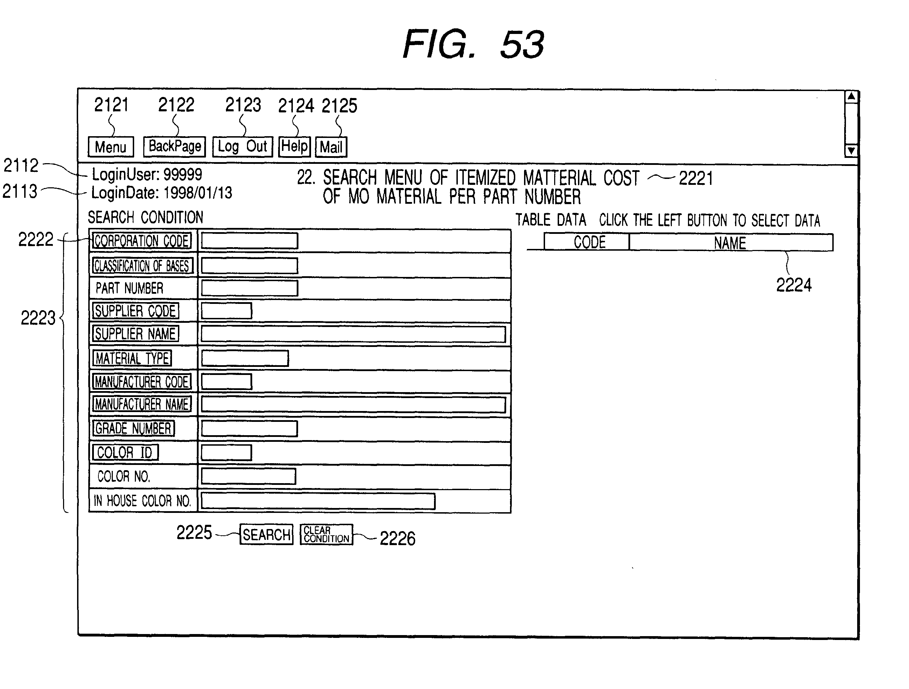

If "22 - Itemized material cost information by part No." is selected in the menu screen shown in FIG. 43, it proceeds to processing of itemized material cost information by part No. of step SBA15 shown in FIG. 34. FIG. 38 is a flowchart showing details of processing of itemized material cost information by part No. of step SBA15 shown in FIG. 34 and step SBD9 shown in FIG. 37. Step SBE1 displays the search screen shown in FIG. 53. Title area 2221 indicates "22 - MO material itemized material cost information by part No. search screen". Display areas 2112 and 2113 are the same as above.

In search condition input area 2223, a user can enter corporation code, classification of bases, part No., supplier code, supplier name, material type, maker code, maker name, grade No., color ID, color No. and in-house color No. In addition to part No., all or part of the above conditions can be entered.

As in the above case, if corporation code button 2222 is clicked on, it displays table data 2224 on the right, and a desired corporation code can be selected. If a button of any other item is clicked on, it displays table data of that item of which a selection can be made.

The above conditions can be cleared by clicking on condition clear button 2226 with a mouse. If search button 2225 is clicked on with a mouse, it proceeds to step SBE3 via step SBE2, and searches for itemized material cost information meeting the above entered conditions based on D/B 2a. It then proceeds to step SBE4. Moreover, if search button 2225 is not clicked on but any of buttons 2121 to 2125 is clicked on, it proceeds to step SBE10 via step SBE2 and performs the same process as step SBC8 in FIG. 36.

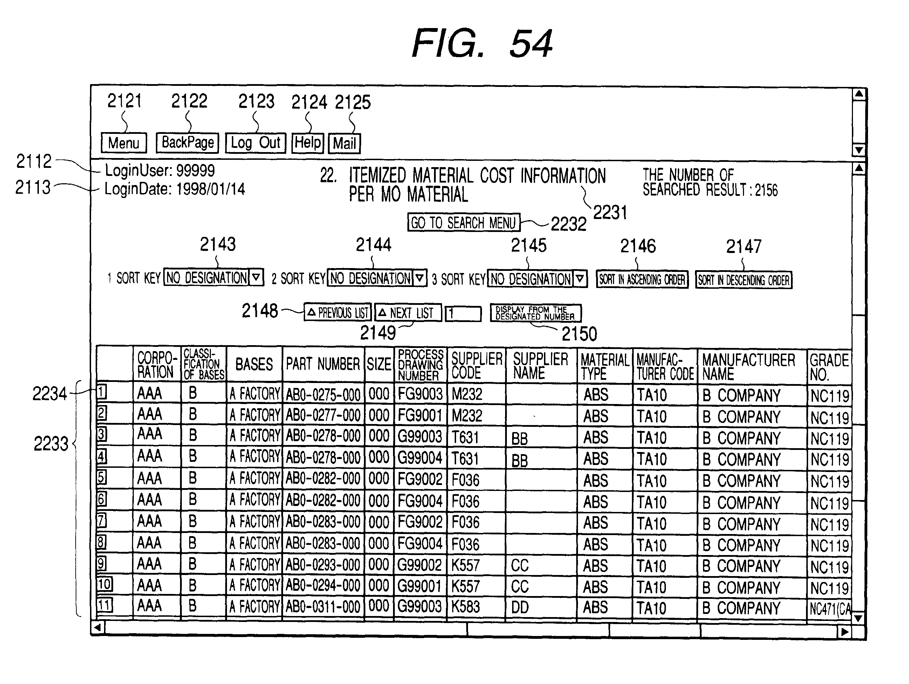

After the above search, step SBE4 displays a screen listing the search results shown in FIG. 54. Title area 2231 indicates "22. MO material Itemized material cost information by part No." Display areas 2112 and 2113 are the same as above. List display area 2233 displays itemized material cost information meeting the search conditions. To be more specific, list display area 2233 displays corporation, classification of bases, base, part No., size, process drawing No., supplier code, supplier name, material type, maker code, maker name and grade No.
Furthermore, if the screen is scrolled to the right, display area 2233 displays color ID, color No., in-house color No., weight classification, material unit price, spending material weight, virgin rate (it is 1 if no recycling material is included), defective rate, material management cost rate, other costs, product weight, additional weight (weight required for any part other than product), taken quantity, setup weight and mold lot.

Itemized material cost information in list display area 2233 can be sorted. Items are entered in first sort key 2143, second sort key 2144 and third sort key 2145, and if sort in ascending order button 2146 or sort in descending order button 2147 is clicked on thereafter, itemized material cost information is sorted. Also, previous list button 2148, next list button 2149 and start number button 2150 are the same as above. If go to search menu button 2232 is clicked on, it returns to step SBE1 via step SBE5 and displays the search screen shown in FIG. 53. Also, if any of buttons 2121 to 2125 is clicked on, it proceeds to step SBE10 via step SBE5 and performs the same process as above. Moreover, if button 2234 of material No. 1 is clicked on for instance, it proceeds to step SBE6 via step SBE5.

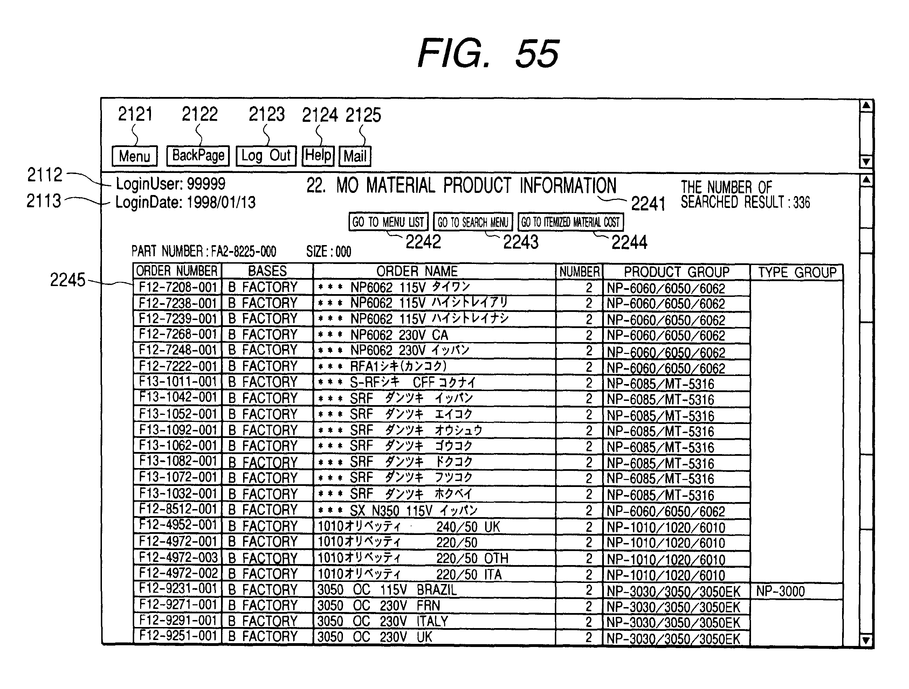

Step SBE6 searches for product information of material No. 1 for instance based on D/B 2a. Next, step SBE7 displays the product information screen shown in FIG. 55. It is possible to know the products using the material by displaying the product information on the material.

Title area 2241 in FIG. 55 indicates "22. MO material Product information screen". Display areas 2112 and 2113 have the same indication as above. Product information area 2245 displays information on any product using the above indicated part No. (FA2-8225-000 for instance). To be more specific, product information area 2245 displays order No. (product No.), base, order name, number, product group and model group.

Next, if go to menu list button 2242 is clicked on, it returns to step SBE4 via step SBE8 and displays the list screen shown in FIG. 54. If go to search menu button 2243 is clicked on, it returns to step SBE1 via step SBE8 and displays the search screen shown in FIG. 53. If any of buttons 2121 to 2125 is clicked on, it proceeds to step SBE10 via step SBE8 and performs the same process as above. If spending information button 2244 is clicked on, it proceeds to step SBE9 via step SBE8 and performs processing of material spending information by part No. This processing of material spending information by part No. is the same as the above processing of step SBA14 shown in FIG. 34.

If "3. Summary information per material type (31 - Summary information per material type)" is selected on the menu screen shown in FIG. 43, it proceeds to processing of summary information per material type of step SBA6 shown in FIG. 32.

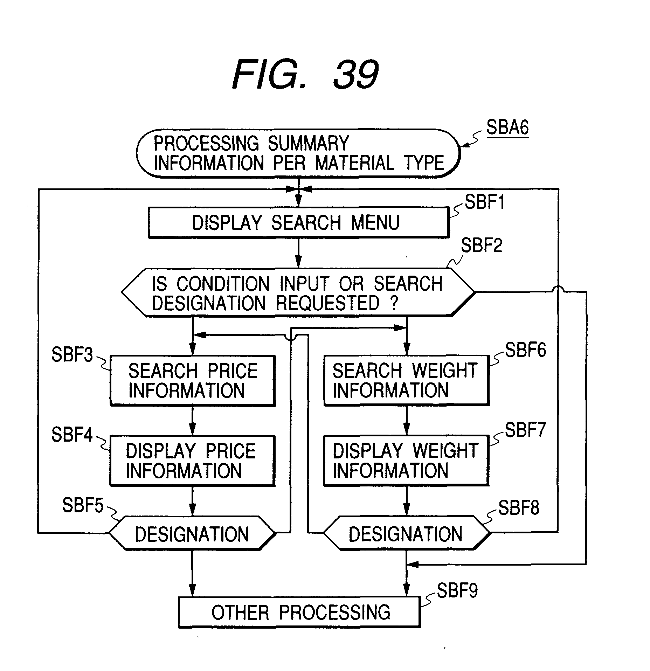

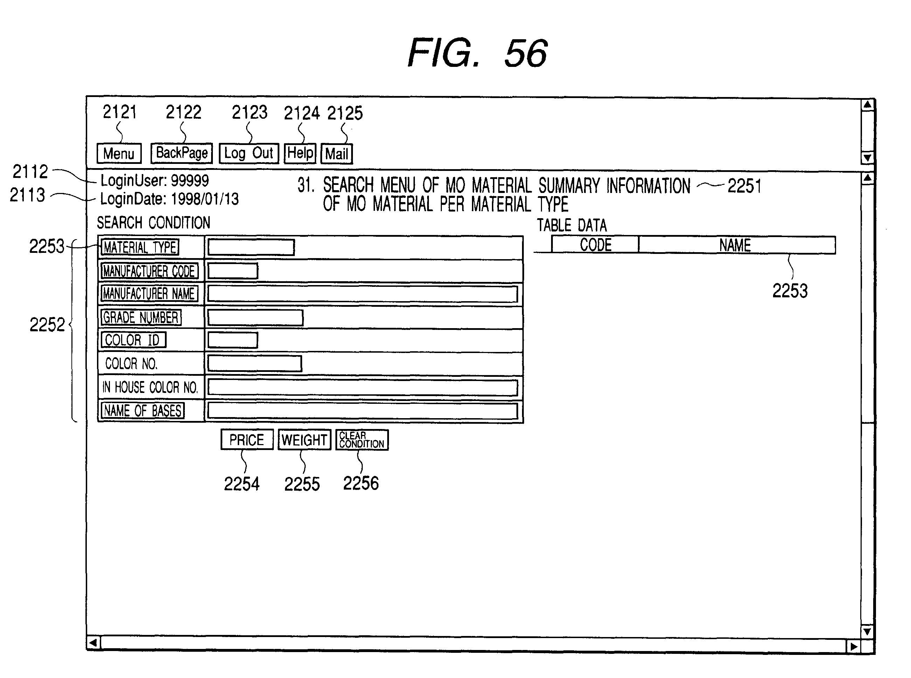

FIG. 39 is a flowchart showing details of processing of summary information per material type of step SBA6 shown in FIG. 32. Step SBF1 displays the search screen shown in FIG. 56. Title area 2251 indicates "31. MO material Search menu of summary information per material type Search screen". Display areas 2112 and 2113 are the same as above.

In search condition input area 2252, a user can enter material type, maker code, maker name, grade No., color ID, color No., in-house color No. and base name using the material. In addition to material type, all or part of the above conditions can be entered.

As in the above case, if material type button 2253 is clicked on, it displays table data 2253 on the right, and a desired material type can be selected. If a button of any other item is clicked on, it displays table data of that item of which a selection can be made.

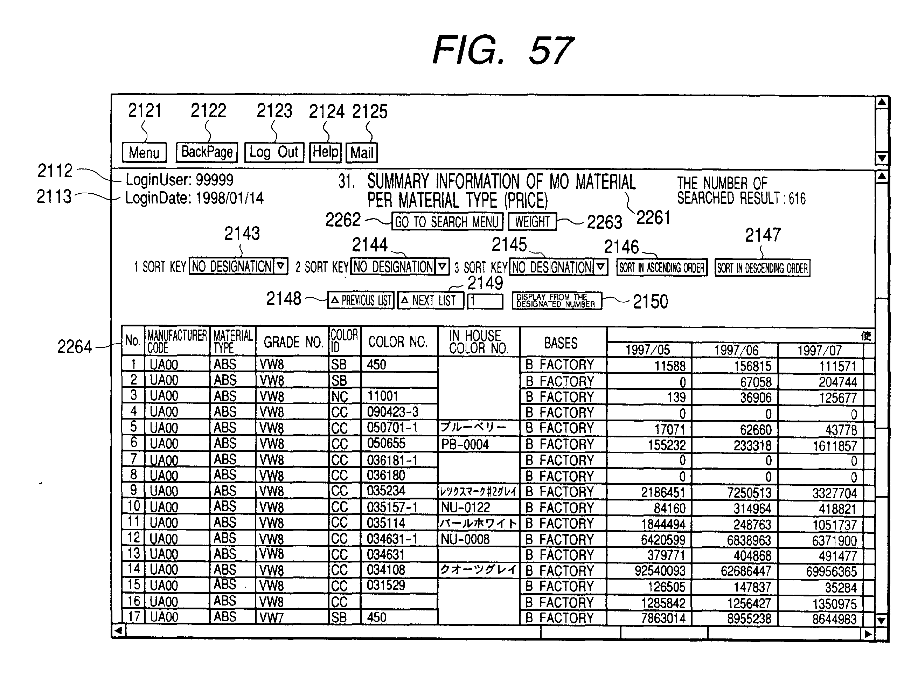

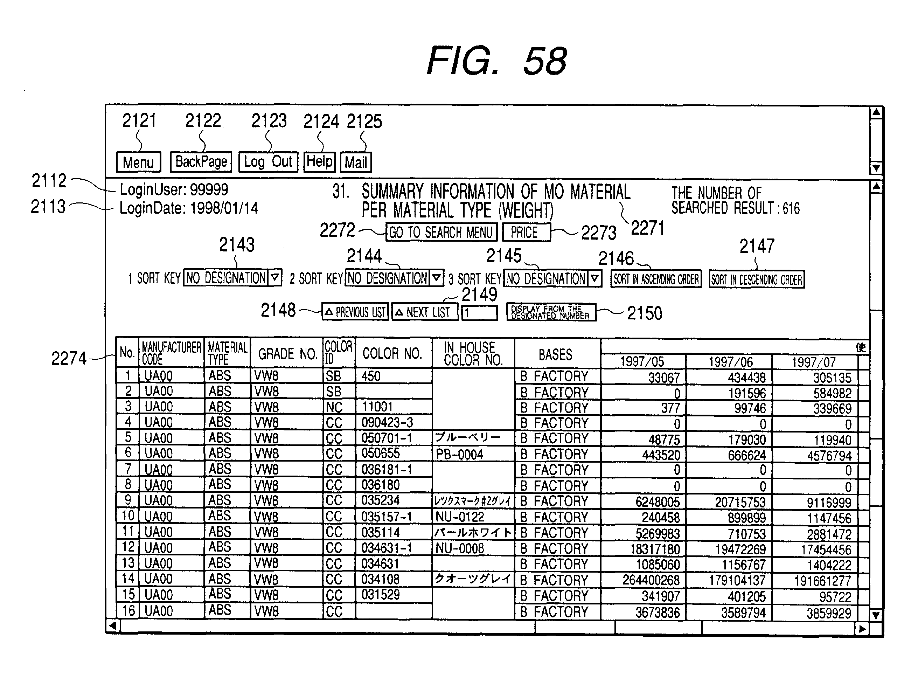

The above conditions can be cleared by clicking on condition clear button 2256 with a mouse. If price button 2254 is clicked on with a mouse, it proceeds to step SBF3 via step SBF2, and searches for material price information meeting the above entered conditions based on D/B 2a. It then proceeds to step SBF4 and displays the price information screen shown in FIG. 57. On the other hand, if weight button 2255 in FIG. 56 is clicked on with a mouse, it proceeds to step SBF6 via step SBF2, and searches for material weight information meeting the above entered conditions based on D/B 2a. It then proceeds to step SBF7 and displays the weight information screen shown in FIG. 58. Moreover, if any of buttons 2121 to 2125 in FIG. 56 is clicked on, it proceeds to step SBF9 via step SBF2 and performs the same process as step SBC8 in FIG. 36.

FIG. 57 shows the price information screen. Title area 2261 indicates "31. MO material Summary information per material type (price)". Display areas 2112 and 2113 have the same indication as above. Price information area 2264 displays price information meeting the search conditions. To be more specific, price information area 2264 displays maker code, material type, grade No., color ID, color No., in-house color No., base, and price of spending material by month (actual and forecast).

Information in price information area 2264 can be sorted. Items are entered in first sort key 2143, second sort key 2144 and third sort key 2145, and if sort in ascending order button 2146 or sort in descending order button 2147 is clicked on thereafter, the information is sorted. Also, previous list button 2148, next list button 2149 and start number button 2150 are the same as above. In addition, if go to search menu button 2262 is clicked on, it returns to step SBF1 via step SBF5 and displays the search screen shown in FIG. 56. Also, if weight button 2263 is clicked on, it proceeds to step SBF6 via step SBF5 and searches for weight information, and displays the weight information screen shown in FIG. 58 described next. Moreover, if any of buttons 2121 to 2125 is clicked on, it proceeds to step SBF9 via step SBF5 and performs the same process as above.

FIG. 58 shows the weight information screen.
Title area 2271 indicates "31. MO material Summary information per material type (weight)". Display areas 2112 and 2113 have the same indication as above.
Weight information area 2274 displays material weight information meeting the search conditions. To be more specific, weight information area 2274 displays maker code, material type, grade No., color ID, color No., in-house color No., base, and weight of spending material by month (actual and forecast).

Information in weight information area 2274 can be sorted. Items are entered in first sort key 2143, second sort key 2144 and third sort key 2145, and if sort in ascending order button 2146 or sort in descending order button 2147 is clicked on thereafter, the information is sorted. Also, previous list button 2148, next list button 2149 and start number button 2150 are the same as above. In addition, if go to search menu button 2272 is clicked on, it returns to step SBF1 via step SBF8 and displays the search screen shown in FIG. 56. Also, if price button 2273 is clicked on, it proceeds to step SBF3 via step SBF8 and searches for the above price information, and displays the price information screen shown in FIG. 57. Moreover, if any of buttons 2121 to 2125 is clicked on, it proceeds to step SBF9 via step SBF8 and performs the same process as above.

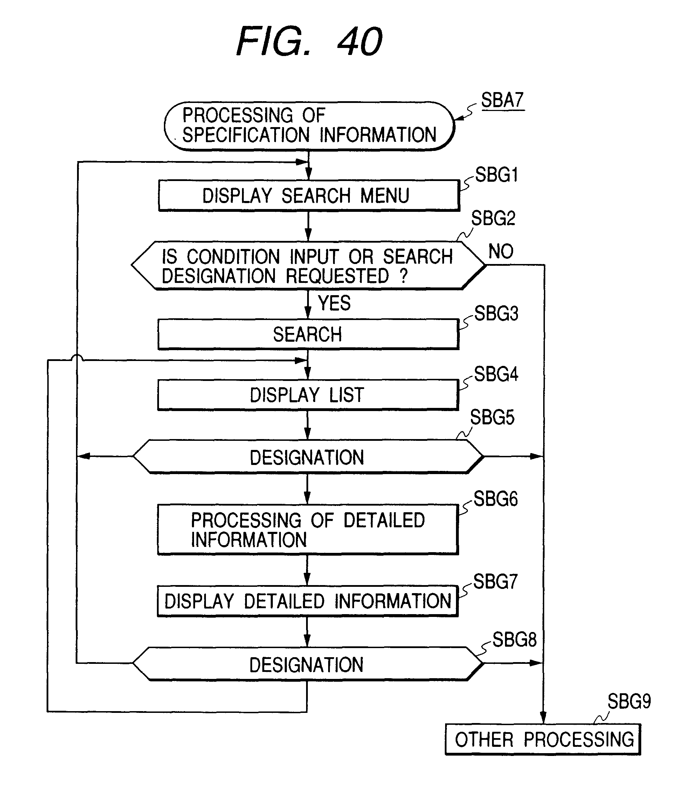

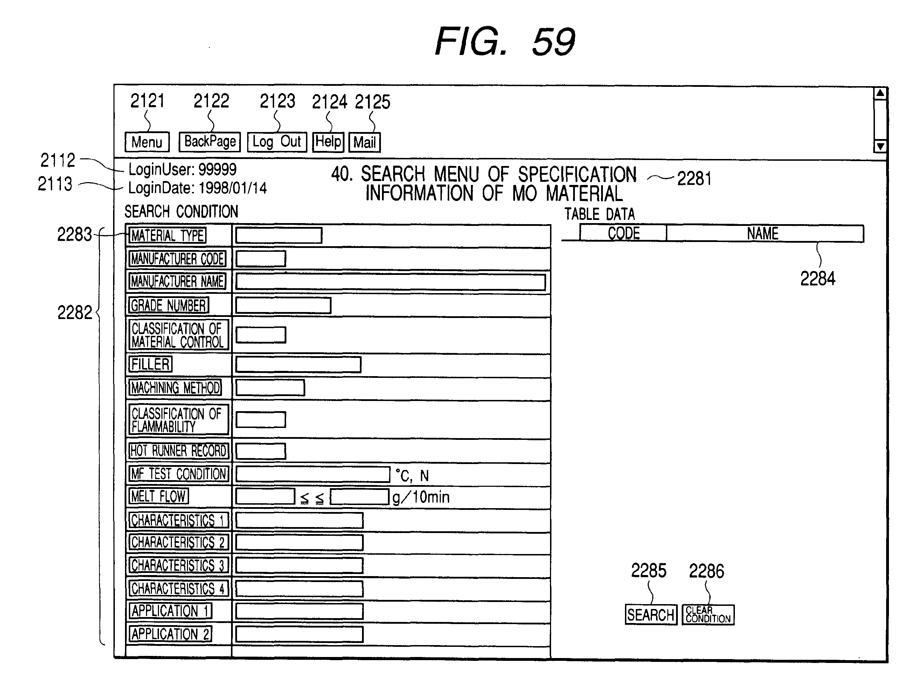

If "4. Specification information (41 - Specification information)" is selected on the menu screen shown in FIG. 43, it proceeds to processing of specification information of step SBA7 shown in FIG. 32. FIG. 40 is a flowchart showing details of processing of specification information of step SBA7 shown in FIG. 32. Step SBG1 displays the search screen shown in FIG. 59. Title area 2281 indicates "41. MO material Specification information Search menu". Display areas 2112 and 2113 are the same as above.

In search condition input area 2282, a user can enter material type, maker code, maker name, grade No., classification of material control, filler, machining method, classification of flammability, hot runner record, MF test condition, melt flow, characteristics and application (a copying machine for instance). All or part of the above conditions can be entered.

If material type button 2283 is clicked on, it displays table data 2284 on the right, and a desired material type can be selected. If a button of any other item is clicked on, it displays table data of that item of which a selection can be made.

The above conditions can be cleared by clicking on condition clear button 2286 with a mouse. If search button 2285 is clicked on with a mouse, it proceeds to step SBG3 via step SBG2, and searches for material specification information meeting the above entered conditions based on D/B 2a. It then proceeds to step SBG4. Moreover, if any of buttons 2121 to 2125 is clicked on, it proceeds to step SBG9 via step SBG2 and performs the same process as step SBC8 in FIG. 36.

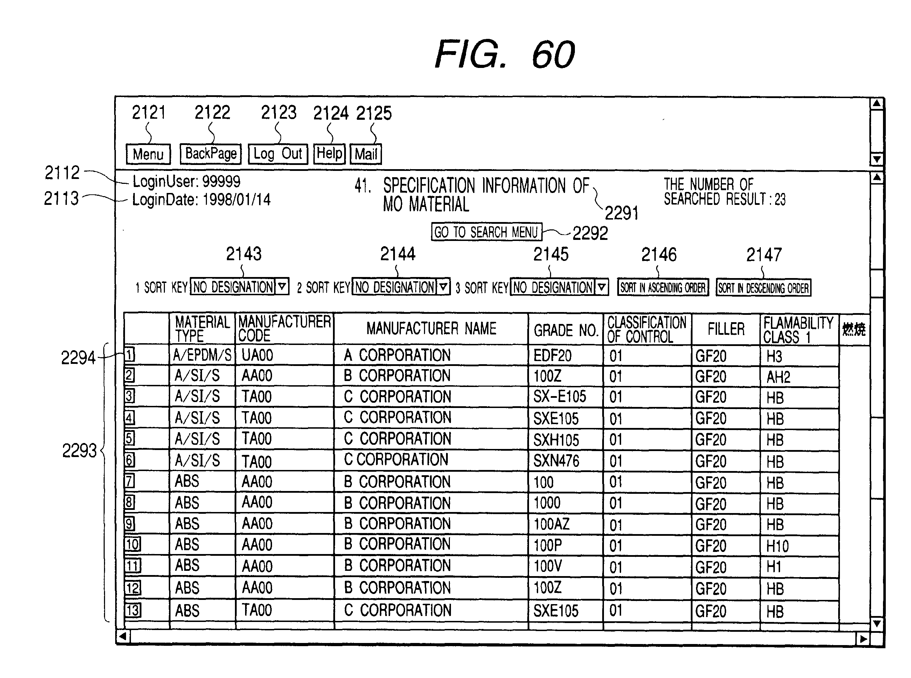

After the above search, step SBG4 displays a screen listing the search results shown in FIG. 60. Title area 2291 indicates "41. MO material Specification information". Display areas 2112 and 2113 are the same as above. List display area 2293 displays material specification information meeting the search conditions. To be more specific, list display area 2293 displays material type, maker code, maker name, grade No., classification of material control, filler, classification of flammability and so on.

Information in list display area 2293 can be sorted. Items are entered in first sort key 2143, second sort key 2144 and third sort key 2145, and if sort in ascending order button 2146 or sort in descending order button 2147 is clicked on thereafter, the information is sorted. Also, if go to search menu button 2292 is clicked on, it returns to step SBG1 via step SBG5 and displays the search screen shown in FIG. 59. In addition, if any of buttons 2121 to 2125 is clicked on, it proceeds to step SBG9 via step SBG5 and performs the same process as above. Moreover, if button 2294 of material No. 1 is clicked on for instance, it proceeds to step SBG6 via step SBG5.

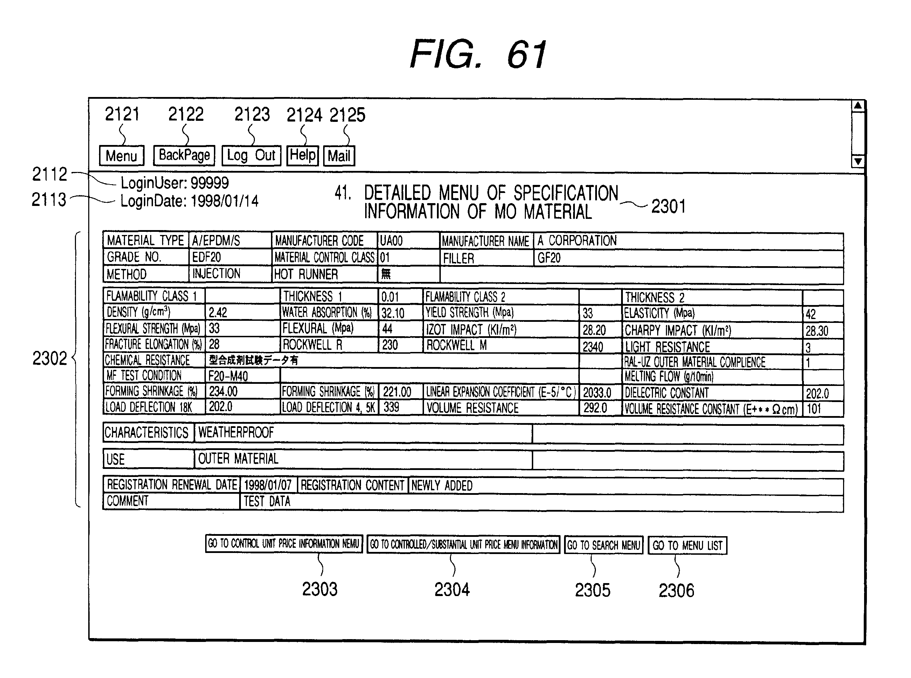

Step SBG6 searches for material specification information of material No. 1 for instance based on D/B 2a. Next, step SBG7 displays the detailed menu of specification information shown in FIG. 61. Details information is provided only in necessary cases by displaying the screen listing search results first and then displaying the individual details information so as to improve search speed.

Title area 2301 in FIG. 61 indicates "41. MO material Detailed menu of specification information". Display areas 2112 and 2113 have the same indication as above. Details information area 2302 displays specification details information specified above. To be more specific, specification information area 2302 displays material type, maker code, maker name, grade No., classification of material control, filler, machining method, classification of flammability, hot runner record, characteristics and application, and besides, thickness, flexural strength, flexural elasticity and so on.

Next, if go to controlled unit price menu button 2303 is clicked on, it proceeds to processing of controlled unit price information of step SBA10 in FIG. 33. If controlled/substantial unit price information menu button 2304 is clicked on, it proceeds to processing of controlled/substantial unit price information of step SBA11 in FIG. 33. If go to search menu button 2305 is clicked on, it returns to step SBG1 via step SBG8 and displays the search screen in FIG. 59. If go to menu list button 2306 is clicked on, it returns to step SBG4 via step SBG8 and displays the list screen in FIG. 60.If any of buttons 2121 to 2125 is clicked on, it proceeds to step SBG9 via step SBG8 and performs the same process as above.

If "5. Color approval information (51 - Color approval information)" is selected on the menu screen shown in FIG. 43, it proceeds to processing of color approval information of step SBA8 shown in FIG. 32. Color approval is approving by each individual maker as to whether or not a color can be adopted as a unique color representing its product, and only a color determined as a pass can be adopted for a product.

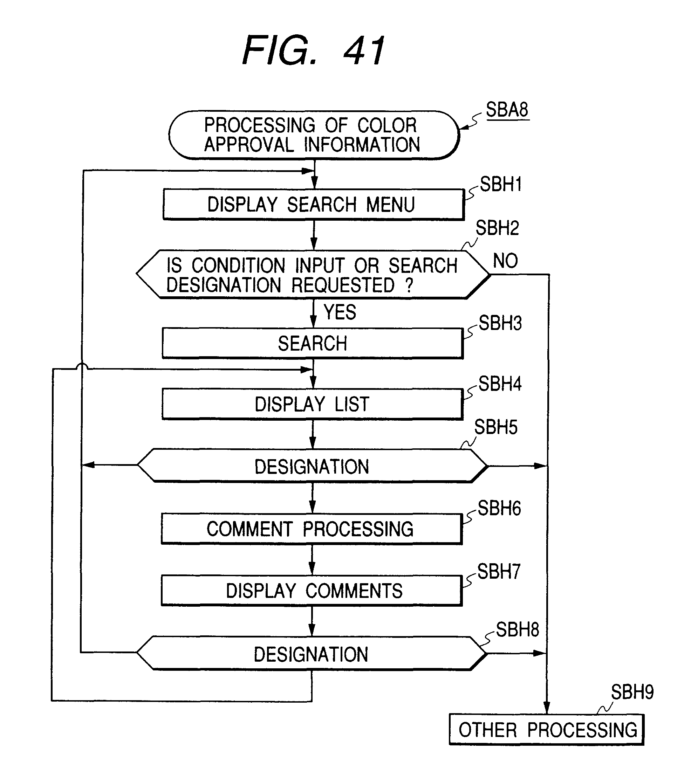

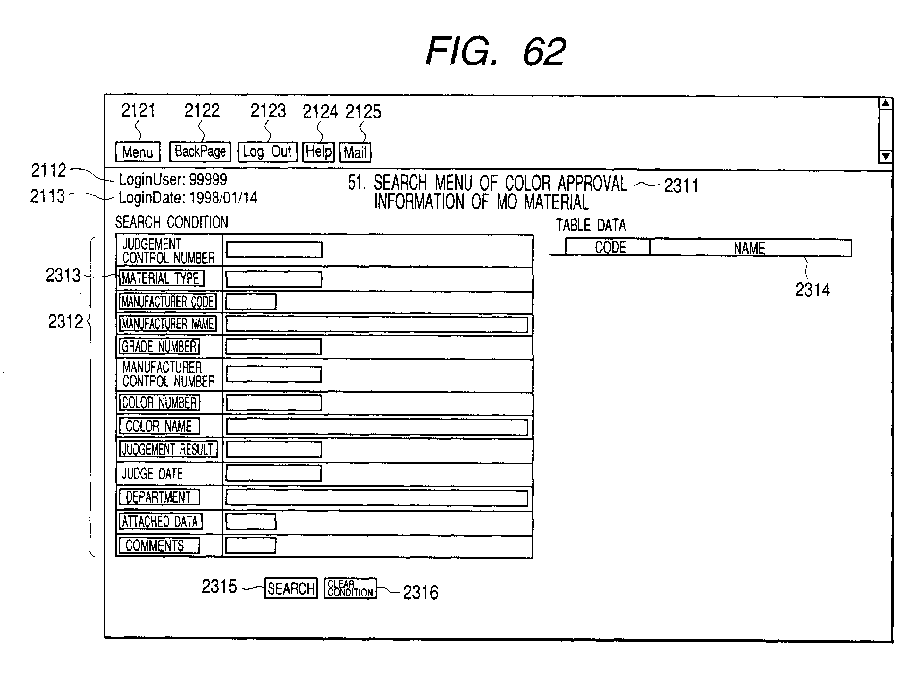

FIG. 41 is a flowchart showing details of processing of color approval information of step SBA8 shown in FIG. 32. Step SBH1 displays the search screen shown in FIG. 62. Title area 2311 indicates "51. MO material Color approval information Search menu". Display areas 2112 and 2113 are the same as above.

In search condition input area 2312, a user can enter judgment control No., material type, maker code, maker name, grade No., maker control No., color No., color name, judgment result, judgment date, department, attached data and comments. The user can enter- all or part of the above conditions.

If material type button 2313 is clicked on, it displays table data 2314 on the right, and a desired material type can be selected. If a button of any other item is clicked on, it displays table data of that item of which a selection can be made.

The above conditions can be cleared by clicking on condition clear button 2316 with a mouse. If search button 2315 is clicked on with a mouse, it proceeds to step SBH3 via step SBH2, and searches for material color approval information meeting the above entered conditions based on D/B 2a. It then proceeds to step SBH4. Moreover, if any of buttons 2121 to 2125 is clicked on, it proceeds to step SBH9 via step SBH2 and performs the same process as step SBC8 in FIG. 36.

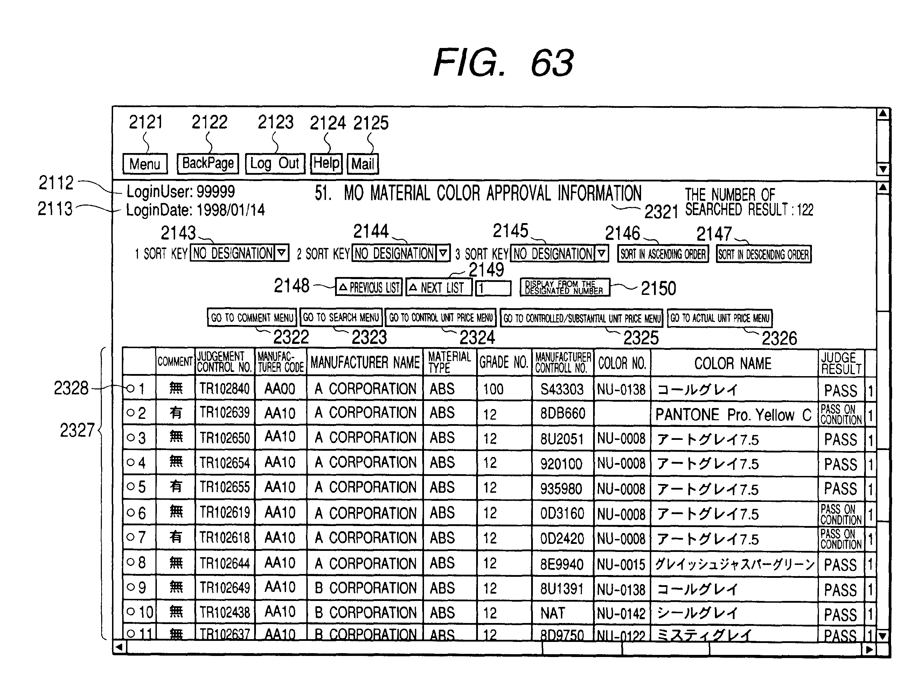

After the above search, step SBH4 displays a screen listing the search results shown in FIG. 63. Title area 2321 indicates "51. MO material Color approval information". Display areas 2112 and 2113 are the same as above. List display area 2327 displays material color approval information meeting the search conditions. To be more specific, list display area 2327 displays whether or not there are comments, judgment control No., maker code, maker name, material type, grade No., maker control No., color No., color name, judgment result, judgment date, department, attached data and so on.

Information in list display area 2327 can be sorted. Items are entered in first sort key 2143, second sort key 2144 and third sort key 2145, and if sort in ascending order button 2146 or sort in descending order button 2147 is clicked on thereafter, the information is sorted. Also, previous list button 2148, next list button 2149 and start number button 2150 are the same as above.

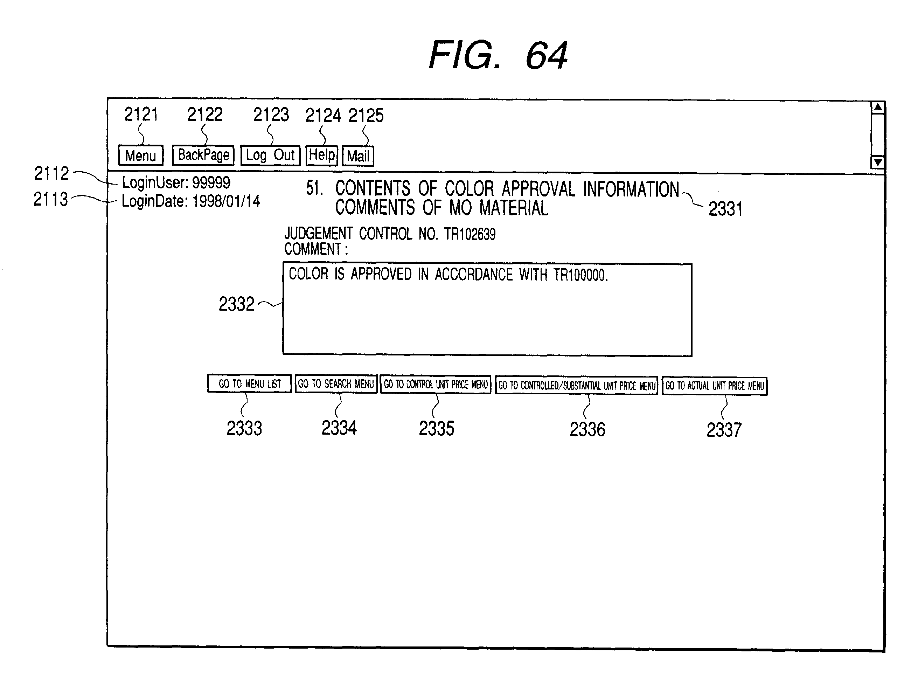

If material radio button 2328 of a material No. is clicked on, that material can be selected. After selection, if a next button is clicked on, it performs processing of the selected material. If comments screen button 2322 is clicked on, it proceeds to step SBH6 via step SBH5, and searches for comments on color approval information of selected material based on D/B 2a. Next, step SBH7 displays the comments screen shown in FIG. 64. Also, if go to search menu button 2323 in FIG. 63 is clicked on, it returns to step SBH1 via step SBH5 and displays the search screen shown in FIG. 62. If go to controlled unit price menu button 2324 is clicked on, it proceeds to processing of controlled unit price information of step SBA10 in FIG. 33. If controlled/substantial unit price menu button 2325 is clicked on, it proceeds to processing of controlled/substantial unit price information of step SBA11 in FIG. 33. If go to actual purchased unit price menu button 2326 is clicked on, it proceeds to processing of actual purchased unit price information of step SBA12 in FIG. 33. If any of buttons 2121 to 2125 is clicked on, it proceeds to step SBH9 via step SBH5 and performs the same process as above.

FIG. 64 is the comments screen on color approval information. Title area 2331 indicates "51. MO material Comments on color approval information". Display areas 2112 and 2113 have the same indication as above. Comments area 2332 displays the comments on color approval information of the material specified above.

Next, if go to menu list button 2333 is clicked on, it returns to step SBH4 via step SBH8 and displays the list screen shown in FIG. 63. If go to search menu button 2334 is clicked on, it returns to step SBH1 via step SBH8 and displays the search screen shown in FIG. 62. If go to controlled price unit menu button 2335 is clicked on, it proceeds to processing of controlled unit price information of step SBA10 in FIG. 33. If go to controlled/substantial unit price information menu button 2336 is clicked on, it proceeds to processing of controlled/substantial unit price information of step SBA11 in FIG. 33.If go to actual purchased unit price menu button 2337 is clicked on, it proceeds to processing of actual purchased unit price information of step SBA12 in FIG. 33. If any of buttons 2121 to 2125 is clicked on, it proceeds to step SBH9 via-step SBH8 and performs the same process as above.

Moreover, as with the electronic parts system, it is possible to display green authorization information considering environmental problems as to each individual material based on green authorization information 2ak inside D/B 2a in FIG. 31. For instance, green authorization information is authorized considering environmental problems such as whether or not there is a hazardous substance and whether or not there is recycling. It is also possible to display which product is using the material having predetermined green authorization information.

As above, the material system can provide a user with material information. For instance, in the case where the offices are using materials that are slightly different only in colors, it is possible to purchase materials at low costs by unifying the color and purchasing large quantities of materials of the same color. Also, in the case where a certain material becomes unavailable from a manufacturer, it is possible to check inventory at other offices and have the material delivered from other offices.

### [3. Mechanical parts system]

Mechanical parts system 3 (FIG. 1) stores mechanical parts information on D/B 3a and provides a user with the information, and has the same system contents as the above electronic parts system 1.

### [4. All parts number system]

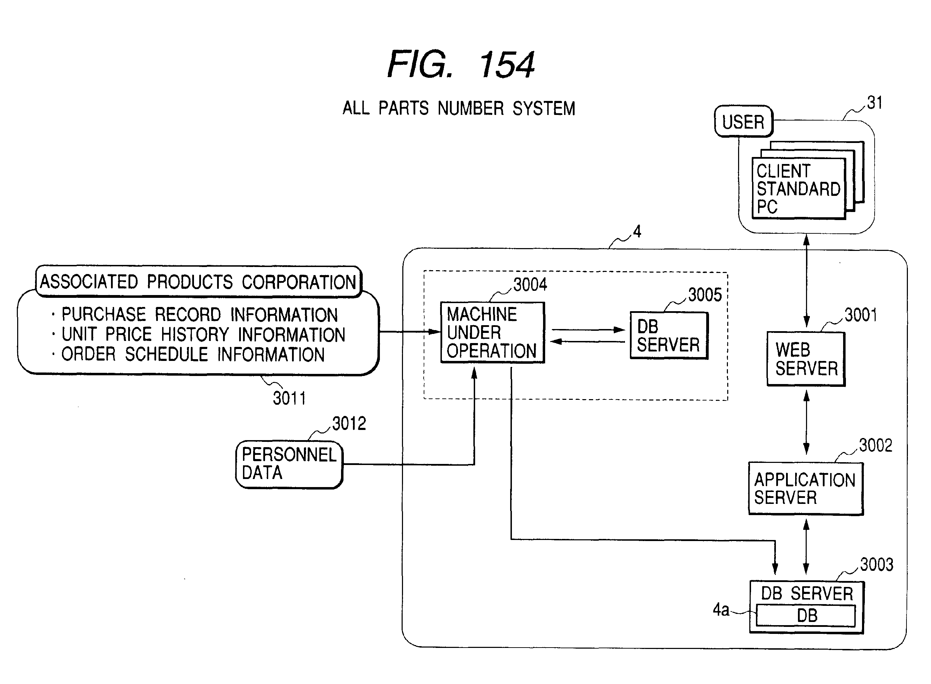

FIG. 154 is a block diagram showing configuration of all parts number system (all parts number information provision system) 4 shown in FIG. 1. All parts number system 4 has Web server 3001, application server 3002, Web DB server 3003, operation machine 3004 and DB server for update 3005. DB server 3003 has D/B 4a (FIG. 1). User computer 31 is a standard personal computer as a client for instance, and is capable of accessing all parts number system 4.

Factory and production relation company computer 3011 has purchase (verification) record information, unit price history information and order schedule information, and supplies such information to operation machine 3004. Personnel department computer 3012 has personnel data, and supplies that data to operation machine 3004. Personnel data includes information on personnel change, and all parts number system 4 can automatically change a department to which a registered user belongs. It can also erase registration of the changed user as required.

Operation machine 3004 registers such information on D/B 4a in DB server 3003. Moreover, the above information should desirably be provided online to operation machine 3004 via a network.

DB server 3003 manages registration, search, deletion and so on for D/B 4a. On receipt of purchase record information and so on from factory and production relation company computer 3011, operation machine 3004 instructs DB server for update 3005 to update D/B 4a as required. DB server for update 3005 creates a data file for update and supplies it to operation machine 3004. Operation machine 3004 updates D/B 4a in DB server 3003 accordingly.

Application server 3002 stores a computer program and operates all parts number system 4 according to the computer program. Web server 3001 stores a computer program and performs unified screen display according to the computer program. Web server 3001 makes various requests to application server 3002 and receives its responses. Application server 3002 makes various requests to DB server 3003 and receives its responses.

User computer 31 is a standard personal computer as a client for instance, and is capable of making various requests to Web server 3001 and receiving its responses. User computer 31 can instruct Web server 3001 to search for and view purchase record information on a desired part No. Web server 3001 searches for purchase record information and so on in D/B 4a via application server 3002 and displays that information on the screen of user computer 31. The user can promptly acquire the desired purchase record information.

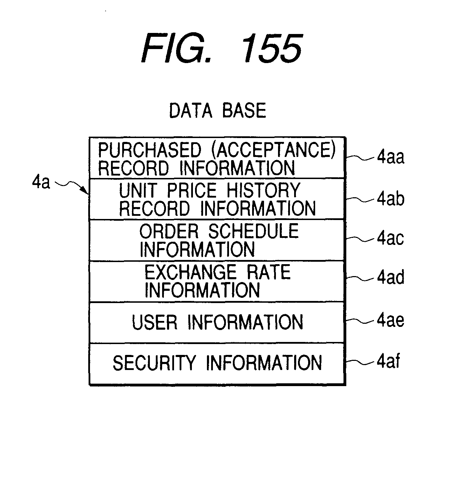

FIG. 155 is a schematic diagram showing configuration of D/B 4a. D/B 4a has all parts number purchase (acceptance) record information 4aa, unit price history record information 4ab, order schedule information 4ac, exchange rate information 4ad, user information (user ID, password, user's belonging department, etc.) 4ae and security information 4af.

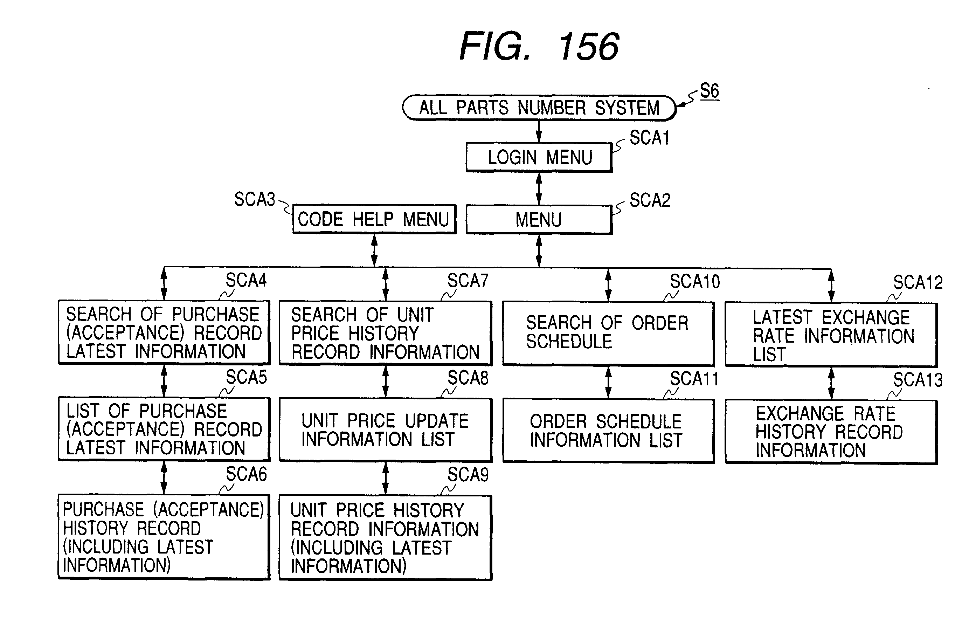

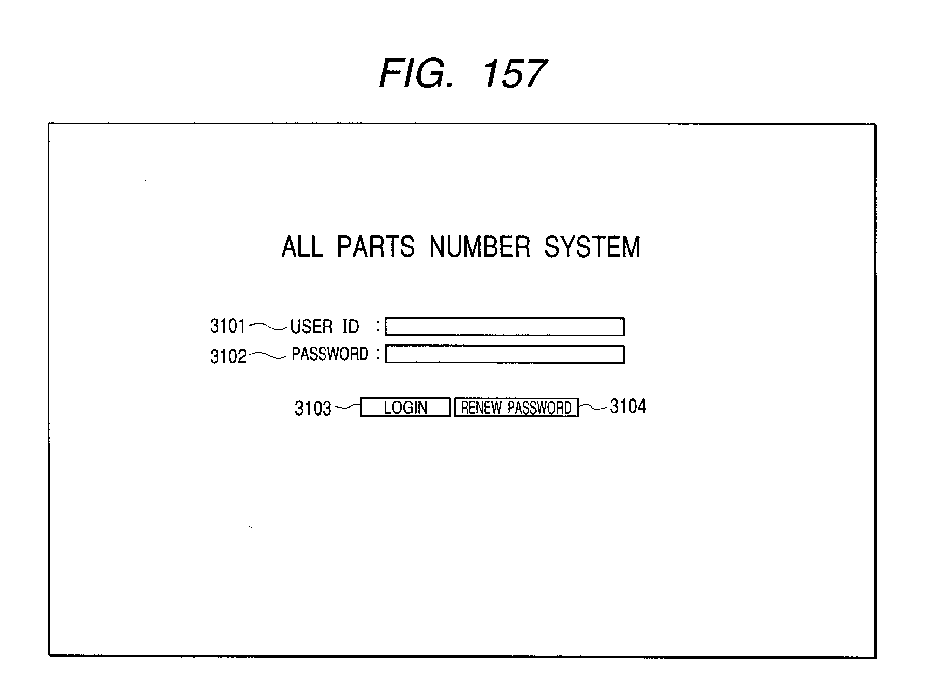

FIG. 156 is a flowchart showing processing of all parts number system 4, and corresponds to processing in step S6 in FIG. 2. Step SCA1 displays a log-in screen shown in FIG. 157 on user computer 31 waiting for input of a user ID and input of a password. A user can enter a user ID in area 3101 in FIG. 157 and a password in area 3102. Security can be enhanced and a log-in by an illicit person can be prevented by having user ID 3101 and password 3102 entered.

A user can change a password for security protection by clicking on password change button 3104 with a mouse. If a user clicks on log-in button 3103 with a mouse, and if the entered user ID and password are correct, the user is logged in and proceeds to step SCA2 in FIG. 156.

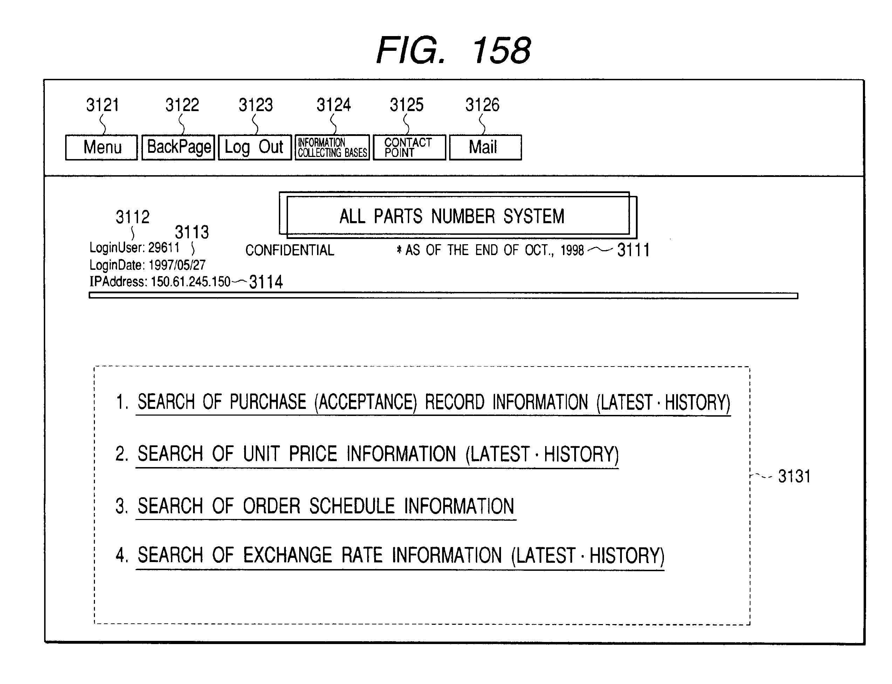

Step SCA2 displays a menu screen shown in FIG. 158. Display area 3111 indicates a date of information. Display area 3112 indicates a log-in user ID (user ID). Display area 3113 indicates a date of log-in. Display area 3114 indicates an IP address of log-in. Based on this IP address, the department to which the user belongs can be identified. As the source can be identified by the displays of display areas 3112 to 3114 when a hard copy of the screen is made, it is possible to prevent leakage of information to outside.

If menu button 3121 is clicked on with a mouse, it displays the menu screen shown in FIG. 158. If back page button 3122 is clicked on with a mouse, it returns to a preceding screen display. If log-out button 3123 is clicked on with a mouse, the procurement system comes to an end. If information collecting bases button 3124 is clicked on with a mouse, it displays situation of collecting purchase record information and so on base by base. If contact point button 3125 is clicked on with a mouse, it displays a contact point of a support window of all parts number system 4 (windows of each procurement department). If mail button 3126 is clicked on, mail transmission or a check of received mail can be performed.

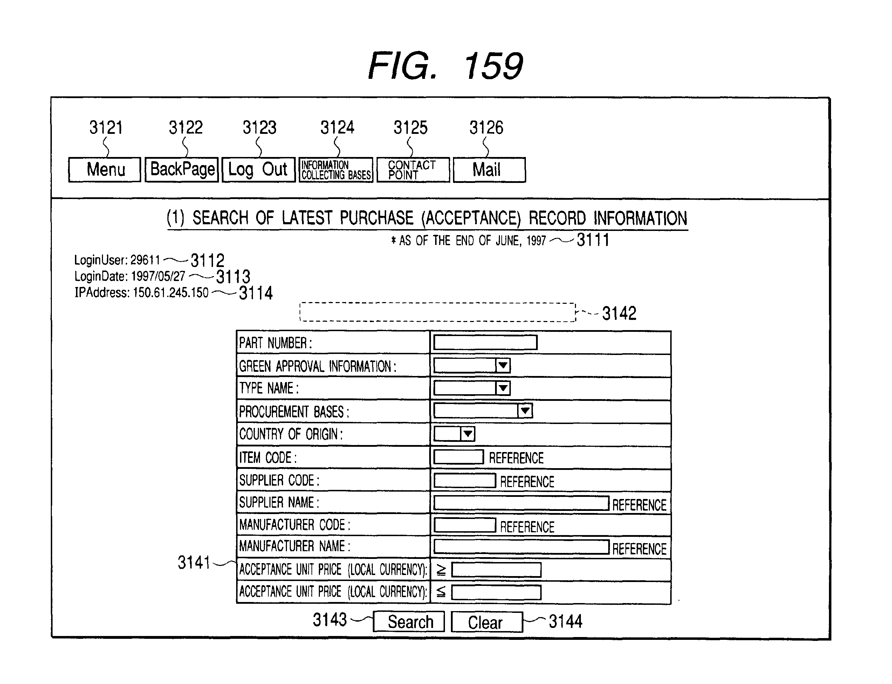

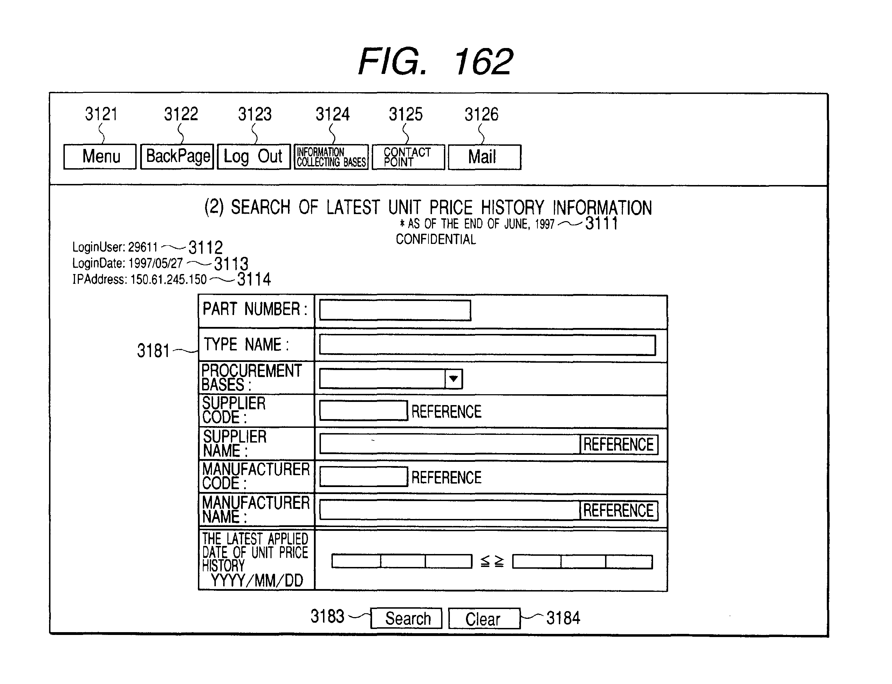

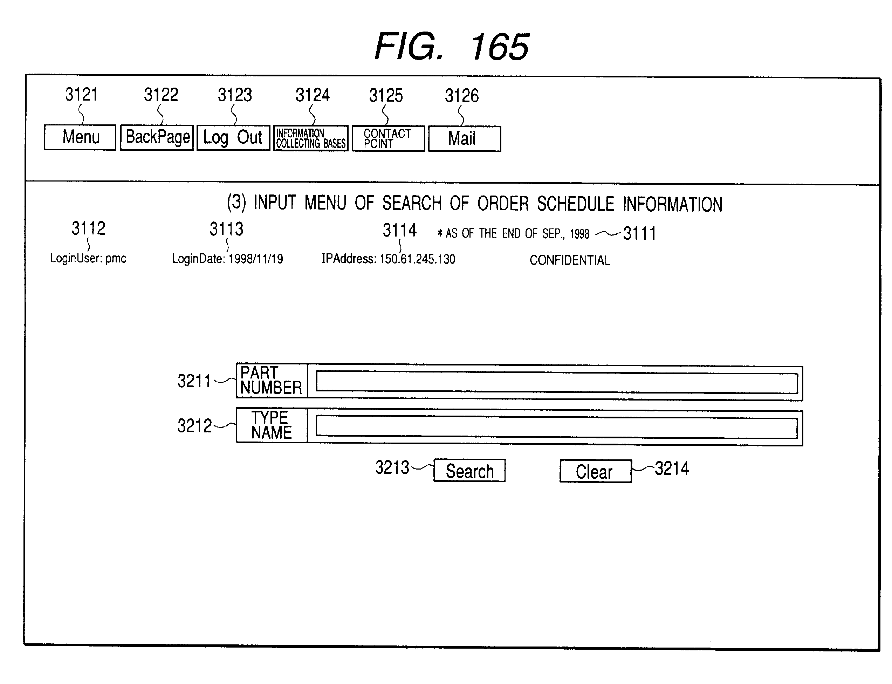

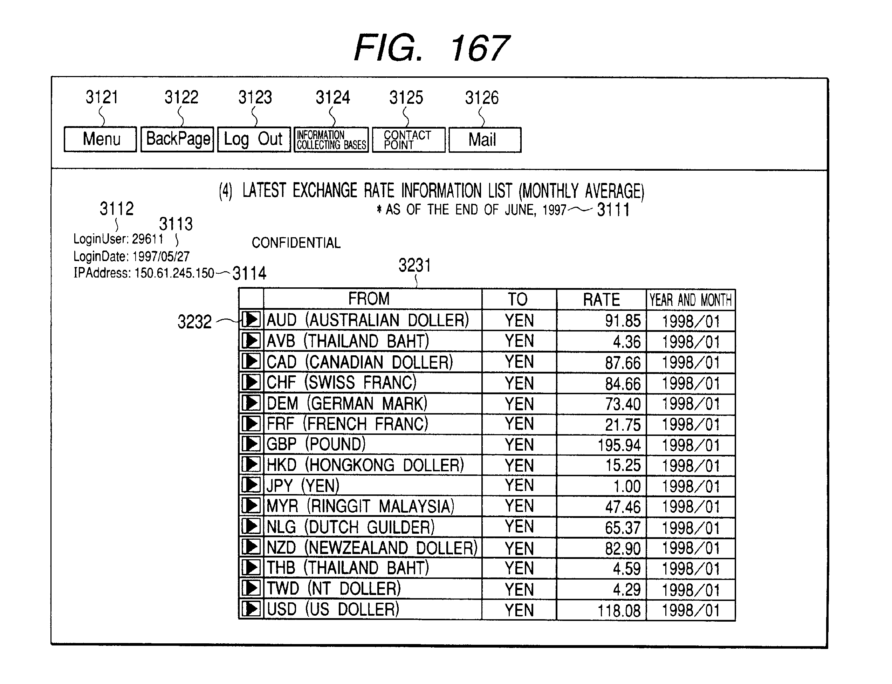

Selection item 3131 displays "1. Search of purchase (acceptance) record information (latest/history)", "2. Search of unit price history information (latest/history)", "3. Search of order schedule information" and "4. Search of exchange rate information (latest/history)". If No. 1 is selected, it proceeds to step SCA4 in FIG. 156 and performs search processing of the latest purchase (acceptance) record information. This processing displays the screen shown in FIG. 159. If No. 2 is selected, it proceeds to step SCA7 in FIG. 156 and performs search processing of the latest unit price history information. This processing displays the screen shown in FIG. 162. If No. 3 is selected, it proceeds to step SCA10 in FIG. 156 and performs search processing of order schedule information. This processing displays the screen shown in FIG. 165. If No. 4 is selected, it proceeds to step SCA12 in FIG. 156 and performs processing of the latest exchange rate information list display. This processing displays the screen shown in FIG. 167.

FIG. 159 shows the screen displayed by search processing of the latest purchase (acceptance) record information of step SCA4 shown in FIG. 156. Displays in display areas 3111 to 3114 and buttons 3121 to 3126 are the same as above. Part No., green approval information, type name (article name), procurement base, country of origin, item code, supplier code, supplier name, maker code, maker name and range of acceptance unit price (local currency) can be entered in search condition input area 3141. The above conditions can be cleared by clicking on clear button 3144 with a mouse. After entering the search conditions, if search button 3143 is clicked on with a mouse, it searches for the latest purchase (acceptance) record information meeting the above search conditions and proceeds to step SCA5 in FIG. 156. Step SCA5 performs processing of the latest purchase (acceptance) record information list display. Moreover, if "Reference" area of each item in condition input area 3141 is clicked on with a mouse, it proceeds to step SCA3 in FIG. 156 and performs code help processing.

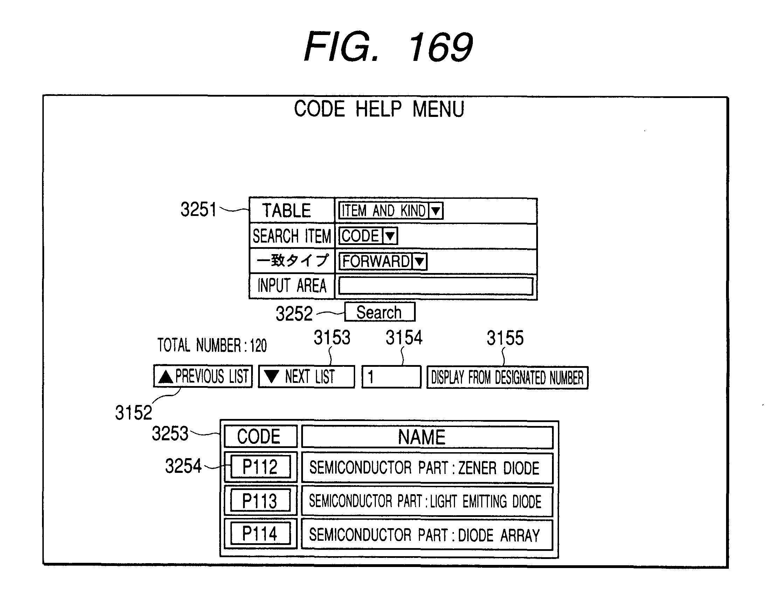

FIG. 169 displays another screen to be displayed by code help processing of step SCA3 in FIG. 156. This screen searches for and displays an item code and so on, and makes it easier to enter the above item code in FIG. 159. Table (an item for instance), search item (a code for instance), matching type (a forward match for instance) and input area (input of data that is a key to a search condition) can be entered in search condition area 3251. After entry, if search button 3252 is clicked on with a mouse, it displays items meeting the search condition in search result area 3253. For instance, search result area 3253 displays a list of item codes and their names. If previous list button 3152 is clicked on with a mouse, it displays a list preceding the list currently displayed in search result area 3253. If next list button 3153 is clicked on with a mouse, it displays a list next to the list currently displayed in search result area 3253. If a start number desired to be displayed is entered in input box 3154 and button 3155 is clicked on with a mouse, it displays a list from that start number in search result area 3253. If button 3254 of each item of the search results is clicked on with a mouse, that item is entered in the above condition input area 3141 in FIG. 159.

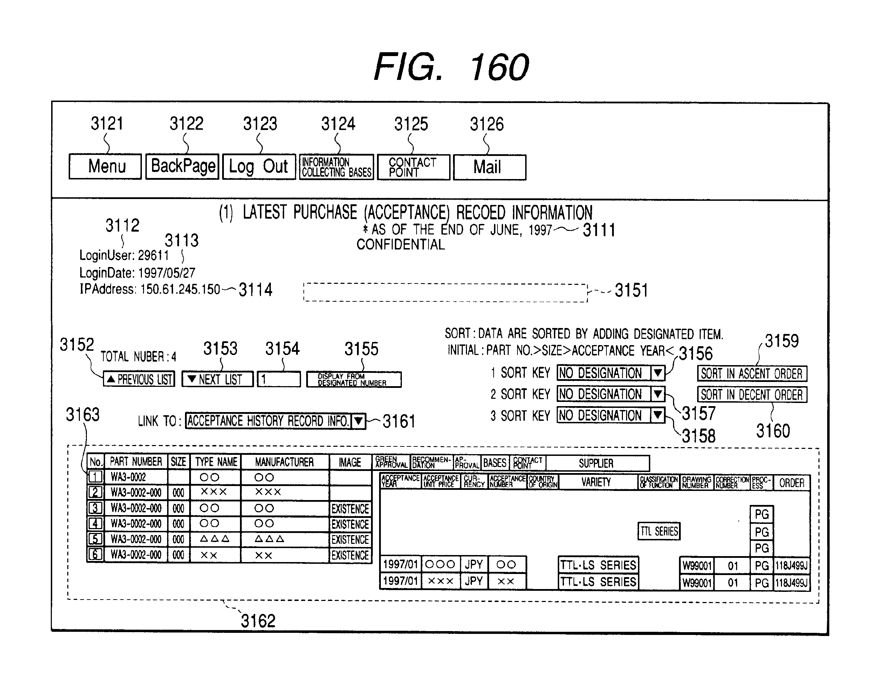

FIG. 160 shows the screen displayed by processing of the latest purchase (acceptance) record information of step SCA5 shown in FIG. 156. Displays in display areas 3111 to 3114 and buttons 3121 to 3126 are the same as above. As a result of a search for the latest purchase (acceptance) record information meeting the above search conditions, it displays the information in search result area 3162 if applicable information is found, and it indicates "No applicable information" in area 3151 if no applicable information is found. Search result area 3162 displays verification date, verification price, currency, verification amount, country of origin, variety, classification of function, drawing No., correction No., process, order, and besides, part No., size, type name, maker, whether or not there is an image (using an image of electronic parts system 1), green authorization information, recommendation, approval, base, contact point and supplier. Previous list button 3152, next list button 3153, input box 3154 and button 3155 are the same as above.

To sort the display items in search result area 3162, first sort key 3156, second sort key 3157 and third sort key 3158 can be entered. Thereafter, if sort in ascending order button 3159 is clicked on with a mouse, the latest purchase (acceptance) record information is sorted in ascending order using sort keys 3156 to 3158 as keys, and if sort in descending order button 3160 is clicked on with a mouse, the latest purchase (acceptance) record information is sorted in descending order using sort keys 3156 to 3158 as keys, and displayed in search result area 3162.

On linking screen 3161, a link target when clicking on No. button 3163 of each of the latest purchase (acceptance) record information can be selected. As a link target, processing of the latest purchase (acceptance) record information (step SCA6 in FIG. 156), processing of the latest unit price information list display (step SCA8) or processing of order schedule information list display (step SCA10) can be selected. For instance, if purchase record information is selected as linking screen 3161 and No. button 3163 is clicked on with a mouse, it proceeds to step SCA6 in FIG. 156 and performs processing of the latest purchase (acceptance) record information (history information including the latest one) about that number.

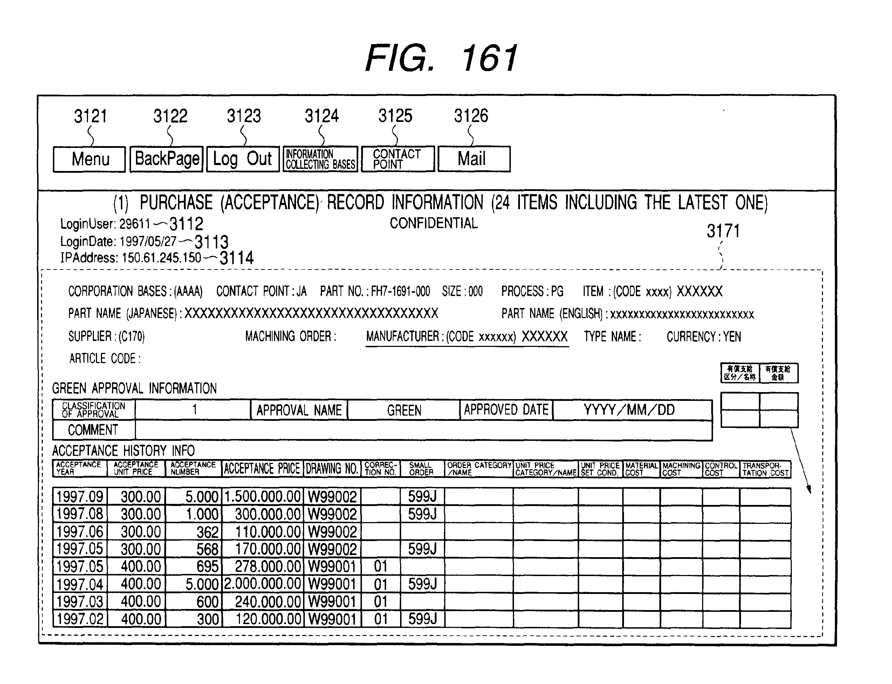

FIG. 161 shows the screen displayed by processing of the latest purchase (acceptance) record information of step SCA6 shown in FIG. 156. Displays in display areas 3112 to 3114 and buttons 3121 to 3126 are the same as above. The above display areas 2111 may also be displayed. History information area 3171 displays corporation base, contact point, part No., size, process, item, part name, supplier, subcontractor code, maker, type name, currency name, article code, and besides, green authorization information considering environmental problems and acceptance record history information. The above green approval information displays approval category, approved name, approval date and comments. The above acceptance record history information displays acceptance unit price, acceptance amount, acceptance price, drawing No., correction No., small order, order category/name, unit price category/name, set unit price condition, material cost, machining cost, control cost, transportation cost, paid category/name and paid amount for each year and month of acceptance. A user can know acceptance record information on each part No. (a part or a material).

FIG. 162 shows the screen displayed by processing of search of the latest unit price history record information of step SCA7 shown in FIG. 156. Displays in display areas 3111 to 3114 and buttons 3121 to 3126 are the same as above. Part No., type name, procurement base, supplier code, supplier name, maker code, maker name and range of the latest applied date of unit price history can be entered in condition input area 3181. If "Reference" area of each item is clicked on with a mouse, it proceeds to step SCA3 in FIG. 156 and displays code help screen in FIG. 169 described above. The above search conditions can be cleared by clicking on clear button 3184 in FIG. 162 with a mouse. After entering the search conditions, if search button 3183 is clicked on with a mouse, it searches for the latest unit price history information meeting the search conditions and proceeds to step SCA8 in FIG. 156. Step SCA8 performs processing of the latest unit price history information list display.

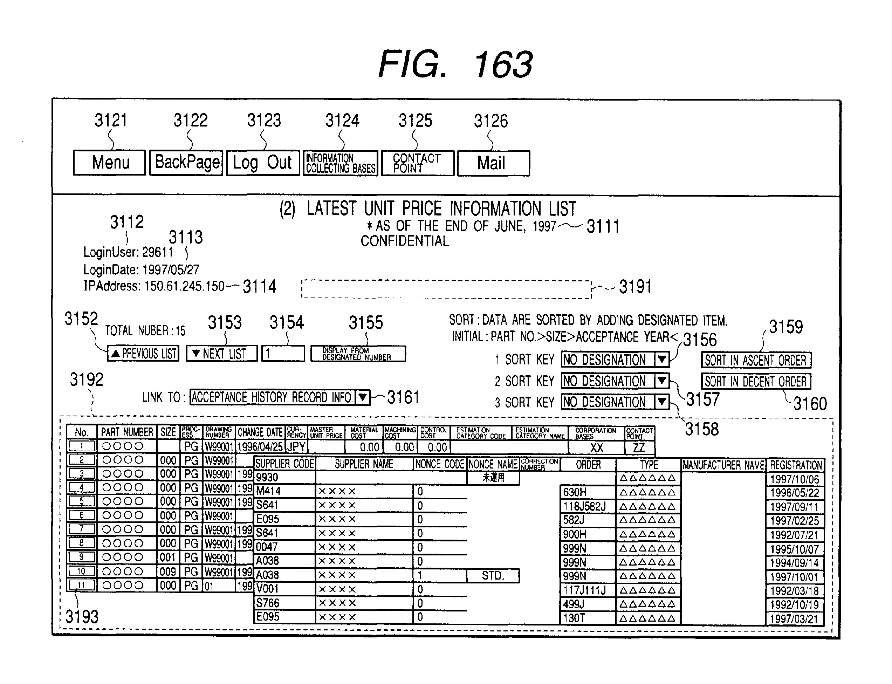

FIG. 163 shows the screen displayed by processing of the latest unit price history information list display of step SCA8 shown in FIG. 156. Displays in display areas 3111 to 3114 and buttons 3121 to 3126 are the same as above. As a result of a search for the latest unit price history information meeting the above search conditions, it displays the information in search result area 3192 if applicable information is found, and it indicates "No applicable information" in area 3191 if no applicable information is found.
Search result area 3192 displays part No., size, process, drawing No., switch date, currency, master unit price, material cost, machining cost, control cost, transportation cost, estimate category code, estimate category name, corporation base, contact point, supplier code, supplier name, nonce code, nonce name, correction No., order, type name, maker name and registration date. Previous list button 3152, next list button 3153, input box 3154, button 3155, sort keys 3156 to 3158, sort in ascending order button 3159, sort in descending order button 3160 and linking screen 3161 are the same as above.

If processing of acceptance history information is selected as linking screen 3161 and No. button 3193 of each of the unit price history information is clicked on with a mouse, it proceeds to step SCA9 in FIG. 156 and performs processing of the unit price history record information (history information including the latest one) about that number.

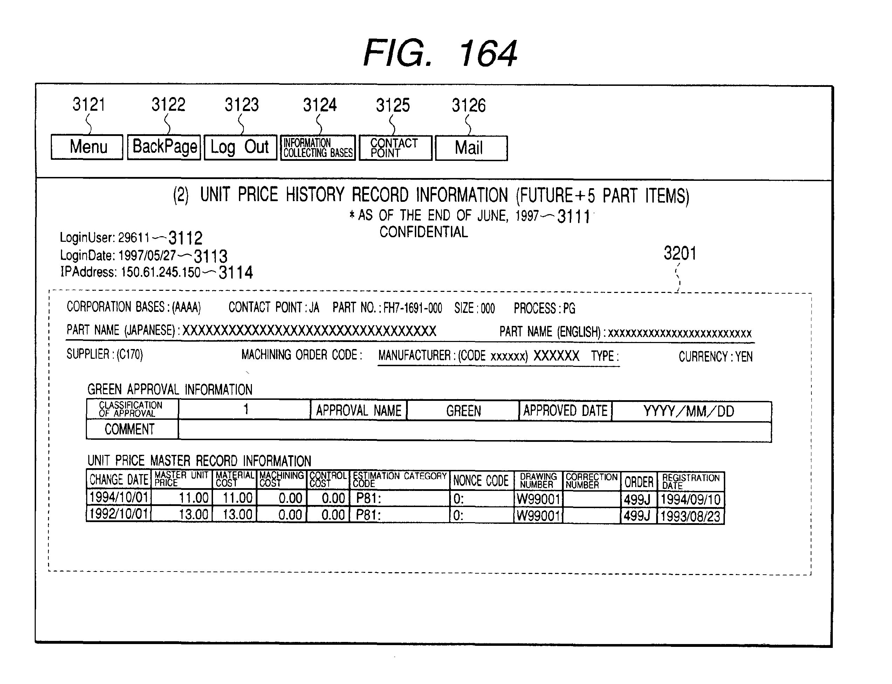

FIG. 164 shows the screen displayed by processing of unit price history record information of step SCA9 shown in FIG. 156. Displays in display areas 3111 to 3114 and buttons 3121 to 3126 are the same as above. History information area 3201 displays corporation base, contact point, part No., size, process, part name, supplier, subcontractor code, maker, type name, currency name, and besides, green authorization information considering environmental problems and unit price master history information. The above green approval information displays approval category, approved name, approval date and comments. The above unit price master history information displays master unit price, material cost, machining cost, control cost, transportation cost, estimate category code, nonce code, drawing No., correction No., order and registration date for each switch date (of each year). A user can know unit price history record information on each part No. (a part or a material).

FIG. 165 shows the screen displayed by processing of search of order schedule information of step SCA10 shown in FIG. 156. Displays in display areas 3111 to 3114 and buttons 3121 to 3126 are the same as above.
As a search condition, part No. 3211 or type name 3212 can be entered. The above search condition can be cleared by clicking on clear button 3214 with a mouse. After entering the search condition, if search button 3213 is clicked on with a mouse, it searches for order schedule information meeting the search condition and proceeds to step SCA11 in FIG. 156. Step SCA11 performs processing of order schedule information list display.

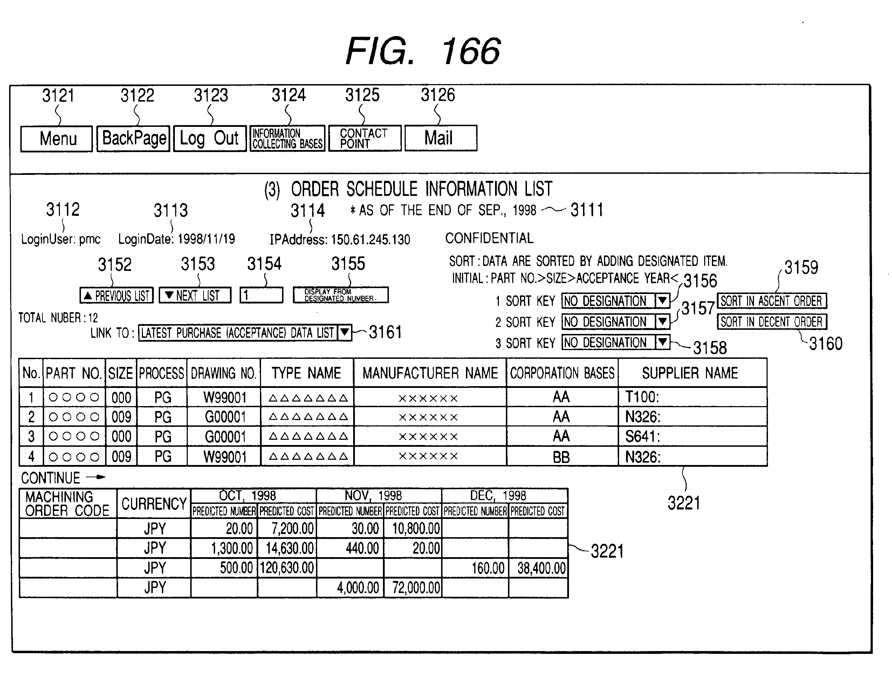

FIG. 166 shows the screen displayed by processing of order schedule information list display of step SCA11 shown in FIG. 156. Displays in display areas 3111 to 3114 and buttons 3121 to 3126 are the same as above. As a result of a search for order schedule information meeting the above search conditions, it displays the information in search result area 3221 if applicable information is found. Search result area 3221 displays part No., size, process, drawing No., type name, maker, corporation base, supplier name, subcontractor code, currency, scheduled amount and scheduled value of money for each month. Previous list button 3152, next list button 3153, input box 3154, button 3155, sort keys 3156 to 3158, sort in ascending order button 3159, sort in descending order button 3160 and linking screen 3161 are the same as above.

FIG. 167 shows the screen displayed by processing of search of the latest exchange rate information list display of step SCA12 shown in FIG. 156. Displays in display areas 3111 to 3114 and buttons 3121 to 3126 are the same as above. Exchange rate list area 3231 displays source currency, target currency, rate and date for each currency based on D/B 4a. For instance, 1 Australian dollar (AUD) is 91.85 yen (JPY). If button 3232 of each currency is clicked on with a mouse, it proceeds to step SCA13 in FIG. 156 and performs processing of exchange rate history record information for that currency.

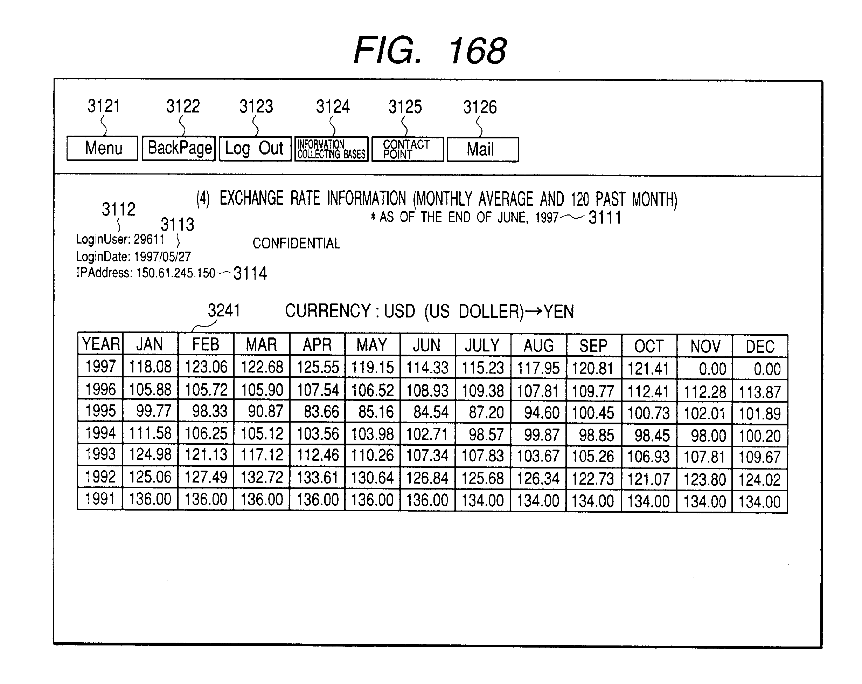

FIG. 168 shows the screen displayed by processing of exchange rate history record information of step SCA13 shown in FIG. 156. Displays in display areas 3111 to 3114 and buttons 3121 to 3126 are the same as above. Exchange rate history area 3241 displays monthly history of the exchange rate from US dollar to Japanese yen for instance. It is possible to convert a local price to Japanese yen by indicating the exchange rate.

As above, all part number system 4 can provide a user with purchase (acceptance) record information, unit price history record information, order schedule information and exchange rate information. As for purchase record information, unit price history record information and order schedule information, information of only applicable ones can be displayed after searching with a desired key.

### [5. Cost cutting supporting system]

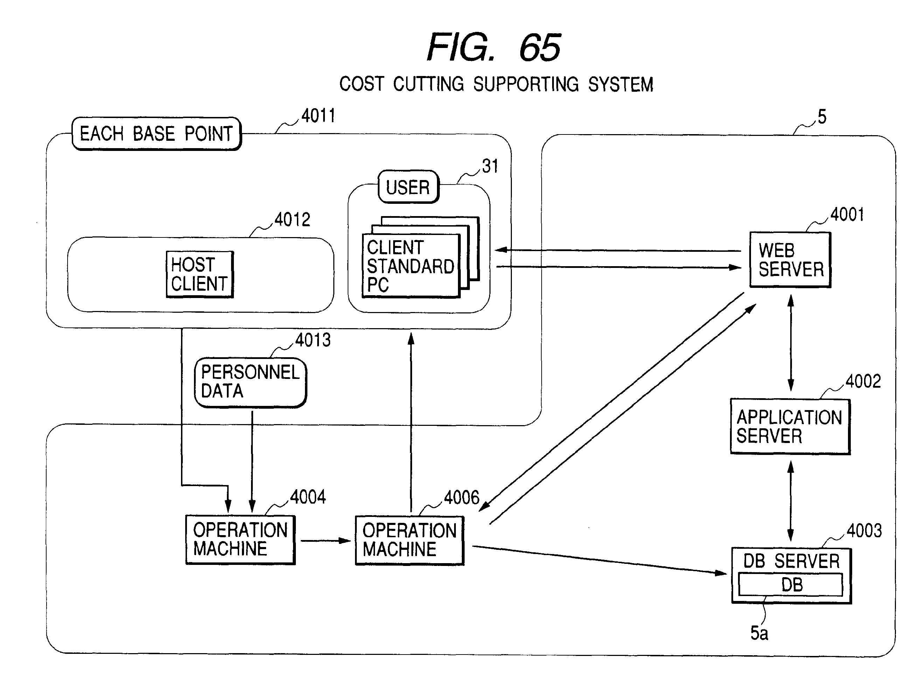

FIG. 65 is a block diagram showing configuration of cost cutting supporting system (price information provision system) 5 illustrated in FIG. 1. Cost cutting supporting system 5 has Web server 4001, application server 4002, Web DB server 4003, operation machines 4004 and 4006. DB server 4003 has D/B 5a (FIG. 1).

Each base point (office) 4001 has computer 4012 for storing price information of each base point and user computer 31. Each base point computer 4012 stores price information such as verification unit prices of electronic parts and mechanical parts of its base point and supplies it to operation machine 4004. User computer 31 is a standard personal computer as a client for instance, and is capable of accessing cost cutting supporting system 5.

Personnel department computer 4013 stores personnel data and that data is supplied to operation machine 4004. Personnel data includes information on personnel change, and cost cutting supporting system 5 can automatically change a department to which a registered user belongs. It can also erase registration of the changed user as required.

Moreover, operation machine 4004 should desirably receive the above information online via a network.

On receipt of the above information, operation machine 4004 performs a process for comparing unit prices of electronic parts and mechanical parts of each base point and supplies it to operation machine 4006. Operation machine 4006 registers necessary information on D/B 5a in DB server 4003.

DB server 4003 has D/B 5a and manages registration, deletion, update and search of that D/B 5a. Application server 4002 stores a computer program and operates cost cutting supporting system 5 according to the computer program. Web server 4001 stores a computer program and performs unified screen display according to the computer program. Web server 4001 makes various requests to application server 4002 and receives its responses. Application server 4002 makes various requests to DB server 4003 and receives its responses. User computer 31 makes various requests to Web server 4001 and receives its responses. For instance, user computer 31 can download price information from Web server 4001, edit the information and upload it to Web server 4001. Web server 4001 supplies the uploaded information to operation machine 4006. Operation machine 4006 automatically collects price information of each base point based on that information and sends it by e-mail to user computer 31.

A user can know prices at which other base points purchase the same electronic parts and mechanical parts. It is also possible to download information such as purchase prices at other base points purchasing at lower prices than the user's base point. The user can negotiate with a supplier over cost cutting based on that information. It is also possible to upload the negotiation results to Web server 4001 so as to prepare a strategy for the next negotiation.

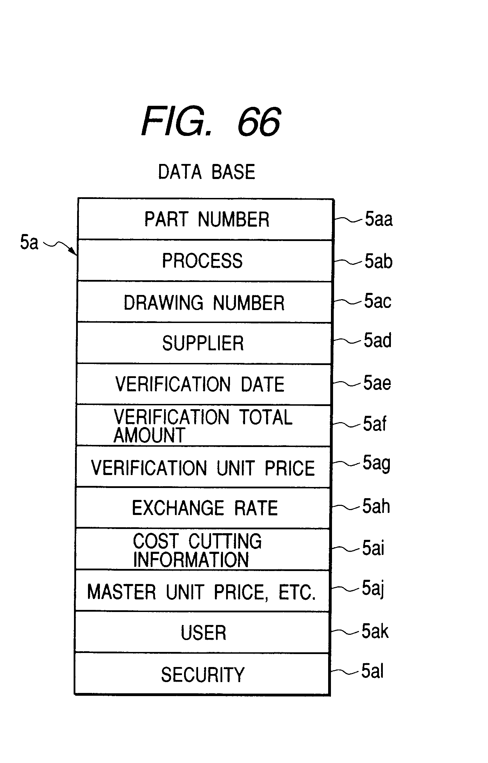

FIG. 66 is a schematic diagram showing configuration of D/B 5a in DB server 4003. D/B 5a has part numbers 5aa, process 5ab, drawing No. 5ac, supplier 5ad, verification (purchase) date 5ae, verification total amount 5af, verification unit price 5ag, exchange rate 5ah, cost cutting information 5ai, master information such as master (estimate) unit price 5aj, user information (user ID, password, user's belonging department, etc.) 5ak and security information 5al for electronic parts and mechanical parts of each base point.

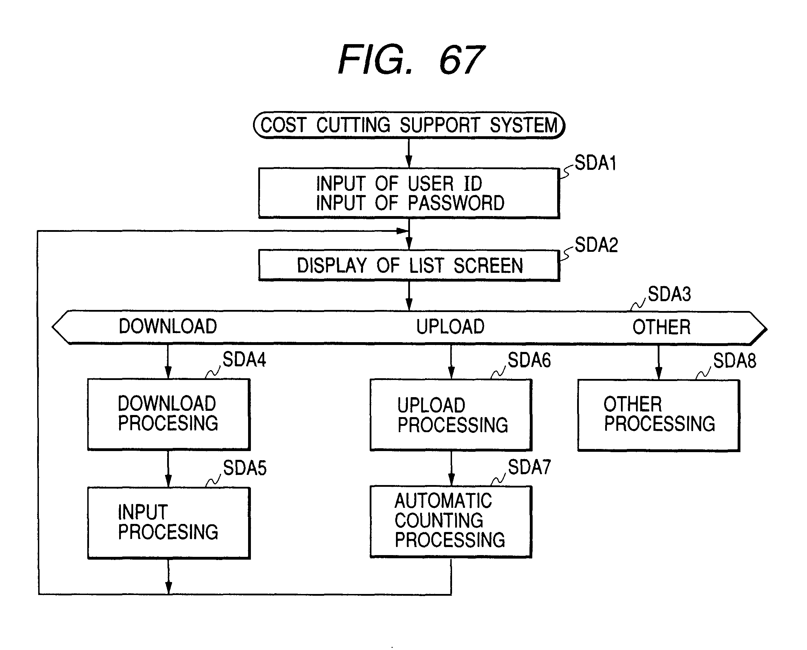

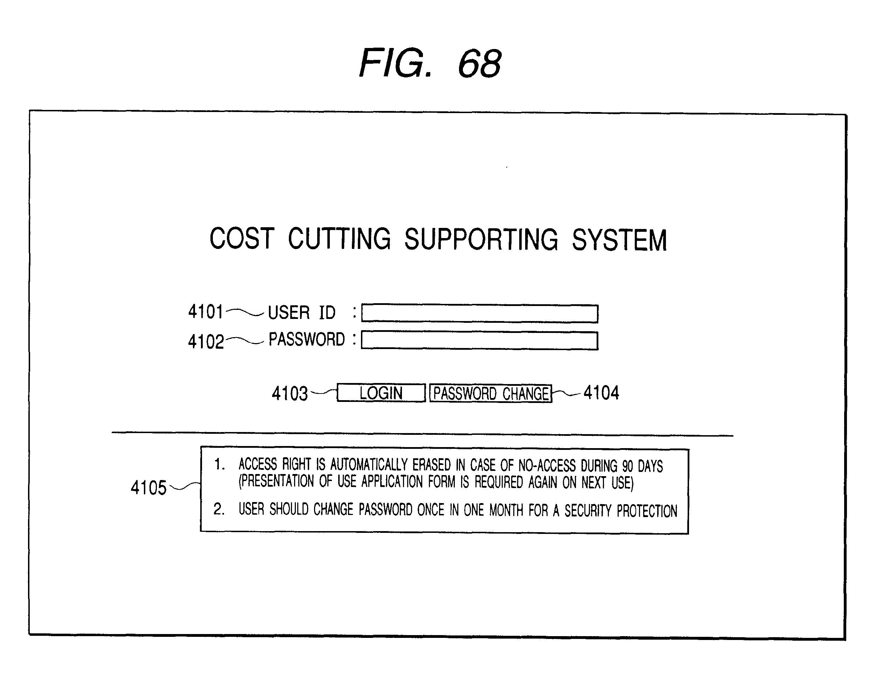

FIG. 67 is a flowchart showing processing of cost cutting supporting system 5, and corresponds to processing of step S7 in FIG. 2. Step SDA1 displays the log-in screen shown in FIG. 68 on user computer 31 waiting for input of a user ID and input of a password. A user can enter a user ID in an area 4101 in FIG. 68 and a password in an area 4102. Security can be enhanced and a log-in by an illicit person can be prevented by having user ID 4101 and password 4102 entered.

The following two measures are taken in order to enhance security as displayed in display area 4105. (1) In the case where there is no access (log-in) for 90 calendar days, the right to access (the right to log in) is automatically erased. In that case, an application for utilization must be submitted again on utilization. (2) A user must change a password once a month for security protection. A password can be changed by clicking on password change button 4104 with a mouse.

If a user clicks on log-in button 4103 with a mouse, and if the entered user ID and password are correct, the user is logged in and proceeds to step SDA2.

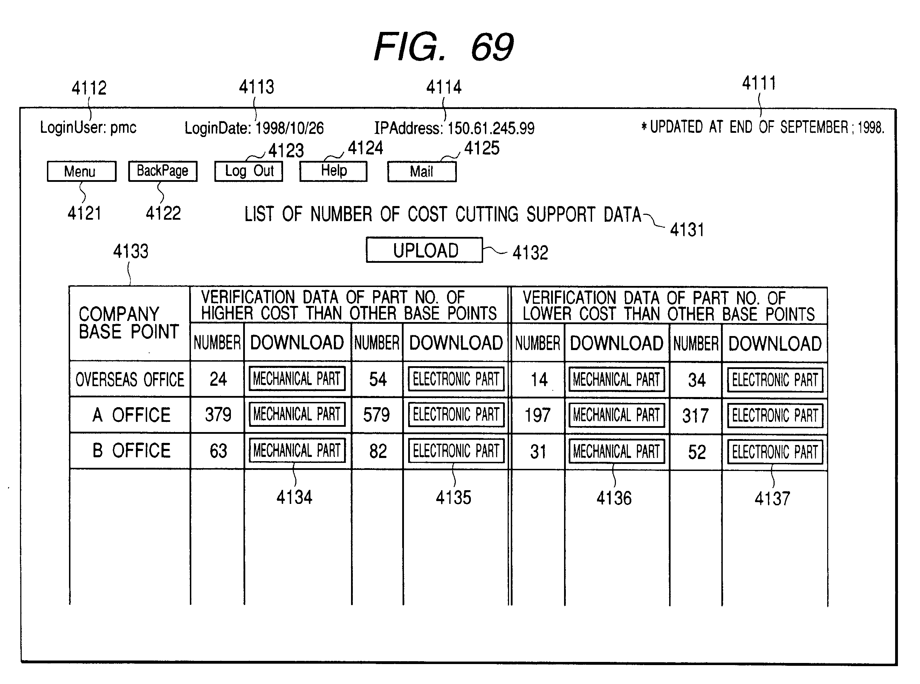

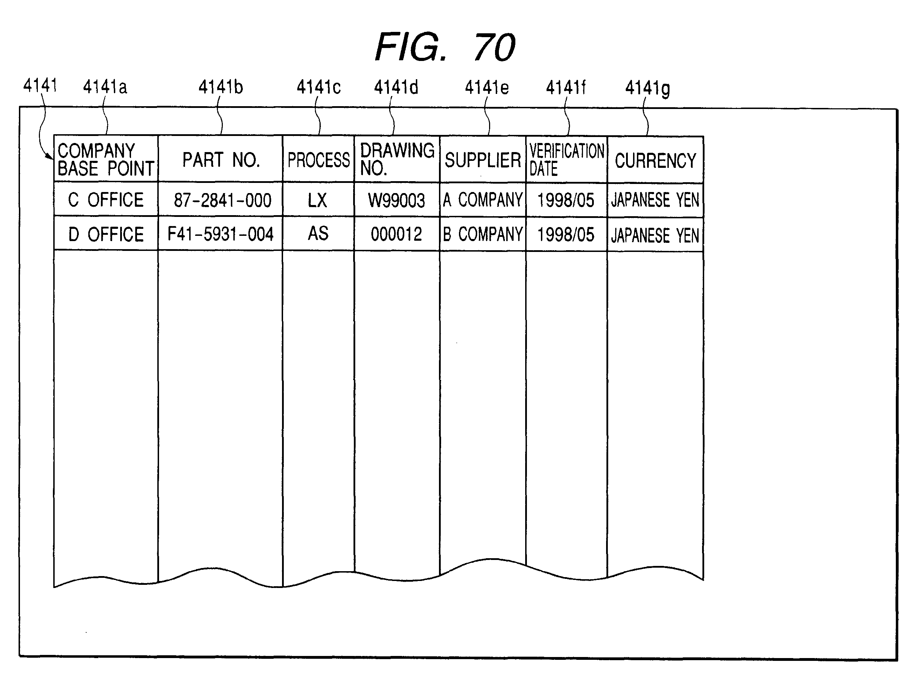

Step SDA2 displays a list screen shown in FIG. 69. Display area 4111 indicates a date of information. Display area 4112 indicates a log-in user ID (user ID). Display area 4113 indicates a date of log-in. Display area 4114 indicates an IP address of log-in. Based on this IP address, the department to which the user belongs can be identified. As the source can be identified by the displays of display areas 4112 to 4114 when a hard copy of the screen is made, it is possible to prevent leakage of information to outside. To be more specific, there is an effect of keeping a user from making a hard copy since information on users who made a hard copy is displayed. Moreover, display areas 4111 to 4114 can also be displayed in FIG. 70 to FIG. 72 shown later.

Title area 4131 indicates "Cost cutting supporting data number list". List area 4133 displays, as to each base point, verification (purchase) data of part No. higher-priced than other base points and verification data of part No. lower-priced than other base points. As the verification data, the number of such cases and kinds of the parts are displayed. For instance, it shows that there are 63 cases of part No. of mechanical parts higher-priced than other base points as to office B.

If mechanical parts download button 4134 is clicked on with a mouse while pressing the shift key on the keyboard, a user proceeds to step SDA4 via step SDA3 in FIG. 67 to perform downloading. If mechanical parts download button 4134 is clicked on, verification data of other base points can be downloaded as to part No. (parts) of mechanical parts higher-priced at office B than other base points. If electronic parts download button 4135 is clicked on, verification data of other base points can be downloaded as to part No. of electronic parts higher-priced at office B than other base points. If mechanical parts download button 4136 is clicked on, verification data of other base points can be downloaded as to part No. of mechanical parts lower-priced at office B than other base points. If electronic parts download button 4137 is clicked on, verification data of other base points can be downloaded as to part No. of electronic parts lower-priced at office B than other base points. As for downloading, Web server 4001 in FIG. 65 receives verification data from operation machine 4006, and that verification data is downloaded from Web server 4001 to user computer 31 to be stored thereon.

FIG. 70 shows the verification data screen displayed on computer 31 after downloading. Verification data list area 4141 displays company base point 4141a, part No. 4141b, process 4141c, drawing No. 4141d, supplier 4141e, verification date 4141f and currency 4141g of the part.

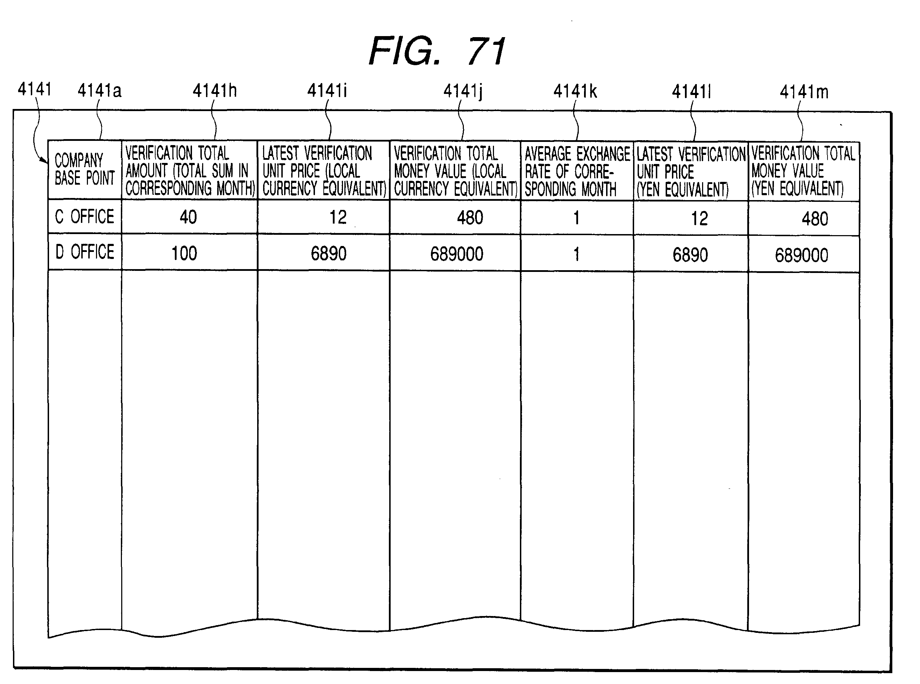

FIG. 71 is the verification data screen continued to the right of list area 4141 shown in FIG. 70. List area 4141 displays, in addition to the above items, verification total amount in corresponding month 4141h, latest verification unit price in local currency 4141i, verification total money value in local currency (total monthly sum) 4141j, average exchange rate of corresponding month (it is 1 if currency 4141g is Japanese yen) 4141k, latest verification unit price in yen equivalent (latest verification unit price in local currency × average exchange rate) 41411 and verification total money value in yen equivalent (verification total money value in local currency × average exchange rate) 4141m of the part.

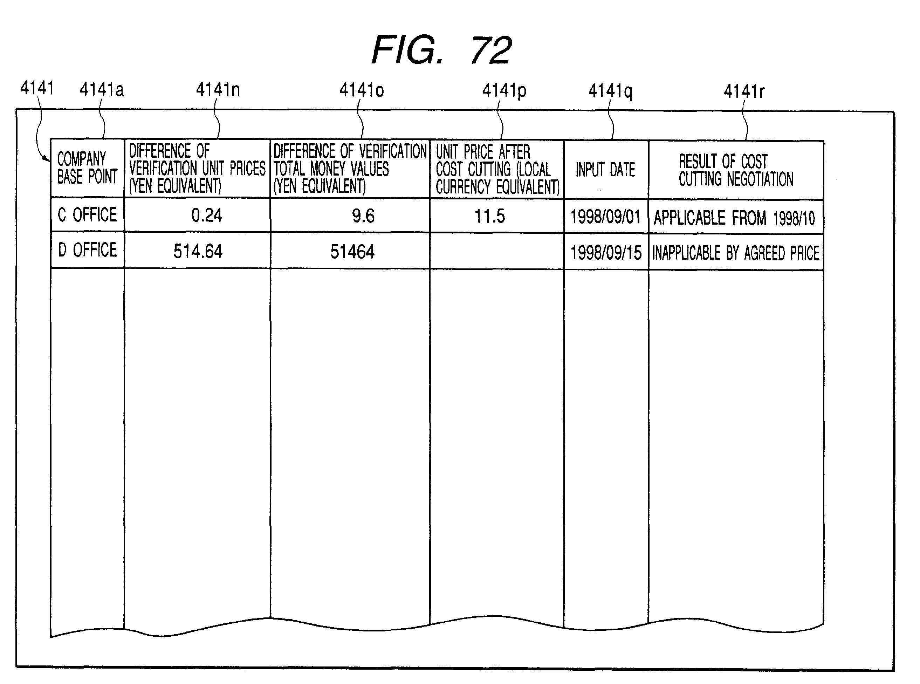

FIG. 72 is the verification data screen continued to the right of list area 4141 shown in FIG. 71. List area 4141 displays, in addition to the above items, difference of verification unit price in yen equivalent as to a compared part (verification unit price of the office - the lowest verification unit price of other offices) 4141n, difference of verification total money value in yen equivalent as to a compared part (difference of verification unit price × verification total amount) 4141o, unit price after cost cutting in local currency 4141p, input date 4141q and results of cost cutting negotiation 4141r of the part.

It is possible, by referring to difference of verification unit price 4141n and difference of verification total money value 4141o, to know a difference between a verification price of the office and those of other offices, which allows a judgment to be made on whether or not it is worth negotiating with a supplier over cost cutting. In the case where cost cutting is negotiated, users of the offices enter unit price after cost cutting 4141p, input date 4141q and results of cost cutting negotiation 4141r. If entered, it proceeds to step SDA5 in FIG. 67 to perform input processing. In results of cost cutting negotiation 4141r, "the price after cost cutting is applicable from Oct. 1988" for instance is entered in the case where the negotiation was successful, and a reason such as no cost cutting is possible due to fixed prices is entered in the case where the negotiation was unsuccessful.
The offices can plan a strategy for the next cost cutting negotiation based on results of cost cutting negotiation 4141r.

Moreover, in the case where the cost cutting negotiation was successful, users of the offices enter unit price after cost cutting 4141p and input date 4141q on which they entered unit price after cost cutting 4141p and/or results of cost cutting negotiation 4141r.

When display in list area 4141 is terminated, it returns to step SDA2 in FIG. 67 and displays the list screen in FIG. 69. If upload button 4132 in FIG. 69 is clicked on with a mouse, it proceeds to step SDA6 via step SDA3 in FIG. 67 and performs uploading. To be more specific, verification data of list area 4141 shown in FIGS. 70 to 72 is uploaded from user computer 31 shown in FIG. 65 to Web server 4001. Web server 4001 receives the uploaded unit price after cost cutting and results of cost cutting negotiation and so on from user computer 31 and transfers them to operation machine 4006.

Next, in step SDA7 in FIG. 67, operation machine 4006 automatically collects price information of the base points based on the uploaded information to reflect it on data from the next month onward. Operation machine 4006 also sends the collecting results to user computer 31 by e-mail. It then returns to step SDA2 and displays the list screen shown in FIG. 69.

In FIG. 69, if menu button 4121, back page button 4122, log-out button 4123, help button 4124 or mail button 4125 is clicked on with a mouse, it proceeds to step SDA8 via step SDA3 in FIG. 67. If menu button 4121 is clicked on, it displays this list screen shown in FIG. 69. If back page button 4122 is clicked on, it returns to a preceding display screen. If log-out button 4123 is clicked on, the procurement system comes to an end. If help button 4124 is clicked on, it displays the help screen. If mail button 4125 is clicked on, mail transmission or a check of received mail can be performed. These buttons 4121 to 4125 can also be displayed on verification data screen displayed in FIGS. 70 to 72.

As above, in the case where there is variation in parts costs and product costs among the offices, cost cutting supporting system 5 can provide users of the offices with differences in costs as to the same parts among the offices. Each of the offices can efficiently negotiate cost cutting of the parts with a supplier by acquiring information on differences in costs between itself and other offices. And it is possible to effectively plan a strategy for the next cost cutting negotiation by uploading results of the negotiation.

Moreover, cost cutting supporting system 5 can be applied not only to a past verification price but also to a master (estimated) price. It can also be applied to product prices in addition to parts prices.

### [6. Procurement record system]

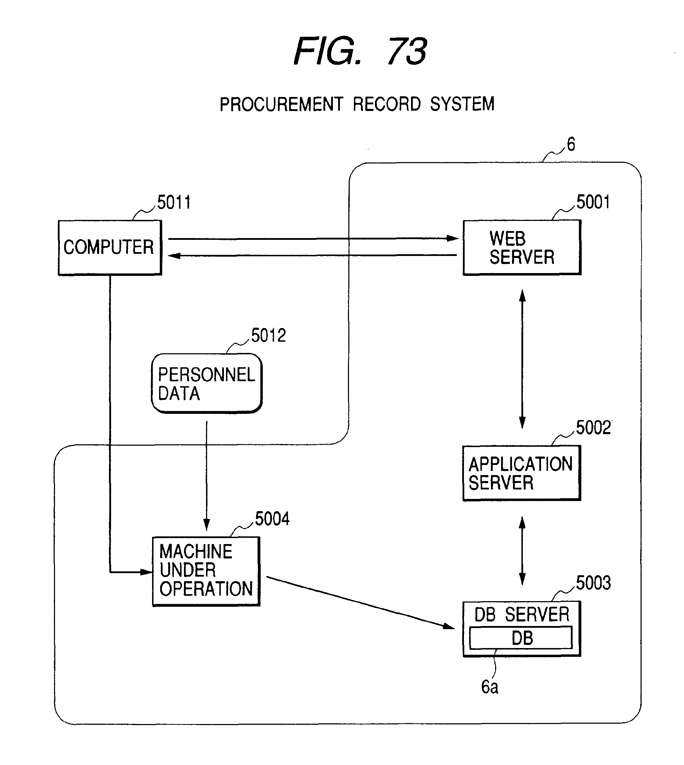

FIG. 73 is a block diagram showing configuration of procurement record system (dealing record information providing system) 6 illustrated in FIG. 1. Procurement record system 6 has Web server 5001, application server 5002, Web DB server 5003 and operation machine 5004. DB server 5003 has D/B 6a (FIG. 1).

Each base point (office) computer 5011 stores its own verification data (including verification money value) and data for value (including sum of supply for value) and supplies them to operation machine 5004. Verifivation money values are prices of purchased parts and so on. Sum of supply for value is a price at which the company makes a purchase for value and delivers it to a supplier. A supplier is supplied for value for various reasons, such as the company purchasing parts collectively from a plurality of suppliers for cost reduction or intending to supply parts and so on in a stable manner. In addition, each base point computer 5011 is capable of accessing procurement record system 6.

Personnel department computer 5012 stores personnel data and that data is supplied to operation machine 5004. Personnel data includes information on personnel change, and procurement record system 6 can automatically change a department to which a registered user belongs. It can also erase registration of the changed user as required.

Moreover, operation machine 5004 should desirably receive the above information online via a network.

Operation machine 5004 receives the above information, and registers verification data and data for value on DB 6a in DB server 5003.

DB server 5003 has DB 6a and manages registration, deletion, update and search of that DB 6a. Application server 5002 stores a computer program and operates procurement record system 6 according to the computer program. Web server 5001 stores a computer program and performs unified screen display according to the computer program. Web server 5001 makes various requests to application server 5002 and receives its responses. Application server 5002 makes various requests to DB server 5003 and receives its responses. Each base point computer 5011 makes various requests to Web server 5001 and receives its responses. For instance, each base point user's computer 5011 instructs Web server 5001 to search for verification data or data for value in DB 6a on a predetermined condition. Application server 5002 searches for verification data or data for value in DB 6a on a predetermined condition, and collects it for each first half, second half and year. Web server 5001 displays search results meeting the above condition on the screen of each base point computer 5011. The users of the base points can know verification data and data for value by base point, by supplier or by item.

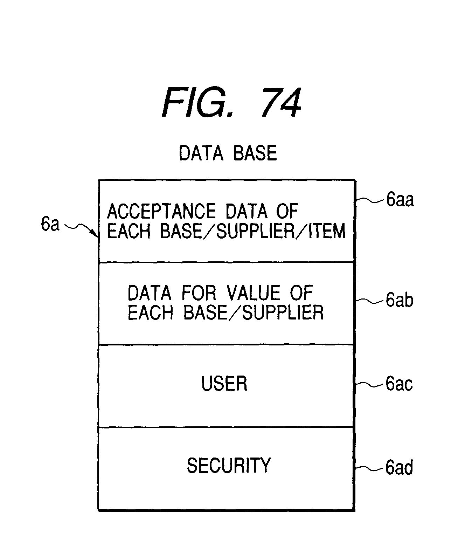

FIG. 74 is a schematic diagram showing configuration of DB 6a in DB server 5003. DB 6a has verification data by base point/by supplier/by item 6aa, data for value by base point/by supplier 6ab, user information (user ID, password, user's belonging department, etc.) 6ac and security information 6ad.

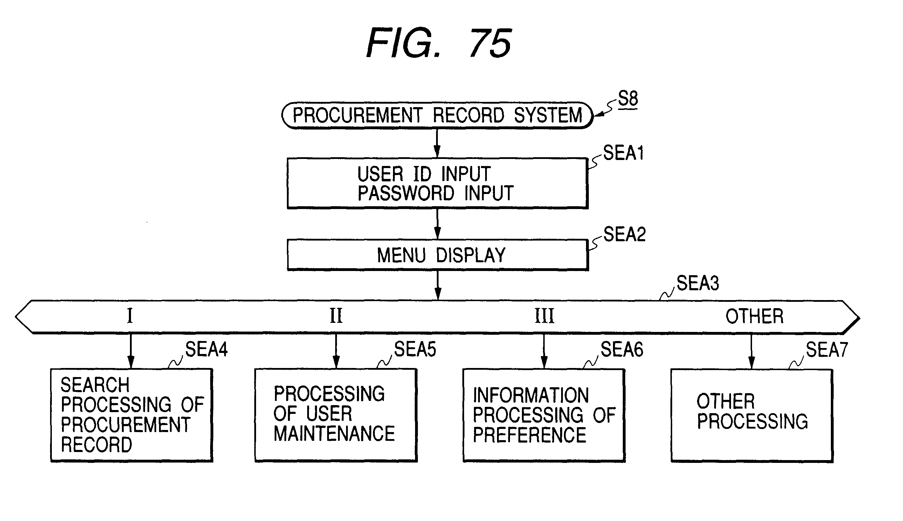

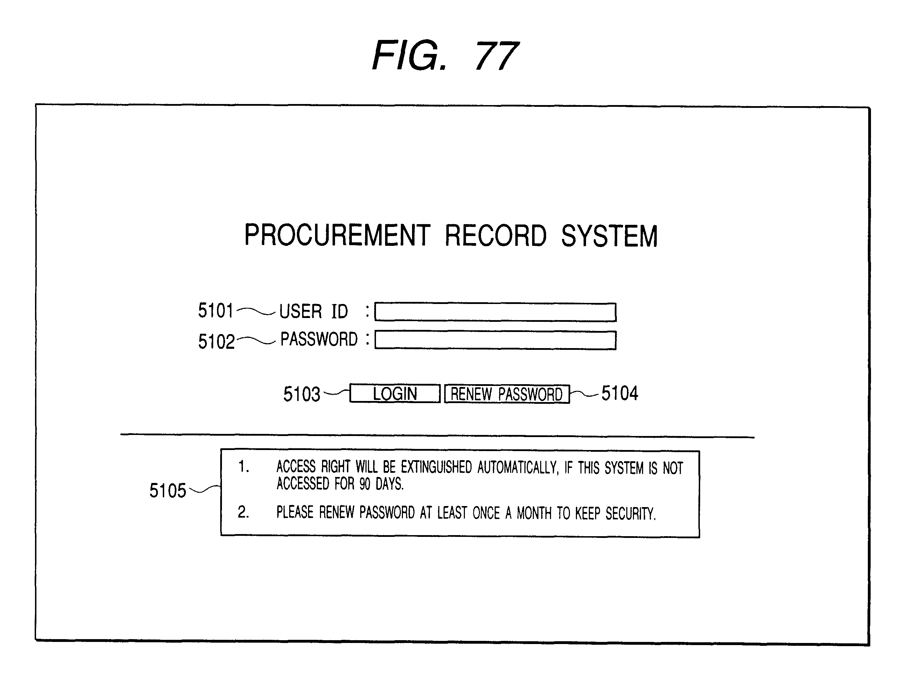

FIG. 75 is a flowchart showing processing of procurement record system 6, and corresponds to processing of step S8 in FIG. 2. Step SEA1 displays the log-in screen shown in FIG. 77 on user computer 5011 (FIG. 73) waiting for input of a user ID and input of a password. A user can enter a user ID in area 5101 and a password in area 5102 in FIG. 77. Security can be enhanced and a log-in by an illicit person can be prevented by having user ID 5101 and password 5102 entered.

The following two measures are taken in order to enhance security as displayed in display area 5105.
(1) In the case where there is no access (log-in) for 90 calendar days, the right to access (the right to log in) is automatically erased. In that case, an application for utilization must be submitted again on utilization. (2) A user must change a password once a month for security protection. A password can be changed by clicking on password change button 5104 with a mouse.

If a user clicks on log-in button 5103 with a mouse, and if the entered user ID and password are correct, the user is logged in and proceeds to step SEA2.

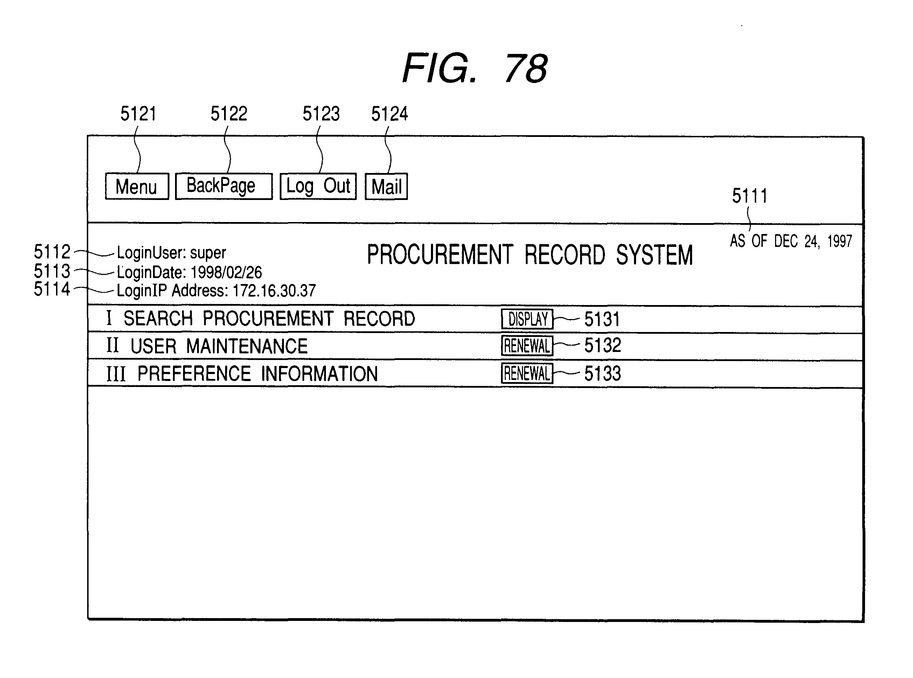

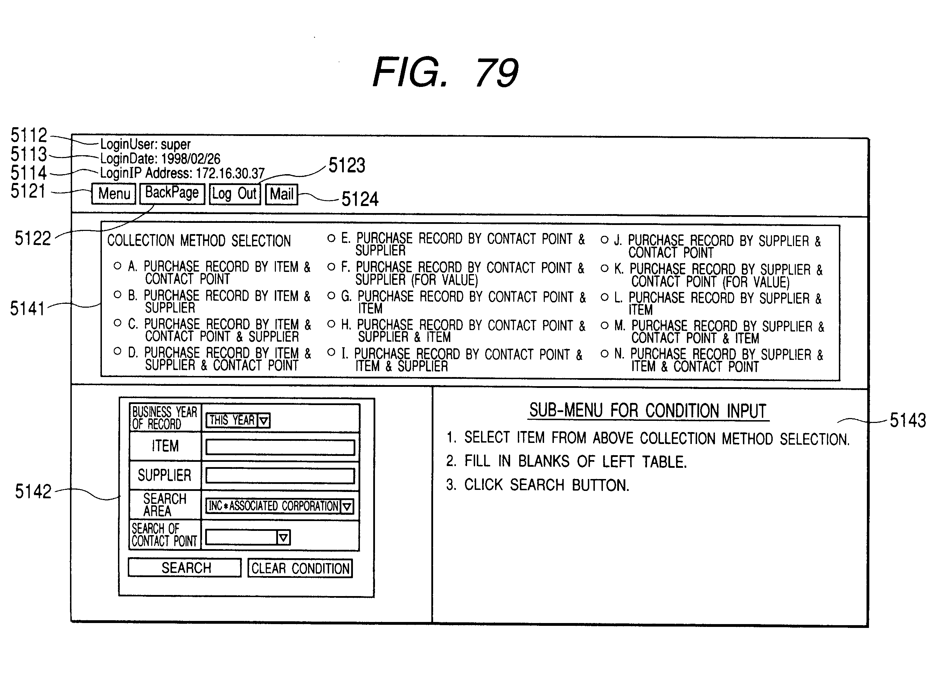

Step SEA2 displays a menu screen shown in FIG. 78. Display area 5111 indicates a date of information. Display area 5112 indicates a log-in user ID (user ID). Display area 5113 indicates a date of log-in. Display area 5114 indicates an IP address of log-in. Based on this IP address, the department to which the user belongs can be identified. As the source can be identified by the displays of display areas 5112 to 5114 when a hard copy of the screen is made, it is possible to prevent leakage of information to outside. To be more specific, there is an effect of keeping a user from making a hard copy since information on users who made a hard copy is displayed. For a general user, FIG. 79 rather than FIG. 78 is displayed after entering a password.

Menu items display "I. Procurement record search", "II. User maintenance" and "III. Preference information". If procurement record search display button 5131 is clicked on with a mouse, it proceeds to step SEA4 in FIG. 75 and performs search processing of procurement record. Search processing of procurement record searches for verification data or data for value meeting predetermined conditions and performs collection processing. If user maintenance update button 5132 is clicked on with a mouse, it proceeds to step SEA5 in FIG. 75 and performs user maintenance processing. The user maintenance processing refers to user information and log information registered in DB 6a or registers user information and security management. If preference information update button 5133 is clicked on with a mouse, it proceeds to step SEA6 in FIG. 75 and performs processing of preference information. Processing of preference information sets up information required for the procurement record system operation.

If menu button 5121, back page button 5122, log-out button 5123 or mail button 5124 is clicked on with a mouse, it proceeds to step SEA7 in FIG. 75 and performs other processing. If menu button 5121 is clicked on, it displays this list screen shown in FIG. 78. If back page button 5122 is clicked on, it returns to a preceding display screen. If log-out button 5123 is clicked on, the procurement system comes to an end. If mail button 5124 is clicked on, mail transmission or a check of received mail can be performed.

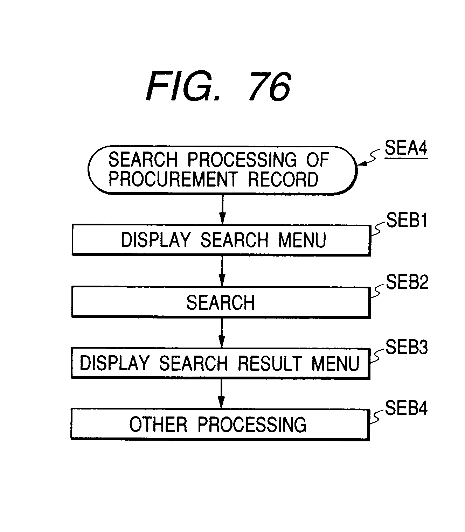

FIG. 76 is a flowchart showing details of search processing of procurement record of step SEA4 shown in FIG. 75. Step SEB1 displays the search screen shown in FIG. 79. Display areas 5112 to 5114 and buttons 5121 to 5124 are the same as above. The search screen has collection method selection area 5141, condition input area 5142 and sub-menu for condition input area 5143.

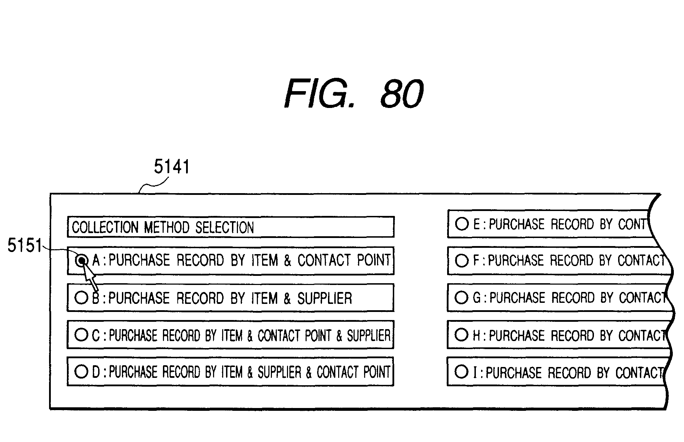

FIG. 80 is an enlarged view of the above collection method selection area 5141. A user selects a method of collecting procurement records in collection method selection area 5141. Selection items displayed are "A. Purchase record by item and contact point", "B. Purchase record by item and supplier", "C. Purchase record by item and contact point and supplier", "D. Purchase record by item and supplier and contact point", "E. Purchase record by contact point and supplier", "F. Purchase record by contact point and supplier (supply for value)", "G. Purchase record by contact point and item", "H. Purchase record by contact point and supplier and item", "I. Purchase record by contact point and item and supplier", "J. Purchase record by supplier and contact point", "K. Purchase record by supplier and contact point (supply for value)", "L. Purchase record by supplier and item", "M. Purchase record by supplier and contact point and item" and "N. Purchase record by supplier and item and contact point". Any of the items can be selected by clicking on its button 5151 with a mouse.

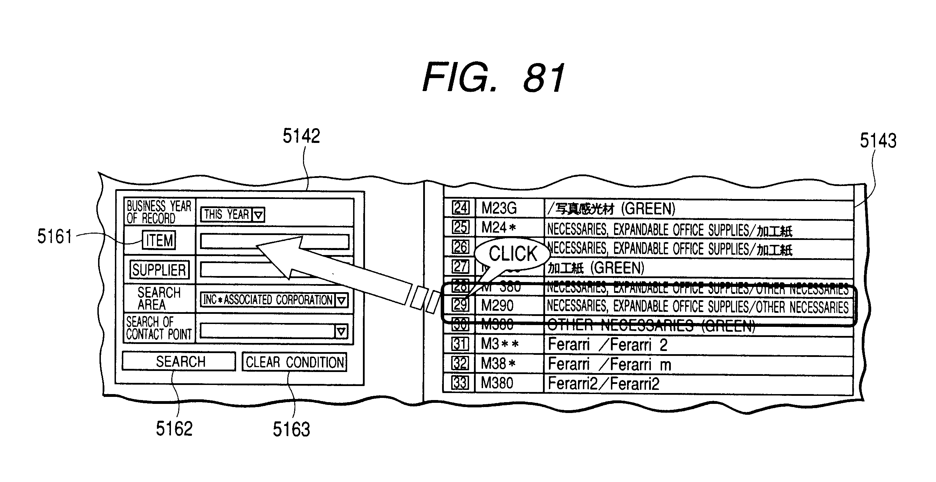

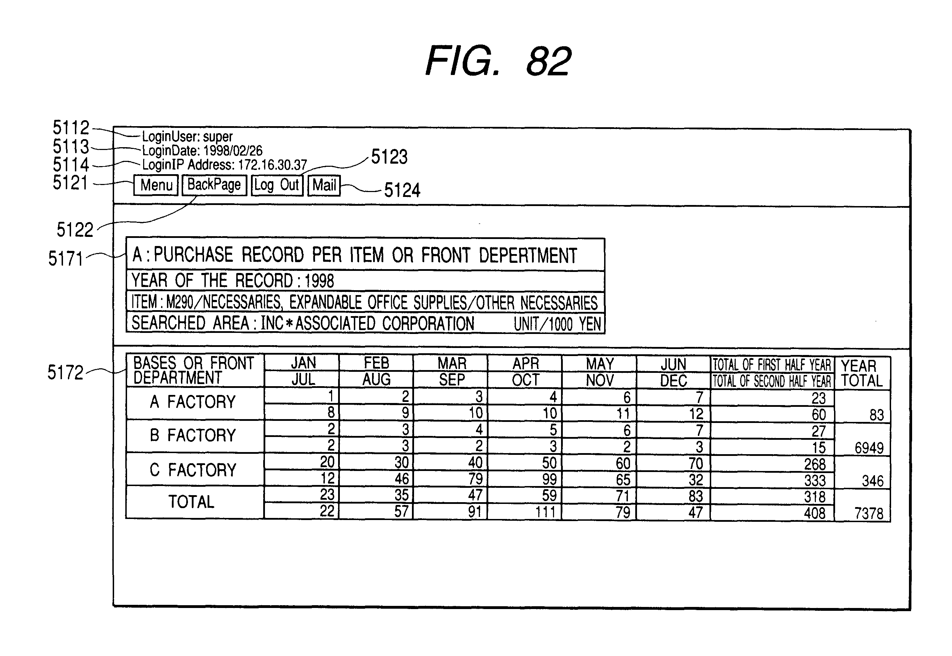

FIG. 81 is an enlarged view of the above condition input area 5142 and sub-menu for condition input area 5143. In condition input area 5142, business year of record, item, supplier, search area and search of contact point can be entered. Other than entering these conditions directly, it is possible to enter them by using sub-menu for condition input area 5143. For instance, if item button 5161 is clicked on with a mouse, sub-menu for condition input area 5143 displays item codes and names. A desired item can be selected out of this sub-menu for condition input area 5143.
For instance, if button No. 29 in sub-menu for condition input area 5143 is clicked on with a mouse, "M290" is automatically entered as an item of condition input area 5142. A user can easily and simply enter a condition item by utilizing sub-menu for condition input area 5143. Sub-menu for condition input area 5143 can also be utilized for a supplier condition. If clear condition button 5163 is clicked on with a mouse, a condition in condition input area 5142 can be cleared. If search button 5162 is clicked on with a mouse, it proceeds to step SEB2 in FIG. 76 and searches for procurement record (dealing record) information meeting the above condition. It then proceeds to step SEB3 and displays the search results screen shown in FIG. 82.

FIG. 82 shows the search results screen. Displays areas 5112 to 5114 and buttons 5121 to 5124 are the same as above. The search results screen has search condition display area 5171 and search collection results area 5172.

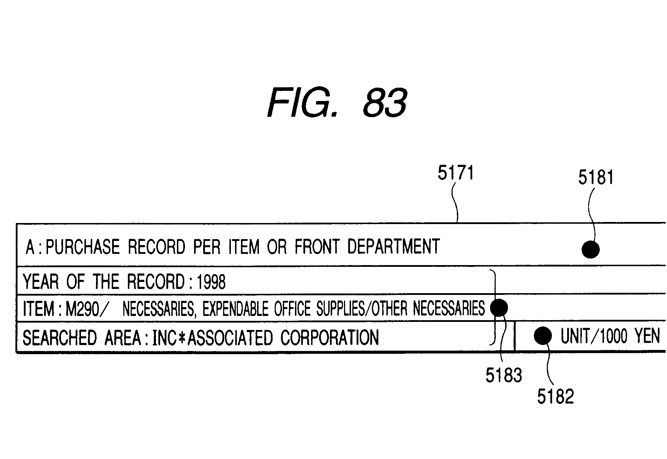

FIG. 83 is an enlarged view of the above search condition display area 5171. Collection method display area 5181 displays a collection method selected in collection method selection area 5141. Search condition display area 5183 displays the condition entered in condition input area 5142 in FIG. 81. Price unit area 5183 displays the unit of the amount indicated in search collection results area 5172 in FIG. 82.

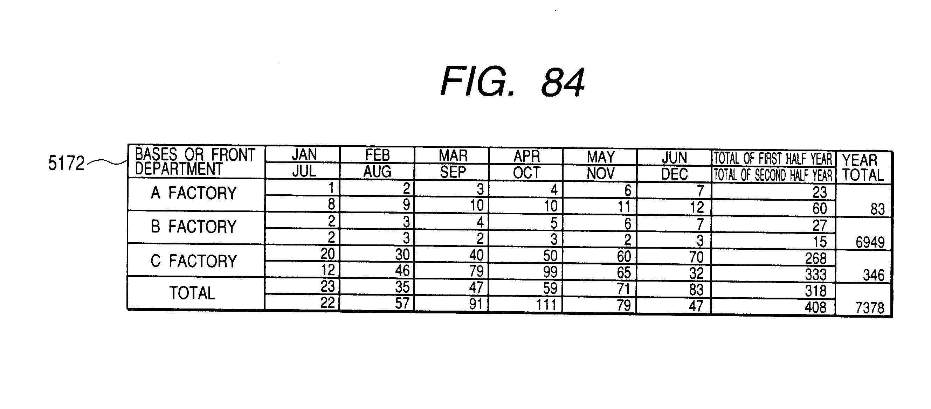

FIG. 84 is an enlarged view of search collection results area 5172 in FIG. 82. Search collection results area 5172 displays the amount of money meeting the above condition collected by base point, month, first half, second half and year. The amount of money is in the units of 1,000 yen for instance. A first half is January to June, and a second half is July to December for instance. If the amounts of the months are displayed in one horizontal line all the amounts cannot be displayed on one screen or on one sheet of paper so that they lie partly off the screen or sheet. All the amounts can be displayed on one screen or on one sheet of paper and thus the amounts can be compared more easily by displaying the first half in the upper part and the second half in the lower part and displaying the amounts of the year divided into a plurality of lines.

If menu button 5121, back page button 5122, log-out button 5123 or mail button 5124 in FIG. 82 is clicked on with a mouse, it proceeds to step SEB4 in FIG. 76 and performs the same processing of each button as above.

As above, the procurement record system searches for procurement record (dealing record) information of a predetermined condition and performs collection processing. This procurement record information includes verification money value and supplied sum for value. A user can plan various dealing strategies by referring to these collection results. For instance, the risk due to concentration on deals with a specific supplier can be avoided by performing collection for each individual supplier and calculating a ratio of dealing with each individual supplier, and thus a strategy for dispersing the ratio of dealing among suppliers can be planned. It is also possible to increase or decrease the number of suppliers based on the ratio of dealing with each individual supplier. In addition, it is possible to estimate or coordinate future procurement by analyzing time-wise transition of procurement records.

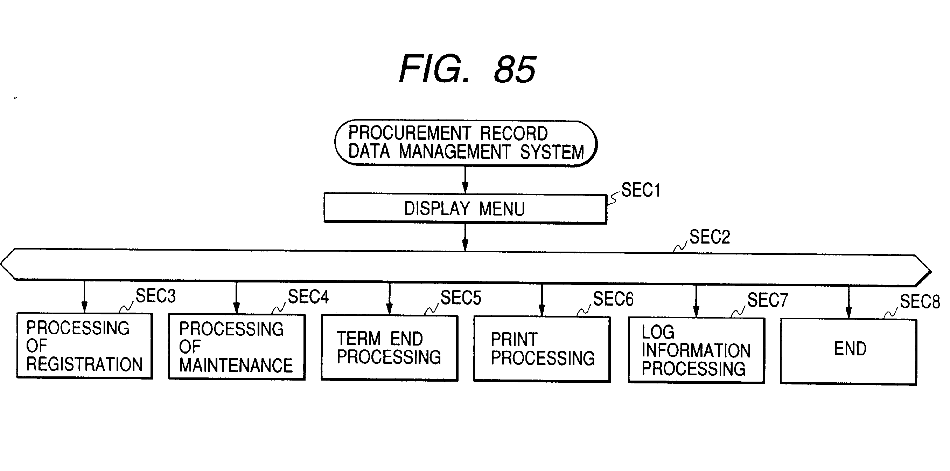

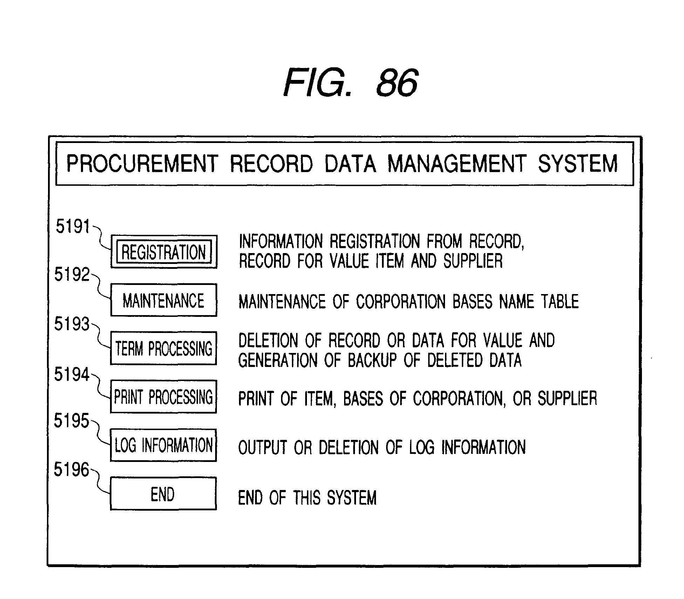

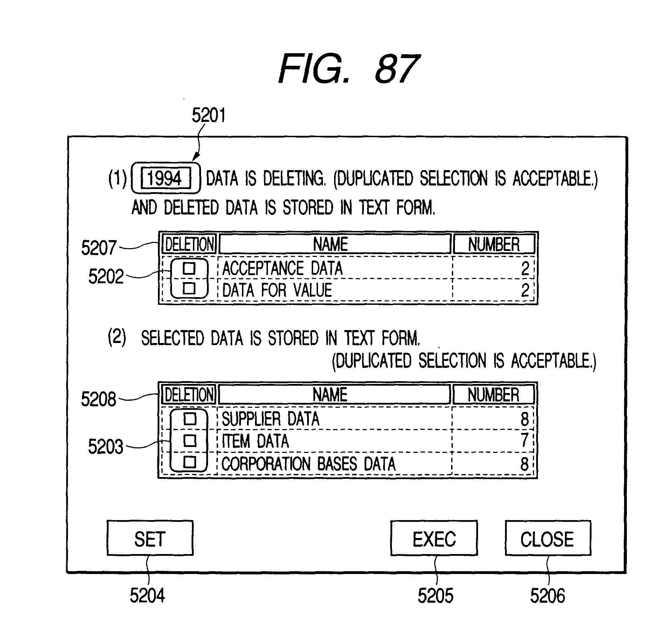

FIG. 85 is a flowchart showing processing of procurement record data management system. This procurement record data management system is a system for managing procurement record data used in the above procurement record system 6. Step SEC1 displays the menu screen shown in FIG. 86. Menu items display "Registration", "Maintenance", "Term end processing", "Print", "Log information" and "End". If registration button 5191 is clicked on with a mouse, it proceeds to step SEC3 in FIG. 85 and performs registration processing. The registration processing registers records, records for value, items and supplier information. If maintenance button 5192 is clicked on with a mouse, it proceeds to step SEC4 in FIG. 85 and performs maintenance processing. The maintenance processing performs maintenance of a company base point table. If term end processing button 5193 is clicked on with a mouse, it proceeds to step SEC5 in FIG. 85 and performs term end processing. Term end processing deletes records and records for value data and backs up the deleted data. Details of term end processing will be described later by referring to FIG. 87. If print button 5194 is clicked on with a mouse, it proceeds to step SEC6 in FIG. 85 and performs print processing.
The print processing prints items, corporation bases and supplier information. If log information button 5195 is clicked on with a mouse, it proceeds to step SEC7 in FIG. 85 and performs log information processing. Log information processing outputs or deletes log information. If end button 5196 is clicked on with a mouse, it proceeds to step SEC8 in FIG. 85 and terminates the procurement record data management system.

FIG. 87 is a display screen of term end processing of the above step SEC5, and is displayed by clicking on term end processing button 5193 in FIG. 86 with a mouse. If all the past procurement record data is stored on DB 6a, the data amount becomes so much that search speed slows down and storage capacity of DB 6a becomes insufficient. Thus, procurement record data of four years ago or earlier is deleted and also backed up. DB 6a stores only procurement record data of past three years. The term end processing screen displays first area 5207 and second area 5208.

Year column 5201 automatically displays A.D of four years ago so as to delete procurement record data of four years ago in principle and back it up in text form. Year column 5201 can also have another year entered. Procurement record data is deleted by year. Moreover, it is also feasible to delete all the data at and before a predetermined point of time. First area 5207 displays a deletion check column, deleted data name and the number of cases. Data to be deleted or backed up can be selected by clicking on deletion check column 5202 with a mouse. To be more specific, verification data and/or data for value can be selected. Second area 5208 displays a selection check column, name of data to be backed up in a text form and the number of cases. Data to be backed up can be selected by clicking on selection check column 5203 with a mouse. To be more specific, supplier data, item data and/or corporation base data can be selected.

Next, if exec button 5205 is clicked on with a mouse, it processes data checked in the above deletion check column 5202 and selection check column 5203. If set button 5204 is clicked on with a mouse, a path name of a file to be backed up can be set. If button 5206 is clicked on with a mouse, it terminates term end processing.

As above, it is possible, by performing term end processing, to delete and back up procurement record data of four years ago and earlier so that space capacity of a storage device can be increased and search speed can be improved.

### [7. Supplier card information system]

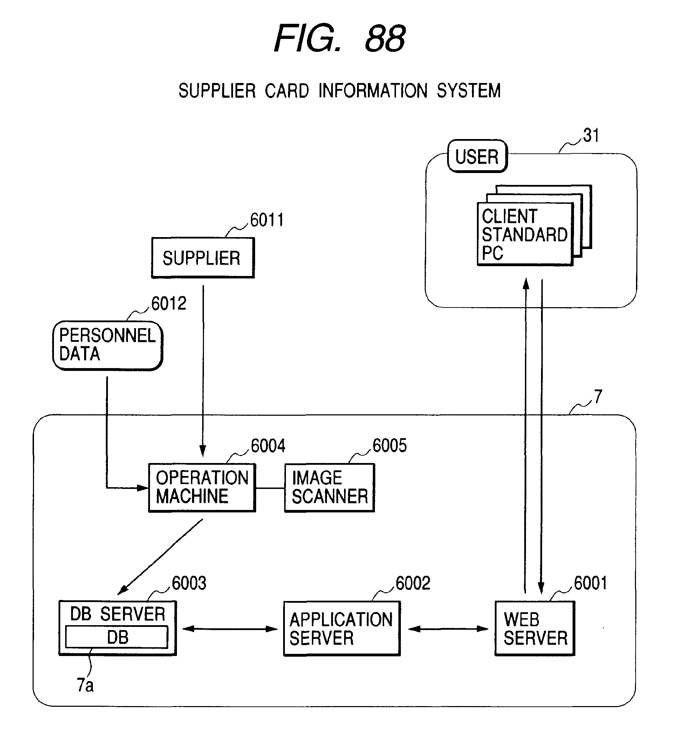

FIG. 88 is a block diagram showing configuration of supplier card information system (supplier card information providing system) 7 illustrated in FIG. 1. Supplier card information system 7 has Web server 6001, application server 6002, Web DB server 6003, operation machine 6004 and image scanner 6005. DB server 6003 has DB 7a (FIG. 1).

Supplier 6011 enters supplier information on a supplier card that is a paper medium, and provides it to supplier card information system 7. Operation machine 6004 reads the supplier card that is a paper medium with image scanner 6005, and converts it into image information in GIF format to register it on DB 7a in DB server 6003. DB 7a has supplier name and so on registered in addition to image information of the supplier card.

Personnel department computer 6012 stores personnel data and that data is supplied to operation machine 6004. Personnel data includes information on personnel change, and supplier card information system 7 can automatically change a department to which a registered user belongs. It can also erase registration of the changed user as required.
Moreover, operation machine 6004 should desirably receive the above personnel data online via a network.

DB server 6003 has DB 7a and manages registration, deletion, update and search of that DB 7a. Application server 6002 stores a computer program and operates supplier card information system 7 according to the computer program. Web server 6001 stores a computer program and performs unified screen display according to the computer program. Web server 6001 makes various requests to application server 6002 and receives its responses. Application server 6002 makes various requests to DB server 6003 and receives its responses.

User computer 31 is a standard personal computer as a client for instance, and is capable of making various requests to Web server 6001 and receiving its responses. For instance, an instruction can be given to search for a supplier card of a desired supplier. Web server 6001 searches for that supplier card of the supplier via application server 6002 and DB server 6003, and displays image information of that supplier card on the screen of user computer 31. A user within the company can instantly acquire the desired supplier card.

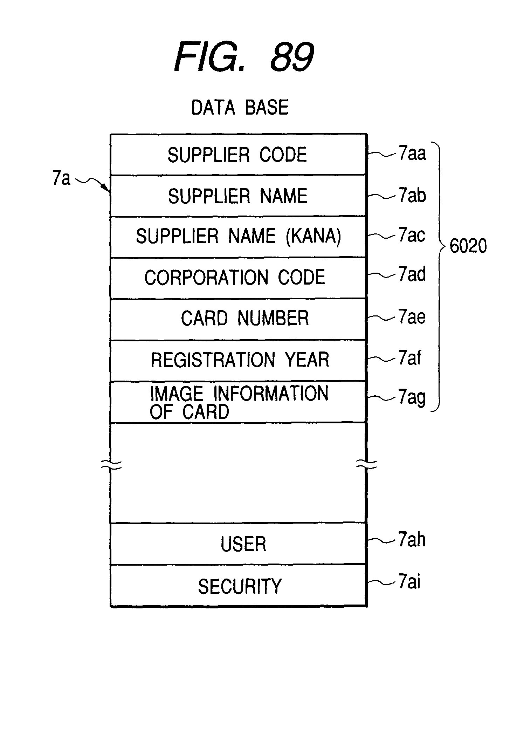

FIG. 89 is a schematic diagram showing configuration of DB 7a in DB server 6003. DB 7a has supplier information on each supplier 6020, user information (user ID, password, user's belonging department, etc.) 7ah and security information 7ai. Supplier information on each supplier 6020 includes supplier code 7aa, supplier name 7ab, supplier name (kana) 7ac, corporation code 7ad, card No. 7ae and registration year 7af in addition to image information of a supplier card 7ag.

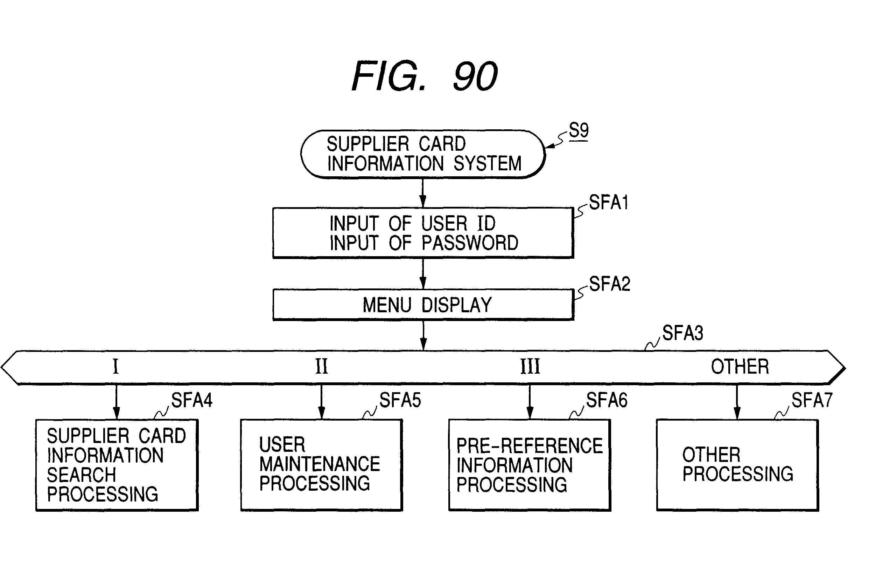

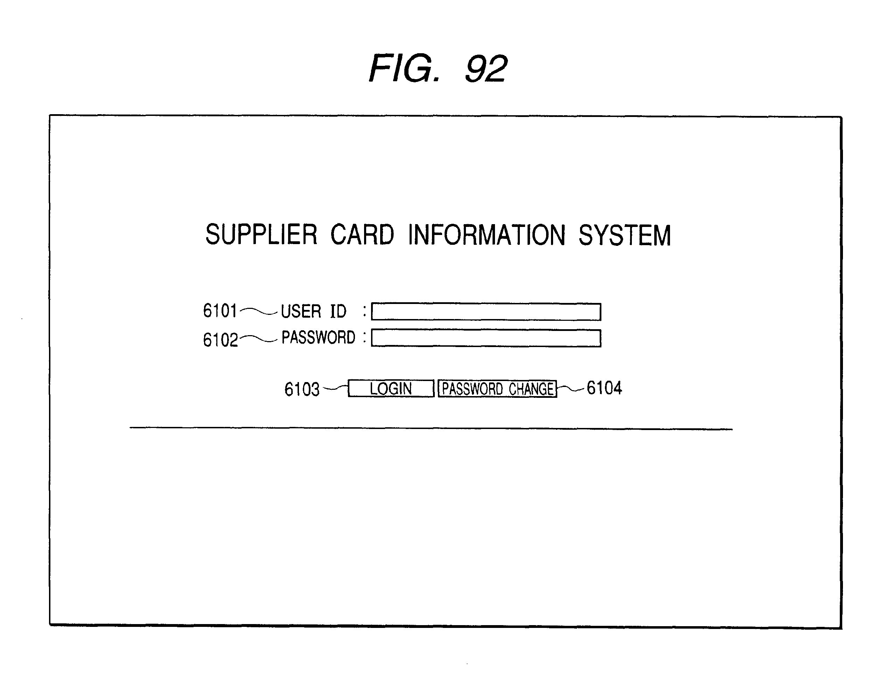

FIG. 90 is a flowchart showing processing of the supplier card information system, and corresponds to processing of step S9 in FIG. 2. Step SFA1 displays the log-in screen shown in FIG. 92 on user computer 31 (FIG. 88) waiting for input of a user ID and input of a password. A user can enter a user ID in area 6101 and a password in area 6102 in FIG. 92. Security can be enhanced and a log-in by an illicit person can be prevented by having user ID 6101 and password 6102 entered.

A user can change a password for security protection by clicking on password change button 6104 with a mouse. If a user clicks on log-in button 6103 with a mouse, and if the entered user ID and password are correct, the user is logged in and proceeds to step SFA2.

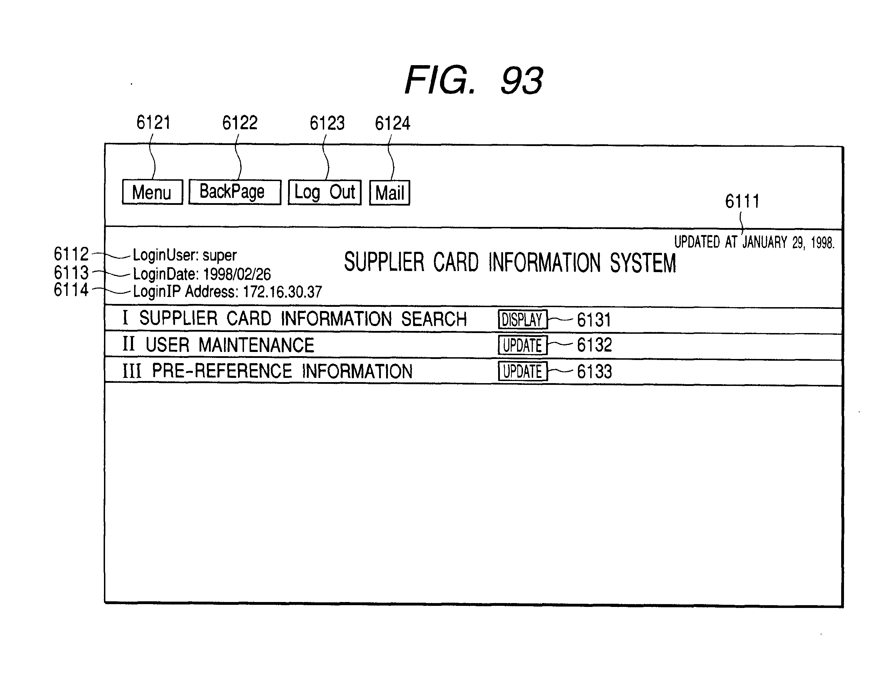

Step SFA2 displays the menu screen shown in FIG. 93. This is a screen not displayed to a general user but to an administrator. Display area 6111 indicates a date of information. Display area 6112 indicates a log-in user ID (user ID). Display area 6113 indicates a date of log-in. Display area 6114 indicates an IP address of log-in. Based on this IP address, the department to which the user belongs can be identified. As the source can be identified by the displays of display areas 6112 to 6114 when a hard copy of the screen is made, it is possible to prevent leakage of information to outside. To be more specific, there is an effect of keeping a user from making a hard copy since information on users who made a hard copy is displayed.

Menu items display "I. Supplier card information search", "II. User maintenance" and "III. Preference information". If supplier card information search display button 6131 is clicked on with a mouse, it proceeds to step SFA4 in FIG. 90 and performs search processing of supplier card information. Search processing of supplier card information searches for and displays a supplier card meeting predetermined conditions. If user maintenance update button 6132 is clicked on with a mouse, it proceeds to step SFA5 in FIG. 90 and performs user maintenance processing. The user maintenance processing refers to user information and log information registered in DB 7a and registers user information and security management. If preference information update button 6133 is clicked on with a mouse, it proceeds to step SFA6 in FIG. 90 and performs processing of preference information. Processing of preference information sets up information required for the supplier card information system operation.

If menu button 6121, back page button 6122, log-out button 6123 or mail button 6124 is clicked on with a mouse, it proceeds to step SFA7 in FIG. 90 and performs processing of each button. If menu button 6121 is clicked on, it displays the menu screen shown in FIG. 93. If back page button 6122 is clicked on, it returns to a preceding display screen. If log-out button 6123 is clicked on, the procurement system comes to an end. If mail button 6124 is clicked on, mail transmission or a check of received mail can be performed.

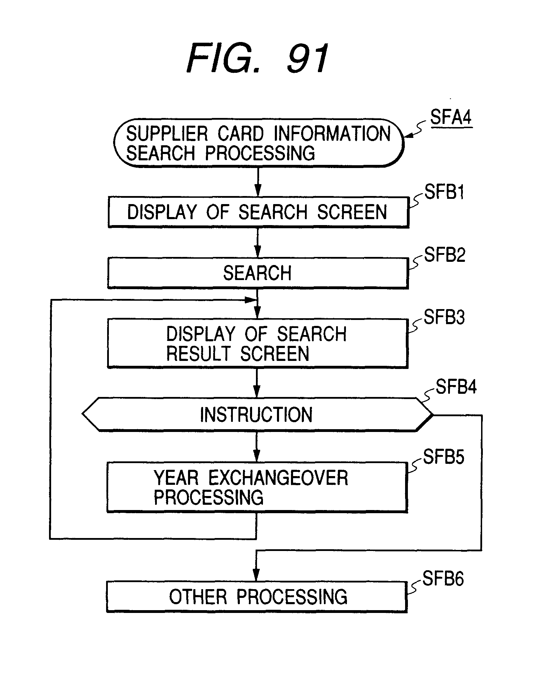

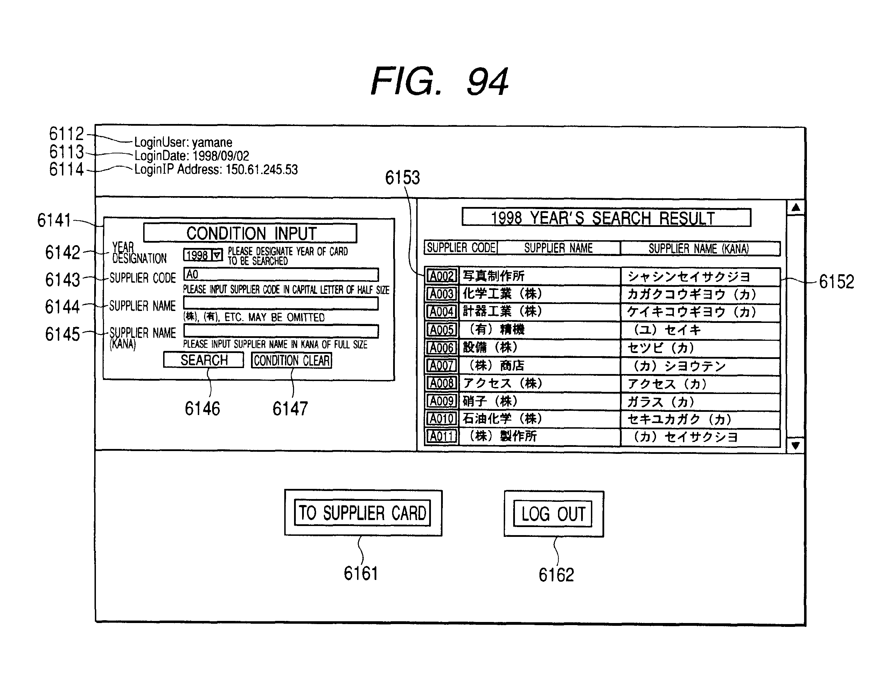

FIG. 91 is a flowchart showing details of search processing of supplier card information of step SFA4 shown in FIG. 90. Step SFB1 displays the search screen shown in FIG. 94. Displays in display areas 6112 to 6114 are the same as above. In condition input area 6141, year 6142, supplier code 6143, supplier name 6144 and supplier name in kana 6145 can be entered. Moreover, it is not necessary to enter all of supplier code 6143, supplier name 6144 and supplier name in kana 6145, but entering one of them is sufficient. The above conditions can be cleared by clicking on condition clear button 6147 with a mouse. In order to assist the above condition input, search button 6146 can be used. If search button 6146 is clicked on with a mouse, it displays the search results list 6152 on the right. Search results list 6152 displays a list of supplier codes, supplier names and supplier names in kana. A user can select a desired supplier out of search results list 6152. To be more specific, if supplier code button 6153 is clicked on with a mouse, it automatically displays supplier codes, supplier names and supplier names in kana corresponding to the button in condition input area 6141 on the left. A user can easily enter a condition in condition input area 6141 by selecting a supplier out of list 6152.

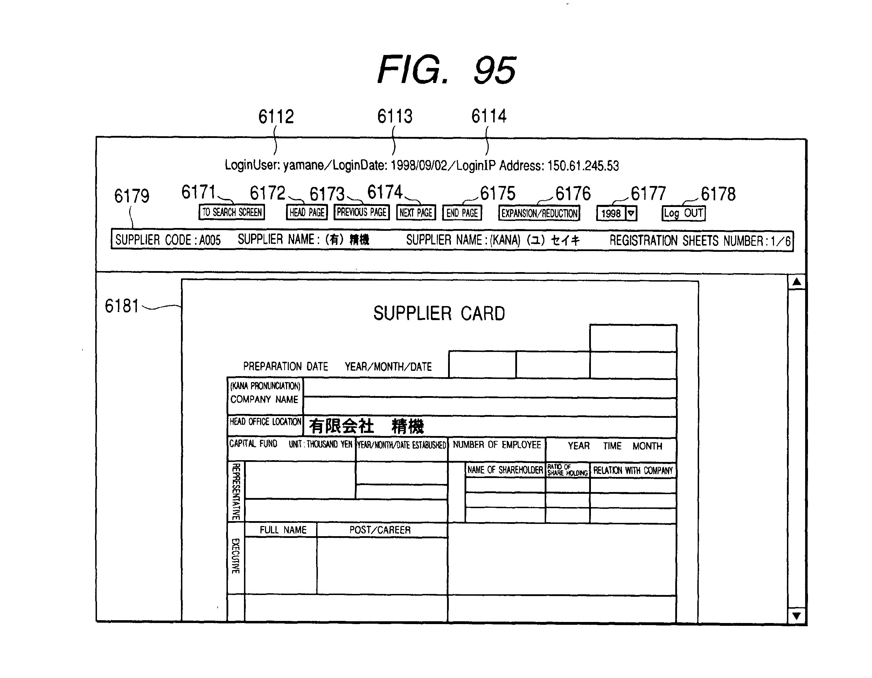

Next, if "View a supplier card" button 6161 is clicked on with a mouse, it searches for a supplier card information meeting the above conditions in step SFB2 in FIG. 91 and displays supplier card view screen shown in FIG. 95 in step SFB3. On the other hand, if "log-out" button 6162 in FIG. 94 is clicked on with a mouse, the procurement system comes to an end.

FIG. 95 shows the supplier card view screen. Displays in display areas 6112 to 6114 are the same as above. Condition display area 6179 displays the supplier code, supplier name and supplier name in kana entered on the above condition input screen. Also, in the middle of the screen, image 6181 that is an image of a supplier card read by an image scanner is displayed. Supplier card image 6181 is an image of a supplier card of the supplier entered on the above condition input screen. That supplier card lists preparation date, preparer, supplier code, company name, head office key telephone number, fax number, head office location, capital, number of employees, representative, names of shareholders, executives, history, location map and so on. As a supplier card has a supplier location map on it, it is highly worthwhile providing a user with image information of a supplier card of a paper medium read by an image scanner. In addition, it is highly worthwhile using image information based on a paper medium considering convenience thereof. It is also possible to receive supplier card information from a supplier by online communication of computers. However, it is preferable to receive a supplier card of a paper medium in the case there is a supplier with no computer communication equipment in place.

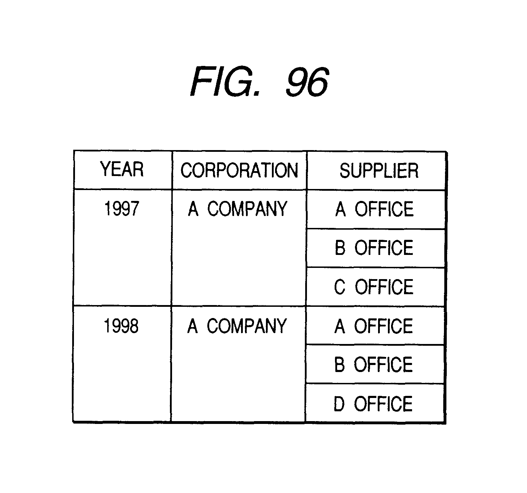

Year area 6177 displays a year in which the supplier card was registered. As for supplier cards, an updated one is submitted by a supplier each year. Therefore, there may be a plurality of supplier cards for each supplier each year. If a year is entered in year area 6177, it displays supplier card image of input year 6181. If another year is entered in year area 6177, it proceeds to step SFB5 via step SFB4 in FIG. 91 to search for a supplier card not based on a supplier (a supplier code) but based on a corporation (a corporation code). The reason will be described as follows. In the case where a plurality of supplier codes belong to one corporation code, that is, in the case where a plurality of offices (suppliers) belong to one company (corporation) for instance, there may be only one supplier card for the plurality of suppliers. There are also cases where a company organization is changed. For instance, as shown in FIG. 96, company A (corporation) in 1997 had three suppliers of office A, office B and office C. However, there is a case where office C no longer exists and office D is newly established in 1998. To be more specific, company A in 1998 had three suppliers of office A, office B and office D. In this case, if the year is switched to 1997 in a state of displaying office D's supplier card of 1998, there is no longer office D and it may cause inconvenience. Thus, in this case, it makes a search by switching the year based on a corporation code of office D (company A) and displays a supplier card of company A in 1997. After the search, it returns to step SFB3 in FIG. 91 and displays the supplier card.

In FIG. 95, if search screen button 6171, head page button 6172, previous page button 6173, next page button 6174, end page button 6175, expansion/reduction button 6176 or log-out button 6178 is clicked on with a mouse, it proceeds to step SFB6 via step SFB4 in FIG. 91 and performs processing of each button. If search screen button 6171 is clicked on, it returns to step SFB1 in FIG. 91 and displays the search screen in FIG. 94. If head page button 6175 is clicked on, it displays a supplier card at the head of all supplier cards. If previous page button 6173 is clicked on, it displays a supplier card of a preceding page. If next page button 6174 is clicked on, it displays a supplier card of a next page. If end page button 6175 is clicked on, it displays a supplier card at the end of all the supplier cards. If expansion/reduction button 6176 is clicked on, it allows supplier card image 6181 to be switched between expanded display and reduced display. If log-out button 6178 is clicked on, it terminates the procurement system.

As above, when starting a deal, a supplier is to fill in a supplier card and submit it. In the case of continuing to deal each year, the supplier card must be updated and submitted. These supplier cards are read by an image scanner to create image information, which is registered on DB 7a. A user within the company can view a desired supplier's supplier card and know supplier information listed on the supplier card by utilizing the supplier card information system. Supplier cards are collectively managed by supplier card information system 7 so that the respective users do not need to have them.

### [8. Supplier map system]

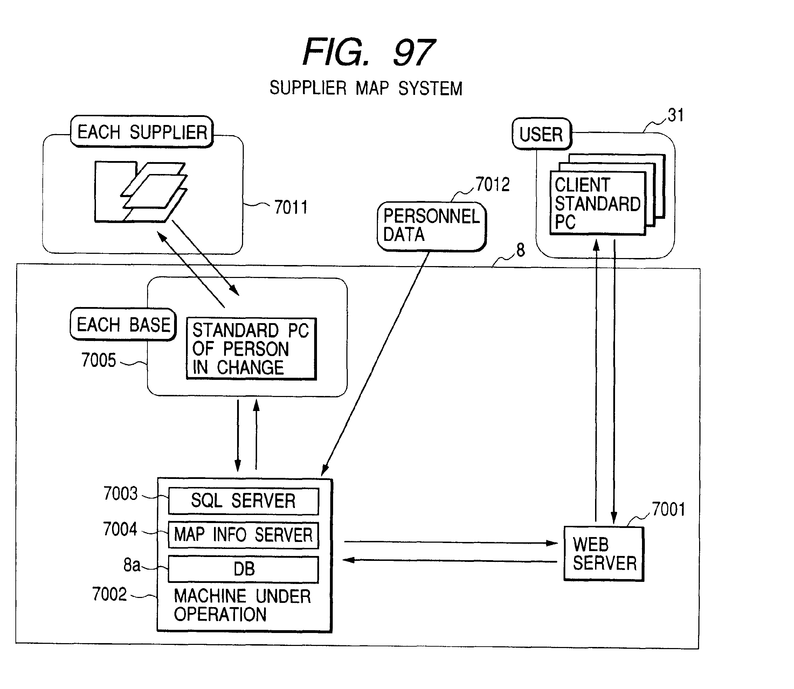

FIG. 97 is a block diagram showing configuration of supplier map system (map information providing system) 8 illustrated in FIG. 1. Supplier map system 8 has Web server 7001, operation machine 7002 and each base point computer 7005. Operation machine 7002 has DB 8a, SQL server 7003 and MapInfo server 7004.

Supplier 7011 supplies a research table listing factory information (including its own (supplier's) information as operator of the factory) to supplier map system 8. Each base point computer 7005 is a standard personal computer used by a person in charge for instance. Factory information of the above research table is inputted on each base point computer 7005 to generate electronic-data factory information. Each base point computer 7005 supplies factory information to operation machine 7002. Moreover, it is also possible for supplier 7011 to directly supply electronic-data factory information to operation machine 7002.

SQL server 7003 registers the above factory information on DB 8a. DB 8a stores map information and lendable asset information in addition to factory information. Factory information and map information are stored in an associated manner. To be more specific, it allows a user to find where each factory is located on a map. SQL server 7003 manages registration, search and so on of factory information and lendable asset information in DB 8a. MapInfo server 7004 manages registration, search and so on of map information in DB 8a.

Personnel department computer 7012 stores personnel data and that data is supplied to operation machine 7002. Personnel data includes information on personnel change, and supplier map system 8 can automatically change a department to which a registered user belongs. It can also erase registration of the changed user as required.

Operation machine 7002 stores a computer program and operates supplier map system 8 according to the computer program. Web server 7001 stores a computer program and performs unified screen display according to the computer program. Web server 7001 makes various requests to operation machine 7002 and receives its responses. Operation machine 7002 makes various requests to each base point computer 7005 and receives its responses.

User computer 31 is a standard personal computer as a client for instance, and is capable of making various requests to Web server 7001 and receiving its responses. For instance, an instruction can be given to search for a factory having predetermined factory equipment and located near the office (factory) to which the user belongs. Web server 7001 searches for a factory via operation machine 7002, and displays factory information and map information of that factory on the screen of user computer 31. The user can promptly acquire factory information and map information of the desired factory.

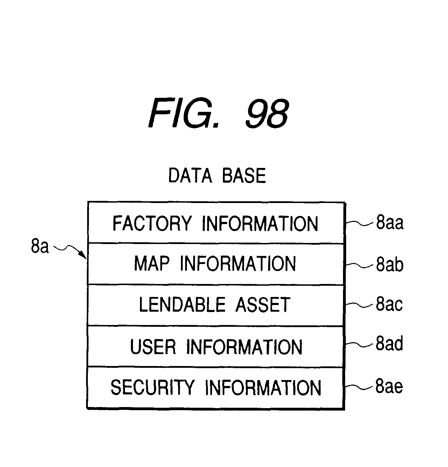

FIG. 98 is a schematic diagram showing configuration of DB 8a. DB 8a has factory information (including information on a supplier it belongs to) 8aa, map information 8ab, lendable asset information 8ac, user information (user ID, password, user's belonging department, etc.) 8ad and security information 8ae. Factory information 8aa and map information 8ab are stored in a liked manner. Factory information 8aa includes equipment information by industry and by supplier (information on manufacturing, processing and searching equipment), secondary subcontractor information and subcontractor's supplier (any supplier for a subcontractor and thereunder) information.

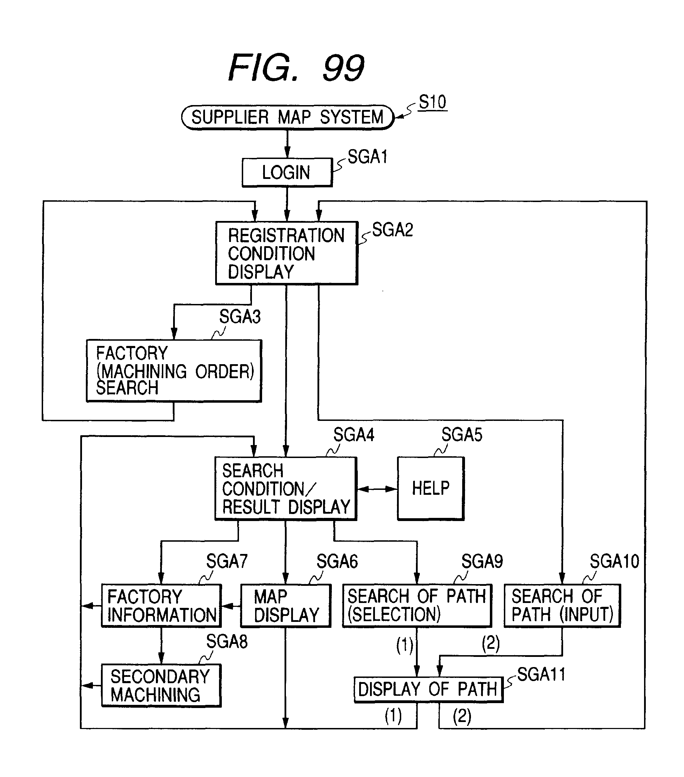

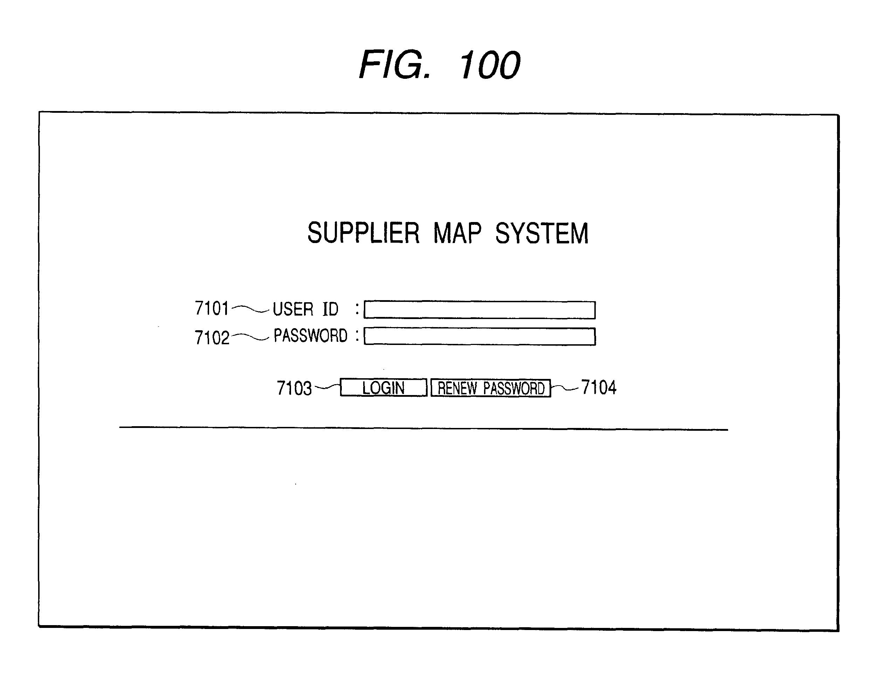

FIG. 99 is a flowchart showing processing of the supplier map system, and corresponds to processing of step S10 in FIG. 2. Step SGA1 displays the log-in screen shown in FIG. 100 on user computer 31 (FIG. 97) waiting for input of a user ID and input of a password. A user can enter a user ID in area 7101 and a password in area 7102 in FIG. 100. Security can be enhanced and a log-in by an illicit person can be prevented by having user ID 7101 and password 7102 entered.

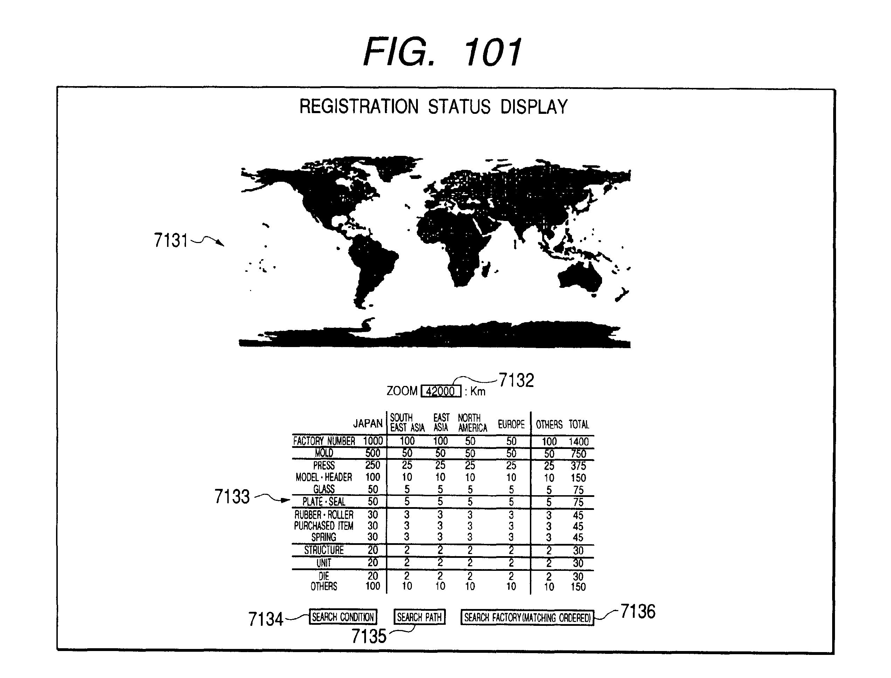

A user can change a password for security protection by clicking on password change button 7104 with a mouse. If a user clicks on log-in button 7103 with a mouse, and if the entered user ID and password are correct, the user is logged in and proceeds to step SGA2. Step SGA2 displays the registration status display screen shown in FIG. 101.

FIG. 101 shows registration status display screen. Map area 7131 displays a full-screen world map. If any point on the map is clicked on with a mouse, it redisplays the map by enlarging it by a zoom value entered in zoom area 7132 centering on the clicked-on point. If Japan is enlarged, a map can be displayed by prefecture. A zoom value is 500 to 42,000 km for instance. Collection table 7133 displays the number of factories totaled by industry in the regions displayed on map area 7131. The industries are mold, press and so on for instance. Totals by country or by prefecture are displayed according to zoom values. The total values are displayed as a bar graph at corresponding locations on map area 7131.

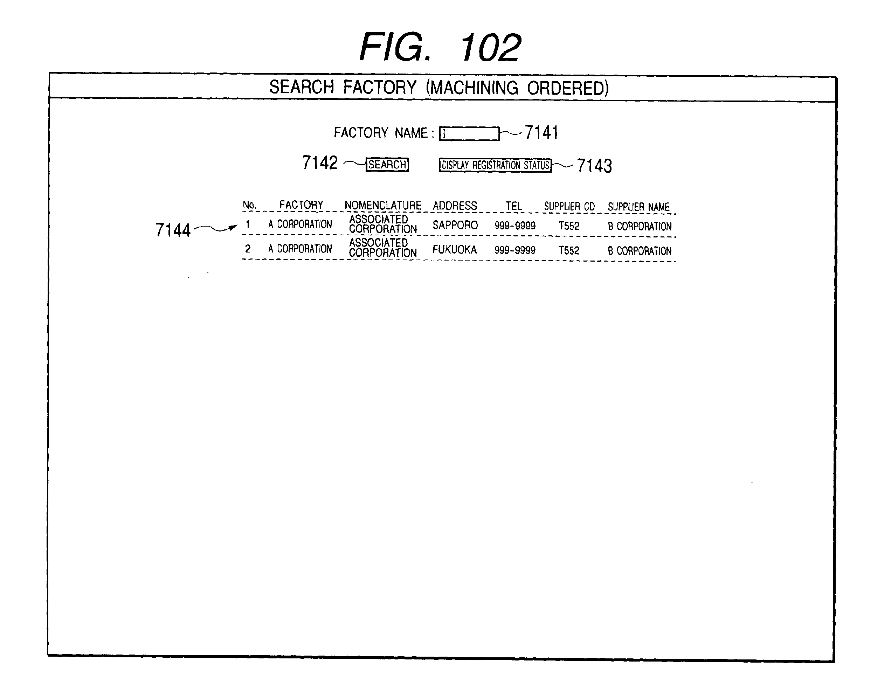

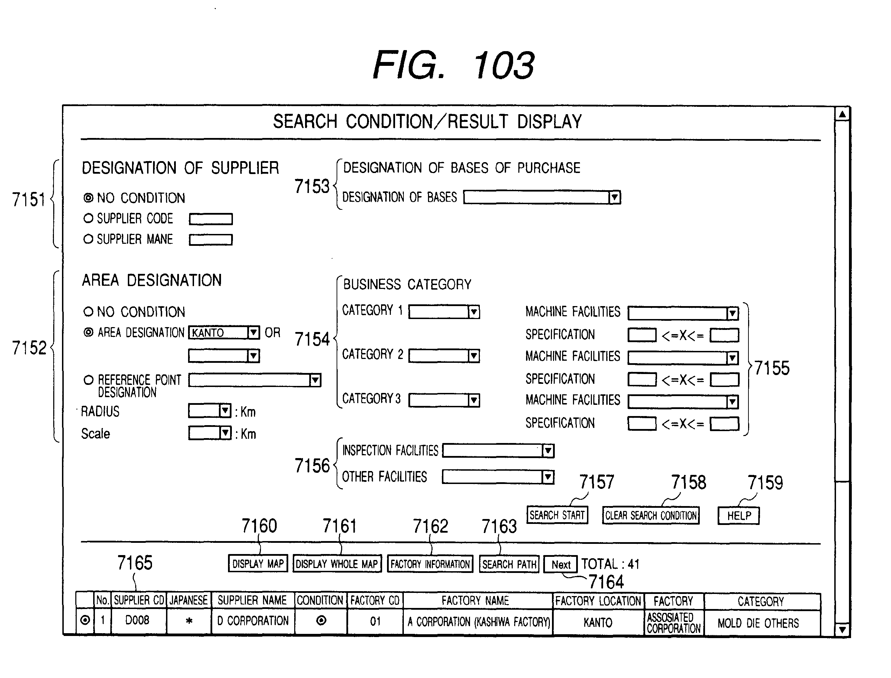

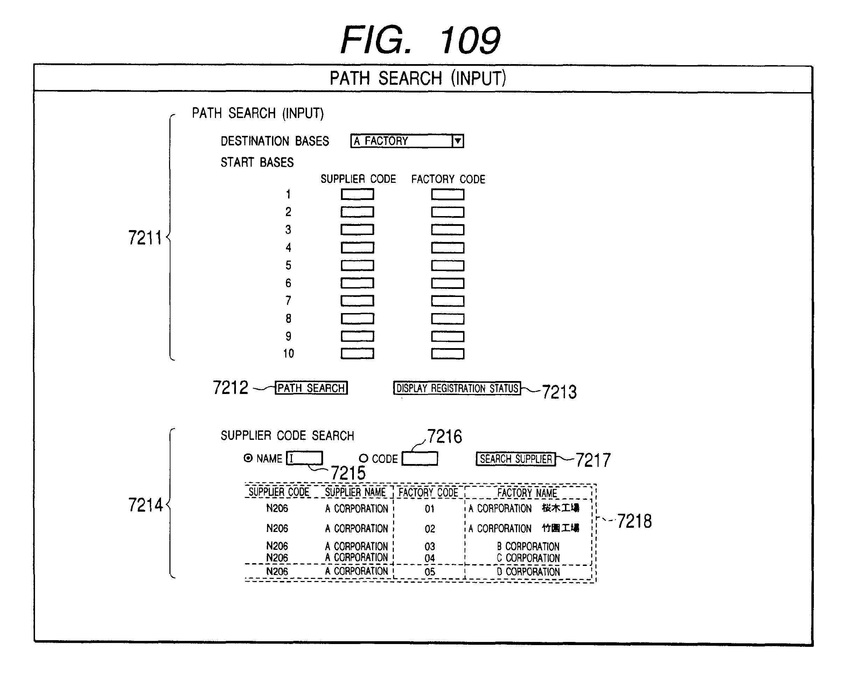

If search condition button 7134 is clicked on with a mouse, it proceeds to step SGA4 in FIG. 99 and displays the search condition/results display screen shown in FIG. 103. Also, if search path button 7135 is clicked on with a mouse, it proceeds to step SGA10 in FIG. 99 and displays the search path (input) screen shown in FIG. 109. In addition, if search factory (machining ordered) button 7136 is clicked on with a mouse, it proceeds to step SGA3 in FIG. 99 and displays the search factory (machining ordered) screen shown in FIG. 102.

FIG. 102 shows the search factory (machining ordered) screen of step SGA3 shown in FIG. 99. In factory name area 7141, a name of a factory to be searched for is entered in katakana. A factory is equivalent to a subcontracted factory of a supplier. If search button 7142 is clicked on with a mouse, it searches for a factory name entered in factory name area 7141 by forward matching for instance, and displays it in search results area 7144. Search results area 7144 displays a list of factories searched for. To be more specific, search results area 7144 displays factory No., factory name, kind of factory, factory address, factory contact tel. No., supplier code and supplier name. Here, works A (factory) is equivalent to a subcontracted factory of works B (factory). To be more specific, it is possible to know a relationship between a supplier and its subcontracted factory. If registration status display button 7143 is clicked on with a mouse, it returns to step SGA2 in FIG. 99 and displays the registration status display screen in FIG. 101.

FIG. 103 shows the search condition/results display screen of step SGA4 shown in FIG. 99. As designation items of search condition, designation of supplier 7151, area designation 7152, designation of base of purchase 7153, business category 7154, machine facilities (including manufacturing and processing equipment) designation 7155, designation of inspection facilities and so on 7156 can be specified. It is possible to narrow down factories to be searched by specifying these designations. In the case of specifying no designation item, all the factories are searched.

In designation of supplier 7151, one of "No condition", "Customer code" and "Customer name" can be specified. In area designation 7152, one of "No condition", "area designation" and "reference point designation" can be specified. "Area designation" can specify two regions under an OR condition. "Reference point designation" can search factories located within a specified radius from the company's factory that is a reference point. Scale (km) can be specified then.

In designation of base of purchase 7153, a base of purchase can be specified. A search can be made based on delivery -record information. In business category 7154, a business category can be specified. In machine facilities designation 7155, machine facilities and their specifications (equipment capacity) can be specified. Machine facilities include manufacturing and processing equipment. Machine facilities specifications are, for instance, the number of tons formable by injection molding equipment of resin molding. In designation of inspection facilities and so on 7156, inspection facilities and other facilities can be specified.

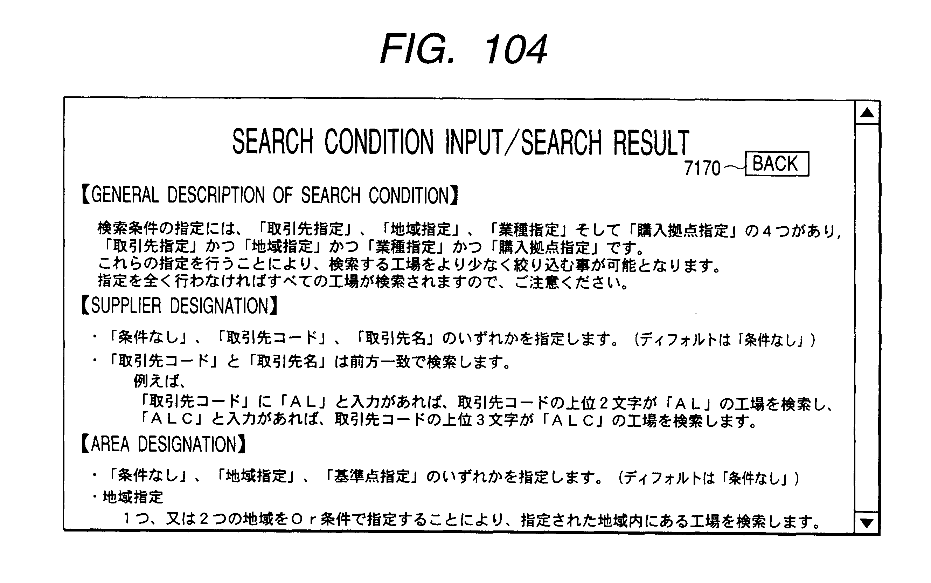

If search start button 7157 is clicked on with a mouse, it performs a search based on the above specified conditions, and displays a list of search results in search results area 7165 at the bottom. Moreover, if clear search condition button 7158 is clicked on with a mouse, the above specified conditions are cleared, and if help button 7159 is clicked on with a mouse, it proceeds to step SGA5 in FIG. 99 and displays the help screen shown in FIG. 104.

In search results area 7165 in FIG. 103, factories meeting the above specified conditions are displayed. To be more specific, search results area 7165 displays radio button, factory No., supplier code, Japanese/non-Japanese, supplier name, condition, factory code, factory name, factory location, kind of factory and business category. If Next button 7164 is clicked on with a mouse, it displays ten factories following the currently displayed ten factories. In the case where there are previous ten factories, the Prev button is displayed and if the Prev button is clicked on with a mouse, it displays preceding ten factories.

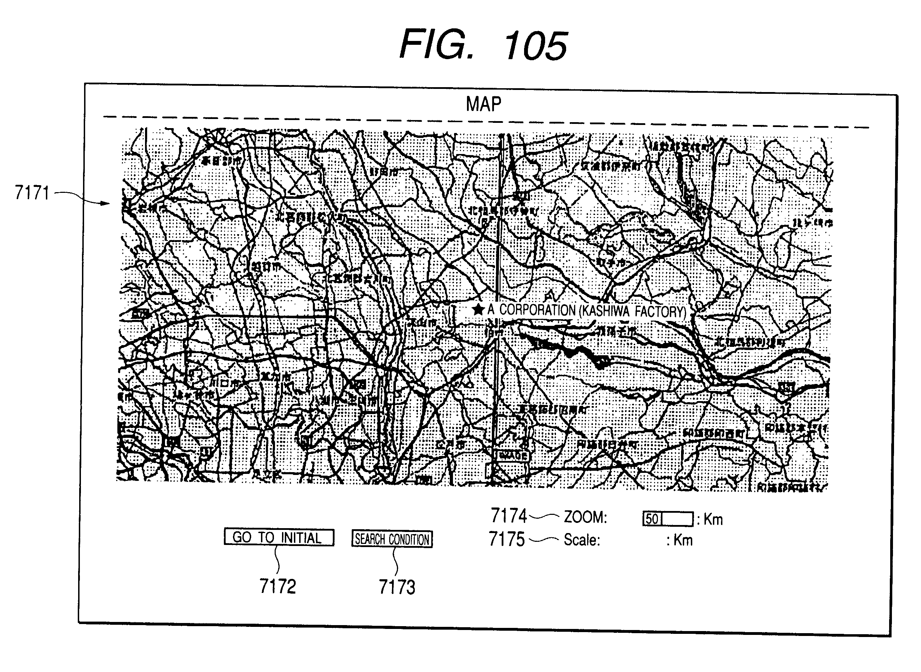

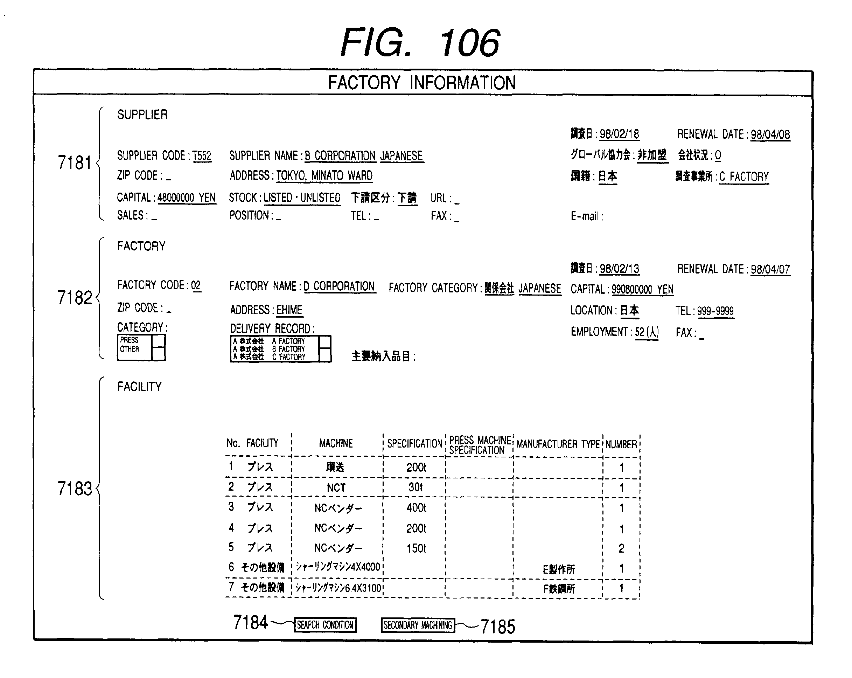

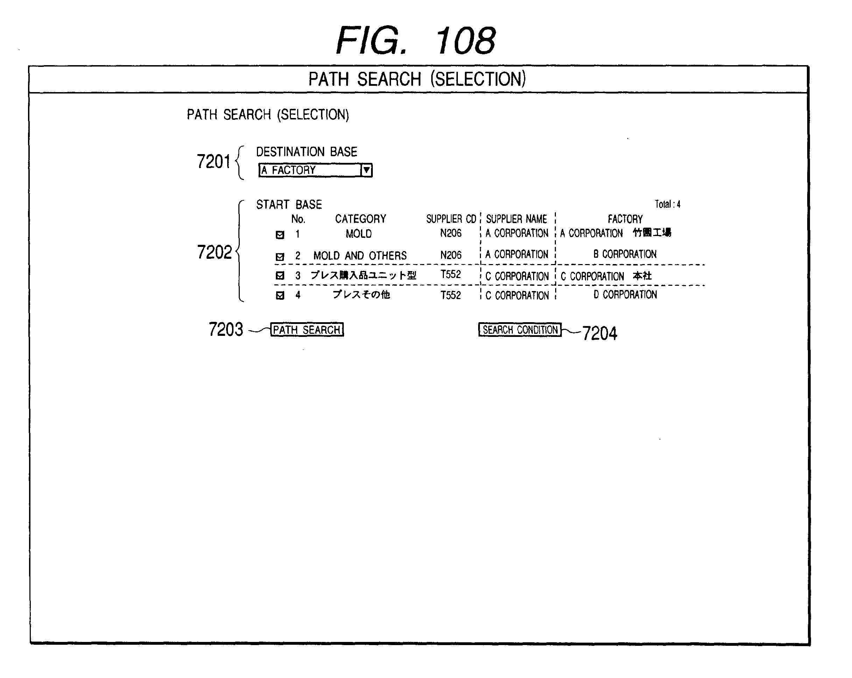

If display map button 7160 is clicked on with a mouse, it proceeds to step SGA6 in FIG. 99 and displays the map display screen shown in FIG. 105. Moreover, if display whole map button 7161 is clicked on with a mouse, it also proceeds to step SGA6 and displays the map display screen displaying the whole map shown in FIG. 105. Furthermore, if factory information button 7162 is clicked on with a mouse, it proceeds to step SGA7 and displays the factory information screen shown in FIG. 106. In addition, if search path button 7163 is clicked on with a mouse, it proceeds to step SGA9 and displays the search (select) path screen shown in FIG. 108.

FIG. 104 shows the help screen of step SGA5 shown in FIG. 99. The help screen displays explanation of the method of specifying search conditions on the search condition/results display screen of step SGA4 (FIG. 103). If "Return" button 7170 is clicked on with a mouse, it returns to step SGA4 in FIG. 99 and displays the search condition/results display screen in FIG. 103.

FIG. 105 shows the map display screen of step SGA6 shown in FIG. 99. Map area 7171 displays a map showing location of an applicable factory in the case where display map button 7160 or display whole map button 7161 is clicked on the search condition/results display screen in FIG. 103. In the case where a reference point is specified, it displays it with a zoom value of 5 km centering on the factory that is the reference point. In the case where scale is specified, it displays a circle on the specified scale centering on the factory that is the reference. In the case where no reference point is specified, it displays a map with a zoom value of 5 km centering on the specified factory. In the case where display whole map button 7161 (FIG. 103) is clicked on, it displays all the searched factories.

In zoom area 7174, a zoom value can be entered in a range of 0.5 to 40,000 km for instance. In scale area 7175, in the case where scale is specified in "designated area" on the search condition/results display screen in FIG. 103, it displays that scale value. Map area 7171 displays a circle of that scale.

If any point in map area 7171 is clicked on, it displays a circle of a predetermined radius centering on the clicked-on point, and it searches for any factory in the circle and displays it. And in the case where a factory is clicked on with a mouse and selected, it proceeds to step SGA7 in FIG. 99 and displays the factory information screen in FIG. 106.
On the other hand, in the case where a factory is not selected, it redisplays the map at a specified zoom value centering on the clicked-on point.

If "go to initial" button 7172 is clicked on with a mouse, it redisplays the above initial map area 7171. If "search condition" button 7173 is clicked on with a mouse, it returns to step SGA4 in FIG. 99 and displays the search condition/results display screen in FIG. 103.

FIG. 106 shows the factory information screen of step SGA7 shown in FIG. 99. The factory information screen displays supplier overview 7181, factory overview 7182 and factory facilities 7183. Supplier overview 7181 displays information date, renewal date, supplier code, supplier name, Japanese/non-Japanese, member/non-member of the Global Collaboration Association, company situation, head office zip code, head office address, nationality, subject office name, capital, listing category, subcontractor category, home page URL, sales representative name, sales representative title, sales representative tel. No., sales representative fax. No. and sales representative e-mail.

Factory overview 7182 displays research date, renewal date, factory code, factory name, kind of factory, Japanese/non-Japanese, capital, factory zip code, factory address, factory location, factory contact tel. No., number of employees, factory contact fax. No., major delivery item, business category and delivery record.

Factory facilities 7183 displays facility No., facility, machine, specification (tonnage in the case of mold and press, mm in the case of ground materials and headers), press machine specifications, machine facilities maker name, machine type and equipped number.

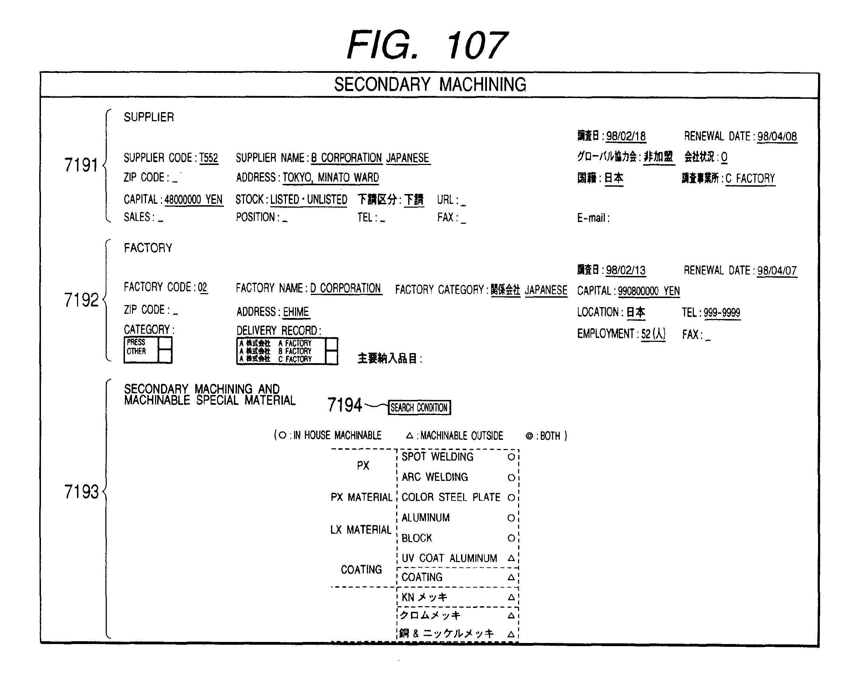

If search condition button 7184 is clicked on with a mouse, it returns to step SGA4 in FIG. 99 and displays the search condition/results display screen in FIG. 103. Also, if secondary machining button 7185 is clicked on with a mouse, it proceeds to step SGA8 in FIG. 99 and displays the secondary machining screen in FIG. 107.

FIG. 107 shows the secondary machining screen of step SGA8 shown in FIG. 99. The secondary machining screen displays supplier overview 7191, factory overview 7192, and secondary machining and machinable special material 7193. Supplier overview 7191 displays the same items as supplier overview 7181 shown in FIG. 106. Factory overview 7192 displays the same items as the factory overview shown in FIG. 106. Secondary machining and machinable special material 7193 displays secondary machining category name (PX (press), PX materials and so on) and secondary machining name (spot welding, arc welding and so on). A circle in the table indicates that there are machining track records in its own factory, a triangle indicates that there are machining track records only outside its own factory, and a double circle indicates that there are both machining track records. If to search condition button 7194 is clicked on with a mouse, it returns to step SGA4 in FIG. 99 and displays the search condition/results display screen in FIG. 103.

FIG. 108 shows the path search (selection) screen of step SGA9 shown in FIG. 99. The path search (selection) screen displays destination base 7201 and start base 7202. In the case where "reference point designation" is specified on the search condition/results display screen in FIG. 103, destination base 7201 displays that base. In the case where no "reference point designation" is specified, it displays a predetermined base name. Start base 7202 displays total number of searched factories (Total), check boxes, No. of searched factories, business category, supplier code, supplier name and factory name. In destination base 7201, a desired destination base (the company's own factory for instance) can be entered or selected. In start base 7202, a desired start base (subcontracted factory of a supplier) can be selected by checking the above check boxes.

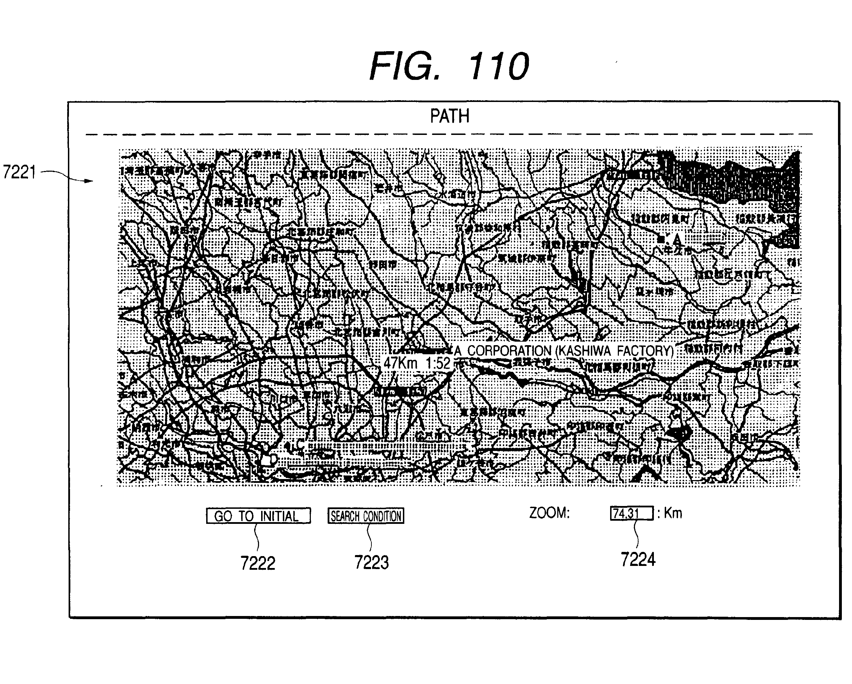

If path search button 7203 is clicked on with a mouse, it determines a check state of the above check boxes and displays an error message in the case where none is checked, and proceeds to step SGA1 in FIG. 99 in the case where one or more is checked and displays the path display screen shown in FIG. 110. On the other hand, if search condition button 7204 in FIG. 108 is clicked on with a mouse, it returns to step SGA4 in FIG. 99 and displays the search condition/results display screen in FIG. 103.

FIG. 109 shows the path search (input) screen of step SGA10 shown in FIG. 99. The path search (input) screen displays path search (input) 7211 and supplier code search 7214. In path search (input) 7211, a destination base and a start base (a supplier code and a factory code) can be entered. The destination base and start base are the same as destination base 7201 and start base 7202 shown in FIG. 108.

If path search button 7212 is clicked on with a mouse, it searches for a path based on the above entered destination base, supplier code and factory code, and proceeds to step SGA1 in FIG. 99 and displays the path display screen shown in FIG. 110. Also, if registration status display button 7213 is clicked on with a mouse, it returns to step SGA2 in FIG. 99 and displays the registration status display screen in FIG. 101.

In supplier code search 7214, a radio button of either supplier name 7215 or supplier code 7216 is clicked on, and supplier name 7215 or supplier code 7216 is entered. Next, if supplier search button 7217 is clicked on with a mouse, it searches for any factory belonging to the supplier based on supplier name 7215 or supplier code 7216, and displays it in search results area 7218. This search results area 7218 displays supplier code, supplier name, factory code and factory name as search results. It is possible to easily enter supplier code and factory code of path search (input) 7211 by referring to search results area 7218.

FIG. 110 shows the path display screen of step SGA11 shown in FIG. 99. Map area 7221 displays a map on which the destination base factory and start base factories specified on the path search (selection) screen in FIG. 108 or on the path search (input) screen in FIG. 109 are all displayed. Map area 7221 also indicates the path from each of the start base factories to the destination base factory in a red solid line, and indicates the path distance between them and required time therefor by car on that path.

In zoom area 7224, a zoom value can be entered in a range of 0.5 to 3,000 km for instance. If any point in map area 7221 is clicked on with a mouse, it redisplays the map by a zoom value entered in zoom area 7224 centering on the clicked-on point.

If "go to initial" button 7222 is clicked on with a mouse, it returns to display of initial map area 7221 before entering the zoom value. "Search condition" button 7223 will be explained. In the case where it shifted from the path search (selection) screen of step SGA9 in FIG. 99 to the path display screen of step SGA11, if "search condition" button 7223 is clicked on with a mouse, it returns to step SGA4 and displays the search condition/results display screen in FIG. 103.
On the other hand, in the case where it shifts from the path search (input) screen of SGA10 in FIG. 99 to the path display screen of step SGA11, if "search condition" button 7223 is clicked on with a mouse, it returns to step SGA2 and displays the registration status display screen shown in FIG. 101.

Next, lendable asset location information will be explained. For instance, a mold used for mold working is a lendable asset and it is lent to a supplier or a factory. For instance, when a supplier or the like is about to go bankrupt, it is important to grasp lendable asset location information since such assets must be collected. Mold (lendable asset) No., No. of materials used for mold working, Part No. of parts completed by mold working, factory code of a factory where mold working was performed and supplier code of a supplier are registered on DB 8a, and so it is possible to search for location information of that mold and provide a user with the location of that mold on the map. The user can immediately collect necessary lendable assets based on that location information.

Also, in the case where a disaster such as an earthquake occurs, it is highly likely that factories around there will not function. In that case, it is possible, by regarding the location of disaster occurrence as a reference point and searching factories within its predetermined radius, to find information on the factories likely to suffer damage and take disaster measures.

As above, it is possible, by linking factory information (including supplier information) with map information and storing it on a database, to know map information based on factory information and also to know factory information based on map information. For instance, it is possible to search factories based on factory location information and factory facilities information so as to inform a user of a factory meeting the search condition. It is also possible to indicate a path from a start base to a destination base and inform the user of the path distance and required time therefor.

### [9. Supplier sales system]

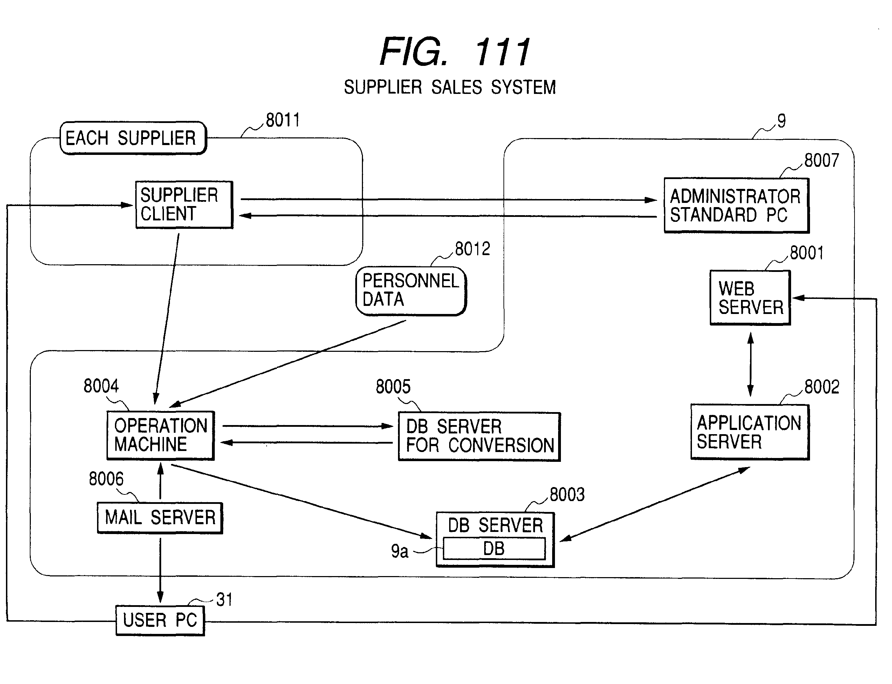

FIG. 111 is a block diagram showing configuration of supplier sales system 9 illustrated in FIG. 1. Supplier sales system 9 has Web server 8001, application server 8002, Web DB server 8003 and operation machine 8004, conversion DB server 8005, mail server 8006 and administrator computer 8007. DB server 8003 has DB 9a.

Each supplier computer 8011 sends application form for utilization of supplier sales system 9 to administrator computer 8007. According to that application for utilization, administrator computer 8007 provides (sends) a setup program for performing sales based on supplier sales system 9 to supplier computer 8011. Supplier computer 8011 can send its (supplier's) sales information to operation machine 8004 by installing that setup program. Sales information is the latest parts information, substitutive parts information or clerk information, for instance. On receipt of sales information, operation machine 8004 registers the information on DB 9a in DB server 8003. Also, if operation machine 8004 receives new sales information, mail server 8006 informs user computer 31 of arrival of the latest sales information by mail.

Personnel department computer 8012 stores personnel data and that data is supplied to operation machine 8004. Personnel data includes information on personnel change, and supplier sales system 9 can automatically change a department to which a registered user belongs. It can also erase registration of the changed user as required.

DB server 8003 manages registration, search, deletion and so on for DB 9a. On receipt of sales information from supplier computer 8011, operation machine 8004 instructs conversion DB server 8005 to update DB 9a as required. Conversion DB server 8005 processes an update, creates a log file and requests operation machine 8004 to transfer data. Operation machine 8004 updates DB 9a in DB server 8003 accordingly.

Application server 8002 stores a computer program and operates supplier sales system 9 according to the computer program. Web server 8001 stores a computer program and performs unified screen display according to the computer program. Web server 8001 makes various requests to application server 8002 and receives its responses. Application server 8002 makes various requests to DB server 8003 and receives its responses.

User computer 31 is a standard personal computer as a client for instance, and is capable of making various requests to Web server 8001 and receiving its responses. For instance, user computer 31 can give Web server 8001 an instruction to search for and view desired sales information. Web server 8001 searches for sales information in DB 9a via application server 8002, and displays that sales information on the screen of user computer 31. A user can promptly acquire the desired sales information. In addition, based on the sales information, user computer 31 can send mail to supplier computer 8011 and access a supplier's home page to display the information.

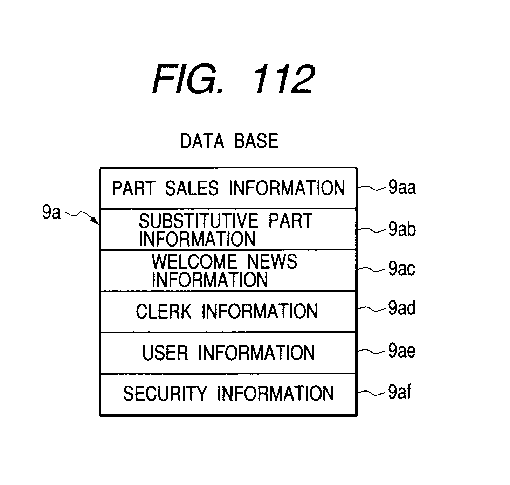

FIG. 112 is a schematic diagram showing configuration of DB 9a. DB 9a has sales information including parts sales information 9aa, substitutive parts information 9ab, welcome news information 9ac and clerk information 9ad, and besides, user information (user ID, password, user's belonging department, etc.) 9ae and security information 9af.

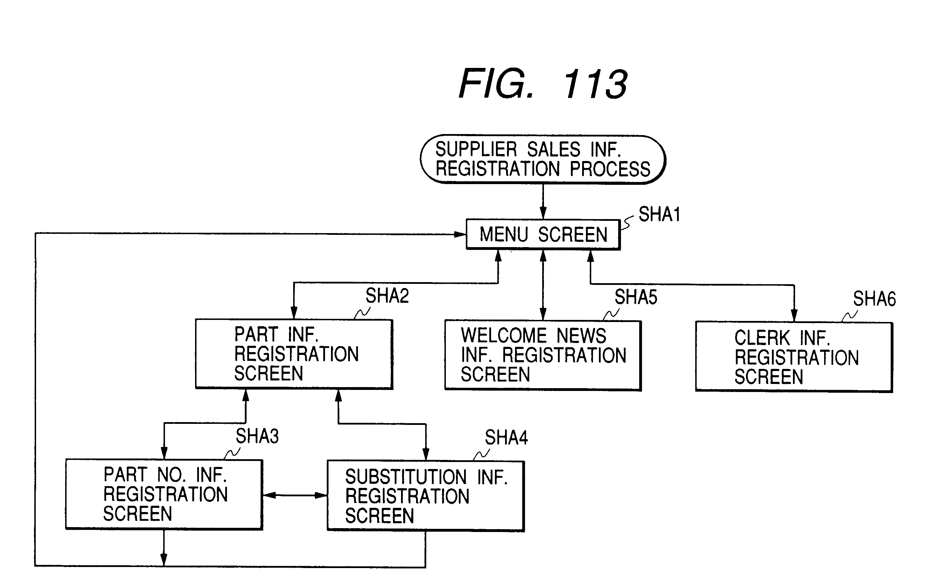

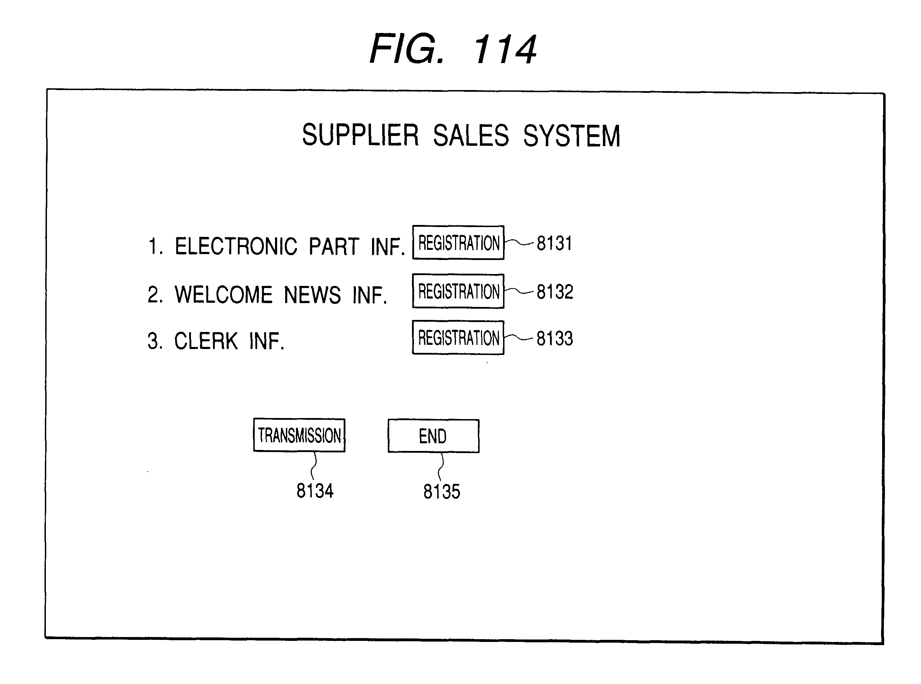

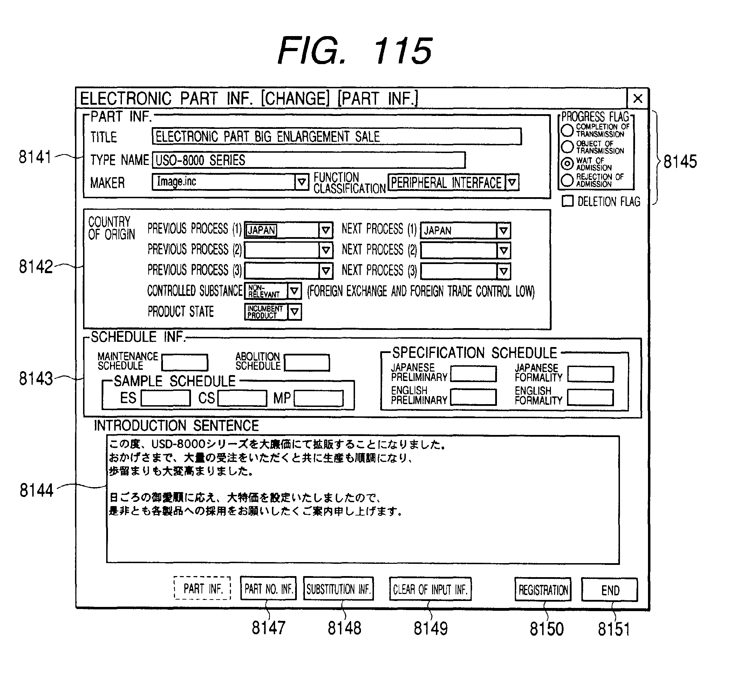

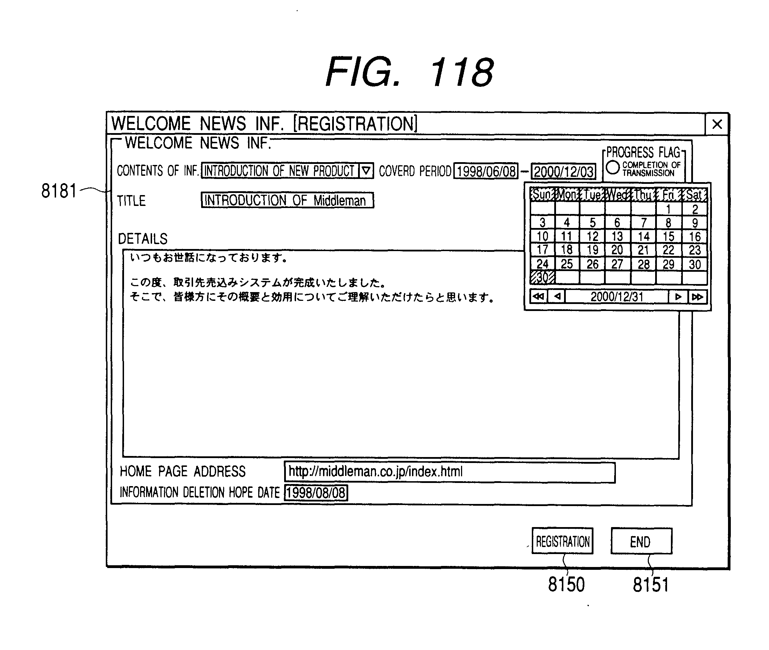

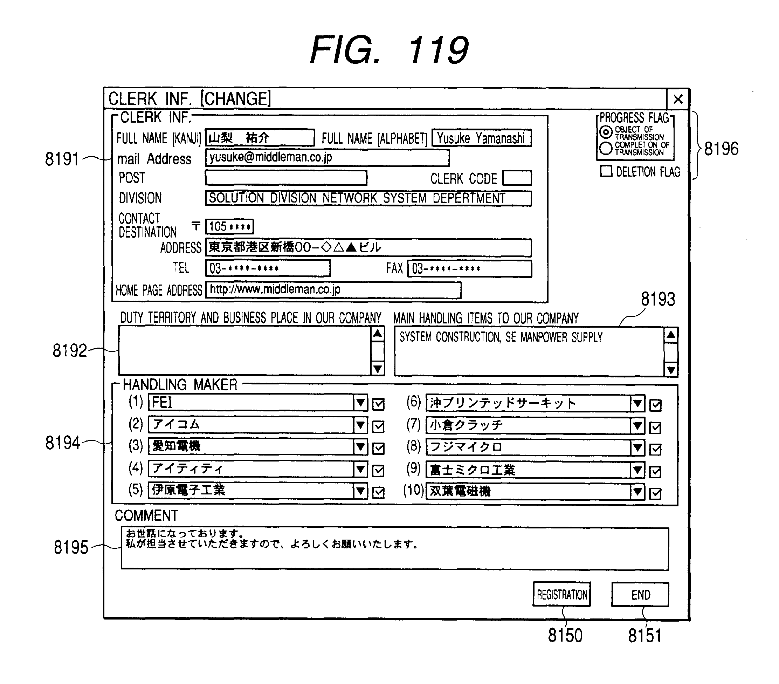

FIG. 113 is a flowchart showing the supplier sales information registration process on supplier computer 8011 (FIG. 111). Step SHA1 displays the menu screen shown in FIG. 114. Menu items display "1. Electronic parts information", "2. Welcome news information" and "3. Clerk information". If electronic parts information registration button 8131 is clicked on with a mouse, it proceeds to step SHA2 in FIG. 113 and displays the parts information registration screen shown in FIG. 115. Also, if welcome news information registration button 8132 is clicked on with a mouse, it proceeds to step SHA5 in FIG. 113 and displays the welcome news information registration screen shown in FIG. 118. In addition, if clerk information registration button 8133 is clicked on with a mouse, it proceeds to step SHA6 in FIG. 113 and displays the clerk information registration screen shown in FIG. 119. After that, if transmission button 8134 is clicked on with a mouse, it transmits registered information of the above three sales information items from supplier computer 8011 in FIG. 111 to operation machine 8004. If end button 8135 is clicked on with a mouse, it terminates the process. Moreover, the above electronic parts information is an example of parts information and is applicable to other parts information such as mechanical parts and material information.

FIG. 115 shows the parts information registration screen of step SHA2 shown in FIG. 113. On the parts information registration screen, parts information 8141, country of origin 8142, schedule information 8143 and introduction sentences 8144 can be registered. In parts information 8141, title, type name, maker and function classification can be entered. In country of origin 8142, previous process country, next process country, controlled substance and product state can be entered. In schedule information 8143, maintenance schedule, abolition schedule, sample schedule and specification schedule can be entered. Flag 8145 shows a progress flag (completion of transmission, object of transmission, wait for admission, rejection of admission) and a deletion flag. If registered by setting the progress flag at "object of transmission", inputted information becomes transmittable. If transmitted with the deletion flag checked, the registered contents can be deleted.

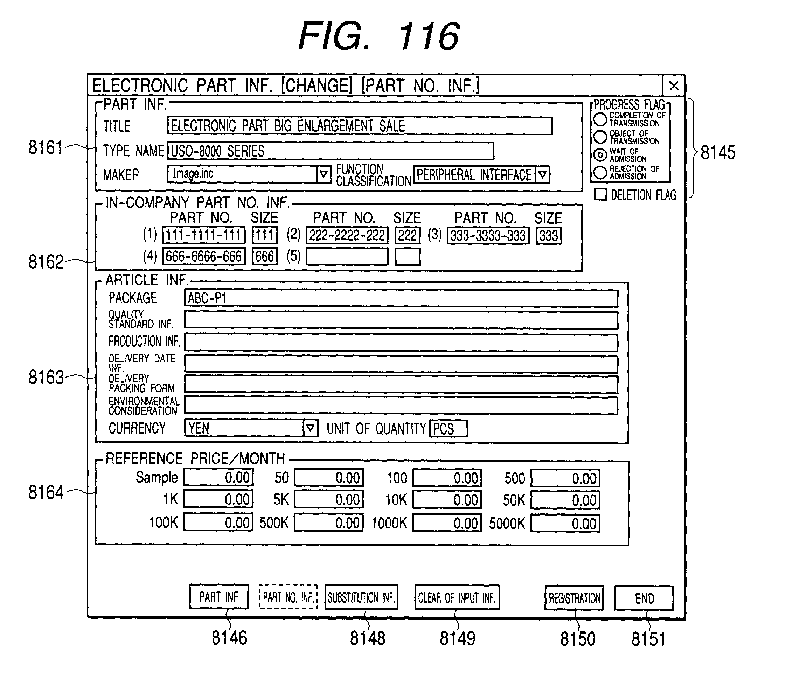

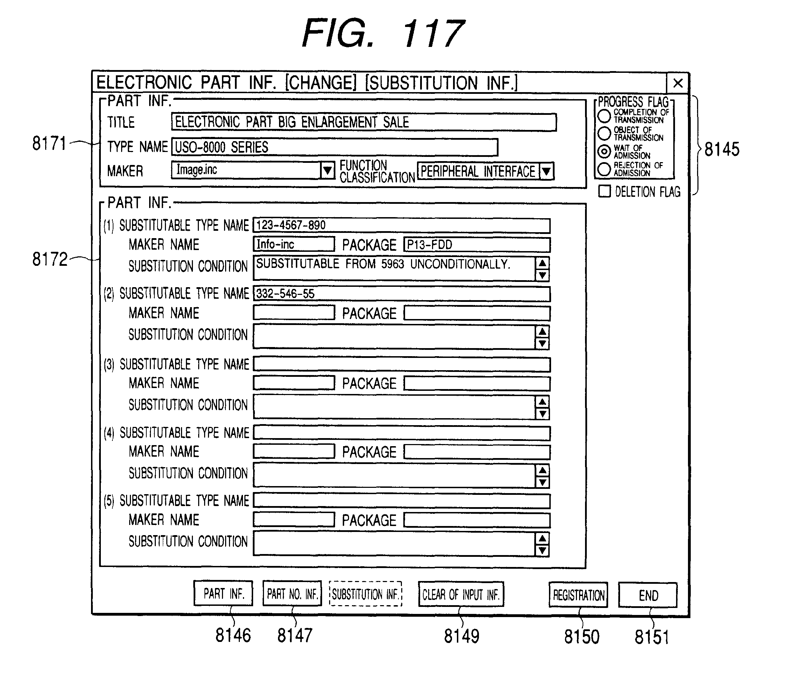

If clear of input information button 8149 is clicked on with a mouse, it can clear the above input information. If registration button 8150 is clicked on with a mouse, it can register the above input information. If end button 8151 is clicked on with a mouse, it returns to step SHA1 in FIG. 113 and displays the menu screen in FIG. 114. If part No. information button 8147 is clicked on with a mouse, it proceeds to step SHA3 in FIG. 113 and displays the part No. information registration screen shown in FIG. 116. If substitution information button 8148 is clicked on with a mouse, it proceeds to step SHA4 in FIG. 113 and displays the substitution information registration screen shown in FIG. 117.

FIG. 116 shows the part No. information registration screen of step SHA3 shown in FIG. 113. On the part No. information registration screen, parts information 8161, in-company part No. information 8162, article information 8163 and reference price/month 8164 can be registered. In parts information 8161, title, type name, maker and function classification can be entered. in-company part No. information 8162, part No. and size can be entered. In article information 8163, package, quality standard information, production information, delivery date information, delivery packing form, environmental consideration, currency and unit of quantity can be entered. Flag 8145 shows a progress flag (completion of transmission, object of transmission, wait for admission, rejection of admission) and a deletion flag.

If clear of input information button 8149 is clicked on with a mouse, it can clear the above input information. If registration button 8150 is clicked on with a mouse, it can register the above input information. If end button 8151 is clicked on with a mouse, it returns to step SHA1 in FIG. 113 and displays the menu screen in FIG. 114. If parts information button 8146 is clicked on with a mouse, it returns to step SHA2 in FIG. 113 and displays the parts information registration screen shown in FIG. 115. If substitution information button 8148 is clicked on with a mouse, it proceeds to step SHA4 in FIG. 113 and displays the substitution information registration screen shown in FIG. 117.

FIG. 117 shows the substitution information (substitutive parts information) registration screen of step SHA4 shown in FIG. 113. On the substitution information registration screen, parts information 8171 and substitution information 8172 can be registered.
In parts information 8171, title, type name, maker and function classification can be entered. In substitution information (substitutive parts information) 8172, substitutable type name, maker name and substitution condition can be entered. A supplier can offer parts and products substitutable for parts and products of other makers. Flag 8145 shows a progress flag (completion of transmission, object of transmission, wait for admission, rejection of admission) and a deletion flag.

If clear of input information button 8149 is clicked on with a mouse, it can clear the above input information. If registration button 8150 is clicked on with a mouse, it can register the above input information. If end button 8151 is clicked on with a mouse, it returns to step SHA1 in FIG. 113 and displays the menu screen in FIG. 114. If parts information button 8146 is clicked on with a mouse, it returns to step SHA2 in FIG. 113 and displays the parts information registration screen shown in FIG. 115. If part No. information button 8147 is clicked on with a mouse, it proceeds to step SHA3 in FIG. 113 and displays the part No. information registration screen shown in FIG. 116.

FIG. 118 shows the welcome news information registration screen of step SHA5 shown in FIG. 113. On the welcome news information registration screen, welcome news information 8181 can be registered. In welcome news information 8181, contents of information, covered period, title, details, home page address and desirable information deletion date can be entered. As the above contents of information, in addition to introduction of new products, news/topics from the company, journal/catalog, holding guidance of exhibition/seminar, latest technical information (unique technology), introduction of new facilities, situation of production/sales, market trends (tight/redundant parts), environmental warranty measures and so on can be selected (entered). If registration button 8150 is clicked on with a mouse, it can register the above input information. If end button 8151 is clicked on with a mouse, it returns to step SHA1 in FIG. 113 and displays the menu screen in FIG. 114.

FIG. 119 shows the clerk information registration screen of step SHA6 shown in FIG. 113. On the clerk information registration screen, clerk information 8191, in-house territory and business 8192, main handling items to our company 8193, handling maker 8194 and comments 8195 can be registered. In clerk information 8191, name, e-mail (electronic mail) address, title, clerk code, position, contact address, tel. No., fax No. and home page address can be entered. Flag 8196 shows a transmission flag (object of transmission, completion of transmission) and a deletion flag. If registration button 8150 is clicked on with a mouse, it can register the above input information. If end button 8151 is clicked on with a mouse, it returns to step SHA1 in FIG. 113 and displays the menu screen in FIG. 114.

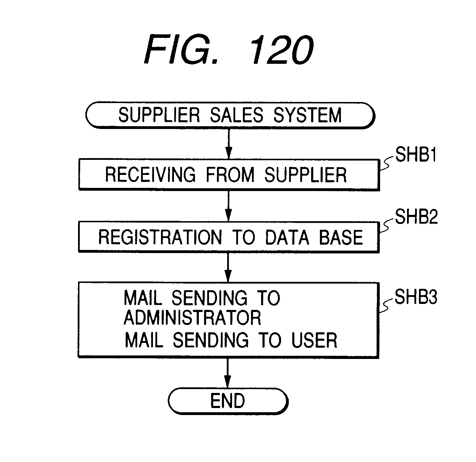

FIG. 120 is a flowchart showing processing of supplier sales system 9 on receipt of sales information from a supplier. In step SHB1, operation machine 8004 (FIG. 111) receives sales information registered and sent by the above supplier. In step SHB2, operation machine 8004 registers the received sales information on DB 9a in DB server 8003. In step SHB3, operation machine 8004 informs administrator computer 8007 (FIG. 111) of supplier sales system 9 of the number of received pieces of sales information by mail every day. Operation machine 8004 also informs user computer 31 (FIG. 111) of an outline of newly provided sales information by mail. Each individual user can specify a type of information to be received by mail. For instance, a person in charge of electronic parts does not need information on mechanical parts and is allowed to receive only information on electronic parts by mail. A user can learn an outline of the latest sales information from the mail and further learn details thereof by accessing supplier sales system 9 described next.

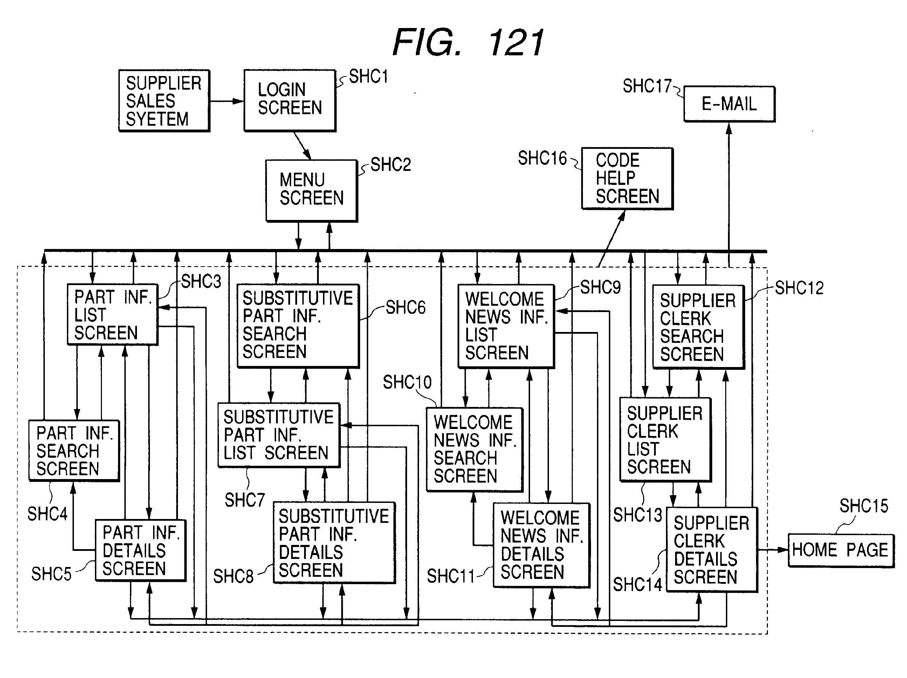

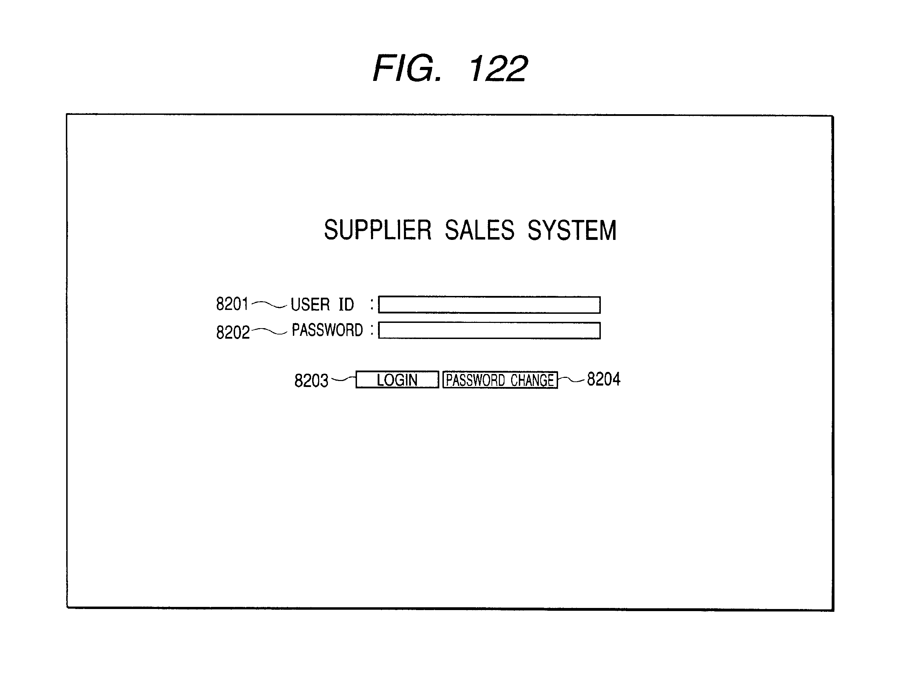

FIG. 121 is a flowchart showing processing of supplier sales system 9 on access by a user. If user computer 31 (FIG. 111) accesses supplier sales system 9, supplier sales system 9 performs the following process. Step SHC1 displays the log-in screen shown in FIG. 122 on user computer 31 (FIG. 111) waiting for input of a user ID and input of a password. A user can enter a user ID in area 8201 in FIG. 122 and a password in area 8202. Security can be enhanced and a log-in by an illicit person can be prevented by having user ID 8201 and password 8202 entered.

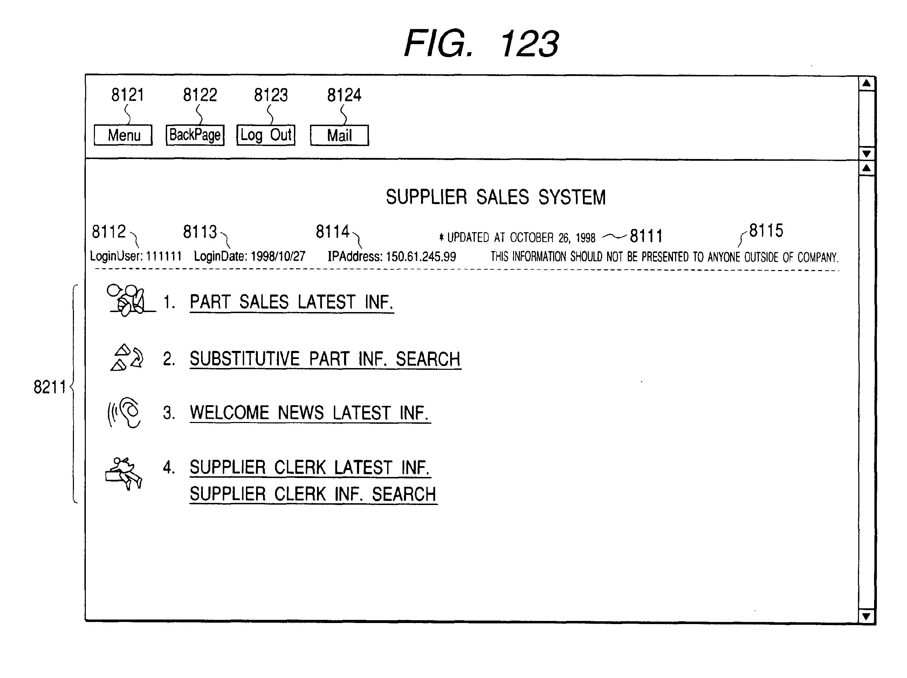

A user can change a password for security protection by clicking on password change button 8204 with a mouse. If a user clicks on log-in button 8203 with a mouse, and if the entered user ID and password are correct, the user is logged in and proceeds to step SHC2. Step SHC2 displays the menu screen shown in FIG. 123.

FIG. 123 shows the menu screen of step SHC2 in FIG. 121. Display area 8111 indicates a date of information. Display area 8112 indicates a log-in user ID (user ID). Display area 8113 indicates a date of log-in. Display area 8114 indicates an IP address of log-in. Based on this IP address, the department to which the user belongs can be identified. As the source can be identified by the displays of these display areas 8112 to 8114 when a hard copy of the screen is made, it is possible to prevent leakage of information to outside. To be more specific, there is an effect of keeping a user from making a hard copy since information on users who made a hard copy is displayed.

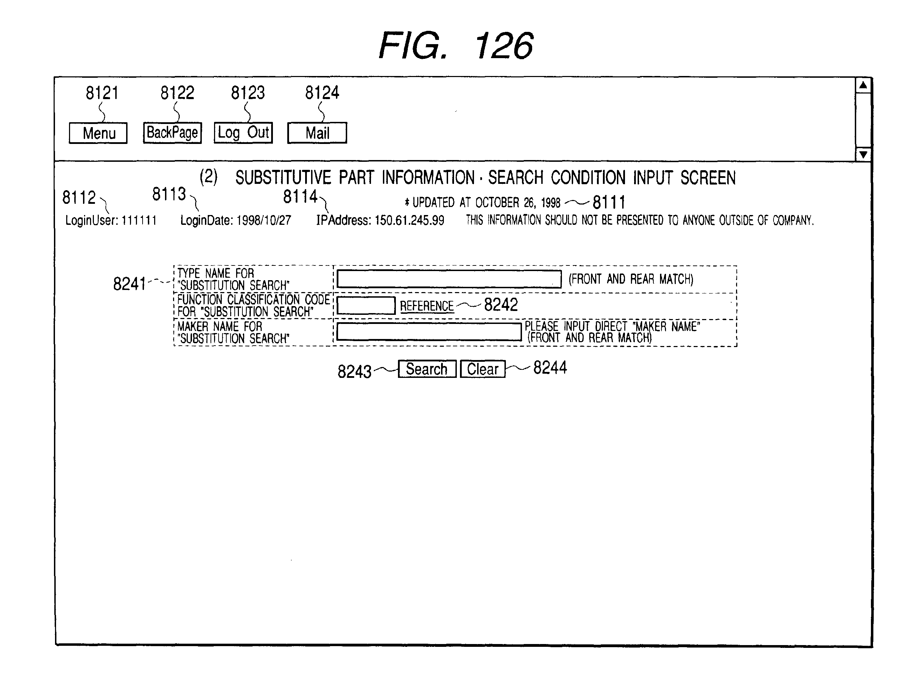

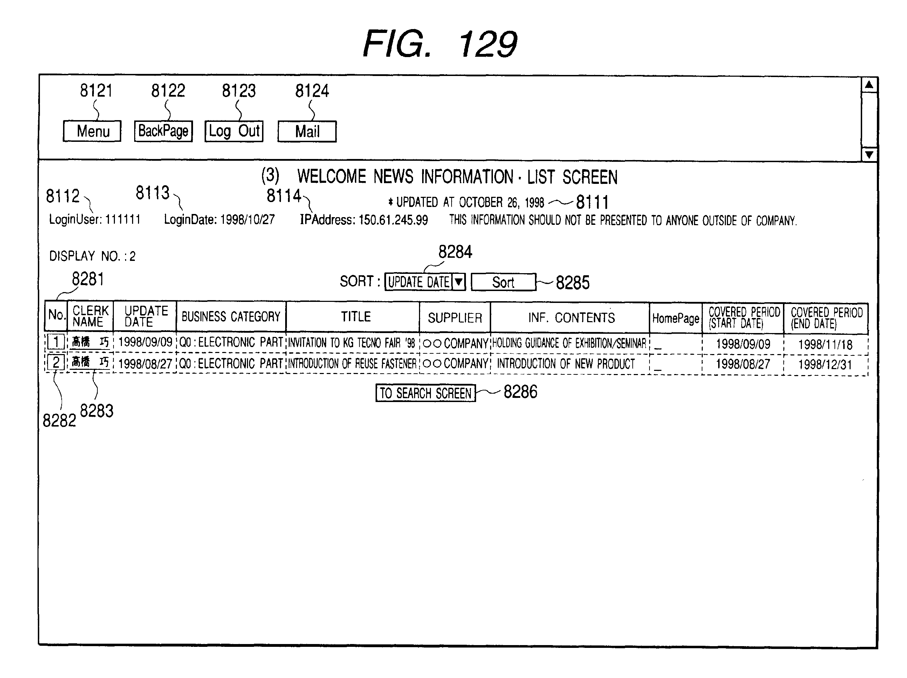

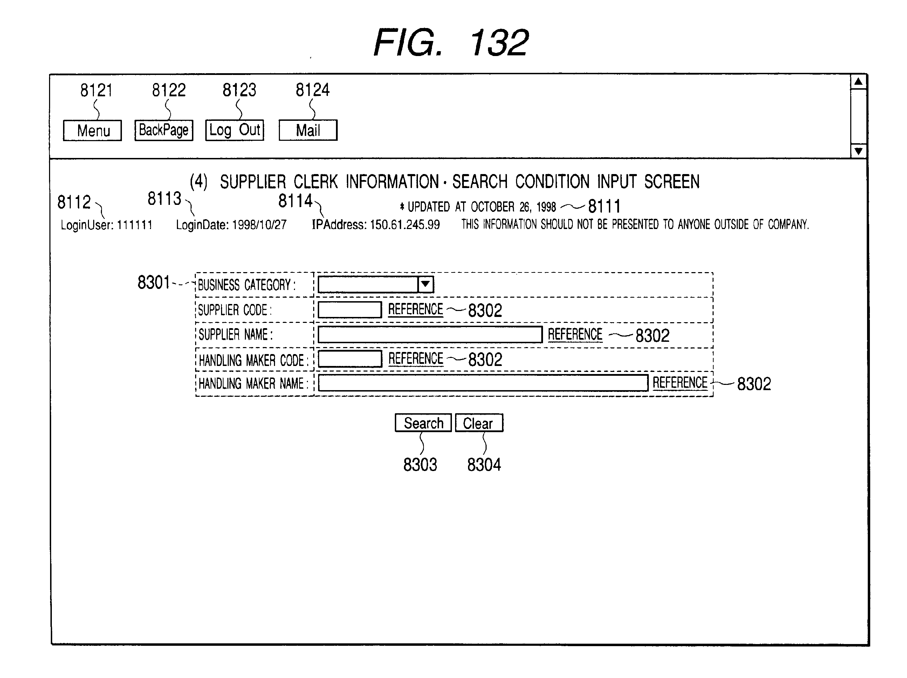

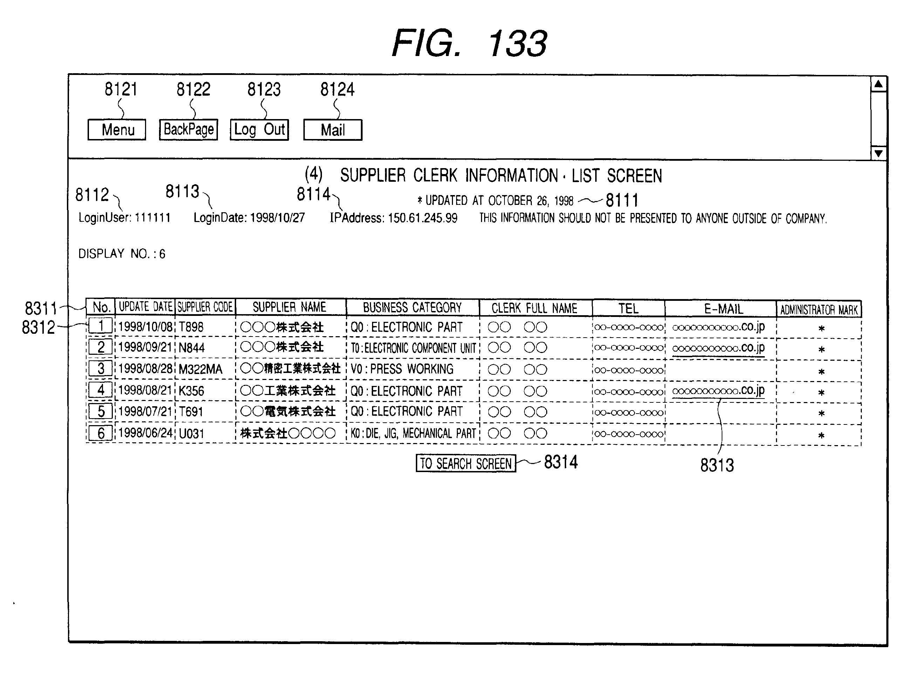

Menu items 8211 displays "1. Latest parts sales information", "2. Search of substitutive parts information", "3. Latest welcome news information" and "4. Latest supplier clerk information and search of information". A user can select a desired one of these four items. If item No. 1 is selected, it proceeds to step SHC3 in FIG. 121 and displays the parts information list screen. If item No. 2 is selected, it proceeds to step SHC6 in FIG. 121 and displays the substitutive parts information search screen shown in FIG. 126. If item No. 3 is selected, it proceeds to step SHC9 in FIG. 121 and displays the welcome news information list screen shown in FIG. 129. In item No. 4, if either "Latest supplier clerk information" or "Latest supplier clerk search" is selected, it proceeds to step SHC12 in FIG. 121 and displays the supplier clerk information list screen in FIG. 133 or the supplier clerk information search screen in FIG. 132.

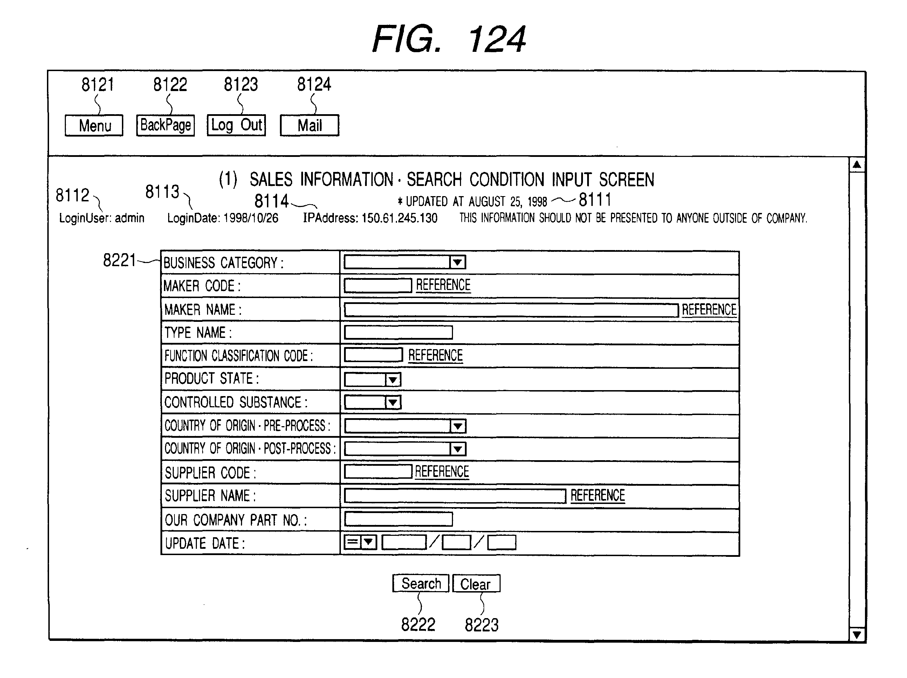

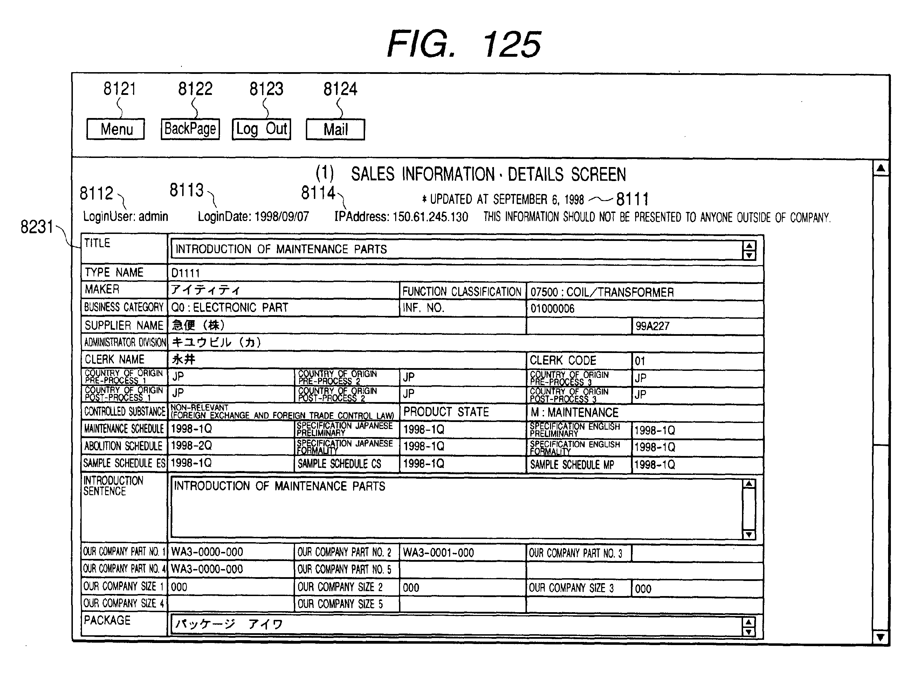

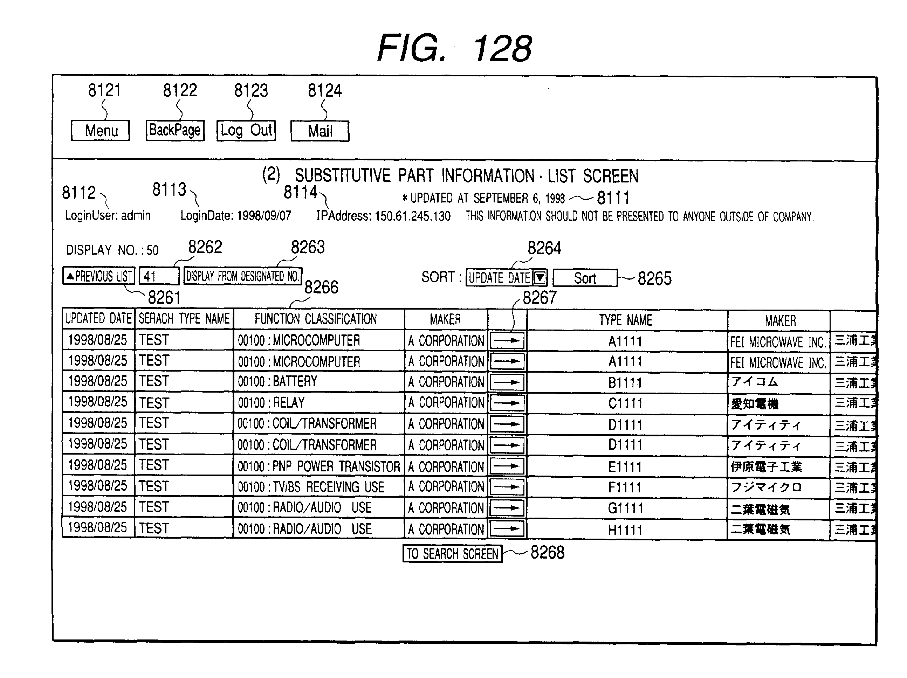

Step SHC3 in FIG. 121 displays the parts information list screen. The parts information list screen is the same as the list screen in FIG. 128 shown later, and displays a list of parts information. On that list screen, if the parts information search button is clicked on with a mouse, it proceeds to step SHC4 and displays the parts information search screen shown in FIG. 124. Also, if the details display button of predetermined parts information is clicked on with a mouse, it proceeds to step SHC5 and displays the parts information details screen shown in FIG. 125.

FIG. 124 shows the parts information search screen of step SHC4 in FIG. 121. Display areas 8111 to 8114 have the same indication as above. If menu button 8121 is clicked on, it displays the menu screen shown in FIG. 123. If back page button 8122 is clicked on, it returns to a preceding display screen. If log-out button 8123 is clicked on, the procurement system comes to an end. If mail button 8124 is clicked on, mail transmission or a check of received mail can be performed.

In search condition input area 8221, business category, maker code, maker name, type name, function classification code, parts state, controlled substance, country of origin: pre-process, country of origin:
post-process, supplier code, supplier name, our part No. and update date can be entered. If "Reference" of each item is clicked on with a mouse, it searches for and displays each item, and so a desired item can be easily entered. The above conditions can be cleared by clicking on clear button 8223 with a mouse. If search button 8222 is clicked on with a mouse, it searches for parts information meeting the above conditions, proceeds to step SHC3 in FIG. 121 and displays the parts information list screen. If display of predetermined parts information details is instructed on the parts information list screen, it proceeds to step SHC5 in FIG. 121 and displays the parts information details screen shown in FIG. 125.

FIG. 125 shows the parts information details screen of step SHC5 shown in FIG. 121. Displays areas 8111 to 8114 and buttons 8121 to 8124 are the same as above. Parts information details displays area 8231 displays title, type name, maker, business category, function classification, information No., supplier name, supplier code, administrator division, clerk name, clerk code, country of origin: pre-process, country of origin: post-process, controlled substance, product state, maintenance schedule, abolition schedule, sample schedule, specification schedule, introduction sentences, our part No., our size and package.

FIG. 126 shows the substitutive parts information search screen of step SHC6 shown in FIG. 121. Displays in display areas 8111 to 8114 and buttons 8121 to 8124 are the same as above. In search condition input area 8241, type name for substitutive search, function classification code for substitutive search and maker name for substitutive search can be entered. The above conditions can be cleared by clicking on clear button 8244 with a mouse. If search button 8243 is clicked on with a mouse, it searches for a substitutive part meeting the above input conditions and proceeds to step SHC7 to display the substitutive parts information list screen shown in FIG. 128.

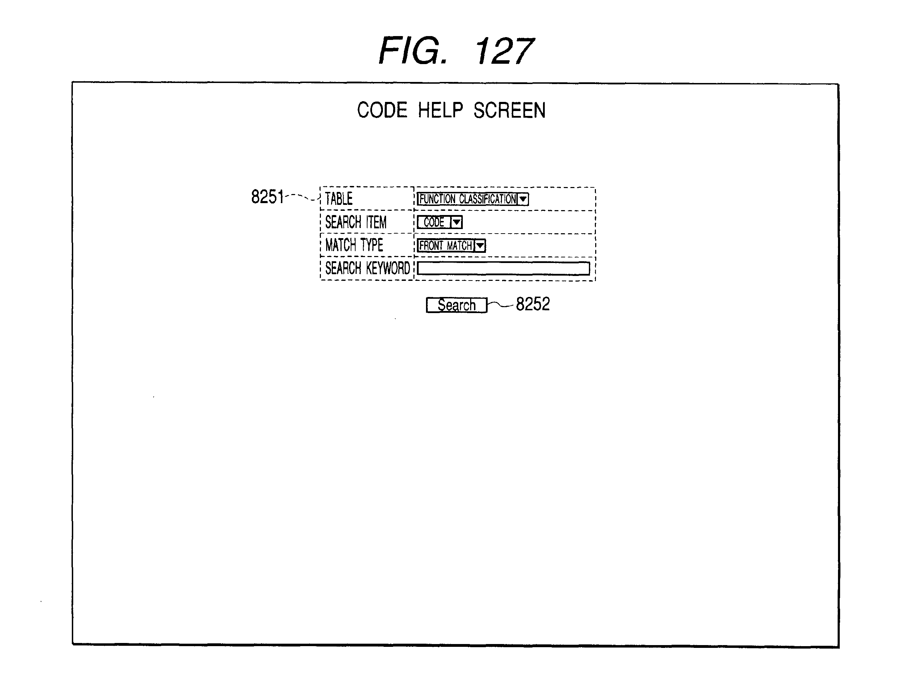

Moreover, if "Reference" area 8242 of the above function classification code is clicked on with a mouse, it proceeds to step SHC16 in FIG. 121 and displays the code help screen shown in FIG. 127. In condition input area 8251, table, search item, match type and search keyword can be entered. If search button 8252 is clicked on with a mouse thereafter, it searches for and displays a function classification code and so on meeting the above input conditions. Thus, a function classification code and so on can be more easily entered. Items other than a function classification code can also be searched for.

FIG. 128 shows the substitutive parts information list screen of step SHC7 shown in FIG. 121. Displays in display areas 8111 to 8114 and buttons 8121 to 8124 are the same as above. List area 8266 shows a list of substitutive parts information meeting the above input conditions. To be more specific, list area 8266 shows update date, search type name, function classification, maker, substitutive part type name and maker and so on. If previous list button 8261 is clicked on with a mouse, it displays a list preceding the currently displayed substitutive parts information. If a first number of substitutive parts information to be displayed is entered in first number area 8262 and button 8263 is clicked on with a mouse, it displays substitutive parts information from that first number. If sort item 8264 is entered and sort button 8265 is clicked on with a mouse, it displays substitutive parts information sorted in that order of items. If any substitutive parts information button 8267 is clicked on with a mouse, it proceeds to step SHC8 in FIG. 121 and displays the substitutive parts information details screen that is the same as FIG. 125. The substitutive parts information details screen is the same as the details screen in FIG. 125. Also, if search screen button 8268 is clicked on with a mouse, it returns to step SHC6 in FIG. 121 and displays the substitutive parts information search screen in FIG. 126. A user can search a more advantageous part instead of a currently used one.

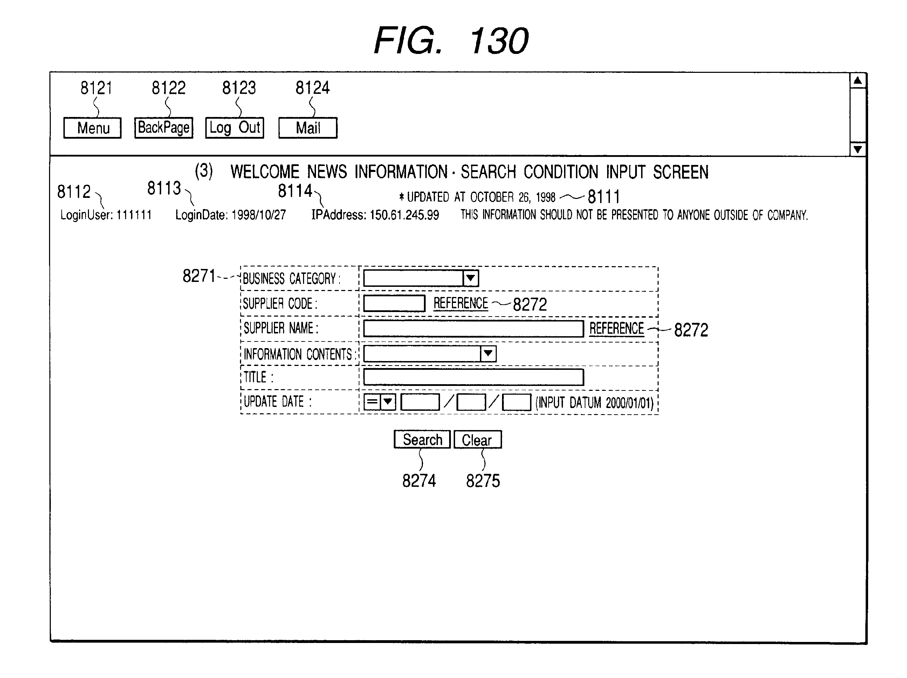

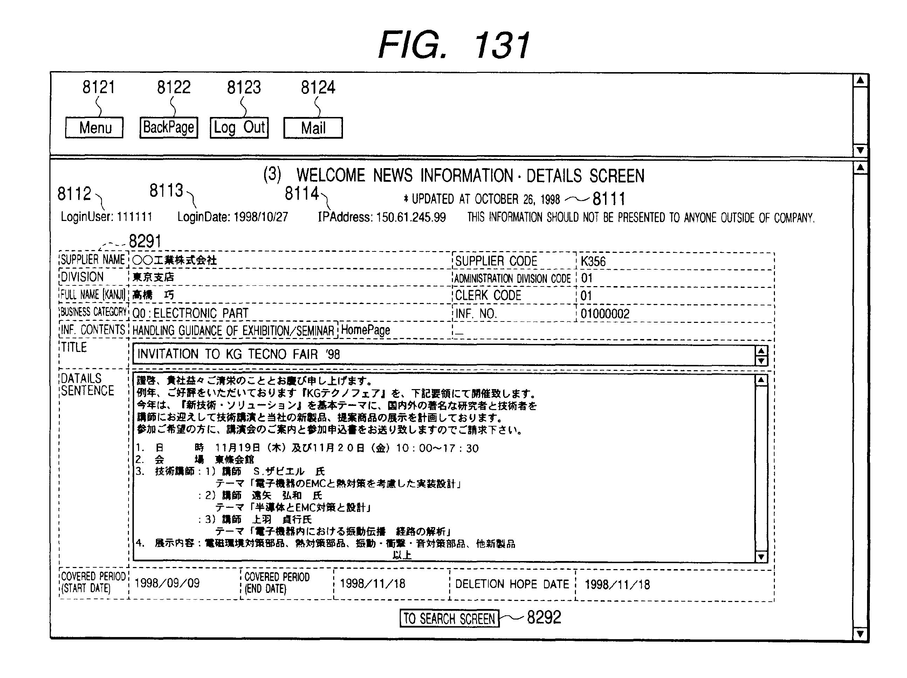

FIG. 129 shows the welcome news information list screen of step SHC9 shown in FIG. 121. Displays in display areas 8111 to 8114 and buttons 8121 to 8124 are the same as above. List area 8281 displays a list of welcome news information. To be more specific, list area 8281 displays welcome news information No., clerk name, update date, business category, title, supplier, information contents, home page address, covered period (starting date) and covered period (ending date). If sort item 8284 is entered and sort button 8285 is clicked on with a mouse, it displays welcome news information sorted in that order of items. If each welcome news information clerk area 8283 is clicked on with a mouse, it displays a contact of the clerk in charge of that supplier. In addition, if each welcome news information No. button 8282 is clicked on with a mouse, it proceeds to step SHC11 in FIG. 121 and displays the welcome news information details screen shown in FIG. 131. Furthermore, if search screen button 8286 is clicked on with a mouse, it proceeds to step SHC10 in FIG. 121 and displays the welcome news information search screen in FIG. 130.

FIG. 130 shows the welcome news information list screen of step SHC10 shown in FIG. 121. Displays in display areas 8111 to 8114 and buttons 8121 to 8124 are the same as above. In condition input area 8271, business category, supplier code, supplier name, information contents, title and update date can be entered. If "Reference" area 8272 of each item is clicked on with a mouse, it proceeds to step SHC16 in FIG. 121 and displays the code help screen (FIG. 127). In addition, the above conditions can be cleared by clicking on clear button 8275 with a mouse. After entering conditions, if search button 8274 is clicked on with a mouse, it searches for welcome news information meeting the above input conditions, proceeds to step SHC9 in FIG. 121 and displays the welcome news information list screen in FIG. 129.

FIG. 131 shows the welcome news information details screen of step SHC11 shown in FIG. 121. Displays in display areas 8111 to 8114 and buttons 8121 to 8124 are the same as above. Details display area 8291 displays details of predetermined welcome news information specified above. To be more specific, details display area 8291 displays supplier name, supplier code, position name, administrator division code, clerk name, clerk code, business category, information number, information contents, home page address, title, detailed sentences, covered period (starting date), covered period (ending date) and desirable deletion date. In principle, supplier sales system 9 deletes the welcome news information from DB 9a on the desirable deletion date. If search screen button 8292 is clicked on with a mouse, it returns to step SHC10 in FIG. 121 and displays the welcome news information search screen in FIG. 130.

FIG. 132 shows the supplier clerk search screen of step SHC12 shown in FIG. 121. Displays in display areas 8111 to 8114 and buttons 8121 to 8124 are the same as above. In condition input area 8301, business category, supplier code, supplier name, handling maker code and handling maker name can be entered. If "Reference" area 8302 of each item is clicked on with a mouse, it proceeds to step SHC16 in FIG. 121 and displays the code help screen (FIG. 127). In addition, the above conditions can be cleared by clicking on clear button 8304 with a mouse. Furthermore, if search button 8303 is clicked on with a mouse, it searches for supplier clerk information meeting the above input conditions, proceeds to step SHC13 in FIG. 121 and displays the supplier clerk list screen shown in FIG. 133.

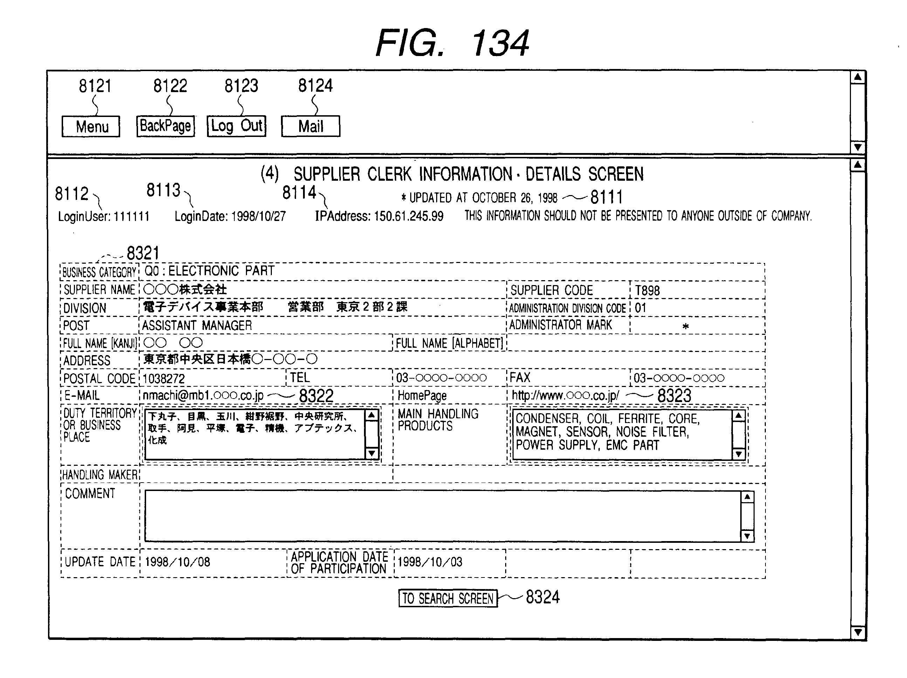

FIG. 133 shows the supplier clerk list screen of step SHC13 shown in FIG. 121. Displays in display areas 8111 to 8114 and buttons 8121 to 8124 are the same as above. List area 8311 displays a list of supplier clerk information meeting the above input conditions. To be more specific, list area 8311 displays supplier clerk information No., update date, supplier code, supplier name, business category, clerk name, tel. No., e-mail address and administrator mark. If each clerk information e-mail address area 8313 is clicked on with a mouse, it proceeds to step SHC17 in FIG. 121 and mail can be transmitted to that e-mail address. Moreover, if each clerk information No. button 8312 is clicked on with a mouse, it proceeds to step SHC14 in FIG. 121 and displays the supplier clerk details screen in FIG. 134. Also, if search screen button 8314 is clicked on with a mouse, it returns to step SHC12 in FIG. 121 and displays the supplier clerk search screen in FIG. 132.

FIG. 134 shows the supplier clerk details screen of step SHC14 shown in FIG. 121. Displays in display areas 8111 to 8114 and buttons 8121 to 8124 are the same as above. Details display area 8321 displays details of predetermined supplier clerk information specified above. To be more specific, details display area 8321 displays business category, supplier name, supplier code, position name, administrator department code, clerk title, administrator mark, clerk name, address, zip code, tel. No., fax No., e-mail address, home page address, territory or office, major handling product, handling maker, comments, update date and date of application for participation. If e-mail address area 8322 is clicked on with a mouse, it proceeds to step SHC17 in FIG. 121 and mail can be transmitted to that e-mail address. Moreover, if home page address area 8323 is clicked on with a mouse, it proceeds to step SHC15 in FIG. 121 and displays the home page of that home page address. Also, if search screen button 8324 is clicked on with a mouse, it returns to step SHC12 in FIG. 121 and displays the supplier clerk search screen in FIG. 132.

As above, a supplier can actively perform sales to supplier sales system 9. An employee of the company having supplier sales system 9 can view sales information from the supplier without being limited by time and distance. It is also possible to exploit a valuable information source in a significant manner by sharing sales information from the supplier. The employee of the company can also know the latest trends and information without visiting a supplier, and thus advance action can be taken. Supplier sales system 9 also supports sales activities of the supplier, and the supplier can register and send sales information so that it will be collectively provided to all the employees.

In addition, when information that production of a certain part will be stopped is received, if the information is provided to a database for creating an engineering drawing of a design department in the company, that design department can delete the part from design objects so that it will not be used in future.

Moreover, the above sales information can be applied not only to parts information but also to material information and product information. Furthermore, while the above sets forth an example of indicating a home page address of a supplier which displays its home page if that address is specified, it is also possible, if the supplier's home page has an applicable product guide or the like, to indicate the home page address so that the home page of the product guide or the like indicated by the address will be displayed when that address is specified.

It is also possible to register information via the Internet, dividing the suppliers into those which have dealings with the company (contracted) and those which have no dealing yet. In addition, it is possible to arrange it so that an addressee in-house (by department, etc.) can be specified on registration. It also is possible, via the Internet in this case, to register, change and delete a supplier card information system, a supplier map system, part or product type name, maker information, environmental information and so on.

### [10. Bulletin board mail system]

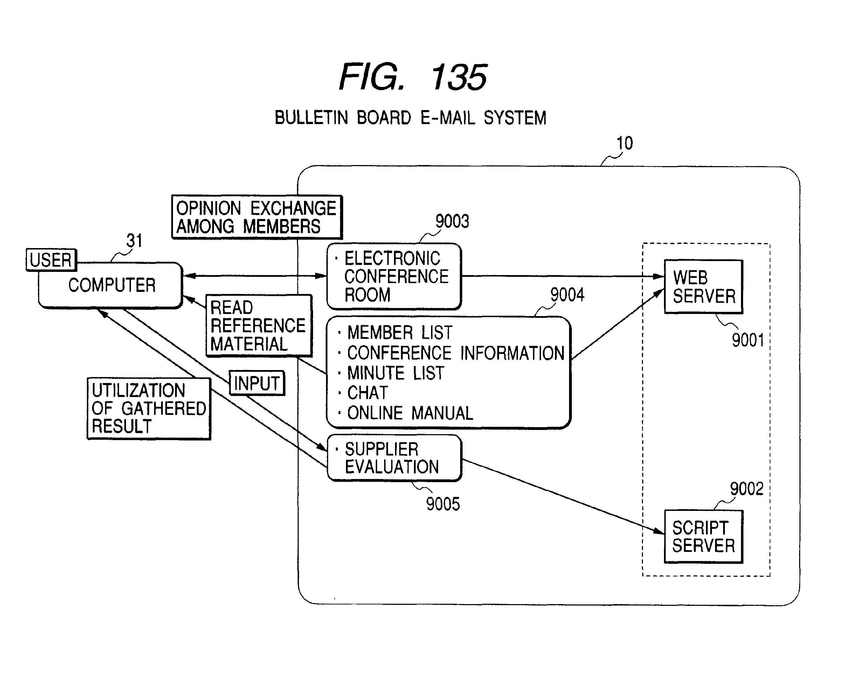

FIG. 135 is a block diagram showing configuration of bulletin board mail system 10 illustrated in FIG. 1. Bulletin board mail system 10 has Web server 9001 and script server 9002, and can be divided into a bulletin board information providing system and a supplier evaluation system. Web server 9001 stores a computer program and operates the bulletin board information providing system according to the computer program so as to provide first service 9003 and second service 9004. First service 9003 has a computer conference service. Second service 9004 has services such as a member list, conferences information, minutes list, free talk and online manuals. First service 9003 and second service 9004 are bulletin board information on parts or materials. Script server 9002 stores a computer program and operates the supplier evaluation system according to the computer program so as to provide third service 9005. Third service 9005 has a supplier evaluation service.

User computer 31 can, by accessing Web server 9001, exchange opinions with other members via first service (computer conference) 9003 and view various data via second service (member list, etc.) 9004. Also, each base point user computer 31 inputs evaluation score of each supplier on a supplier evaluation sheet and sends it to script server 9002. On receipt of supplier evaluation sheets from the base points, script server 9002 automatically totals the evaluation score inputted on the supplier evaluation sheets of all the base points. User computer 31 can view and exploit evaluation results of each supplier by receiving them from script server 9002 by mail and accessing script server 9002.

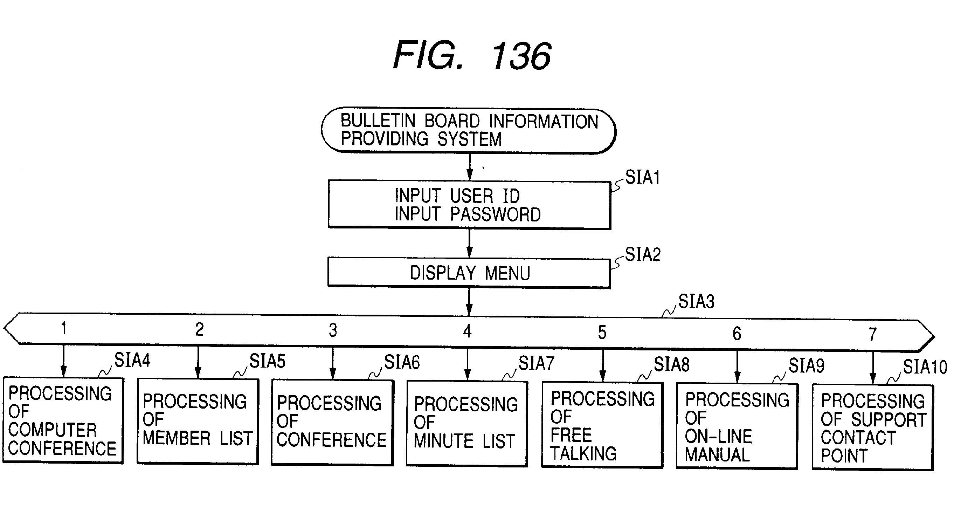

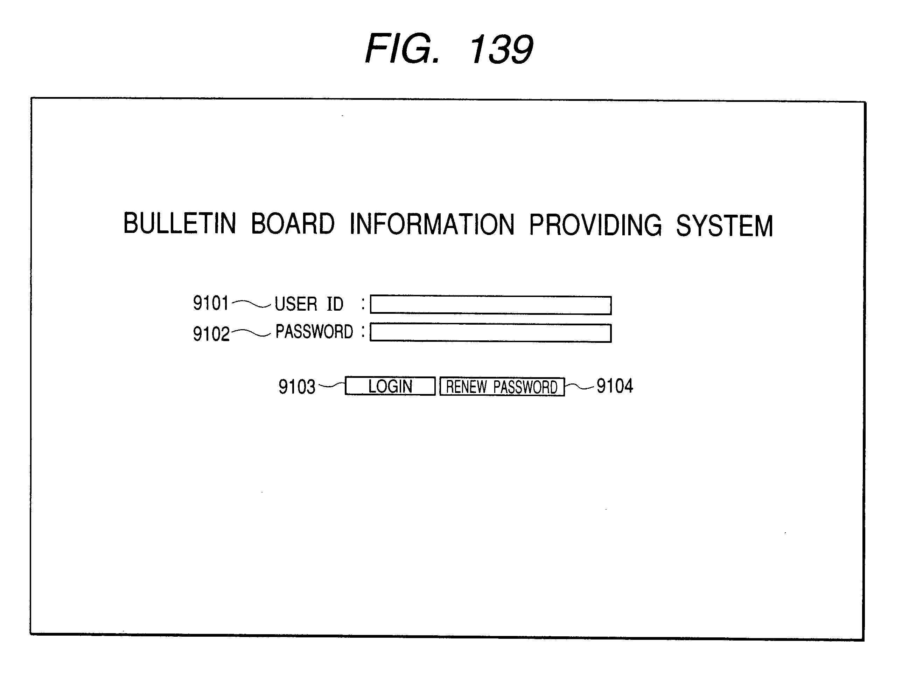

FIG. 136 is a flowchart showing processing of the bulletin board information providing system (Web server 9001). If user computer 31 (FIG. 135) accesses Web server 9001 (board information providing system), the bulletin board information providing system performs the following process. Step SIA1 displays the log-in screen shown in FIG. 139 on user computer 31 waiting for input of a user ID and input of a password. A user can enter a user ID in area 9101 in FIG. 139 and a password in area 9102. Security can be enhanced and a log-in by an illicit person can be prevented by having user ID 9101 and password 9102 entered.

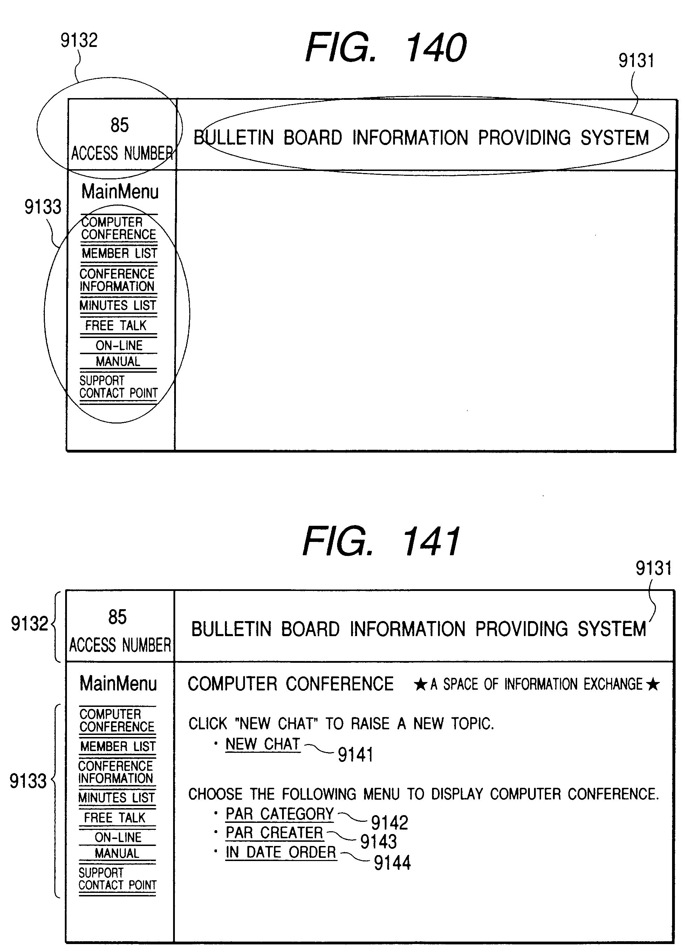

A user can change a password for security protection by clicking on password change button 9104 with a mouse. If a user clicks on log-in button 9103 with a mouse, and if the entered user ID and password are correct, the user is logged in and proceeds to step SIA2. Step SIA2 displays the menu screen shown in FIG. 140.

FIG. 140 shows the menu screen of step SIA2 shown in FIG. 136. Display area 9131 shows a title. Display area 9132 shows the access number. Menu area 9133 displays, as selection menu items, "1. Computer conference", "2. Member list", "3. Conferences information", "4. Minutes list", "5. Free talk", "6. Online manual" and "7. Support contact point". If each number is selected, it proceeds to one of step SIA4 to SIA10 via the determination step of step SIA3.

If No. 1 is selected, it proceeds to step SIA4 and performs a computer conference process. The computer conference process is a bulletin board system for the purpose of exchanging information, a user can freely write on it and all the other users can see the contents of the writing. If No. 2 is selected, it proceeds to step SIA5 and performs a member list process. The member list process displays a member list of each organization. If No. 3 is selected, it proceeds to step SIA6 and performs a conferences information process. The conferences information process provides bulletin board information on conferences. If No. 4 is selected, it proceeds to step SIA7 and performs a minutes list process. The minutes list process stores minutes of conferences so that a user can view them. If No. 5 is selected, it proceeds to step SIA8 and performs a free talk process. The free talk process is a bulletin board system for the purpose of exchanging information freely, and a user can freely write on it and all the other users can share the contents of the writing. If No. 6 is selected, it proceeds to step SIA9 and performs an online manual process. The online manual process provides an instruction manual on an operation method of the bulletin board information providing system. If No. 7 is selected, it proceeds to step SIA10 and performs a support contact point process. The support contact point process informs the user of how to contact a support contact point of the bulletin board information providing system so that an inquiry by e-mail to the support contact point will be possible.

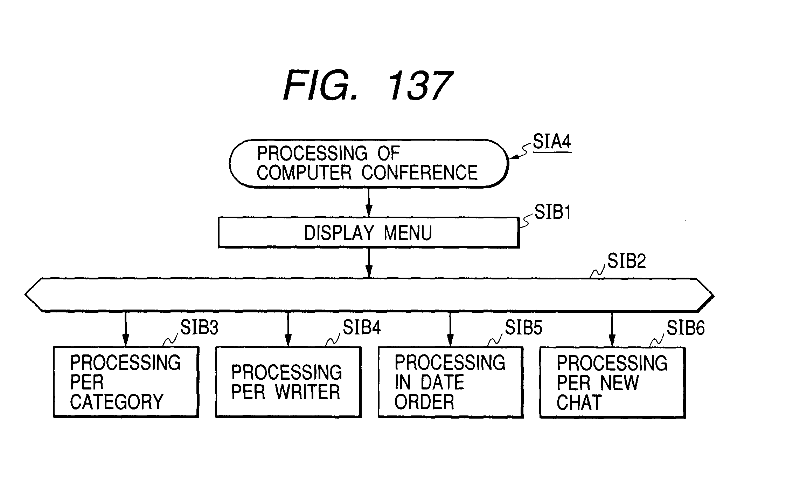

FIG. 137 is a flowchart showing processing of a computer conference of step SIA4 shown in FIG. 136. Step SIB1 displays the menu screen of the computer conference shown in FIG. 141. Displays in display areas 9131 to 9133 are the same as above. Selection menu items of the computer conference display new chat 9141, per category 9142, per creator 9143 and date order 9144. If each item is selected, it proceeds to one of the steps SIB3 to SIB6 via the determination step of step SIB2. If per category 9142 is selected, it proceeds to step SIB3 to perform processing per category. If processing per creator 9143 is selected, it proceeds to step SIB4 to perform processing per creator. If date order 9144 is selected, it proceeds to step SIB5 to perform processing in date order. If new chat 9141 is selected, it proceeds to step SIB6 to perform processing per new chat.

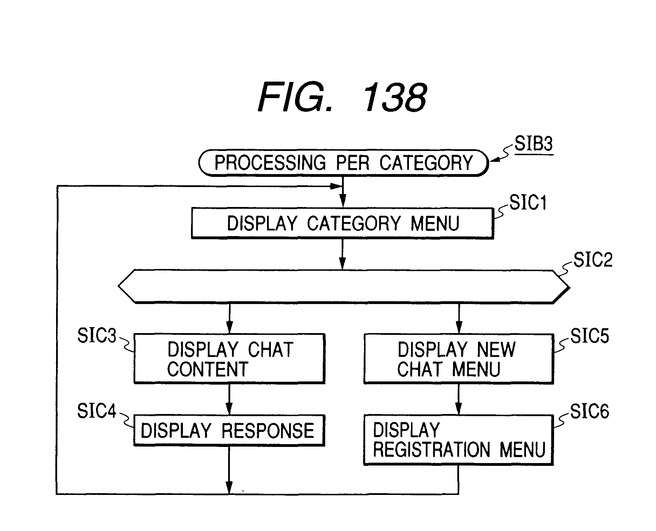

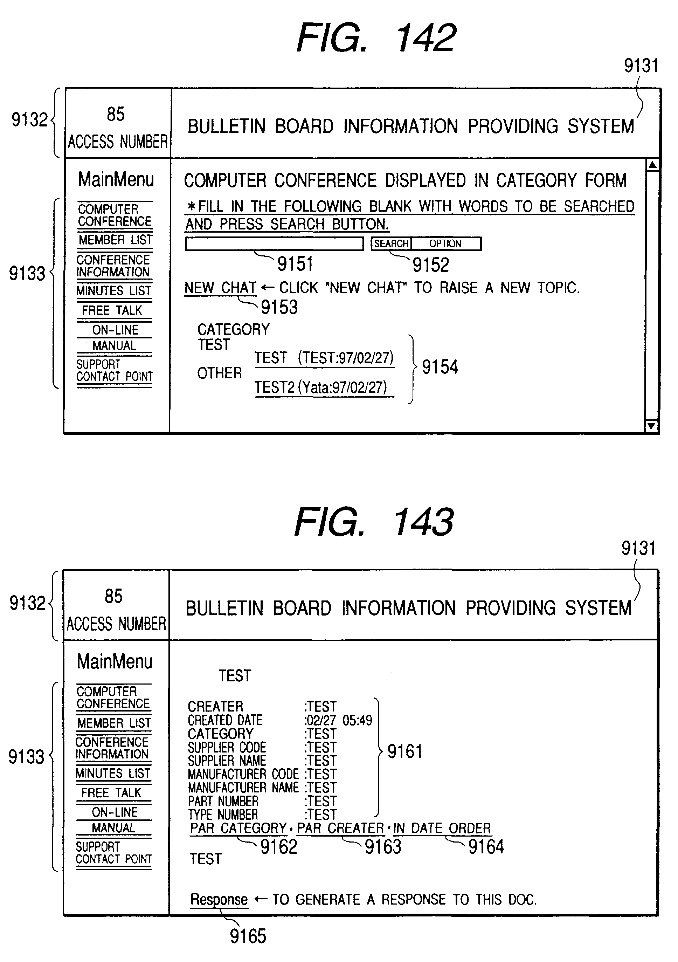

FIG. 138 is a flowchart showing details of processing per category of step SIB3 shown in FIG. 137. Step SIC1 displays the computer conference per category screen shown in FIG. 142. Displays in display areas 9131 to 9133 are the same as above. Per category area 9154 lists and displays computer conference items classified per category. If words to be searched are entered in input box 9151 and search button 9152 is clicked on with a mouse, it searches for any computer conference having a document with the entered words and displays it in per category area 9154. If a desired computer conference item area in per category area 9154 is clicked on with a mouse, it proceeds to step SIC3 via the determination step of step SIC2 in FIG. 138, and displays the chat contents screen shown in FIG. 143.

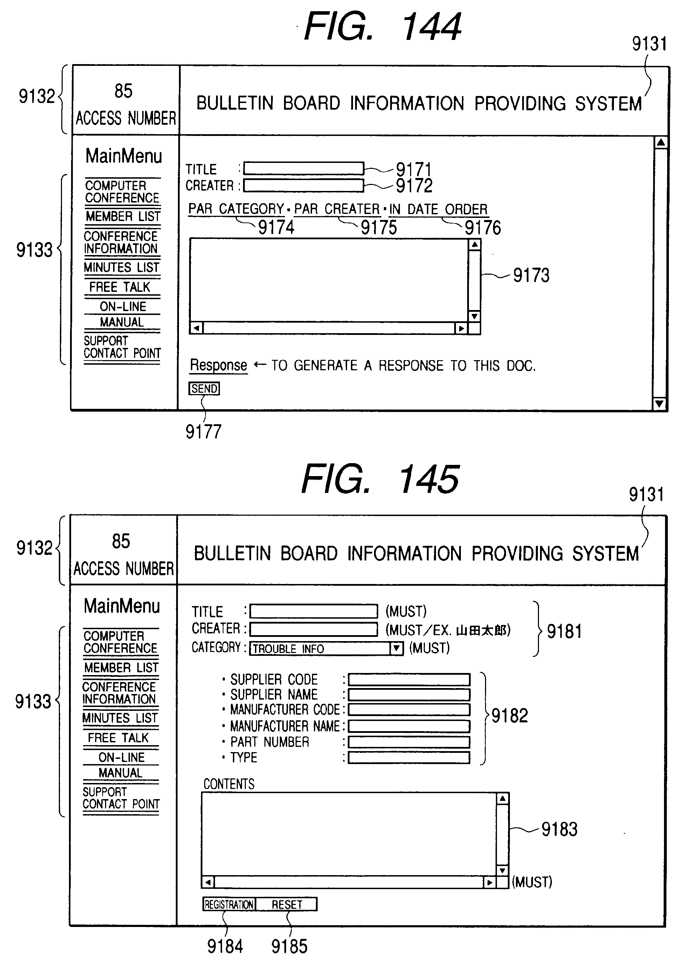

FIG. 143 shows the chat contents screen of step SIC3 shown in FIG. 138. Displays in display areas 9131 to 9133 are the same as above. Chat contents area 9161 displays chat contents in the computer conference selected above. If per category area 9162 is clicked on with a mouse, it returns to step SIC1 in FIG. 138 and displays the per category screen in FIG. 142.
Also, if per creator area 9163 is clicked on with a mouse, it proceeds to step SIB4 in FIG. 137. Moreover, if date order area 9164 is clicked on with a mouse, it proceeds to step SIB5 in FIG. 137. In addition, when responding to a document of this computer conference, if response area 9165 is clicked on with a mouse, it proceeds to step SIC4 in FIG. 138 and displays the response screen shown in FIG. 144.

FIG. 144 shows the response screen of step SIC4 shown in FIG. 138. Displays in display areas 9131 to 9133 are the same as above. On the response screen, title 9171, creator 9172 and response contents 9173 can be entered. After entry, if send button 9177 is clicked on with a mouse, it returns (transmits) the entered contents. Moreover, if per creator area 9174 is clicked on with a mouse, it returns to step SIC1 in FIG. 138 and displays the per category screen in FIG. 142. Furthermore, if per creator area 9175 is clicked on with a mouse, it proceeds to step SIB4 in FIG. 137. In addition, if date order area 9176 is clicked on with a mouse, it proceeds to step SIBS in FIG. 137.

On per category screen shown in FIG. 142, if new chat area 9153 is clicked on with a mouse, it proceeds to step SIC5 via step SIC2 in FIG. 138, and displays the new chat screen shown in FIG. 145. It also displays the new chat screen shown in FIG. 145 in step SIB6 in FIG. 137.

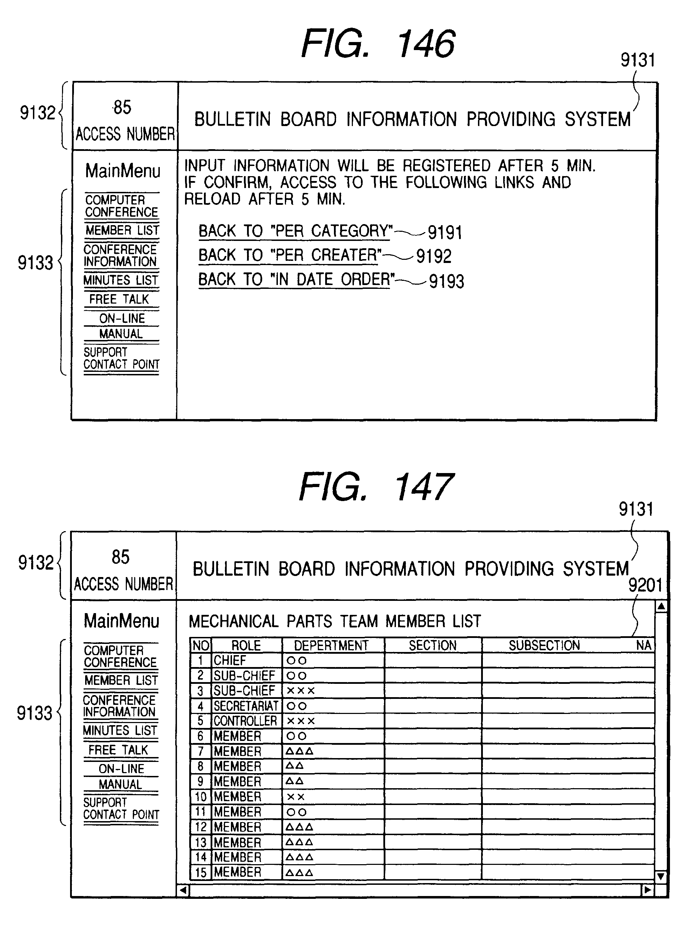

FIG. 145 shows the new chat screen. Displays in display areas 9131 to 9133 are the same as above. On the new chat screen, must input items 9181, input item 9182 and chat contents 9183 can be entered. In must input items 9181, title, creator and category can be entered. In input items 9182, supplier code, supplier name, maker code, maker name, part No. and type name can be entered. If reset button 9185 is clicked on with a mouse, the entered contents can be reset. Moreover, if registration button 9184 is clicked on with a mouse, it proceeds to step SIC6 in FIG. 138 and displays the registration screen shown in FIG. 146.

FIG. 146 shows the registration screen of step SIC6 shown in FIG. 138. Displays in display areas 9131 to 9133 are the same as above. The above registered chat contents are transmitted, and are registered and reflected in a computer conference approximately five minutes later. If reread approximately five minutes thereafter, the transmitted contents will be displayed on the bulletin board. If per category area 9191 is clicked on with a mouse, it returns to step SIC1 in FIG. 138 and displays the per category screen in FIG. 142. Moreover, if per creator area 9192 is clicked on with a mouse, it proceeds to step SIB4 in FIG. 137. In addition, if date order area 9193 is clicked on with a mouse, it proceeds to step SIB5 in FIG. 137.

While details of processing per category of step SIB3 shown in FIG. 137 have been described above, processing per creator of step SIB4 and processing in date order of step SIB5 are the same as the above processing per category except that computer conferences are displayed per creator and in date order.

FIG. 147 shows the member list screen displayed in processing of a member list of step SIA5 shown in FIG. 136. Displays in display areas 9131 to 9133 are the same as above. The member list screen displays each organization member list 9201. For instance, member list 9201 indicates member No., title, office, department, section, name and so on.

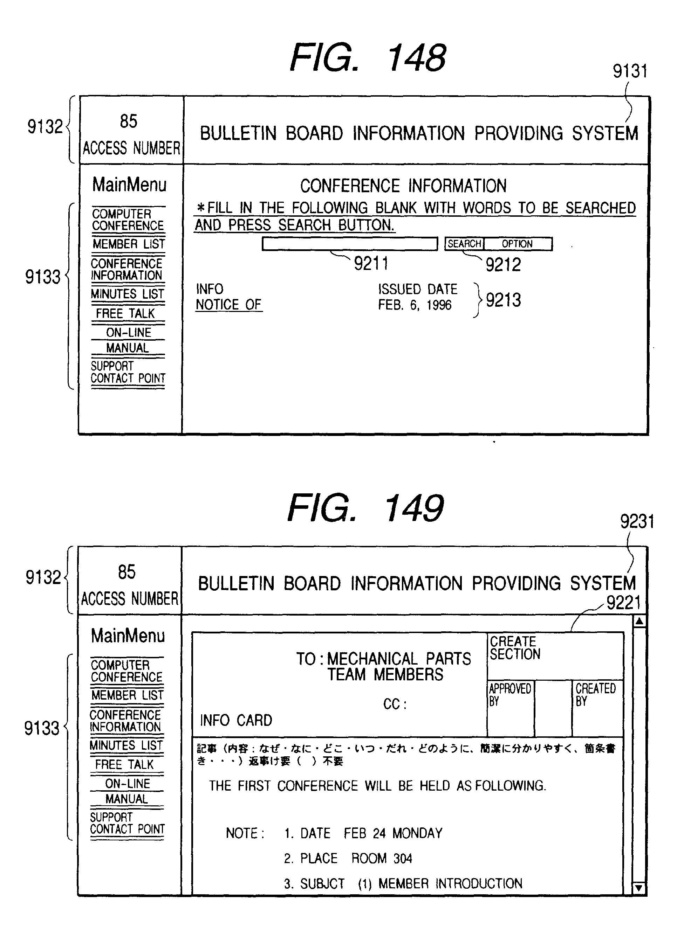

FIG. 148 shows conference information screen displayed in processing of conference information of step SIA6 shown in FIG. 136. Displays in display areas 9131 to 9133 are the same as above. Conference information area 9213 lists and displays conference information items. To be more specific, conference information area 9213 displays notes and issuance date of each item. If words to be searched are entered in input box 9211 and search button 9212 is clicked on with a mouse, it searches for any conference information having a document with the entered words and displays it in conference information area 9213.
If a desired conference information item in conference information area 9213 is clicked on with a mouse, it displays the conference information contents screen shown in FIG. 149.

FIG. 149 shows the conference information contents screen. Displays in display areas 9131 to 9133 are the same as above. Conference information 9221 displays conference information contents such as date and time, place, agenda and so on of a conference. This conference information 9221 can also be printed.

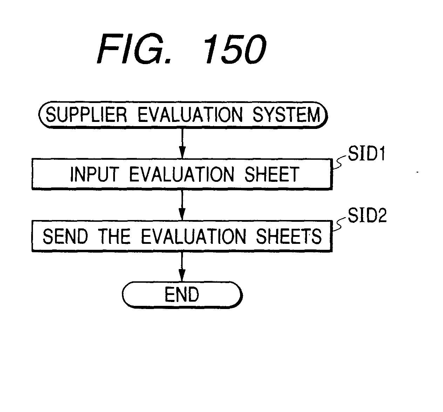

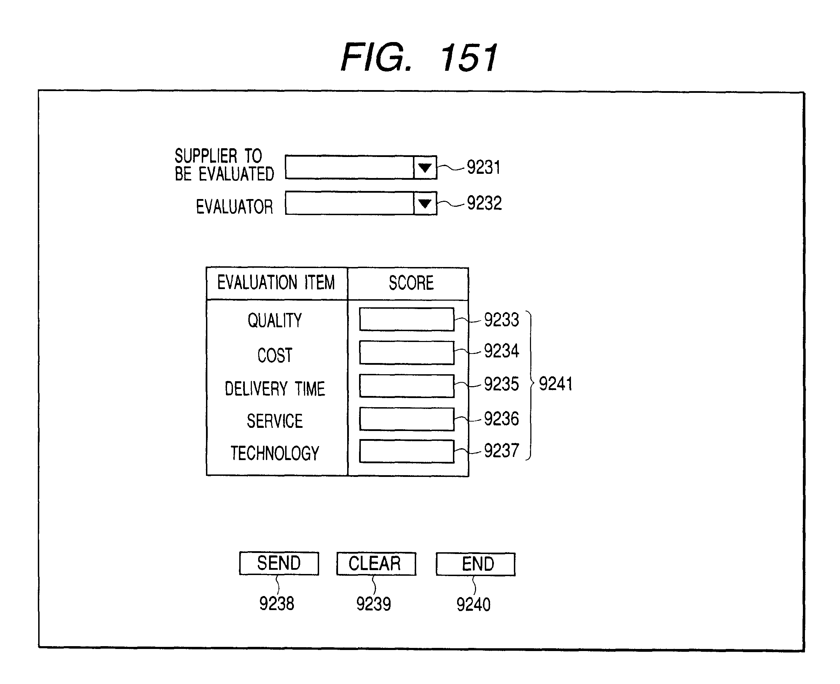

FIG. 150 is a flowchart showing processing of a supplier evaluation system. In step SID1, if a user requests input of supplier evaluation sheet, the evaluation sheet input screen shown in FIG. 151 is displayed on user computer 31. The user enters supplier to be evaluated 9231, evaluator 9232 and supplier evaluation score 9241. In evaluation score 9241, to be more specific, quality evaluation score 9233, cost evaluation score 9234, delivery evaluation score 9235, service (sales ability) evaluation score 9236 and technology evaluation 9237 are entered. A service score is for instance, whether or not it can cope with design change of a drawing, or evaluation of service in the case it can cope with the change. Evaluation scores 9233 to 9237 are evaluated on a scale of 10 respectively, for instance. Also, the evaluator has only to check the evaluation items in addition to entering evaluation scores, and evaluation scores can also be automatically given based on these check items. If send button 9238 is clicked on with a mouse, it proceeds to step SID2 in FIG. 150 and sends an evaluation sheet to script server 9002 (FIG. 135). Moreover, the above input can be cleared by clicking on clear button 9239 with a mouse. Furthermore, if end button 9240 is clicked on with a mouse, it terminates the process.

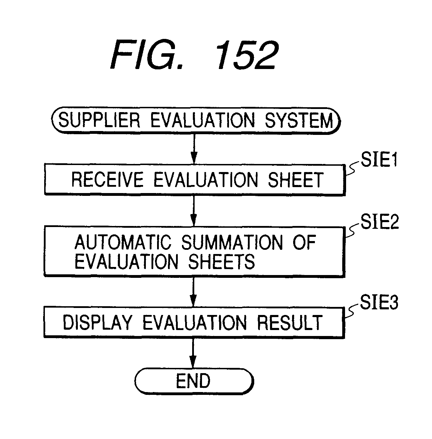

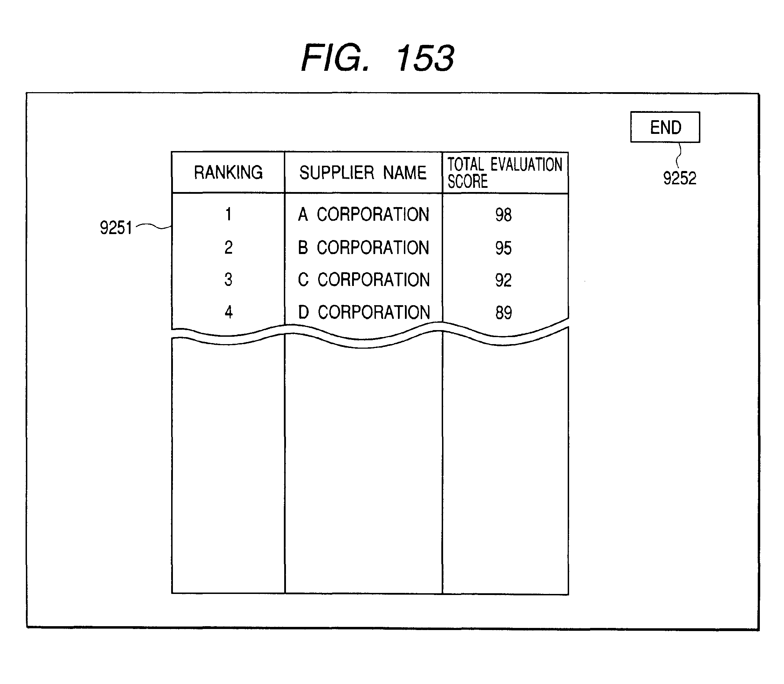

FIG. 152 is a flowchart showing processing of the supplier evaluation system performed by script server 9002 (FIG. 135). In step SIE1, script server 9002 receives the above evaluation sheet from each base point user computer 31. Step SIE2 automatically totals evaluation sheets received from each base point, calculates evaluation score per supplier, and ranks the suppliers. Step SIE3 displays the evaluation results screen shown in FIG. 153 on user computer 31 according to requests from users. Evaluation results table 9251 displays supplier ranking, supplier name and total evaluation score. A user can know total evaluation score of each supplier including other base points and consider future measures. Moreover, the above evaluation results 9251 can also be transmitted to user computer 31 by e-mail.

As above, the bulletin board information providing system provides a user with bulletin board information on parts or materials including computer conference, member list, conferences information, minutes list and free talk so that the user can share various information and exchange opinions to promptly acquire various information. Moreover, it can also be arranged so that, if a user logs in to the bulletin board information providing system, the user accesses different computer conference, member list, conferences information, minutes list, free talk, online manual and support contact point for each organization that the user belongs to or for each kind of parts or materials handled by the user. For instance, they can be divided into electronic parts and mechanical parts.

The supplier evaluation system can perform objective evaluation of suppliers by totaling evaluation of suppliers at each base point, calculating total evaluation score per supplier and ranking them. Each base point user can know total evaluation including evaluation of each supplier at other base points. That evaluation becomes an important reference in future dealings with the suppliers.

As above, procurement information system 13 can select and procure worldwide parts and materials promptly and efficiently. While large companies may have their offices purchase parts or materials from different or the same suppliers at different prices, procurement information system 13 can acquire procurement information of the offices and allows parts or materials to be purchased at as low prices as possible based on that procurement information. It is also possible, by collectively receiving and placing orders of the offices, to purchase parts or materials in large quantity at low prices.

Procurement system 13 can meet the following requirements in a development department of a company. (1) To know parts and materials used by other offices. (2) To select most suitable parts and materials from wide-ranging information. (3) To acquire information on substitutive parts. (4) To acquire new product information early.

Also, procurement system 13 can meet the following requirements in a procurement department of a company. (1) To know purchase unit prices and suppliers of the offices as to the same parts and materials. (2) To know information on substitutive parts promptly. (3) To know ability (produced types and quantity, for instance) and situation (including social trends inclusive of market conditions) of a supplier. (4) To know purchase situation of the entire group of the company.

What is implemented by supplying a program code of software for implementing the functions of the above embodiments to a system and operating the above various devices according to the program stored in a computer (CPU or MPU) of the system is also included in the category of the present invention.

In this case, the program code itself of the above software implements the functions of the above-mentioned embodiments, and thus the program code itself and the means of supplying the program code to the computer, that is, a record medium storing such a program code for instance comprise the present invention. For a record medium to store such a program code, a floppy disk, a hard disk, an optical disk, a magneto-optical disk, a CD-ROM, a magnetic tape, a nonvolatile memory card, a ROM and so on can be used, for instance.

Any of the above embodiments shows merely an example of crystallizations in implementing the present invention, which should not lead to interpretation of technical scope of the present invention in a limited manner. To be more specific, the present invention can be implemented in various forms without deviating from its idea or its major characteristics.

As described above, the present invention allows procurement information on parts, materials and so on to be acquired promptly and easily so that they can be selected and procured promptly and efficiently. Large companies can acquire procurement information of their offices and purchase parts or materials at as low prices as possible based on that procurement information. It is also possible, by collectively receiving and placing orders of the offices, to purchase parts or materials in large quantity at low prices.

## Claims

1. An information providing system, comprising:
a database for storing objects and map information linked with each other; and
display control means for displaying the objects and the map information stored in said database on display means.

2. An information providing system system according to claim 1, further comprising:
search condition input means for inputting a search condition; and
search means for searching for objects in said database based on the condition input by said search condition input means, wherein
said display control means displays the object searched for by said search means and the map information.

3. An information providing system according to claim 1, wherein
said display control means displays the objects and the map information in different areas.

4. An information providing system according to claim 3, wherein
said display control means displays the number of objects.

5. An information providing system according to claim 2, wherein
said search condition input means inputs a position and a distance on the map as a search condition.

6. An information providing system according to claim 2, wherein
said search condition input means inputs equipment of an object as a search condition.

7. An information providing system according to claim 2, wherein:
said search condition input means inputs a starting point and a destination point as a search condition; and
said display control means displays a path from the starting point to the destination point on the map.

8. An information providing system according to claim 2, wherein:
said search condition input means inputs a starting point and a destination point as a search condition; and
said display control means displays at least any of a distance and a required time from the starting point to the destination point.

9. An information providing method, comprising the steps of:
storing objects and map information linked with each other; and
displaying the objects and the map information stored in said database on display means.

10. An information providing method according to claim 9, further comprising:
inputting a search condition; and
searching for objects in said database based on the condition input in said search condition inputting step, wherein
said displaying step displays the object searched for in said searching step and the map information.

11. An information providing method according to claim 9, wherein
said displaying step displays the objects and the map information in different areas.

12. An information providing method according to claim 11, wherein
said displaying step displays the number of objects.

13. An information providing method according to claim 10, wherein
said search condition inputting step inputs a position and a distance on the map as a search condition.

14. An information providing method according to claim 10, wherein
said search condition inputting step inputs equipment of an object as a search condition.

15. An information providing method according to claim 10, wherein:
said search condition inputting step inputs a starting point and a destination point as a search condition; and
said displaying step displays a path from the starting point to the destination point on the map.

16. An information providing method according to claim 10, wherein:
said search condition inputting step inputs a starting point and a destination point as s search condition; and
said displaying step displays at least any of a distance and a required time from the starting point to the destination point.

17. An information providing system, comprising:
a database for storing sales record information;
search means for searching for the sales record information; and
display control means for displaying the sales record information searched for by said search means on display means.

18. An information providing system according to claim 17, further comprising
collection means for obtaining a collected sales record amount based on the sales record information searched for by said search means, wherein
said display control means displays the collected sales record amount.

19. An information providing system according to claim 18, wherein
said collection means obtains the collected sales record amount every month.

20. An information providing system according to claim 18, wherein
said collection means obtains the collected sales record amount every year.

21. An information providing system according to claim 18, wherein
said collection means obtains the collected sales record amount biannually.

22. An information providing system according to claim 21, wherein
said display control means displays the biannually collected sales record amount in two rows.

23. An information providing system according to claim 18, wherein
said collection means obtains a collected amount for each sales item.

24. An information providing system according to claim 18, wherein
said collection means obtains a collected amount for each sales window.

25. An information providing system according to claim 18, wherein
said collection means obtains a collected amount for each supplier.

26. An information providing system according to claim 17, wherein
said search means searches for information based on a sales item as a condition.

27. An information providing system according to claim 17, wherein
said search means searches for information based on a supplier as a condition.

28. An information providing system according to claim 17, wherein
said search means searches for information based on a sales window as a condition.

29. An information providing method, comprising the steps of:
storing sales record information in a database;
searching for the sales record information; and
displaying the sales record information searched for in said searching step on display means.

30. An information providing method according to claim 29, further comprising the step of
collecting a collected sales record amount based on the sales record information searched for by said searching step, wherein
said displaying step displays the collected sales record amount.

31. An information providing method according to claim 30, wherein
said collecting step obtains the collected sales record amount every month.

32. An information providing method according to claim 30, wherein
said collecting step obtains the collected sales record amount every year.

33. An information providing method according to claim 30, wherein
said collecting step obtains the collected sales record amount biannually.

34. An information providing method according to claim 33, wherein
said displaying step displays the biannually collected sales record amount in two rows.

35. An information providing method according to claim 30, wherein
said collecting step obtains a collected amount for each sales item.

36. An information providing method according to claim 30, wherein
said collecting step obtains a collected amount for each sales window.

37. An information providing method according to claim 30, wherein
said collecting step obtains a collected amount for each supplier.

38. An information providing method according to claim 29, wherein
said search step searches for information based on a sales item as a condition.

39. An information providing method according to claim 29, wherein
said searching step searches for information based on a supplier as a condition.

40. An information providing method according to claim 29, wherein
said searching step searches for information based on a sales window as a condition.

41. An information providing system, comprising:
a database for storing supplier's sales information provided through a network; and
display control means for displaying the supplier's sales information stored in said database on display means.

42. An information providing system according to claim 41, further comprising
search means for searching for sales information, wherein
said display control means displays the sales information searched for by said search means.

43. An information providing system according to claim 42, wherein
said sales information is information about parts, materials, product information, and/or substitute goods.

44. An information providing system according to claim 42, wherein
said sales information is information about persons of suppliers.

45. An information providing system according to claim 42, wherein
said sales information is information about a home page of a supplier or a home page of product information.

46. An information providing system according to claim 42, wherein
said search means searches information based on suppliers or business type as a condition.

47. An information providing method, comprising the steps of:
storing supplier's sales information provided through a network in a database; and
displaying the supplier's sales information stored in said database on display means.

48. An information providing method according to claim 47, further comprising the step of
searching for sales information, wherein
said display step displays the sales information searched for in said searching step.

49. An information providing method according to claim 48, wherein
said sales information is information about parts, materials, product information, and/or substitute goods.

50. An information providing method according to claim 48, wherein
said sales information is information about persons of suppliers.

51. An information providing method according to claim 48, wherein
said sales information is information about a home page of a supplier or a home page of product information.

52. An information providing method according to claim 48, wherein
said search step searches information based on suppliers or business type as a condition.

53. A computer-readable medium storing a program, comprising the steps of:
storing objects and map information linked with each other in a database; and
displaying the objects and the map information stored in said database on display means.

54. A computer-readable medium according to claim 53, further comprising the steps of:
inputting a search condition; and
searching for objects in said database based on the condition input in said search condition inputting step, wherein
said displaying step displays the object and the map information searched for in said searching step.

55. A computer-readable medium storing a program, comprising the steps of:
storing sales record information in a database;
searching for the sales record information; and
displaying the sales record information searched for in said searching step on display means.

56. A computer-readable medium according to claim 55, further comprising the step of
obtaining a collected sales record amount based on the sales record information searched for by said searching step, wherein
said displaying step displays the collected sales record amount.

57. A computer-readable medium storing a program, comprising the steps of:
storing supplier's sales information provided through a network in a database; and
displaying the supplier's sales information stored in said database on display means.

58. A computer-readable medium according to claim 57. further comprising the step of
searching for sales information, wherein
said display step displays the sales information searched for in said searching step.

59. An electrical signal encoded with a program to configure a computer to perform steps of:
storing objects and map information linked with each other in a database; and
displaying the objects and the map information stored in said database on display means.

60. An electrical signal according to claim 59, encoded with said program to configure a computer to perform additional steps of:
inputting a search condition; and
searching for objects in said database based on the condition input in said search condition inputting step, wherein
said displaying step displays the object and the map information searched for in said searching step.

61. An electrical signal encoded with a program to configure a computer to perform steps of:
storing sales record information in a database;
searching for the sales record information; and
displaying the sales record information searched for in said searching step on display means.

62. An electrical signal according to claim 61, encoded with said program to configure a computer to perform an additional step of
obtaining a collected sales record amount based on the sales record information searched for by said searching step, wherein
said displaying step displays the collected sales record amount.

63. An electrical signal encoded with a program to configure a computer to perform steps of:
storing supplier's sales information provided through a network in a database; and
displaying the supplier's sales information stored in said database on display means.

64. An electrical signal according to claim 63, encoded with said program to configure a computer to perform an additional step of
searching for sales information, wherein
said display step displays the sales information searched for in said searching step.
